(19) Europäisches Patentamt / European Patent Office / Office européen des brevets

(11) **EP 3 989 578 B1**

(12) **EUROPEAN PATENT SPECIFICATION**

(45) Date of publication and mention
of the grant of the patent:
**13.09.2023 Bulletin 2023/37**

(21) Application number: **20827185.8**

(22) Date of filing: **08.06.2020**

(51) International Patent Classification (IPC):
*H04N 19/593* (2014.01)

(52) Cooperative Patent Classification (CPC):
**H04N 19/593**

(86) International application number:
**PCT/JP2020/022485**

(87) International publication number:
**WO 2020/255769 (24.12.2020 Gazette 2020/52)**

(54) **IMAGE PROCESSING DEVICE, AND IMAGE PROCESSING METHOD**

BILDVERARBEITUNGSVORRICHTUNG UND BILDVERARBEITUNGSVERFAHREN

DISPOSITIF ET PROCÉDÉ DE TRAITEMENT D'IMAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.06.2019 US 201962863664 P
25.06.2019 US 201962866281 P**

(43) Date of publication of application:
**27.04.2022 Bulletin 2022/17**

(60) Divisional application:
**23190099.4**

(73) Proprietor: **Sony Group Corporation
Tokyo 108-0075 (JP)**

(72) Inventor: **KONDO, Kenji
Tokyo 108-0075 (JP)**

(74) Representative: **D Young & Co LLP
120 Holborn
London EC1N 2DY (GB)**

(56) References cited:
**WO-A1-2021/125317**

• **PFAFF (FRAUNHOFER) J ET AL: "8-bit
implementation and simplification of MIP", 15.
JVET MEETING; 20190703 - 20190712;
GOTHENBURG; (THE JOINT VIDEO
EXPLORATION TEAM OF ISO/IEC
JTC1/SC29/WG11 AND ITU-T SG.16 ), , no.
JVET-O0084 18 June 2019 (2019-06-18),
XP030205620, Retrieved from the Internet:
URL:http://phenix.int-evry.fr/jvet/doc_end
_user/documents/15_Gothenburg/wg11/JVET-O
0 084-v1.zip JVET-O0084-v1.docx [retrieved on
2019-06-18] & PFAFF (FRAUNHOFER) J ET AL:
"8-bit implementation and simplification of MIP",
15. JVET MEETING; 20190703 - 20190712;
GOTHENBURG; (THE JOINT VIDEO
EXPLORATION TEAM OF ISO/IEC
JTC1/SC29/WG11 AND ITU-T SG.16 ), , no.
JVET-O0084 18 June 2019 (2019-06-18),
XP030205619, Retrieved from the Internet:
URL:http://phenix.int-evry.fr/jvet/doc_end
_user/documents/15_Gothenburg/wg11/JVET-O
0 084-v1.zip
JVET-N1001-v7_proposal_text_MIP_8Bit.docx
[retrieved on 2019-06-18]**
• **Bross B; Chen J; Liu S: "Versatile Video Coding
(Draft 5)", Joint Video Experts Team (JVET) of
ITU-T SG 16 WP 3 and ISO/IEC JTC 1/ SC 29/WG
11, JVET-N1001 (version 7), 14th Meeting, no.
JVET-N1001-v7, 29 May 2019 (2019-05-29), pages
136-141, XP030205196, Geneva, CH**

EP 3 989 578 B1

- Pfaff (Fraunhofer) J; Hinz T; Helle (Fraunhofer) P; Mekle (Fraunhofer) P; Stallenberger B; Schäfer M; Schwarz H; Marpe D; Wiegand: "8-bit implementation and simplification of MIP", Joint Video Experts Team (JVET) of ITU-T SG 16 WP 3 and ISO/IEC JTC 1/SC 29/WG 11, JVET-O0084 (version 1), 15th Meeting, no. JVET-O0084-v1, 18 June 2019 (2019-06-18), pages 1-6, XP030205620, Gothenburg, SE
- Kondo (Sony) K; Ikeda (Sony) M; Suzuki (Sony) T: "Non-CE3: On rounding shift of MIP", Joint Video Experts Team (JVET) of ITU-T SG 16 WP 3 and ISO/IEC JTC 1/ SC 29/WG 11, JVET-O0408-v2, 15th Meeting, no. JVET-O0408-v2, 26 June 2019 (2019-06-26), pages 1-4, XP030219476, Gothenburg, SE
- Kondo (Sony) K; J-Y Huo (Xidian Univ): "CE3-2: On rounding shift of MIP", Joint Video Experts Team (JVET) of ITU-T SG 16 WP 3 and ISO/IEC JTC 1/SC 29/WG 11, JVET-P0056- v3, 16th Meeting, no. JVET-P0056-v3, 3 October 2019 (2019-10-03), pages 1-5, XP030216083, Geneva, CH

**Description**

TECHNICAL FIELD

The present technology relates to an image processing device and an image processing method, and more particularly, to an image processing device and an image processing method capable of simplifying processing, for example.

BACKGROUND ART

Joint standardization organization of ITU-T and ISO/IEC, Joint Video Experts Team (JVET) aims to further improve encoding efficiency compared to H.265/HEVC, and is working on standardization of versatile video coding (VVC), which is the next-generation image encoding method.
In the standardization operation of VVC, it has been proposed to perform matrix-based intra-prediction (MIP), which is intra prediction using a matrix operation on a prediction block (for example, see Non-Patent Documents 1 and 2).
In MIP, parameters of a matrix (weight matrix) and a bias (bias vector) obtained by parameter learning are defined, and an operation using the matrix and the bias (parameters) is performed.

CITATION LIST

NON-PATENT DOCUMENT

Non-Patent Document 1: JVET-N0217-v3: CE3: Affine linear weighted intra prediction (CE3-4.1, CE3-4.2) (version 7 - date 2019-01-17)
Non-Patent Document 2: PFAFF (FRAUNHOFER) J ET AL "8-bit implementation and simplification of MIP", 15. JVET MEETING; 20190703-20190712; GOTHENBURG; (THE JOINT VIDEO EXPLORATION TEAM OF ISO/IEC JTC1/SC29/WG11 AND ITU-T SG.16 ), no. JVET-O0084, 18 June 2019.

SUMMARY OF THE INVENTION

PROBLEMS TO BE SOLVED BY THE INVENTION

In the MIP operation (operation performed by the MIP), a shift is performed by a predetermined shift amount The shift amount is changed according to MipSizeId indicating a matrix size of the matrix and a mode number of the MIP in order to improve bit accuracy.
As described above, in the MIP operation, since the shift amount is changed according to the MipSizeId and the MIP mode number, the shift amount needs to be set for each combination of the MipSizeId and the mode number of the MIP and the processing is complicated.
The present technology has been made in view of such a situation, and makes it possible to simplify processing.

SOLUTIONS TO PROBLEMS

The scope of the protected invention is defined by the appended independent claims. The dependent claims further specify preferred embodiments. Enabling disclosure of the protected invention is provided in the following with the embodiments described, respectively, as implementations of the "second generation method", the "third generation method", and the "fourth generation method". Remaining aspects, examples and embodiments are provided merely for illustrative purposes and do not represent independent embodiments of the protected invention.

BRIEF DESCRIPTION OF DRAWINGS

Fig. 1 is a diagram for describing a first generation method of a predicted image of MIP.
Fig. 2 is a diagram for describing a second generation method of a predicted image of MIP.
Fig. 3 is a diagram illustrating an example of a weight matrix mWeight [i] [j] of (M, m) = (1, 3).
Fig. 4 is a diagram illustrating an example of a weight matrix mWeight [i] [j] of (M, m) = (1, 8).

Fig. 5 is a diagram illustrating an example of a bias vector vBias [j] with MipSizeId = 1.

Fig. 6 is a diagram for describing a third generation method of a predicted image of MIP.

Fig. 7 is a diagram for describing a fourth generation method of a predicted image of MIP.

Fig. 8 is a diagram illustrating a shift amount sW described in Reference A.

Fig. 9 is a diagram illustrating a standard weight matrix mWeight [i] [j] of (M, m) = (0, 0) described in Reference A.

Fig. 10 is a diagram illustrating a standard weight matrix mWeight [i] [j] of (M, m) = (0, 1) described in Reference A.

Fig. 11 is a diagram illustrating a standard weight matrix mWeight [i] [j] of (M, m) = (0, 2) described in Reference A.

Fig. 12 is a diagram illustrating a standard weight matrix mWeight [i] [j] of (M, m) = (0, 3) described in Reference A.

Fig. 13 is a diagram illustrating a standard weight matrix mWeight [i] [j] of (M, m) = (0, 4) described in Reference A.

Fig. 14 is a diagram illustrating a standard weight matrix mWeight [i] [j] of (M, m) = (0, 5) described in Reference A.

Fig. 15 is a diagram illustrating a standard weight matrix mWeight [i] [j] of (M, m) = (0, 6) described in Reference A.

Fig. 16 is a diagram illustrating a standard weight matrix mWeight [i] [j] of (M, m) = (0, 7) described in Reference A.

Fig. 17 is a diagram illustrating a standard weight matrix mWeight [i] [j] of (M, m) = (0, 8) described in Reference A.

Fig. 18 is a diagram illustrating a standard weight matrix mWeight [i] [j] of (M, m) = (0, 9) described in Reference A.

Fig. 19 is a diagram illustrating a standard weight matrix mWeight [i] [j] of (M, m) = (0, 10) described in Reference A.

Fig. 20 is a diagram illustrating a standard weight matrix mWeight [i] [j] of (M, m) = (0, 11) described in Reference A.

Fig. 21 is a diagram illustrating a standard weight matrix mWeight [i] [j] of (M, m) = (0, 12) described in Reference A.

Fig. 22 is a diagram illustrating a standard weight matrix mWeight [i] [j] of (M, m) = (0, 13) described in Reference A.

Fig. 23 is a diagram illustrating a standard weight matrix mWeight [i] [j] of (M, m) = (0, 14) described in Reference A.

Fig. 24 is a diagram illustrating a standard weight matrix mWeight [i] [j] of (M, m) = (0, 15) described in Reference A.

Fig. 25 is a diagram illustrating a standard weight matrix mWeight [i] [j] of (M, m) = (0, 16) described in Reference A.

Fig. 26 is a diagram illustrating a standard weight matrix mWeight [i] [j] of (M, m) = (0, 17) described in Reference A.

Fig. 27 is a diagram illustrating a standard variable fO of MipSizeId = 0 described in Reference A.

Fig. 28 is a diagram illustrating a standard weight matrix mWeight [i] [j] of (M, m) = (1, 0) described in Reference A.

Fig. 29 is a diagram illustrating a standard weight matrix mWeight [i] [j] of (M, m) = (1, 1) described in Reference A.

Fig. 30 is a diagram illustrating a standard weight matrix mWeight [i] [j] of (M, m) = (1, 2) described in Reference A.

Fig. 31 is a diagram illustrating a standard weight matrix mWeight [i] [j] of (M, m) = (1, 3) described in Reference A.

Fig. 32 is a diagram illustrating a standard weight matrix mWeight [i] [j] of (M, m) = (1, 4) described in Reference A.

Fig. 33 is a diagram illustrating a standard weight matrix mWeight [i] [j] of (M, m) = (1, 5) described in Reference A.

Fig. 34 is a diagram illustrating a standard weight matrix mWeight [i] [j] of (M, m) = (1, 6) described in Reference A.

Fig. 35 is a diagram illustrating a standard weight matrix mWeight [i] [j] of (M, m) = (1, 7) described in Reference A.

Fig. 36 is a diagram illustrating a standard weight matrix mWeight [i] [j] of (M, m) = (1, 8) described in Reference A.

Fig. 37 is a diagram illustrating a standard weight matrix mWeight [i] [j] of (M, m) = (1, 9) described in Reference A.

Fig. 38 is a diagram illustrating a standard variable fO of MipSizeId = 1 described in Reference A.

Fig. 39 is a diagram illustrating a standard weight matrix mWeight [i] [j] of (M, m) = (2, 0) described in Reference A.

Fig. 40 is a diagram illustrating a standard weight matrix mWeight [i] [j] of (M, m) = (2, 1) described in Reference A.

Fig. 41 is a diagram illustrating a standard weight matrix mWeight [i] [j] of (M, m) = (2, 2) described in Reference A.

Fig. 42 is a diagram illustrating a standard weight matrix mWeight [i] [j] of (M, m) = (2, 3) described in Reference A.

Fig. 43 is a diagram illustrating a standard weight matrix mWeight [i] [j] of (M, m) = (2, 4) described in Reference A.

Fig. 44 is a diagram illustrating a standard weight matrix mWeight [i] [j] of (M, m) = (2, 5) described in Reference A.

Fig. 45 is a diagram illustrating a standard variable fO of MipSizeId = 2 described in Reference A.

Fig. 46 is a diagram illustrating the shift amount sW used in the third generation method.

Fig. 47 is a diagram illustrating a fixed weight matrix mWeight [i] [j] of (M, m) = (0, 0) used in the third generation method.

Fig. 48 is a diagram illustrating a fixed weight matrix mWeight [i] [j] of (M, m) = (0, 1) used in the third generation method.

Fig. 49 is a diagram illustrating a fixed weight matrix mWeight [i] [j] of (M, m) = (0, 2) used in the third generation method.

Fig. 50 is a diagram illustrating a fixed weight matrix mWeight [i] [j] of (M, m) = (0, 3) used in the third generation method.

Fig. 51 is a diagram illustrating a fixed weight matrix mWeight [i] [j] of (M, m) = (0, 4) used in the third generation method.

Fig. 52 is a diagram illustrating a fixed weight matrix mWeight [i] [j] of (M, m) = (0, 5) used in the third generation method.

Fig. 53 is a diagram illustrating a fixed weight matrix mWeight [i] [j] of (M, m) = (0, 6) used in the third generation method.

Fig. 54 is a diagram illustrating a fixed weight matrix mWeight [i] [j] of (M, m) = (0, 7) used in the third generation method.

Fig. 55 is a diagram illustrating a fixed weight matrix mWeight [i] [j] of (M, m) = (0, 8) used in the third generation method.

Fig. 56 is a diagram illustrating a fixed weight matrix mWeight [i] [j] of (M, m) = (0, 9) used in the third generation method.

Fig. 57 is a diagram illustrating a fixed weight matrix mWeight [i] [j] of (M, m) = (0, 10) used in the third generation method.

Fig. 58 is a diagram illustrating a fixed weight matrix mWeight [i] [j] of (M, m) = (0, 11) used in the third generation method.

Fig. 59 is a diagram illustrating a fixed weight matrix mWeight [i] [j] of (M, m) = (0, 12) used in the third generation method.

Fig. 60 is a diagram illustrating a fixed weight matrix mWeight [i] [j] of (M, m) = (0, 13) used in the third generation method.

Fig. 61 is a diagram illustrating a fixed weight matrix mWeight [i] [j] of (M, m) = (0, 14) used in the third generation method.

Fig. 62 is a diagram illustrating a fixed weight matrix mWeight [i] [j] of (M, m) = (0, 15) used in the third generation method.

Fig. 63 is a diagram illustrating a fixed weight matrix mWeight [i] [j] of (M, m) = (0, 16) used in the third generation method.

Fig. 64 is a diagram illustrating a fixed weight matrix mWeight [i] [j] of (M, m) = (0, 17) used in the third generation method.

Fig. 65 is a diagram illustrating a fixed variable fO of MipSizeId = 0 used in the third generation method.

Fig. 66 is a diagram illustrating a fixed weight matrix mWeight [i] [j] of (M, m) = (1, 0) used in the third generation method.

Fig. 67 is a diagram illustrating a fixed weight matrix mWeight [i] [j] of (M, m) = (1, 1) used in the third generation method.

Fig. 68 is a diagram illustrating a fixed weight matrix mWeight [i] [j] of (M, m) = (1, 2) used in the third generation method.

Fig. 69 is a diagram illustrating a fixed weight matrix mWeight [i] [j] of (M, m) = (1, 3) used in the third generation method.

Fig. 70 is a diagram illustrating a fixed weight matrix mWeight [i] [j] of (M, m) = (1, 4) used in the third generation method.

Fig. 71 is a diagram illustrating a fixed weight matrix mWeight [i] [j] of (M, m) = (1, 5) used in the third generation method.

Fig. 72 is a diagram illustrating a fixed weight matrix mWeight [i] [j] of (M, m) = (1, 6) used in the third generation method.

Fig. 73 is a diagram illustrating a fixed weight matrix mWeight [i] [j] of (M, m) = (1, 7) used in the third generation method.

Fig. 74 is a diagram illustrating a fixed weight matrix mWeight [i] [j] of (M, m) = (1, 8) used in the third generation method.

Fig. 75 is a diagram illustrating a fixed weight matrix mWeight [i] [j] of (M, m) = (1, 9) used in the third generation method.

Fig. 76 is a diagram illustrating a fixed variable fO of MipSizeId = 1 used in the third generation method.

Fig. 77 is a diagram illustrating a fixed weight matrix mWeight [i] [j] of (M, m) = (2, 0) used in the third generation method.

Fig. 78 is a diagram illustrating a fixed weight matrix mWeight [i] [j] of (M, m) = (2, 1) used in the third generation method.

Fig. 79 is a diagram illustrating a fixed weight matrix mWeight [i] [j] of (M, m) = (2, 2) used in the third generation method.

Fig. 80 is a diagram illustrating a fixed weight matrix mWeight [i] [j] of (M, m) = (2, 3) used in the third generation method.

Fig. 81 is a diagram illustrating a fixed weight matrix mWeight [i] [j] of (M, m) = (2, 4) used in the third generation method.

Fig. 82 is a diagram illustrating a fixed weight matrix mWeight [i] [j] of (M, m) = (2, 5) used in the third generation method.

Fig. 83 is a diagram illustrating a fixed variable fO of MipSizeId = 2 used in the third generation method.

Fig. 84 is a diagram illustrating a shift amount sW used in a fourth generation method.

Fig. 85 is a diagram illustrating a fixed weight matrix mWeight [i] [j] of (M, m) = (0, 0) used in the fourth generation method.

Fig. 86 is a diagram illustrating a fixed weight matrix mWeight [i] [j] of (M, m) = (0, 1) used in the fourth generation method.

Fig. 87 is a diagram illustrating a fixed weight matrix mWeight [i] [j] of (M, m) = (0, 2) used in the fourth generation method.

Fig. 88 is a diagram illustrating a fixed weight matrix mWeight [i] [j] of (M, m) = (0, 3) used in the fourth generation method.

Fig. 89 is a diagram illustrating a fixed weight matrix mWeight [i] [j] of (M, m) = (0, 4) used in the fourth generation method.

Fig. 90 is a diagram illustrating a fixed weight matrix mWeight [i] [j] of (M, m) = (0, 5) used in the fourth generation method.

Fig. 91 is a diagram illustrating a fixed weight matrix mWeight [i] [j] of (M, m) = (0, 6) used in the fourth generation method.

Fig. 92 is a diagram illustrating a fixed weight matrix mWeight [i] [j] of (M, m) = (0, 7) used in the fourth generation method.

Fig. 93 is a diagram illustrating a fixed weight matrix mWeight [i] [j] of (M, m) = (0, 8) used in the fourth generation method.

Fig. 94 is a diagram illustrating a fixed weight matrix mWeight [i] [j] of (M, m) = (0, 9) used in the fourth generation method.

Fig. 95 is a diagram illustrating a fixed weight matrix mWeight [i] [j] of (M, m) = (0, 10) used in the fourth generation method.

Fig. 96 is a diagram illustrating a fixed weight matrix mWeight [i] [j] of (M, m) = (0, 11) used in the fourth generation method.

Fig. 97 is a diagram illustrating a fixed weight matrix mWeight [i] [j] of (M, m) = (0, 12) used in the fourth generation method.

Fig. 98 is a diagram illustrating a fixed weight matrix mWeight [i] [j] of (M, m) = (0, 13) used in the fourth generation method.

Fig. 99 is a diagram illustrating a fixed weight matrix mWeight [i] [j] of (M, m) = (0, 14) used in the fourth generation method.

Fig. 100 is a diagram illustrating a fixed weight matrix mWeight [i] [j] of (M, m) = (0, 15) used in the fourth generation method.

Fig. 101 is a diagram illustrating a fixed weight matrix mWeight [i] [j] of (M, m) = (0, 16) used in the fourth generation method.

Fig. 102 is a diagram illustrating a fixed weight matrix mWeight [i] [j] of (M, m) = (0, 17) used in the fourth generation method.

Fig. 103 is a diagram illustrating a fixed variable fO of MipSizeld = 0 used in the fourth generation method.

Fig. 104 is a diagram illustrating a fixed weight matrix mWeight [i] [j] of (M, m) = (1, 0) used in the fourth generation method.

Fig. 105 is a diagram illustrating a fixed weight matrix mWeight [i] [j] of (M, m) = (1, 1) used in the fourth generation method.

Fig. 106 is a diagram illustrating a fixed weight matrix mWeight [i] [j] of (M, m) = (1, 2) used in the fourth generation method.

Fig. 107 is a diagram illustrating a fixed weight matrix mWeight [i] [j] of (M, m) = (1, 3) used in the fourth generation method.

Fig. 108 is a diagram illustrating a fixed weight matrix mWeight [i] [j] of (M, m) = (1, 4) used in the fourth generation method.

Fig. 109 is a diagram illustrating a fixed weight matrix mWeight [i] [j] of (M, m) = (1, 5) used in the fourth generation method.

Fig. 110 is a diagram illustrating a fixed weight matrix mWeight [i] [j] of (M, m) = (1, 6) used in the fourth generation method.

Fig. 111 is a diagram illustrating a fixed weight matrix mWeight [i] [j] of (M, m) = (1, 7) used in the fourth generation method.

Fig. 112 is a diagram illustrating a fixed weight matrix mWeight [i] [j] of (M, m) = (1, 8) used in the fourth generation method.

Fig. 113 is a diagram illustrating a fixed weight matrix mWeight [i] [j] of (M, m) = (1, 9) used in the fourth generation method.

Fig. 114 is a diagram illustrating a fixed variable fO of MipSizeld = 1 used in the fourth generation method.

Fig. 115 is a diagram illustrating a fixed weight matrix mWeight [i] [j] of (M, m) = (2, 0) used in the fourth generation method.

Fig. 116 is a diagram illustrating a fixed weight matrix mWeight [i] [j] of (M, m) = (2, 1) used in the fourth generation method.

Fig. 117 is a diagram illustrating a fixed weight matrix mWeight [i] [j] of (M, m) = (2, 2) used in the fourth generation method.

Fig. 118 is a diagram illustrating a fixed weight matrix mWeight [i] [j] of (M, m) = (2, 3) used in the fourth generation method.

Fig. 119 is a diagram illustrating a fixed weight matrix mWeight [i] [j] of (M, m) = (2, 4) used in the fourth generation method.

Fig. 120 is a diagram illustrating a fixed weight matrix mWeight [i] [j] of (M, m) = (2, 5) used in the fourth generation method.

Fig. 121 is a diagram illustrating a fixed variable fO of MipSizeld = 2 used in the fourth generation method.

Fig. 122 is a block diagram illustrating a configuration example of an embodiment of an image processing system to which the present technology is applied.

Fig. 123 is a block diagram illustrating a configuration example of an encoder 11.

Fig. 124 is a flowchart illustrating an example of encoding processing of the encoder 11.

Fig. 125 is a block diagram illustrating a detailed configuration example of a decoder 51.

Fig. 126 is a flowchart illustrating an example of decoding processing of the decoder 51.

Fig. 127 is a block diagram illustrating a configuration example of an embodiment of a computer to which the present technology is applied.

MODE FOR CARRYING OUT THE INVENTION

<References>

The contents of the following references REF 1 to REF 7, which are known at the time of filing, form part of common general knowledge In other words, even when a quad-tree block structure, a quad tree plus binary tree (QTBT) block structure, and a multi-type tree (MTT) block structure are not directly defined in the detailed description of invention, they are within the scope of the present disclosure In addition, for example, even when technical terms such as parsing, syntax, and semantics are not directly defined in the detailed description of the invention, similarly, they are within the scope of the present disclosure

REF 1: Recommendation ITU-T H.264 (04/2017) "Advanced video coding for generic audiovisual services", April 2017

REF 2: Recommendation ITU-T H.265 (02/2018) "High efficiency video coding", February 2018

REF 3: Benjamin Bross, Jianle Chen, Shan Liu, Versatile Video Coding (Draft 5), JVET-N1001-v7 (version 7 - date 2019-05-29)

REF 4: Jianle Chen, Yan Ye, Seung Hwan Kim, Algorithm description for Versatile Video Coding and Test Model 5 (VTM 5), JVET- N1002-v1

REF 5: JVET-N0217-v3: CE3: Affine linear weighted intra prediction (CE3-4.1, CE3-4.2) (version 7 - date 2019-01-17)

REF 6: JVET-M0043-v2: CE3: Affine linear weighted intra prediction (test 1.2.1, test 1.2.2) (version 2 - date 2019-01-09)

REF 7: JVET-O0084-vl: 8-bit implementation and simplification of MIP (version 1 - date 2019-06-18)

<Definition>

Speaking of pixels, the adjacent includes not only a case in which one pixel (one line) is adjacent to a current pixel of interest, but also a case in which a plurality of pixels (a plurality of lines) are adjacent. Therefore, the adjacent pixel includes not only a pixel at a position of one pixel directly adjacent to a current pixel, but also pixels at positions of a plurality of pixels continuously adjacent to the current pixel. Further, the adjacent block includes not only a block in a range of one block directly adjacent to the current block of interest, but also a block in a range of a plurality of blocks continuously adjacent to the current block. Further, the adjacent block can also include a block located in the vicinity of the current block, as necessary.

The prediction block means a block (prediction unit (PU)) that is a processing unit upon performing intra prediction, and also includes sub-blocks in the prediction block. When the prediction block, an orthogonal transform block (transform unit (TU)), which is a processing unit for performing orthogonal transform, and an encoding block (coding unit (CU)), which is a processing unit for encoding, are unified into the same block, the prediction block, the orthogonal transform block, and the encoding block mean the same block.

The intra prediction mode comprehensively means variables (parameters) referenced when deriving the intra prediction mode, such as a mode number when performing the intra prediction, an index of the mode number, a block size of the prediction block, and a size of a sub-block which is the processing unit in the prediction block.

A matrix intra prediction mode (MIP mode) comprehensively refers to variables (parameters) referenced when deriving the matrix intra prediction mode, such as a mode number of the MIP, an index of the mode number, a type of matrix used when performing MIP operation, a type of matrix size of the matrix used when performing the MIP operation, and the like.

Changing means changing based on the contents (values, arithmetic expressions, variables, or the like) described in references REF 3 or REF 7. The changing can include changing based on the contents described in the document "JVET-N1001-v7_proposal_text_MIP_8Bit.docx" (hereinafter, also referred to as Reference A) that is published in other documents that are known at the time of filing, for example, a web site (http://phenix.int-evry.fr/jvet/) of "JVET DOCUMENT MANAGEMENT SYSTEM".

For example, in reference REF 3, 8 and 9 are mixed as the shift amount sW used in the MIP operation, but the changing includes changing 9 of the mixed shift amount sW to 8, changing the MIP operation (matrix operation) including a weight matrix mWeight, changing the MIP operation including a bias vector vBias, or the like.

Further, for example, in Reference A (Reference REF 7), 6, 7, and 8 are mixed as the shift amount sW, but the changing includes changing 7 of the mixed shift amount sW to 6, changing from 8 to 7, changing the MIP operation including the weight matrix mWeight, changing the MIP operation including a variable oW corresponding to the bias vector vBias, or the like. The changing of the MIP operation includes the weight matrix mWeight used for the MIP operation, the bias vector vBias, a variable fO used to obtain the variable oW, or the like.

In the present technology, identification data that identifies a plurality of patterns can be set as a bitstream syntax obtained by encoding an image. The bitstream can include the identification data that identifies various patterns.

As the identification data, for example, the information on the shift amount sW, for example, data indicating whether or not the shift amount sW is the fixed value (set to a fixed value) can be adopted.

When the identification data is included in the bitstream, the decoder that decodes the bitstream can perform processing more efficiently by parsing and referencing the identification data.

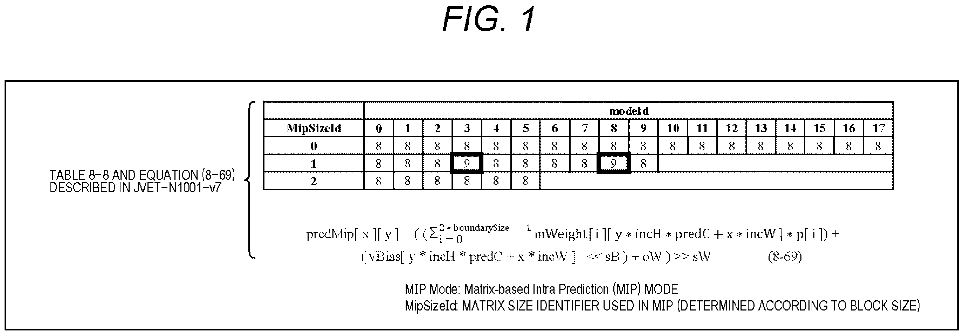

Fig. 1 is a diagram for describing a first generation method of a predicted image of the MIP.

The first generation method is a method for generating a predicted image of MIP proposed in Reference REF 3 (JVET-N1001-v7).

In the first generation method, according to Equation (1) described as Equation (8-69) in Reference REF 3, predMip [x] [y] (pixel values) of (some) pixels of the predicted image of the current prediction block which is the prediction block to be encoded/decoded) is generated.

$$\texttt{predMip[x] [y] = ( (ΣmWeight[ i ]}$$
$$\texttt{[ y*incH*predC+x*incW ]*p[ i ] ) + ( vBias[ y * incH *}$$
$$\texttt{predC + x * incW ] << sB ) + oW ) >> sW}$$

$$\texttt{... (1)}$$

predMip [x] [y] represents pixels (pixel values) in which a horizontal position of the predicted image is x and a vertical position thereof is y. The pixel of the predicted image is also referred to as a predicted pixel.

In Equation (1), a summation Σ represents a summation taken while changing variable i to an integer from 0 to 2 * boundarySize-1. The boundarySize is set corresponding to the block size of the current prediction block. Specifically, the boundarySize is set according to Table 8-7 of Reference REF 3 according to MipSizeId which is an identifier of the matrix size of the matrix (weight matrix mWeight [i] [j]) used for the operation (matrix operation) with the pixel of the current prediction block in the MIP. The MipSizeId is set to 0, 1, and 2, respectively, when the matrix size is 4 × 4, 8 × 8, and 16 × 16.

mWeight [i] [j] represents components of a j-th row and an i-th column of the matrix used in the MIP, and is referred to as a weight matrix. The weight matrix mWeight [i] [j] is set according to the MipSizeId and the modeId.

The number of values taken by arguments i and j of the weight matrix mWeight [i] [j] is equal to the number of pixels obtained by averaging in reference REF 5 and the number of pixels predMip [x] [y] of the predicted image, respectively.

In addition, a sum-of-product arithmetic ΣmWeight [i] [y * incH * predC + x * incW] * p [i] performed using the weight matrix mWeight [i] [j] is the matrix operation performed on (pixels of) the current prediction block in the MIP. That is, the sum-of-product ΣmWeight [i] [y * incH * predC + x * incW] * p [i] is a matrix operation to obtain a product of a matrix whose component is the weight matrix mWeight [i] [j] and a vector whose component is a pixel p[i] of the current prediction block.

The modeId is set to any value from 0 to 17 according to Equation (8-64) of reference REF 3 according to the intra prediction mode predModeIntra.

incH and incW are set according to Equations (8-67) and (8-68) of Reference REF 3, respectively, according to PredC.

The PredC is set according to Table 8-7 of reference REF 3 according to the MipSizeId.

p[i] represents (the pixel value of) the i-th pixel obtained by averaging using the pixels of the reference image referenced when generating the predicted image of the current prediction block.

vBias [j] is the bias added to the pixels predMip [x] [y] of the predicted image, and is referred to as the bias vector. The bias vector vBias [j] is set according to the sizeId and the modeId. The number of values taken by the argument j of the bias vector vBias [j] is equal to the number of values taken by the argument j of the weight matrix mWeight [i] [j], that is, the number of pixels predMip [x] [y] of the predicted image.

It is stated that the sizeId takes 0, 1, or 2 in Table 8-2 of reference REF 3.

sB is set according to the number of bits bitdpthY represents the pixel value according to Equation (8-66) of the Reference REF 3

oW is set according to sW (Weight shift) according to Equation (8-65) in Reference REF 3.

sW is set according to the MipSizeId and the modeId according to Table 8-8 of reference REF 3.

Note that A << B and A >> B indicate that A is shifted left and right by a B bit, respectively.

In the first generation method, sW is a shift amount that shifts ((ΣmWeight [i] [y * incH * predC + x * incW] * p [i]) + (vBias [y * incH * predC + x * incW] << sB ) + oW).

According to Table 8-8 of reference REF 3, the shift amount sW is set to one of 8 and 9 according to the MipSizeId and the modeId as illustrated in Fig. 1.

Therefore, in the first generation method, it is necessary to reset the shift amount sW for each combination of the MipSizeId and the modeId, which complicates the processing of generating the predicted image of the MIP.

For example, when the first generation method is implemented by hardware, a selector for switching the shift amount sW is required, which increases the circuit scale. Further, when the first generation method is implemented by software, it is necessary to reference the table specified as Table 8-8 in Reference REF 3, and the processing speed is reduced by that amount.

Therefore, in the present technology, the MIP is performed using a shift amount set to a fixed value. That is, for example, the operation of Equation (1) is changed according to the shift amount sW set to the fixed value, and the predicted image of the MIP is generated according to the changed operation.

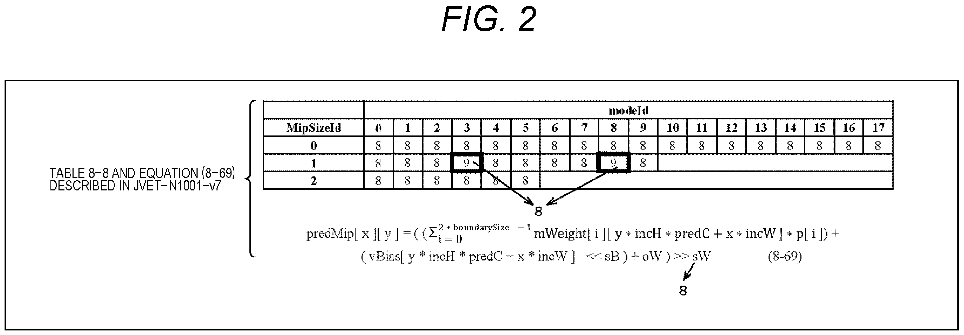

Fig. 2 is a diagram for describing a second generation method of a predicted image of MIP.

In the second generation method, the shift amount sW of Equation (1) for generating the predicted image of MIP proposed in reference REF 3 (JVET-N1001-v7) is set to a fixed value, for example, 8. Then, in the second generation method, the operation of Equation (1) is changed according to the shift amount sW = 8 set to the fixed value of 8, and the predicted image of the MIP is generated according to the changed operation.

Specifically, in the second generation method, the weight matrix mWeight [i] [j] and/or the bias vector vBias [j] is changed according to the shift amount sW = 8 set to a fixed value, and the predicted image of the MIP is generated according to the operation including the changed weight matrix mWeight [i] [j] and/or the bias vector vBias [j].

Here, the combination of the MipSizeId and the modeId is represented as (M, m). M represents the MipSizeId and m represents the modeId.

In addition, the predicted pixel predMip [x] [y] obtained before setting the shift amount sW to the fixed value, in Fig. 2, the predicted pixel predMip [x] [y] obtained when the predicted pixel predMip [x] [y] (of the predicted image of the MIP) obtained according to reference REF 3, that is, the predicted pixel predMip [x] [y] obtained when the shift amount sW of (M, m) = (1, 3) and (M, m) = (1, 8) is 8 is also referred to as a standard predicted pixel predMip[x] [y].

In Table 8-8 of Reference REF 3, when (M, m) = (1, 3) and (M, m) = (1, 8), the shift amount sW is 9, and in other combinations of the MipSizeId and the modeId, the shift amount sW is 8. Therefore, in Table 8-8 of reference REF 3, the shift amount sW of (M, m) = (1, 3) and (M, m) = (1, 8) is changed from 9 to 8, and therefore, the shift amount sW can be fixed to 8 for each combination of the MipSizeId and the modeId.

In the second generation method, the shift amount sW of (M, m) = (1, 3) and (M, m) = (1, 8) is changed from 9 to 8, and for each combination of MipSizeId and the modeId, the shift amount sW is fixed to 8. Then, the weight matrix mWeight [i] [j] and the bias vector vBias [j] of (M, m) = (1, 3) and (M, m) = (1, 8) are changed according to the shift amount sW = 8 so that the predicted pixel (hereinafter, also referred to as a fixed predicted pixel) obtained after setting the shift amount sW to the fixed value), here, the predicted pixel predMip[x] [y] obtained according to Equation (1) when the shift amount sW of (M, m) = (1, 3), and (M, m) = (1, 8) is changed to 8 becomes a value approximate the standard predicted pixel predMip[x] [y].

In the second generation method, the predicted image of the MIP is generated according to the operation of Equation (1) including the weight matrix mWeight [i] [j] changed according to the shift amount sW = 8 set to the fixed value as described above and the bias vector vBias [j].

Therefore, in the second generation method, the shift amount sW is fixed regardless of the modeId and the combination of the MipSizeId and the modeId, so the processing of the MIP can be simplified. As a result, it is not necessary to specify the table specified as Table 8-8 in Reference REF 3 in the standard, and the standard can be simplified.

In addition, for example, when the second generation method is implemented by hardware, the selector for switching the shift amount sW is not required, which can suppress the increases in the circuit scale. Furthermore, when the second generation method is implemented by software, it is not necessary to reference the table specified as Table 8-8 in Reference REF 3, and it is possible to suppress the decrease in the processing speed compared to the case of referencing the table.

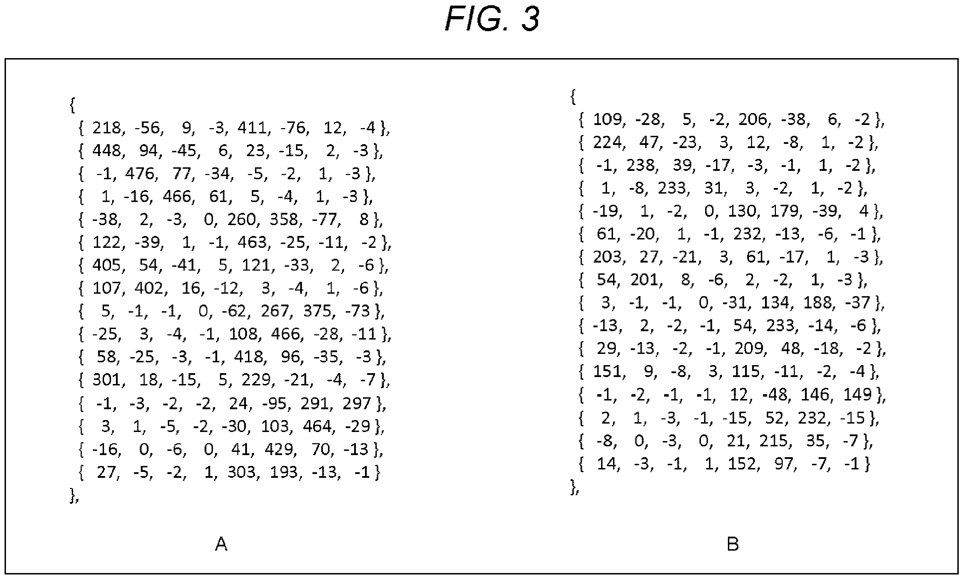

Fig. 3 is a diagram illustrating an example of a weight matrix mWeight [i] [j] of (M, m) = (1, 3).

Here, when the weight matrix mWeight [i] [j] before setting the shift amount sW to the fixed value, for example, the shift amount sW of (M, m) = (1, 3) specified in Reference REF 3 is 9, the weight matrix mWeight [i] [j] of (M, m) = (1, 3) is referred to as the standard weight matrix mWeight [i] [j] of (M, m) = (1, 3). Also, when the weight matrix mWeight [i] [j] after setting the shift amount sW to the fixed value, for example, the shift amount sW of (M, m) = (1, 3) is changed to 8, the weight matrix mWeight [i] [j] in which the standard weight matrix mWeight[i] [j] of (M, m) = (1, 3) used in Equation (1) is referred to as the fixed weight matrix mWeight [i] [j] of (M, m) = (1, 3).

A of Fig. 3 is a diagram illustrating the standard weight matrix mWeight [i] [j] of (M, m) = (1, 3), and B of Fig. 3 is a diagram illustrating an example of the fixed weight matrix mWeight [i] [j] of (M, m) = (1, 3).

In Fig. 3, at the i + 1th value from the left, the j + 1th value from the top represent the weight matrix mWeight [i] [j].

In Fig. 3, the fixed weight matrix mWeight [i] [j] (B of Fig. 3) of (M, m) = (1, 3) is changed to almost 1/2 times the standard weight matrix mWeight [i] [j] (A of Fig. 3) of (M, m) = (1, 3). This is because the shift amount sW performed to the right in the equation (8-69) of Reference REF 3 has been changed (fixed) from 9 to 8.

Note that the fixed weight matrix mWeight [i] [j] of (M, m) = (1, 3) is not limited to the value illustrated in Fig. 3.

For the fixed weight matrix mWeight [i] [j] of (M, m) = (1, 3), the shift amount sW set to the fixed value is used to perform the operation, and can be changed as appropriate within the range in which the technical effect is appropriately exhibited. Further, since the range in which the technical effect is exhibited changes depending on the approximate level to be set, it can be appropriately changed as long as it falls within those ranges. For example, it can be changed within the range of ± 1 and can be changed within the range of ± 3. Furthermore, it is possible not only to change all values uniformly, but also to change only some values. It is also possible to set the range of values to be changed individually with respect to the existing values.

That is, for example, when the operation of Equation (1) was performed using the shift amount sW set to the fixed value, the fixed weight matrix mWeight [i] [j] of (M, m) = (1, 3) can be appropriately changed within the range in which the technical effects such as ensuring a predetermined prediction accuracy or higher can be obtained for the predicted image.

In addition, the range (degree) at which the technical effect is exhibited is changed depending on how much the degree to which the fixed prediction pixel predMip [x] [y] approximates the standard prediction pixel predMip [x] [y] (hereinafter, also referred to as the approximation level) is set. The fixed weight matrix mWeight [i] [j] of (M, m) = (1, 3) can be changed as appropriate within the range in which the set approximation level can be maintained.

For example, the fixed weight matrix mWeight [i] [j] of (M, m) = (1, 3) can be changed within the range of ± 1 based on the value illustrated in B of Fig. 3, or can be changed within the range of ±3.

The change of the fixed weight matrix mWeight [i] [j] of (M, m) = (1, 3) can be made on all of the fixed weight matrix mWeight [i] [j] of (M, m) = (1, 3), but can be made only on a part of the fixed weight matrix mWeight [i] [j] of (M, m) = (1, 3).

In addition, as the range of values in which the fixed weight matrix mWeight [i] [j] of (M, m) = (1, 3) is changed, it is also possible to adopt a uniform range for all of the fixed weight matrix mWeight [i] [j] of (M, m) = (1, 3) and adopt a separate range for each fixed weight matrix mWeight [i] [j] of (M, m) = (1, 3).

For example, the range of values in which the fixed weight matrix mWeight [i] [j] of (M, m) = (1, 3) is changed can be set individually for each value of the corresponding standard weight matrix mWeight [i] [j].

The same also applies to the fixed weight matrix mWeight [i] [j] other than (M, m) = (1, 3), the bias vector vBias [j] changed according to the shift amount sW set to the fixed value, and the variable fO described later, which is changed according to the shift amount sW set to the fixed value.

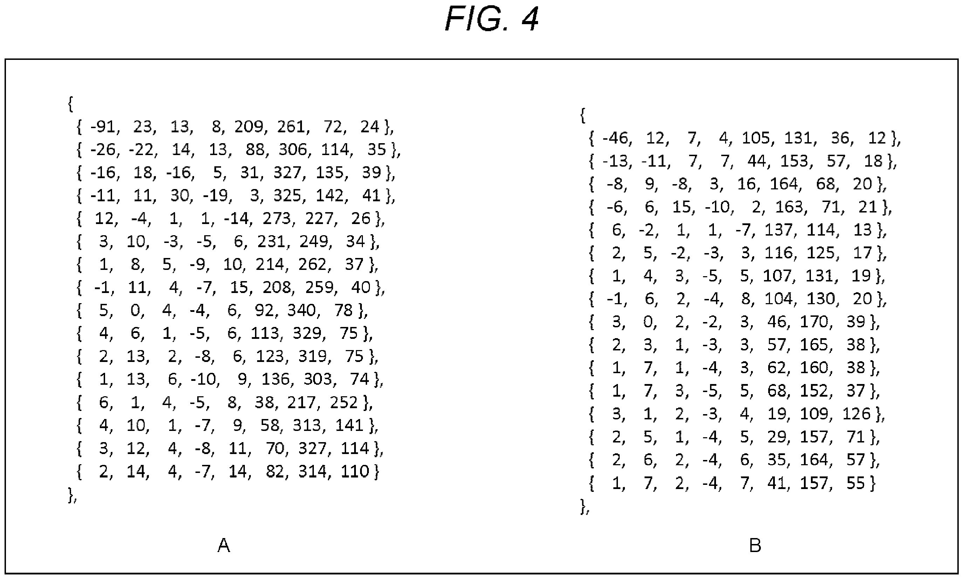

Fig. 4 is a diagram illustrating an example of a weight matrix mWeight [i] [j] of (M, m) = (1, 8).

A of Fig. 4 is a diagram illustrating the standard weight matrix mWeight [i] [j] of (M, m) = (1, 8), and B of Fig. 4 is a diagram illustrating an example of the fixed weight matrix mWeight [i] [j] of (M, m) = (1, 8).

In Fig. 4, similarly to Fig. 3, at the i + 1th value from the left, the j + 1th value from the top are the weight matrix mWeight [i] [j].

In Fig. 4, similar to Fig. 3, the fixed weight matrix mWeight [i] [j] (B of Fig. 4) of (M, m) = (1, 8) is changed to almost 1/2 times the standard weight matrix mWeight [i] [j] (A of Fig. 4) of (M, m) = (1, 8).

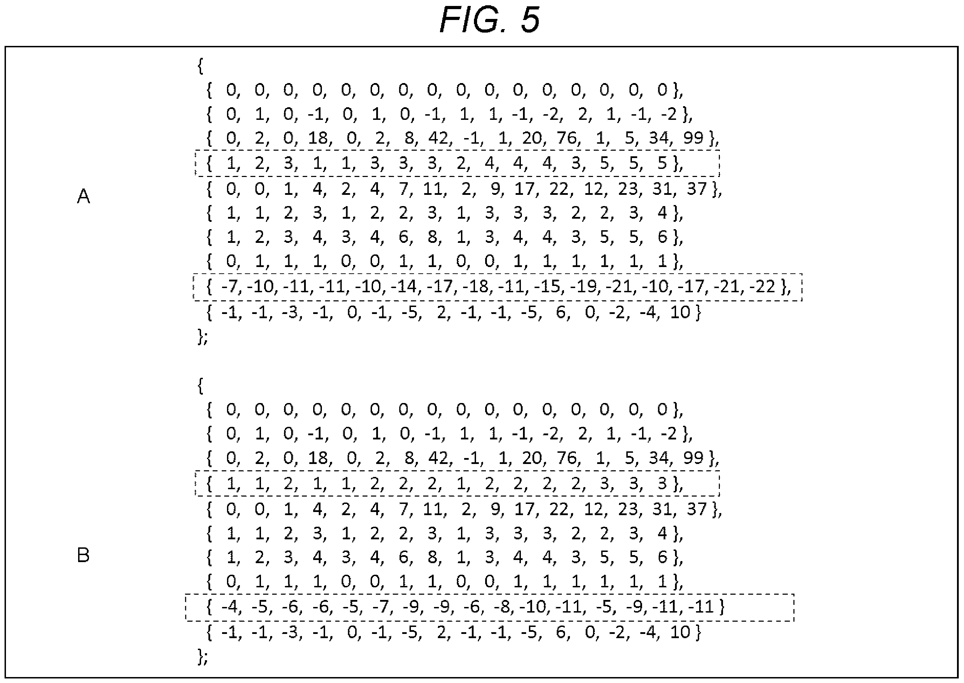

Fig. 5 is a diagram illustrating an example of the bias vector vBias [j] of MipSizeId = 1.

Here, the bias vector vBias [j] before setting the shift amount sW to the fixed value, for example, the bias vector vBias[j] of MipSizeId = 1 when the shift amount sW of MipSizeId = 1 specified in Reference REF 3 is 9 is also referred to as the standard bias vector vBias [j] of MipSizeId = 1.

In addition, the bias vector vBias [j] after setting the shift amount sW to the fixed value, for example, the bias vector vBias[j] in which the standard bias vector vBias [j] of MipSizeId = 1 used in Equation (1) when the shift amount sW of MipSizeId = 1 is changed to 8 is referred to as the fixed bias vector vBias[j] of MipSizeId = 1.

A of Fig. 5 is a diagram illustrating the standard bias vector vBias [j] with MipSizeId = 1, and B of Fig. 5 is a diagram illustrating an example of the fixed bias vector vBias [j] of MipSizeId = 1.

In Fig. 5, at the j + 1th value from the left, the k + 1th value from the top is the bias vector vBias [j] of (M, m) = (1, k).

In Fig. 5, of the fixed bias vector vBias [j] of (M, m) = (1, 0) to (1, 9), the fixed bias vector vBias[j] of (M, m) = (1, 3) and (1, 8) is changed to almost 1/2 times the standard bias vector vBias [j] of (M, m) = (1, 3) and (1, 8) so as to be surrounded by a dotted line, and the other fixed bias vector vBias [j] is the same as the standard bias vector vBias [j].

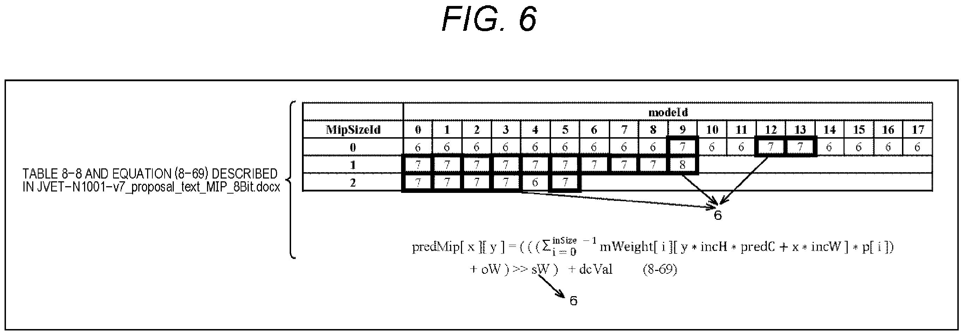

Fig. 6 is a diagram for describing a third generation method of a predicted image of MIP.

In the third generation method, the shift amount sW of the operation for generating the predicted image of the MIP proposed in Reference A (JVET-N1001-v7_proposal_text_MIP_8Bit.docx) (and Reference REF 7) is set to the fixed value, for example, 6. Then, in the third generation method, the operation to generate the predicted image of MIP is changed according to the shift amount sW = 6 set to the fixed value of 6, and the predicted image of the MIP is generated according to the changed operation.

Here, in the generation of the predicted image proposed in Reference A, (some) pixels predMip [x] [y] of the predicted image of the current prediction block is generated according to Equation (2) described as Equation (8-69) in Reference A.

$$predMip[x][y] = ( ( (\Sigma mWeight[ i ][ y*incH*predC+x*incW ]*p[ i ] ) + oW ) >> sW ) +dcVal$$

$$... (2)$$

In Equation (2), a summation $\Sigma$ represents a summation taken while changing variable i to an integer from 0 to inSize-1. The inSize is set to 2 * boundarySize-1 or 2 * boundarySize.

The variable oW corresponds to the bias vector vBias [j] in Equation (1). The variable oW is calculated according to Equation (3) described as Equation (8-65) in reference A.

$$oW = (1 << (sW - 1)) - fO * ( \Sigma p[i] )$$

$$... (3)$$

Similar to Equation (2), in Equation (3), a summation $\Sigma$ represents a summation taken while changing variable i to an integer from 0 to inSize-1.

The variable fO is set according to the MipSizeId and the modeId. Since the variable oW corresponding to the bias vector vBias [j] is calculated according to Equation (3) using the variable fO, similar to the variable oW, the variable fO can also correspond to the bias vector vBias [j].

In the generation of the predicted image proposed in Reference A, sW is the shift amount that shifts (($\Sigma$mWeight [i] [y * incH * predC + x * incW] * p [i]) + oW) .

According to Table 8-8 of reference A, the shift amount sW is set to 6, 7, or 8 according to the MipSizeId and the modeId as illustrated in Fig. 6.

Therefore, in the generation of the predicted image proposed in Reference A, there is a similar problem to the first generation method in that it is necessary to reset the shift amount sW for each combination of the MipSizeId and the modeId, the processing of generating the predicted image of the MIP becomes complicated, or the like.

Therefore, in the third generation method, the shift amount sW of Equation (2) for generating the predicted image of the MIP proposed in Reference A is set to the fixed value.

As the fixed value set in the shift amount sW, for example, among 6 to 8 described in Table 8-8 of Reference A, the minimum value of 6, the maximum value of 8, or the median value of 7 is used, or other values can be adopted. In Fig. 6, for example, among 6 to 8 described in Table 8-8 of Reference A, the minimum value of 6 is adopted as the fixed value set for the shift amount sW.

Then, in the third generation method, the operation of Equation (2) is changed according to the shift amount sW = 6 set to the fixed value of 6, and the predicted image of the MIP is generated according to the changed operation.

Specifically, in the third generation method, the shift amount sW is fixed to 6 for each combination of the MipSizeId and the modeId.

Then, according to the fixed shift amount sW = 6, the standard weight matrix mWeight [i] [j] and the variable fO (used to obtain the variable oW) corresponding to the bias vector vBias [j] are changed so that the fixed predicted pixel predMip [x] [y] obtained according to Equation (2) using the shift amount sW = 6 is a value approximating the standard predicted pixel predMip [x] [y].

Here, the variable fO before setting the shift amount sW to the fixed value, here, the variable fO specified in Reference A is also referred to as the standard variable fO. Further, the variable fO after setting the shift amount sW to the fixed value, here, the variable fO obtained by changing the standard variable fO according to the fixed shift amount sW = 6 is also referred to as the fixed variable fO.

In the third generation method, the predicted image of the MIP is generated according to the operation of Equation (2) (and Equation (3)) including the fixed weight matrix mWeight [i] [j] and the fixed variable fO obtained by changing the standard weight matrix mWeight [i] [j] and the standard variable fO according to the shift amount sW = 6 set to the fixed value as described above.

As described above, similar to the second generation method, in the third generation method, the MIP is performed using the shift amount sW set to the fixed value. That is, the operation of Equation (2) is changed according to the shift amount sW set to the fixed value, and the predicted image of the MIP is generated according to the changed operation.

Therefore, in the third generation method, the shift amount sW is fixed regardless of the modeId and the combination of the MipSizeId and the modeId, so the processing of the MIP can be simplified. As a result, it is not necessary to specify the table specified as Table 8-8 in Reference A in the standard, and the standard can be simplified.

In addition, for example, when the third generation method is implemented by hardware, the selector for switching the shift amount sW is not required, which can suppress the increases in the circuit scale. Furthermore, when the third generation method is implemented by software, it is not necessary to reference the table specified as Table 8-8 in Reference A, and it is possible to suppress the decrease in the processing speed compared to the case of referencing the table.

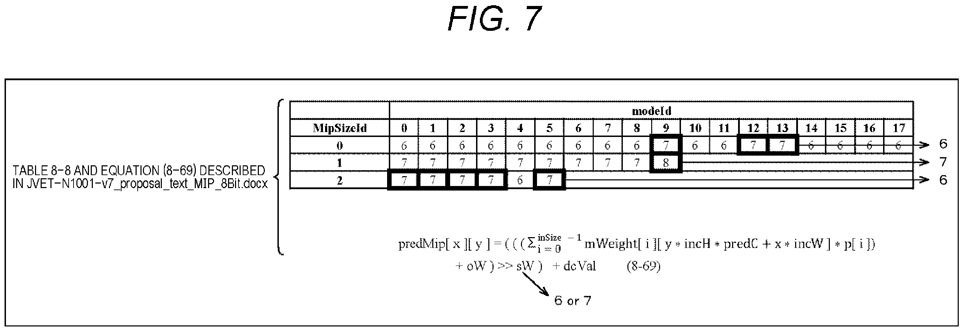

Fig. 7 is a diagram for describing a fourth generation method of a predicted image of MIP.

In the fourth generation method, the shift amount sW of the operation for generating the predicted image of the MIP proposed in Reference A is set to the fixed value according to the matrix size of the weight matrix mWeight [i] [j] used in the MIP.

Here, since the MipSizeId is an identifier of the matrix size of the weight matrix mWeight [i] [j], setting the shift amount sW to the fixed value according to the matrix size is equivalent to setting the shift amount sW to the fixed value according to the MipSizeId, for example, setting the shift amount sW to the fixed value for each MipSizeId, or the like.

In the fourth generation method, the operation to generate the predicted image of the MIP is changed according to the shift amount sW set to the fixed value for each MipSizeId, and the predicted image of the MIP is generated according to the changed operation.

In the fourth generation method, as the fixed value for each MipSizeId set in the shift amount sW, for example, the minimum value or the maximum value of the shift amount sW for each MipSizeId described in Table 8-8 of Reference A or other values can be adopted.

For example, as the fixed value for each MipSizeId set in the shift amount sW, the minimum value of the shift amount sW for each MipSizeId described in Table 8-8 of Reference A is adopted.

In Reference A, since the shift amount sW of MipSizeId = 0 can be 6 or 7, when the minimum value of the shift amount sW for each MipSizeId described in Table 8-8 of Reference A is adopted as the fixed value for each MipSizeId set in the shift amount sW, in the fourth generation method, the shift amount sW of MipSizeId = 0 is fixed to 6 which is the minimum value of 6 and 7. That is, the shift amount sW which is 7 of MipSizeId = 0 described in Table 8-8 of Reference A is changed to 6.

In Reference A, since the shift amount sW of MipSizeId = 1 can be 7 or 8, when the minimum value of the shift amount sW for each MipSizeId described in Table 8-8 of Reference A is adopted as the fixed value for each MipSizeId set in the shift amount sW, in the fourth generation method, the shift amount sW of MipSizeId = 1 is fixed to 7 which is the minimum value of 7 and 8. That is, the shift amount sW which is 8 of MipSizeId = 1 described in Table 8-8 of Reference A is changed to 7.

In Reference A, since the shift amount sW of MipSizeId = 2 can be 6 or 7, when the minimum value of the shift amount sW for each MipSizeId described in Table 8-8 of Reference A is adopted as the fixed value for each MipSizeId set in the shift amount sW, in the fourth generation method, the shift amount sW of MipSizeId = 2 is fixed to 6 which is the minimum value of 6 and 7. That is, the shift amount sW which is 7 of MipSizeId = 2 described in Table 8-8 of Reference A is changed to 6.

In the fourth generation method, as described above, the operation of Equation (2) is changed according to the shift amount sW set to the fixed value for each MipSizeId, and the predicted image of the MIP is generated according to the changed operation.

Specifically, in the fourth generation method, the shift amount sW is fixed to 6 for MipSizeId = 0 and 2.

Further, for the fixed shift amount sW = 6, the standard weight matrix mWeight [i] [j] and the standard variable fO are changed so that the fixed prediction pixel predMip [x] [y] obtained according to Equation (2) using the shift amount sW = 6 is the value approximating the standard prediction pixel predMip [x] [y].

Then, the predicted image of the MIP is generated according to the operation of Equation (2) including the fixed weight matrix mWeight [i] [j] and the fixed variable fO obtained by changing the standard weight matrix mWeight [i] [j] and the standard variable fO according to the shift amount sW = 6 set to the fixed value.

In addition, for MipSizeId = 1, the shift amount sW is fixed to 7.

Furthermore, for the fixed shift amount sW = 7, the standard weight matrix mWeight [i] [j] and the standard variable fO are changed so that the fixed prediction pixel predMip [x] [y] obtained according to Equation (2) using the shift amount sW = 7 is the value approximating the standard prediction pixel predMip [x] [y].

Then, the predicted image of the MIP is generated according to the operation of Equation (2) including the fixed weight matrix mWeight [i] [j] and the fixed variable fO obtained by changing the standard weight matrix mWeight [i] [j] and the standard variable fO according to the shift amount sW = 7 set to the fixed value.

Therefore, in the fourth generation method, two equations of the equation of the operation in which the operation of Equation (2) is changed according to the shift amount sW fixed to 6, and the equation of the operation in which the operation of Equation (2) is changed according to the shift amount sW fixed to 7 are used to be switched according to the MipSizeId.

As described above, in the fourth generation method, the MIP is performed using the shift amount set to the fixed value for each MipSizeId. That is, the operation of Equation (2) is changed according to the shift amount sW set to the fixed value for each MiPSizeId, and the predicted image of the MIP is generated according to the changed operation.

Therefore, in the fourth generation method, the shift amount sW is fixed regardless of the modeId, so the MIP

processing can be simplified, and the table for each modeId specified as Table 8-8 in Reference A is not defined in the standard, and the standard can be simplified.

In addition, for example, when the fourth generation method is implemented by hardware, the selector for switching the shift amount sW is not required, which can suppress the increases in the circuit scale. Furthermore, when the fourth generation method is implemented by software, it is not necessary to reference the table specified as Table 8-8 in Reference A, and it is possible to suppress the decrease in the processing speed compared to the case of referencing the table.

Hereinafter, the shift amount sW described in Reference A, the (standard) weight matrix mWeight [i] [j], the (standard) variable fO, the shift amount sW used in the third generation method and the fourth generation method, the (fixed) weight matrix mWeight [i] [j], and the (fixed) variable fO will be further described.

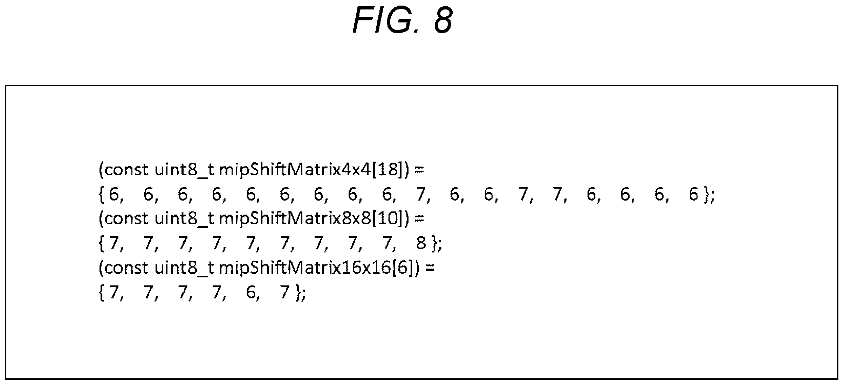

Fig. 8 is a diagram illustrating the shift amount sW described in Reference A.

In Fig. 8, at the m + 1th value from the left, the M + 1th value from the top represent the shift amount sW of (M, m). The same applies to the diagram of the shift amount sW described later.

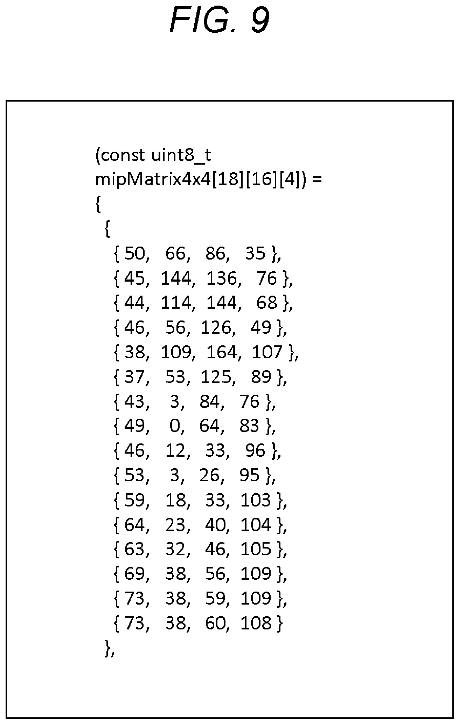

Fig. 9 is a diagram illustrating the standard weight matrix mWeight [i] [j] of (M, m) = (0, 0) described in Reference A.

In Fig. 9, at the i + 1th value from the left, the j + 1th value from the top represent the standard weight matrix mWeight [i] [j]. The same applies to the diagram of the weight matrix mWeight [i] [j] described later.

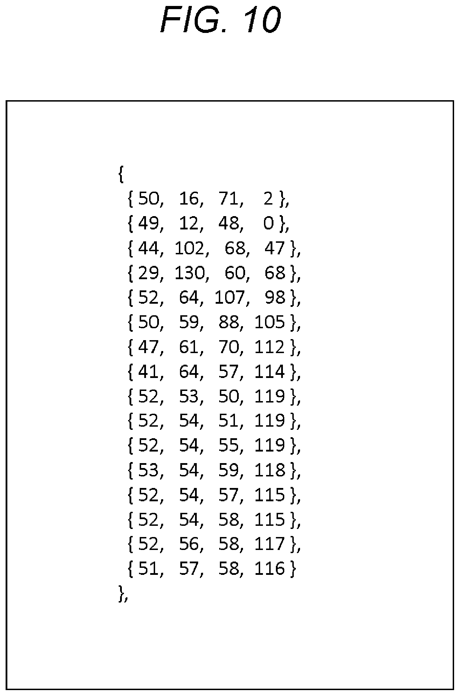

Fig. 10 is a diagram illustrating the standard weight matrix mWeight [i] [j] of (M, m) = (0, 1) described in Reference A.

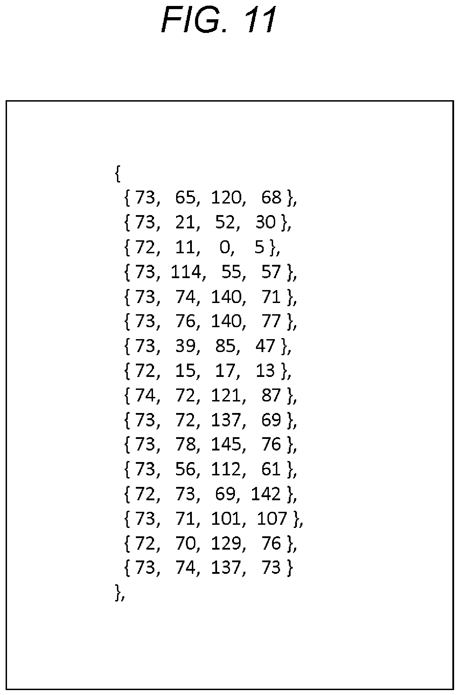

Fig. 11 is a diagram illustrating the standard weight matrix mWeight [i] [j] of (M, m) = (0, 2) described in Reference A.

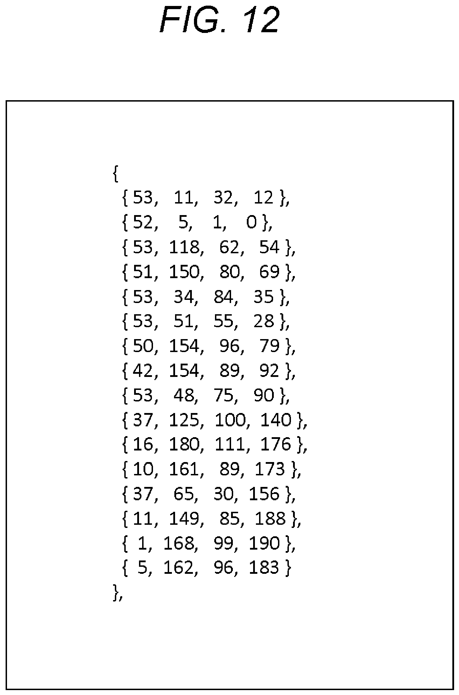

Fig. 12 is a diagram illustrating the standard weight matrix mWeight [i] [j] of (M, m) = (0, 3) described in Reference A.

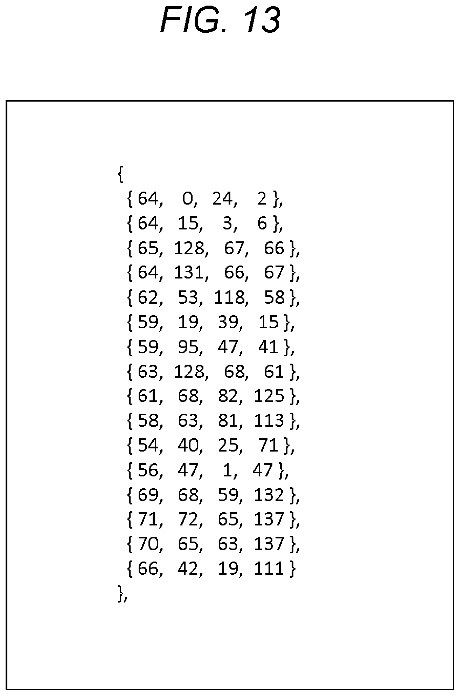

Fig. 13 is a diagram illustrating the standard weight matrix mWeight [i] [j] of (M, m) = (0, 4) described in Reference A.

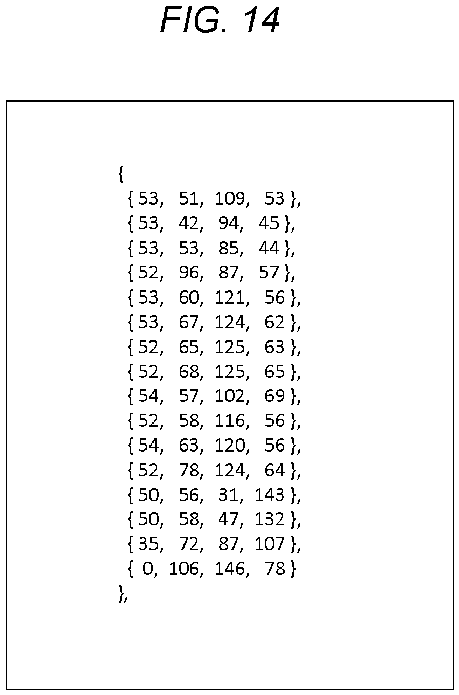

Fig. 14 is a diagram illustrating the standard weight matrix mWeight [i] [j] of (M, m) = (0, 5) described in Reference A.

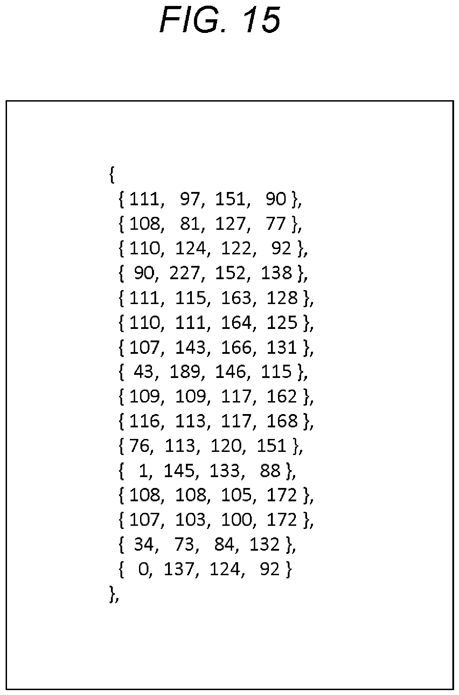

Fig. 15 is a diagram illustrating the standard weight matrix mWeight [i] [j] of (M, m) = (0, 6) described in Reference A.

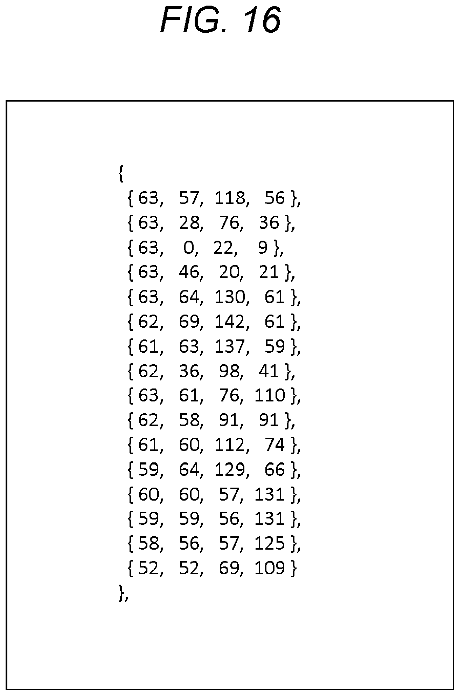

Fig. 16 is a diagram illustrating the standard weight matrix mWeight [i] [j] of (M, m) = (0, 7) described in Reference A.

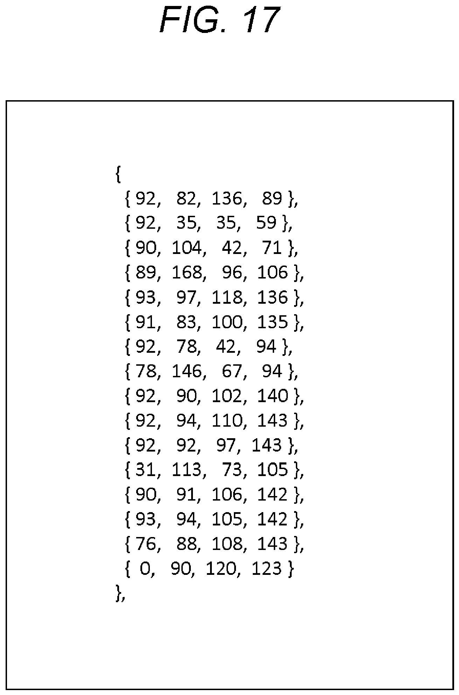

Fig. 17 is a diagram illustrating the standard weight matrix mWeight [i] [j] of (M, m) = (0, 8) described in Reference A.

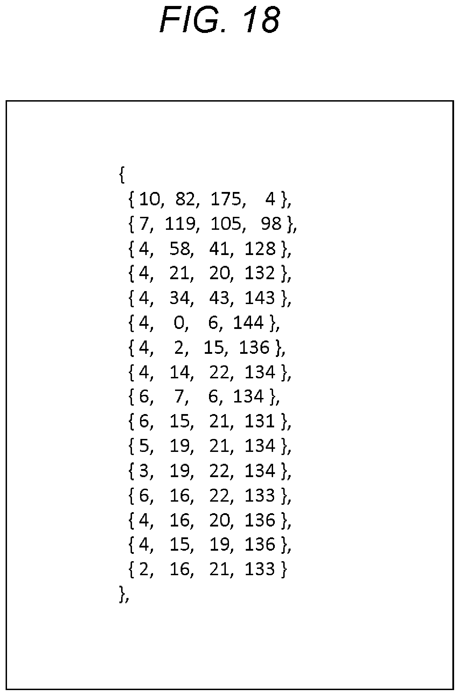

Fig. 18 is a diagram illustrating the standard weight matrix mWeight [i] [j] of (M, m) = (0, 9) described in Reference A.

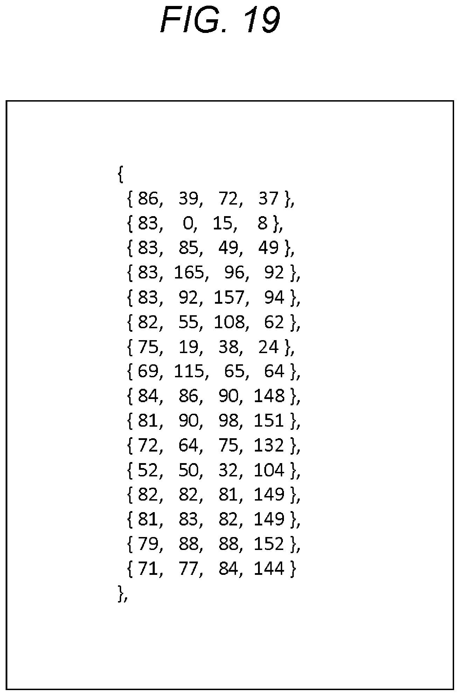

Fig. 19 is a diagram illustrating the standard weight matrix mWeight [i] [j] of (M, m) = (0, 10) described in Reference A.

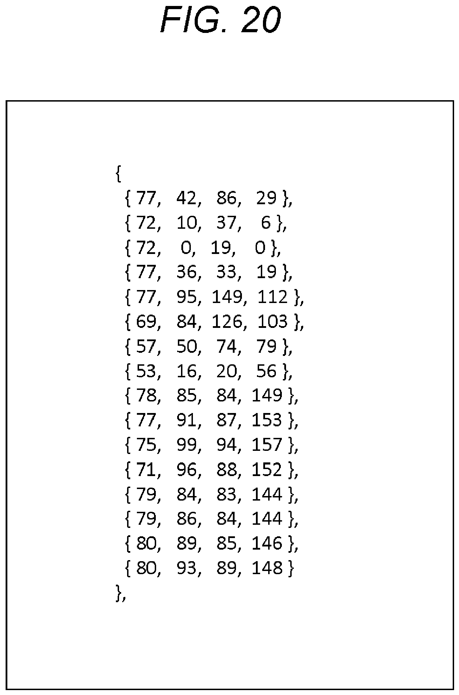

Fig. 20 is a diagram illustrating the standard weight matrix mWeight [i] [j] of (M, m) = (0, 11) described in Reference A.

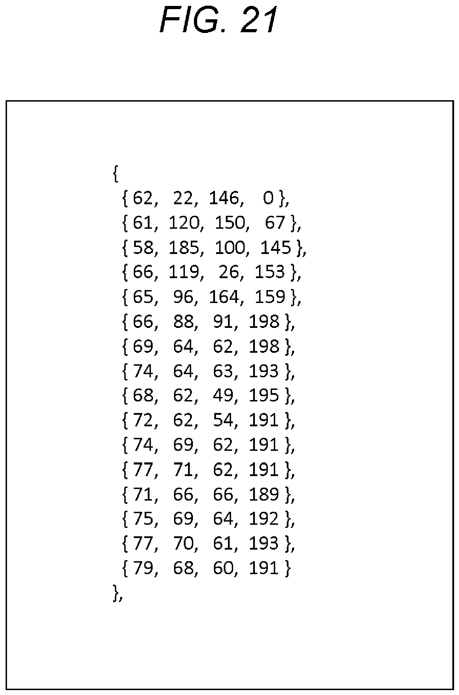

Fig. 21 is a diagram illustrating the standard weight matrix mWeight [i] [j] of (M, m) = (0, 12) described in Reference A.

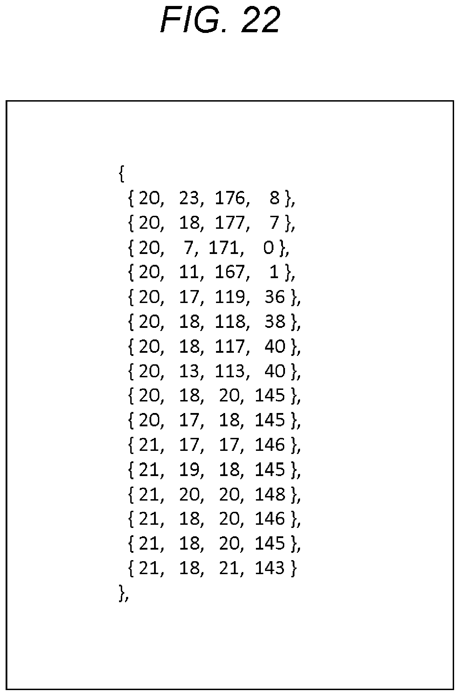

Fig. 22 is a diagram illustrating the standard weight matrix mWeight [i] [j] of (M, m) = (0, 13) described in Reference A.

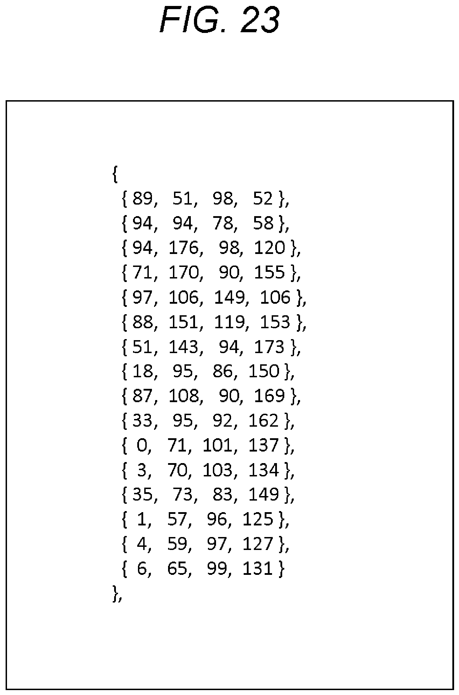

Fig. 23 is a diagram illustrating the standard weight matrix mWeight [i] [j] of (M, m) = (0, 14) described in Reference A.

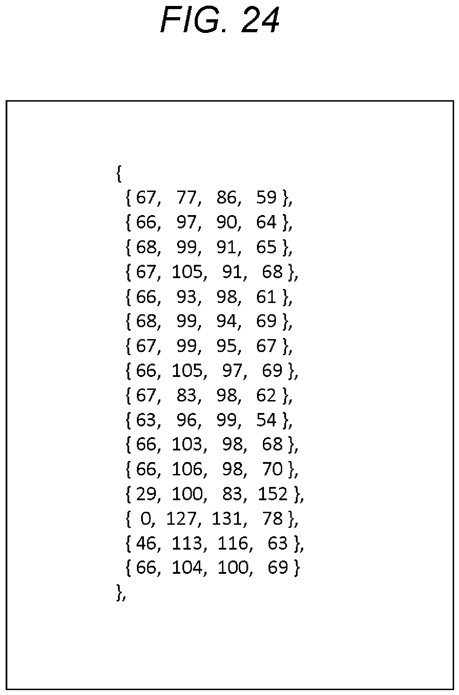

Fig. 24 is a diagram illustrating the standard weight matrix mWeight [i] [j] of (M, m) = (0, 15) described in Reference A.

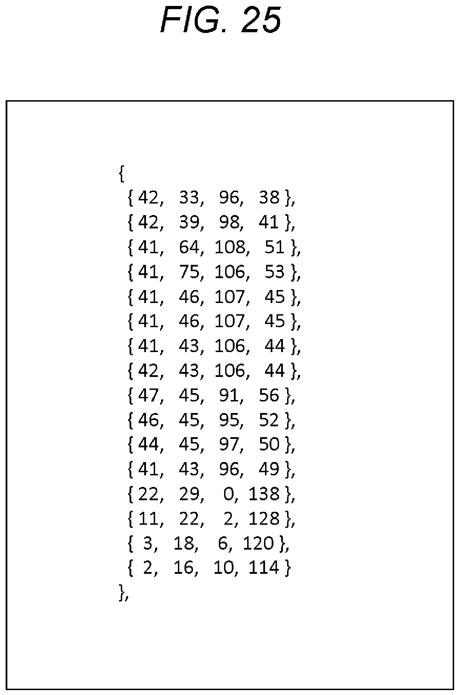

Fig. 25 is a diagram illustrating the standard weight matrix mWeight [i] [j] of (M, m) = (0, 16) described in Reference A.

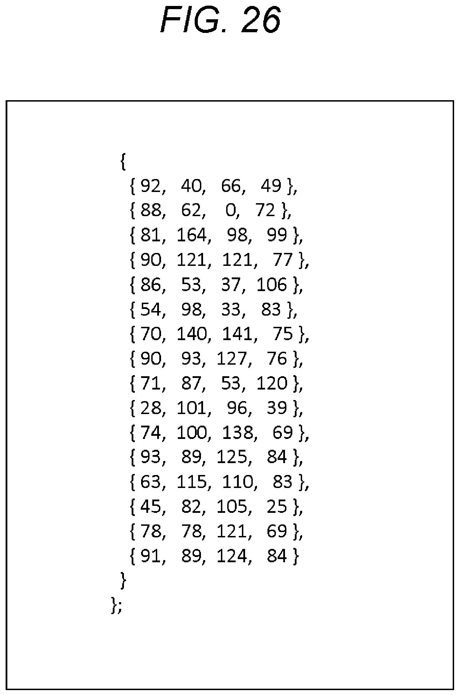

Fig. 26 is a diagram illustrating the standard weight matrix mWeight [i] [j] of (M, m) = (0, 17) described in Reference A.

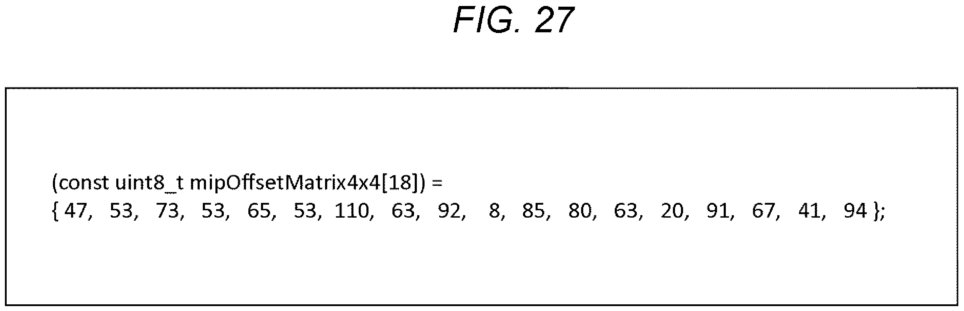

Fig. 27 is a diagram illustrating the standard variable fO of MipSizeId = 0 described in Reference A.

In the standard variable fO of MipSizeId = 0 in Fig. 27, the m + 1th value from the left represents the standard variable fO of modeId = m. The same applies to the diagram of the variable fO described later.

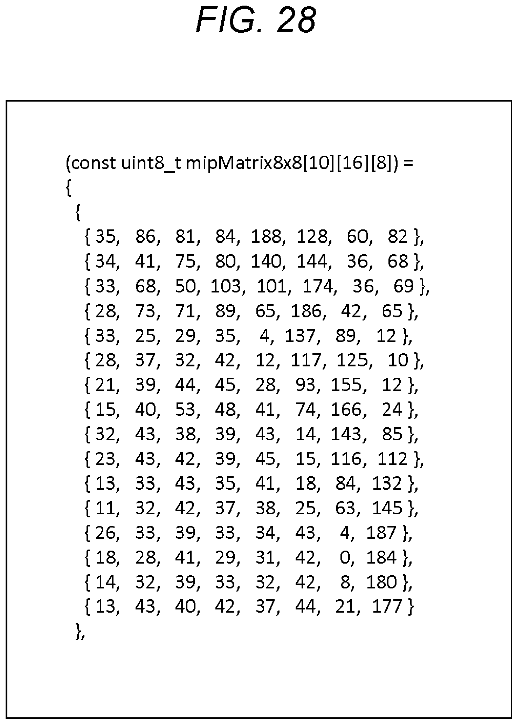

Fig. 28 is a diagram illustrating the standard weight matrix mWeight [i] [j] of (M, m) = (1, 0) described in Reference A.

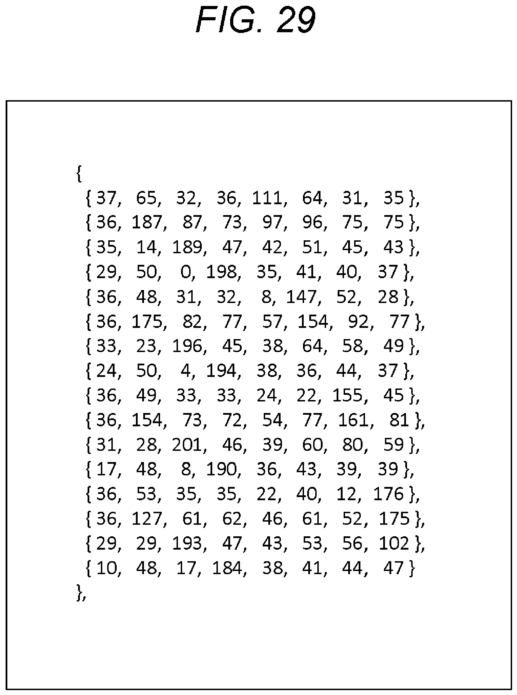

Fig. 29 is a diagram illustrating the standard weight matrix mWeight [i] [j] of (M, m) = (1, 1) described in Reference A.

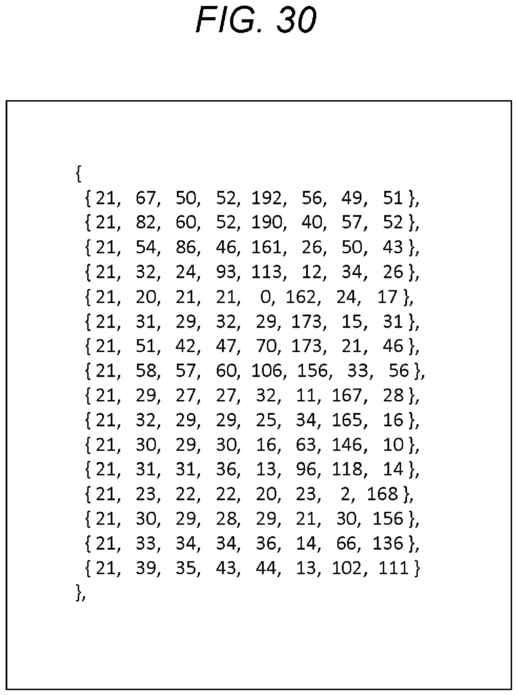

Fig. 30 is a diagram illustrating the standard weight matrix mWeight [i] [j] of (M, m) = (1, 2) described in Reference A.

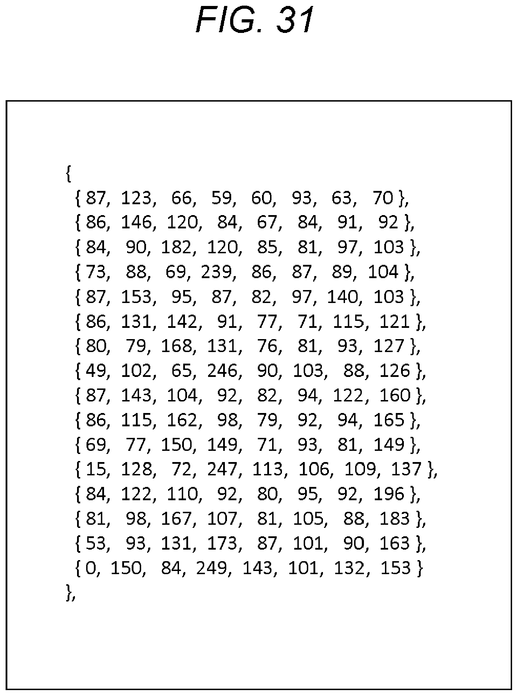

Fig. 31 is a diagram illustrating the standard weight matrix mWeight [i] [j] of (M, m) = (1, 3) described in Reference A.

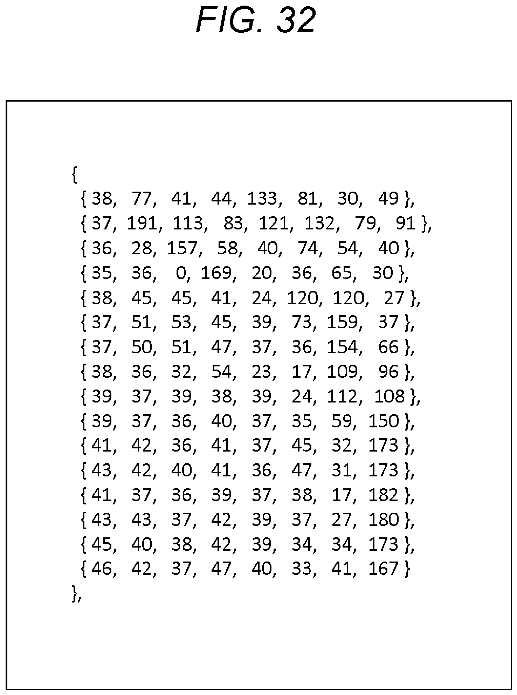

Fig. 32 is a diagram illustrating the standard weight matrix mWeight [i] [j] of (M, m) = (1, 4) described in Reference A.

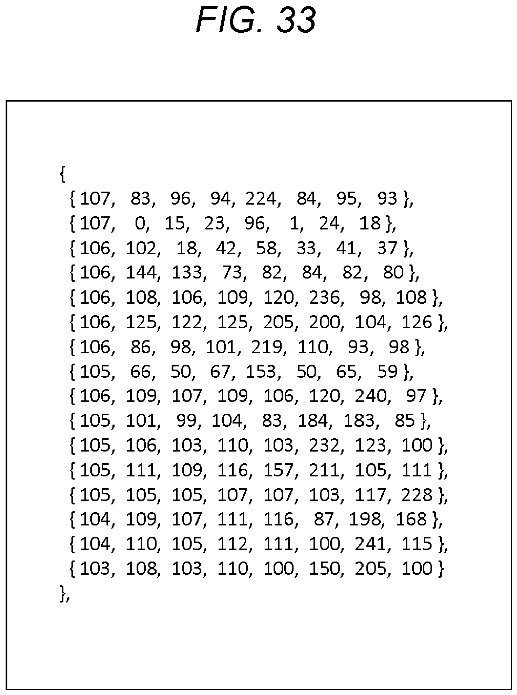

Fig. 33 is a diagram illustrating the standard weight matrix mWeight [i] [j] of (M, m) = (1, 5) described in Reference A.

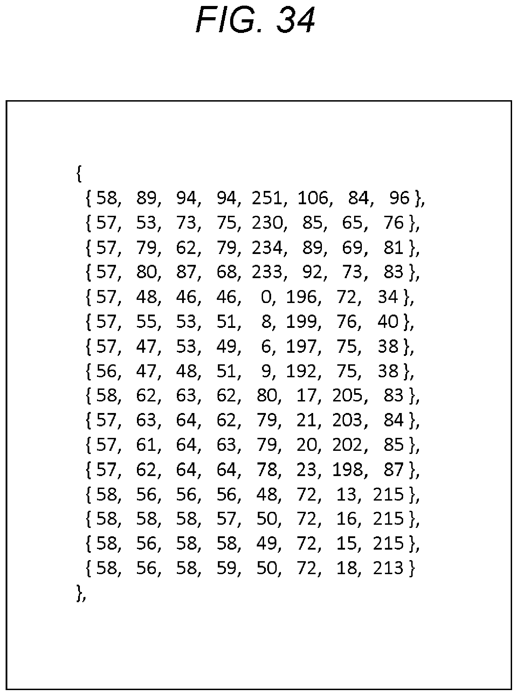

Fig. 34 is a diagram illustrating the standard weight matrix mWeight [i] [j] of (M, m) = (1, 6) described in Reference A.

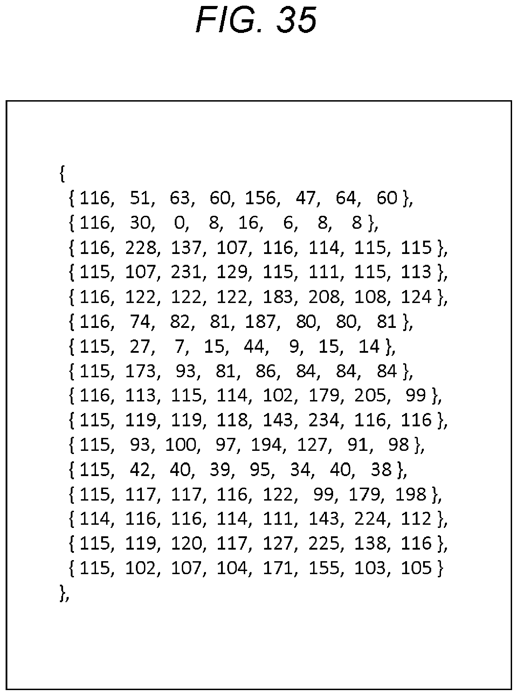

Fig. 35 is a diagram illustrating the standard weight matrix mWeight [i] [j] of (M, m) = (1, 7) described in Reference A.

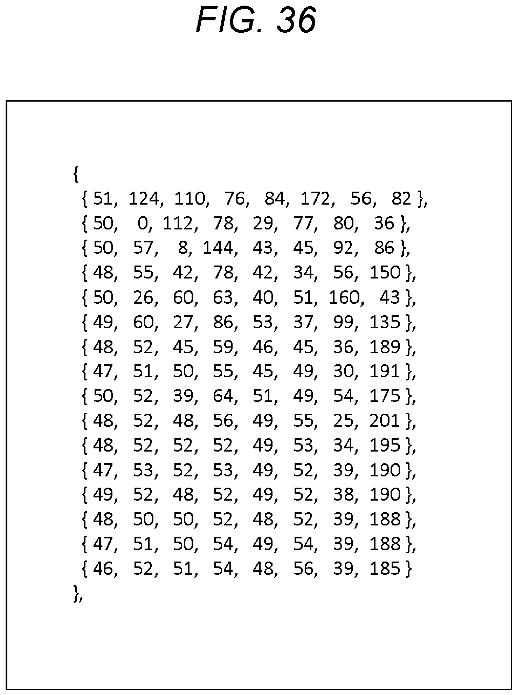

Fig. 36 is a diagram illustrating the standard weight matrix mWeight [i] [j] of (M, m) = (1, 8) described in Reference A.

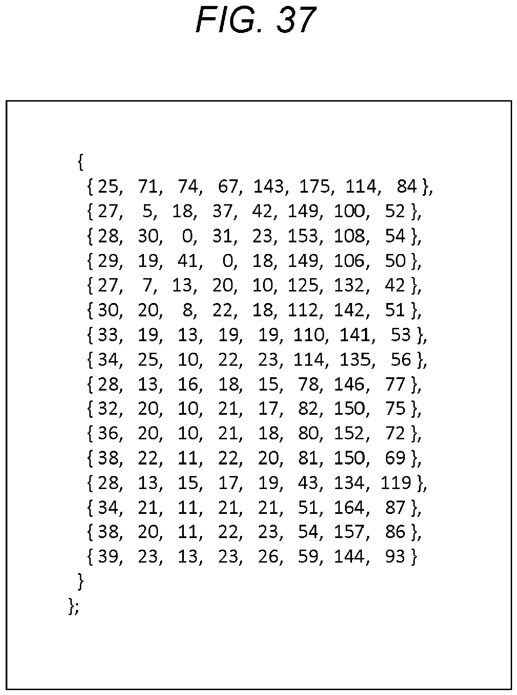

Fig. 37 is a diagram illustrating the standard weight matrix mWeight [i] [j] of (M, m) = (1, 9) described in Reference A.

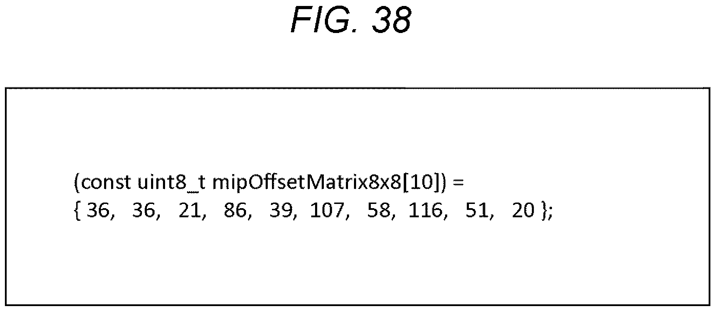

Fig. 38 is a diagram illustrating the standard variable fO of MipSizeId = 1 described in Reference A.

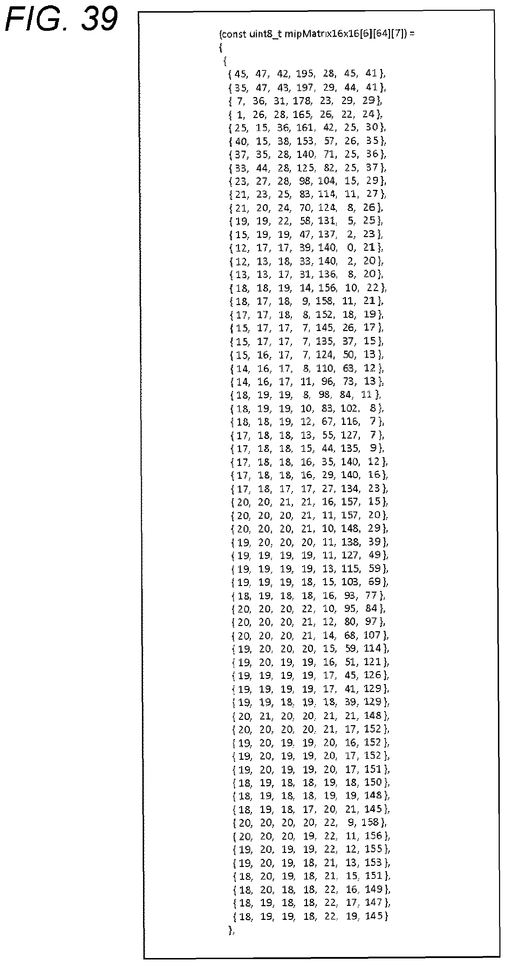

Fig. 39 is a diagram illustrating the standard weight matrix mWeight [i] [j] of (M, m) = (2, 0) described in Reference A.

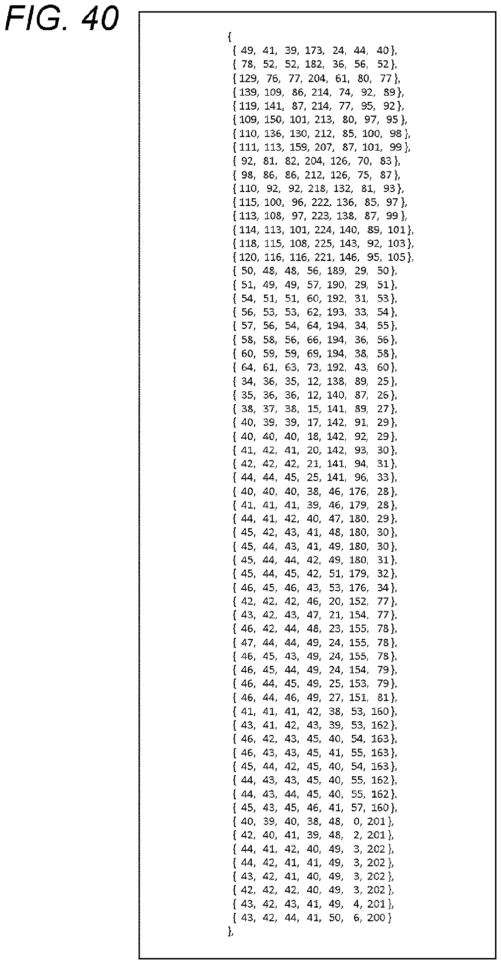

Fig. 40 is a diagram illustrating the standard weight matrix mWeight [i] [j] of (M, m) = (2, 1) described in Reference A.

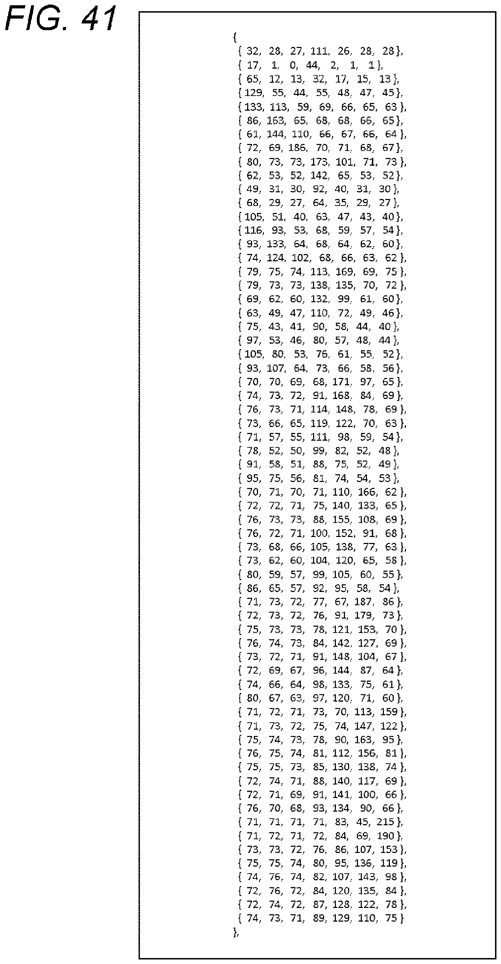

Fig. 41 is a diagram illustrating the standard weight matrix mWeight [i] [j] of (M, m) = (2, 2) described in Reference A.

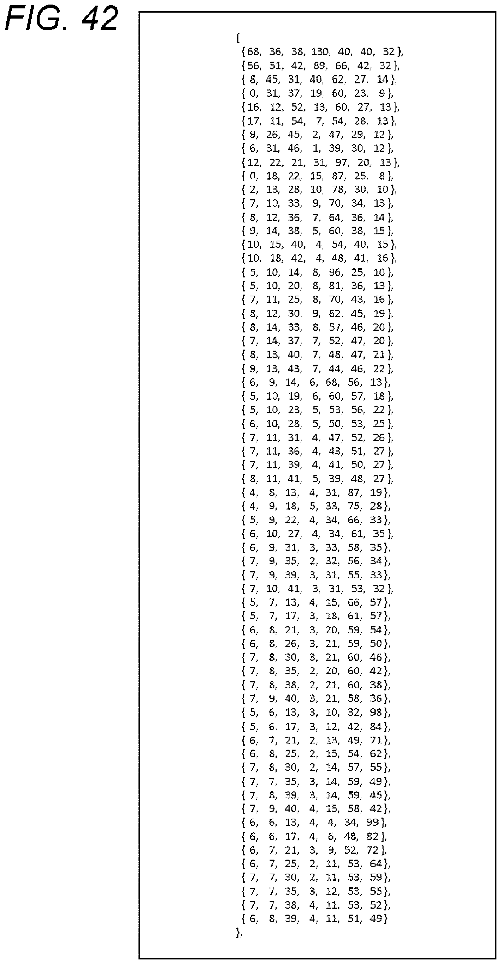

Fig. 42 is a diagram illustrating the standard weight matrix mWeight [i] [j] of (M, m) = (2, 3) described in Reference A.

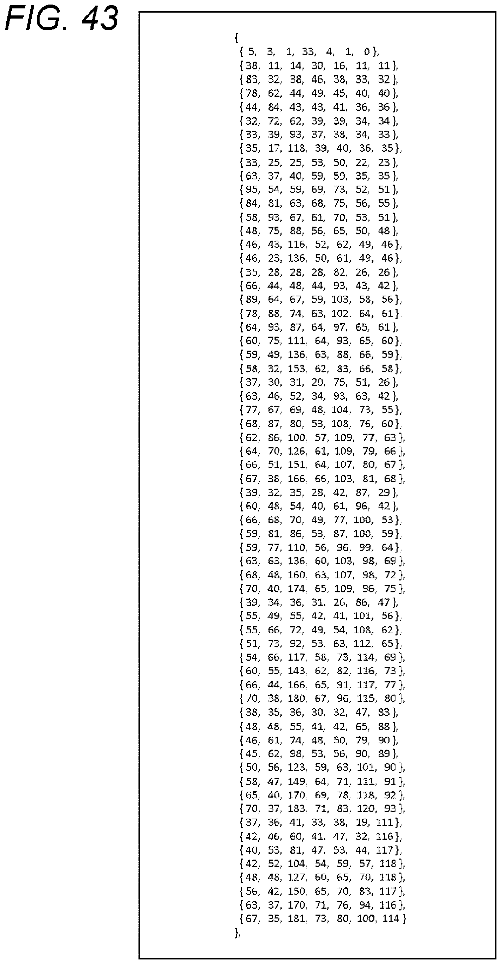

Fig. 43 is a diagram illustrating the standard weight matrix mWeight [i] [j] of (M, m) = (2, 4) described in Reference A.

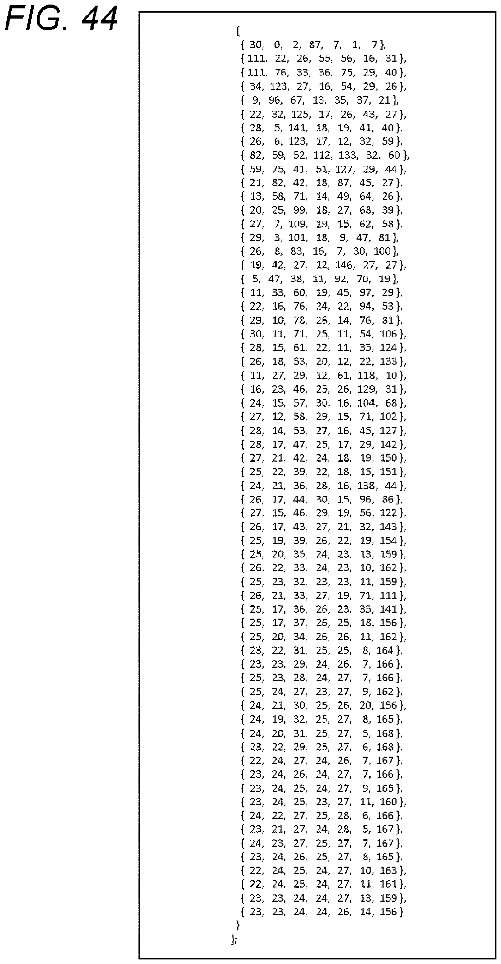

Fig. 44 is a diagram illustrating the standard weight matrix mWeight [i] [j] of (M, m) = (2, 5) described in Reference A.

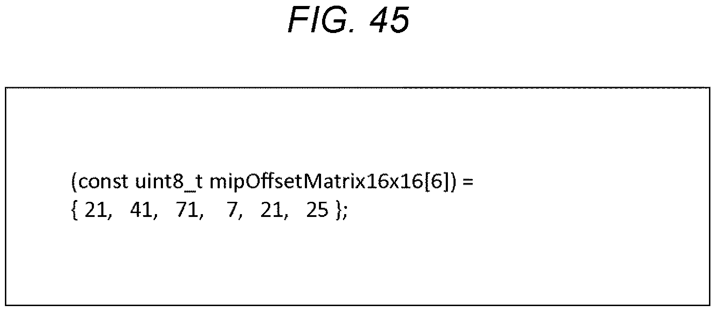

Fig. 45 is a diagram illustrating the standard variable fO of MipSizeId = 2 described in Reference A.

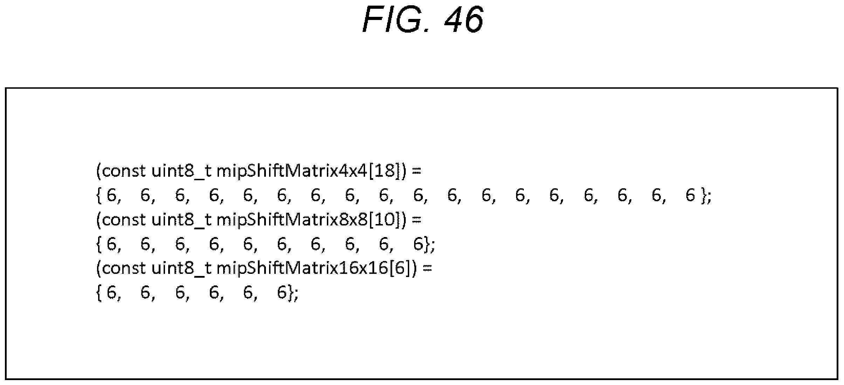

Fig. 46 is a diagram illustrating the shift amount sW used in the third generation method.

In the third generation method, the shift amount sW is set to the fixed value, for example, 6.

Then, in the third generation method, the standard weight matrix mWeight [i] [j], the fixed weight matrix mWeight [i] [j] obtained by changing the standard variable fO, and the fixed variable fO are used so that the fixed predicted pixel predMip [x] [y] obtained after setting the shift amount sW to the fixed value of 6 is a value approximating the standard predicted pixel predMip [x] [y].

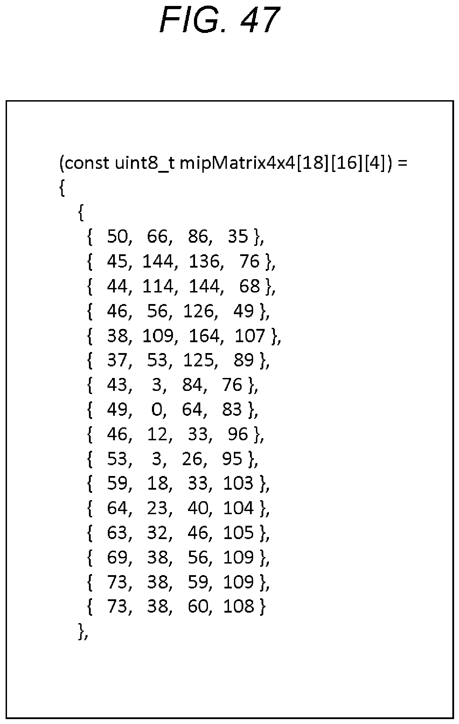

Fig. 47 is a diagram illustrating a fixed weight matrix mWeight [i] [j] of (M, m) = (0, 0) used in the third generation method.

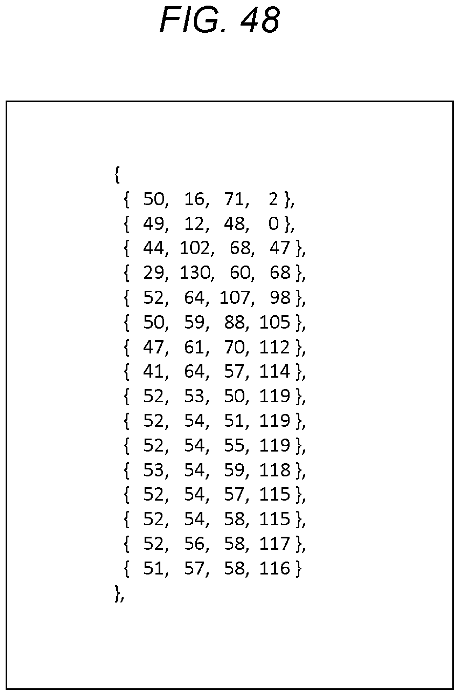

Fig. 48 is a diagram illustrating a fixed weight matrix mWeight [i] [j] of (M, m) = (0, 1) used in the third generation method.

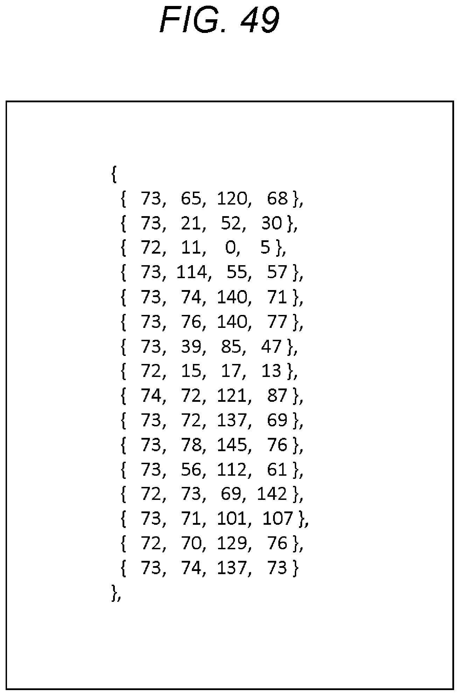

Fig. 49 is a diagram illustrating a fixed weight matrix mWeight [i] [j] of (M, m) = (0, 2) used in the third generation method.

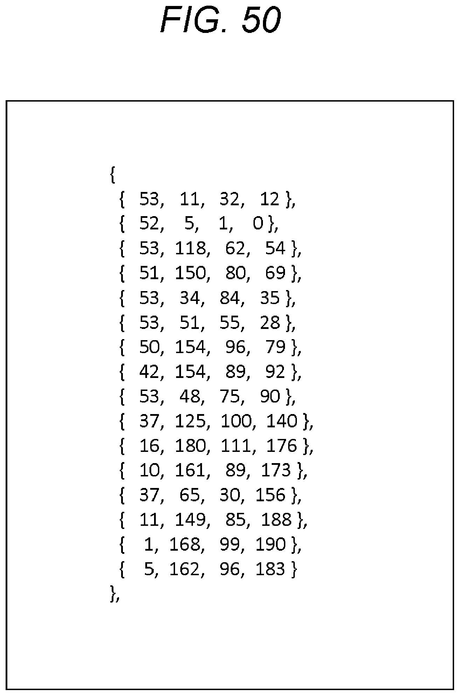

Fig. 50 is a diagram illustrating a fixed weight matrix mWeight [i] [j] of (M, m) = (0, 3) used in the third generation method.

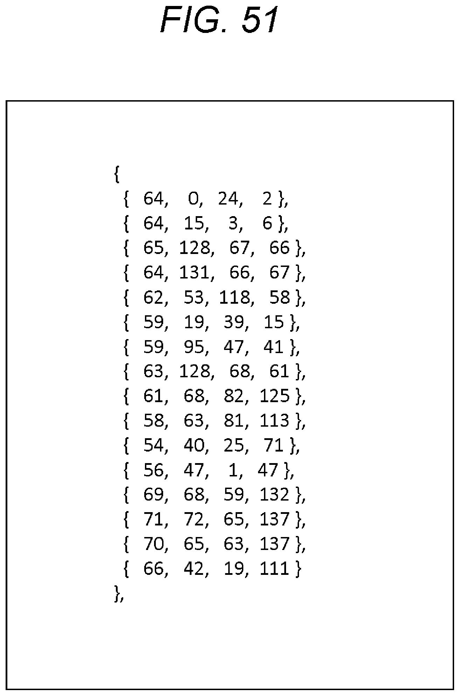

Fig. 51 is a diagram illustrating a fixed weight matrix mWeight [i] [j] of (M, m) = (0, 4) used in the third generation method.

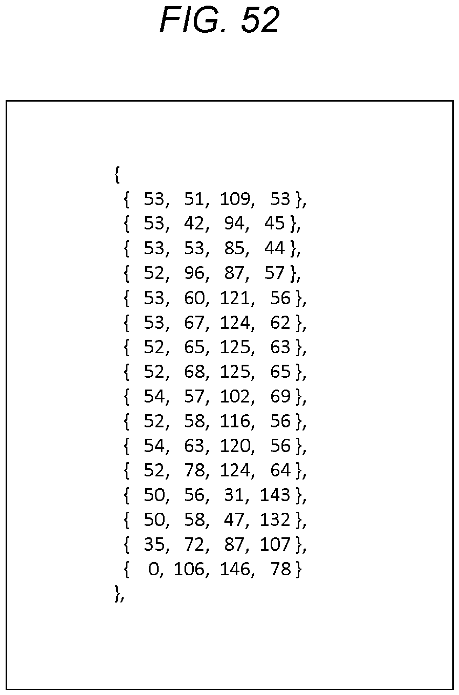

Fig. 52 is a diagram illustrating a fixed weight matrix mWeight [i] [j] of (M, m) = (0, 5) used in the third generation method.

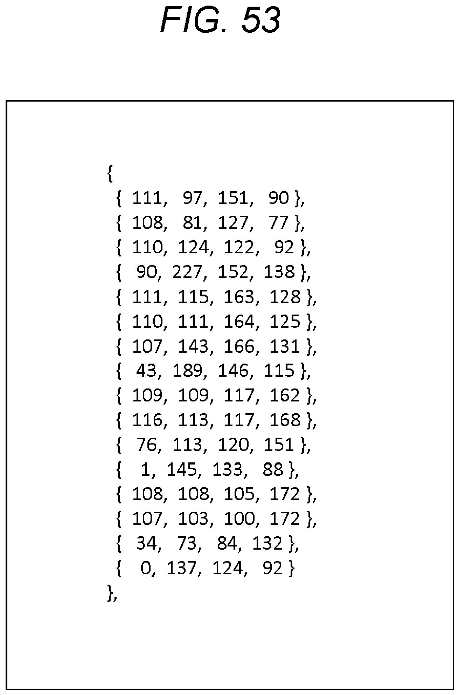

Fig. 53 is a diagram illustrating a fixed weight matrix mWeight [i] [j] of (M, m) = (0, 6) used in the third generation method.

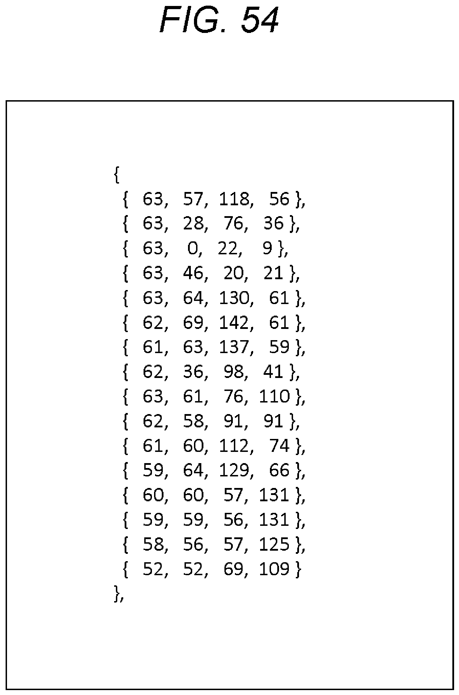

Fig. 54 is a diagram illustrating a fixed weight matrix mWeight [i] [j] of (M, m) = (0, 7) used in the third generation method.

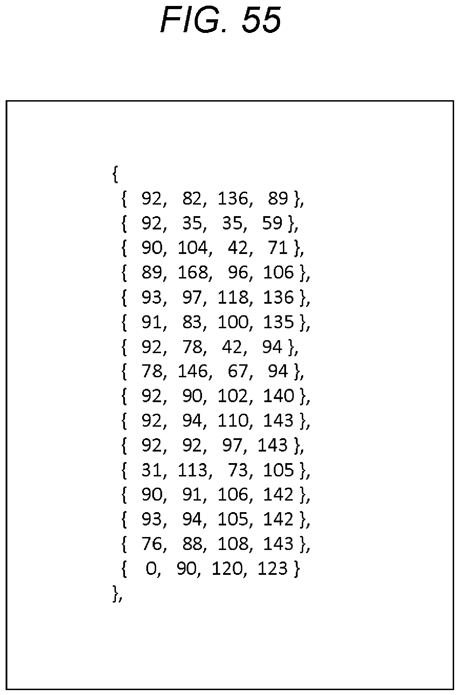

Fig. 55 is a diagram illustrating a fixed weight matrix mWeight [i] [j] of (M, m) = (0, 8) used in the third generation method.

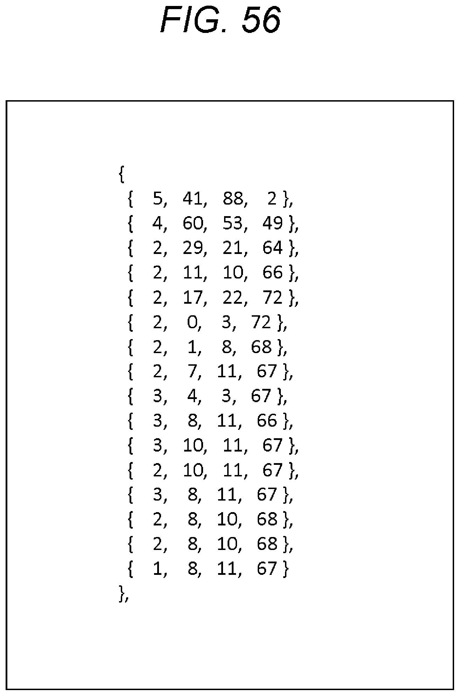

Fig. 56 is a diagram illustrating a fixed weight matrix mWeight [i] [j] of (M, m) = (0, 9) used in the third generation method.

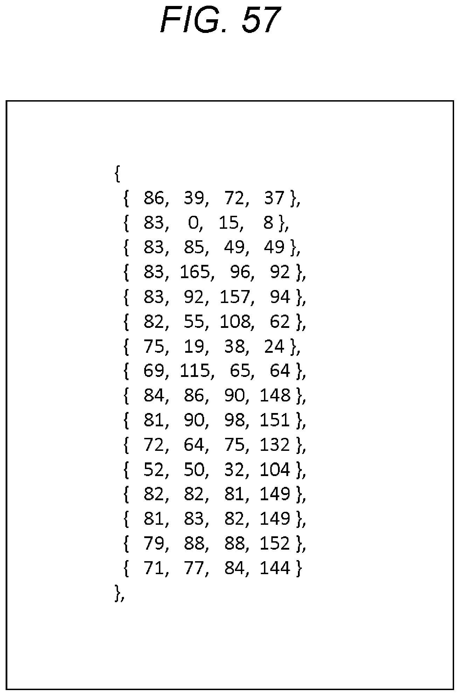

Fig. 57 is a diagram illustrating a fixed weight matrix mWeight [i] [j] of (M, m) = (0, 10) used in the third generation method.

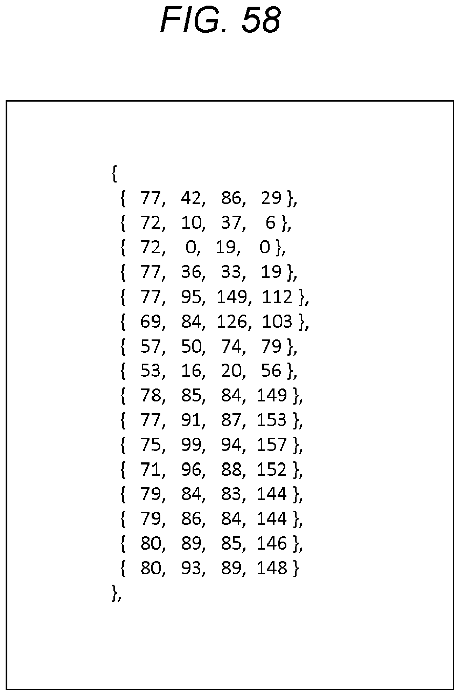

Fig. 58 is a diagram illustrating a fixed weight matrix mWeight [i] [j] of (M, m) = (0, 11) used in the third generation method.

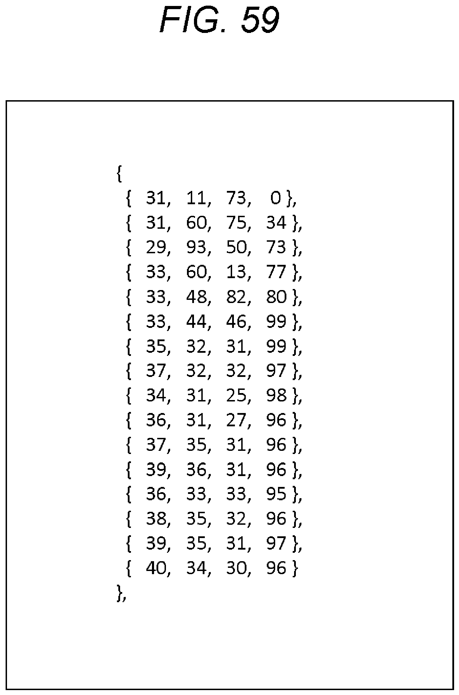

Fig. 59 is a diagram illustrating a fixed weight matrix mWeight [i] [j] of (M, m) = (0, 12) used in the third generation method.

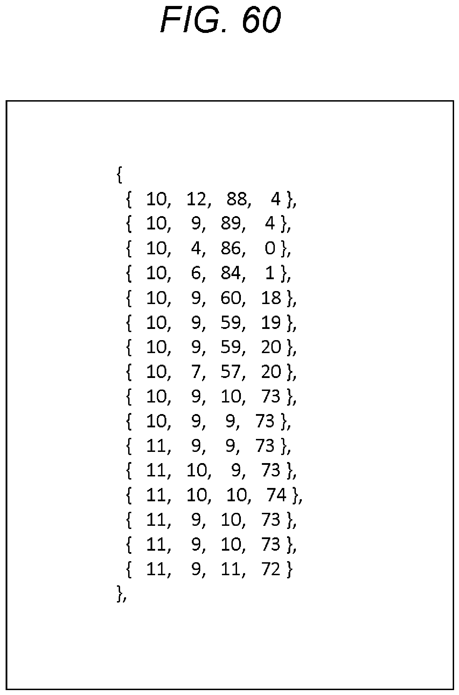

Fig. 60 is a diagram illustrating a fixed weight matrix mWeight [i] [j] of (M, m) = (0, 13) used in the third generation method.

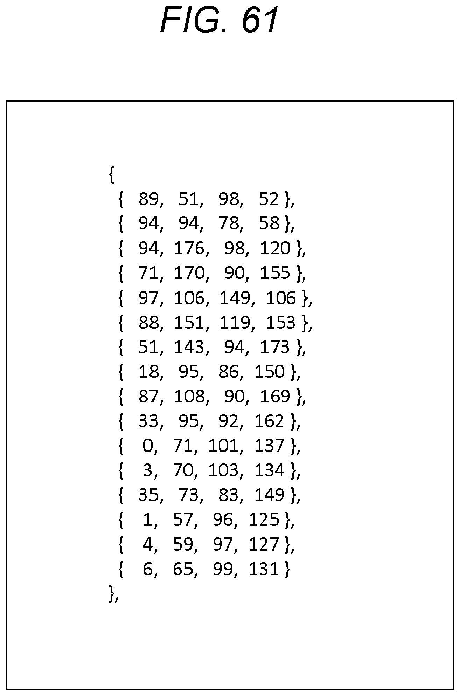

Fig. 61 is a diagram illustrating a fixed weight matrix mWeight [i] [j] of (M, m) = (0, 14) used in the third generation method.

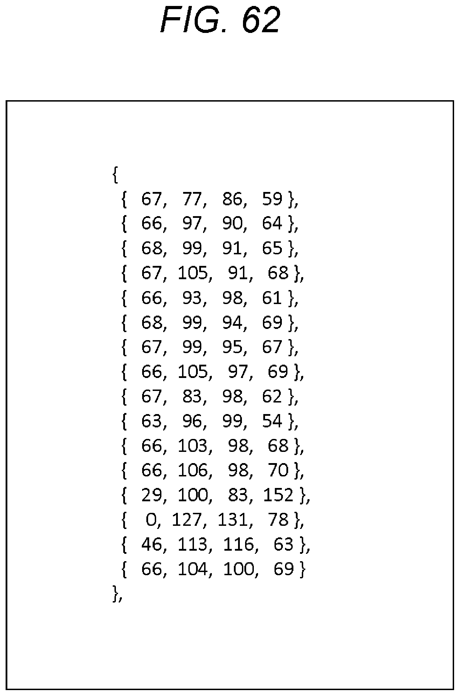

Fig. 62 is a diagram illustrating a fixed weight matrix mWeight [i] [j] of (M, m) = (0, 15) used in the third generation method.

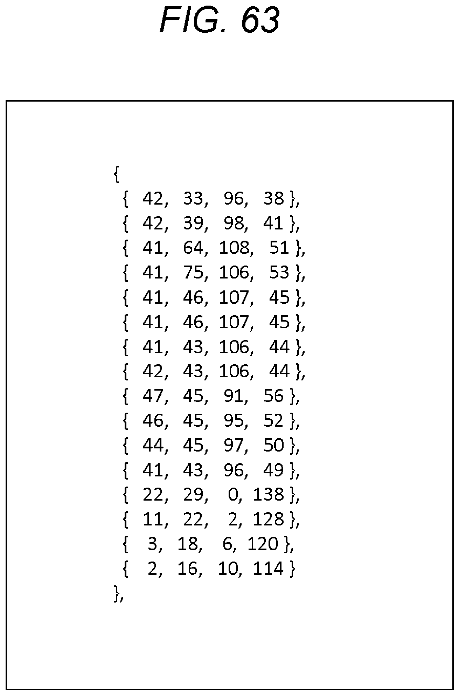

Fig. 63 is a diagram illustrating a fixed weight matrix mWeight [i] [j] of (M, m) = (0, 16) used in the third generation method.

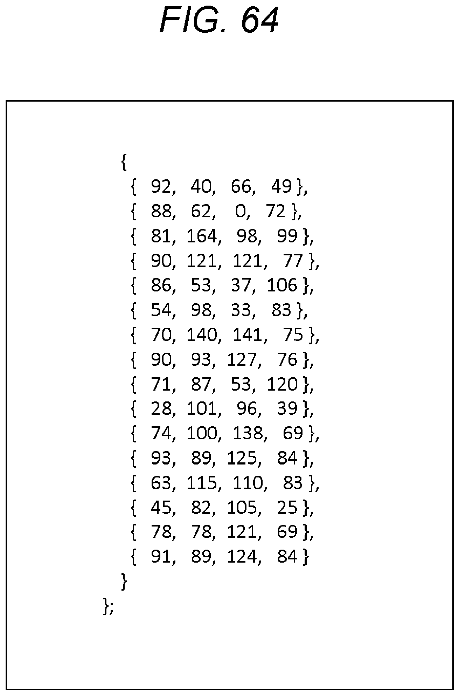

Fig. 64 is a diagram illustrating a fixed weight matrix mWeight [i] [j] of (M, m) = (0, 17) used in the third generation method.

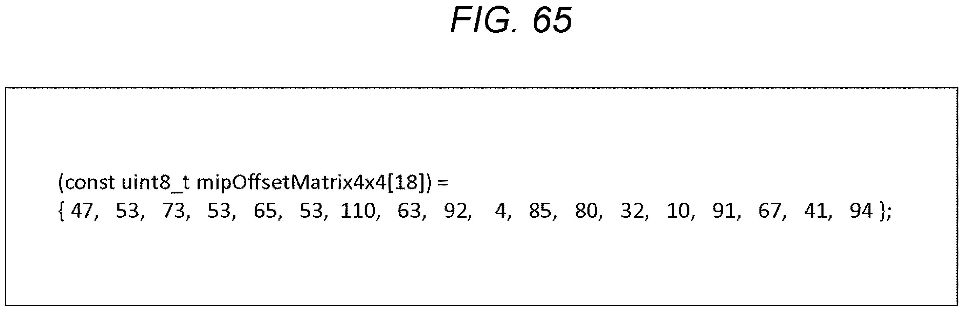

Fig. 65 is a diagram illustrating the fixed variable fO of MipSizeId = 0 used in the third generation method.

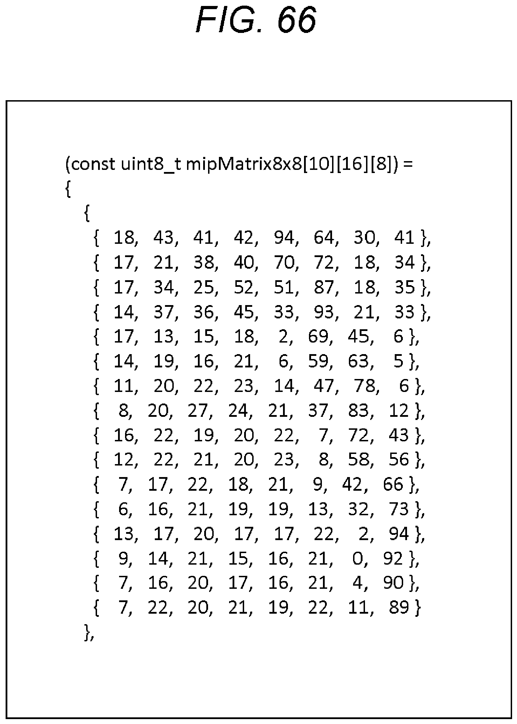

Fig. 66 is a diagram illustrating a fixed weight matrix mWeight [i] [j] of (M, m) = (1, 0) used in the third generation method.

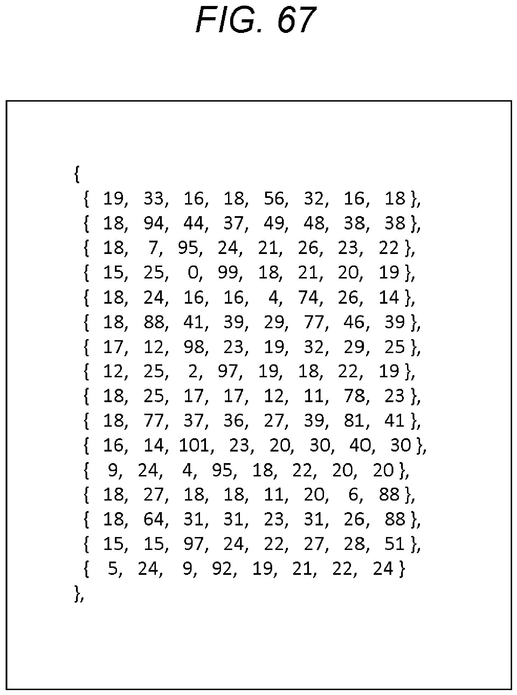

Fig. 67 is a diagram illustrating a fixed weight matrix mWeight [i] [j] of (M, m) = (1, 1) used in the third generation method.

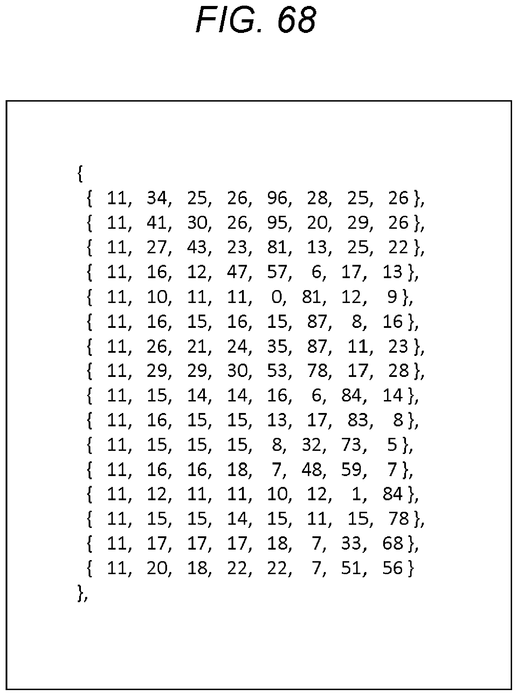

Fig. 68 is a diagram illustrating a fixed weight matrix mWeight [i] [j] of (M, m) = (1, 2) used in the third generation method.

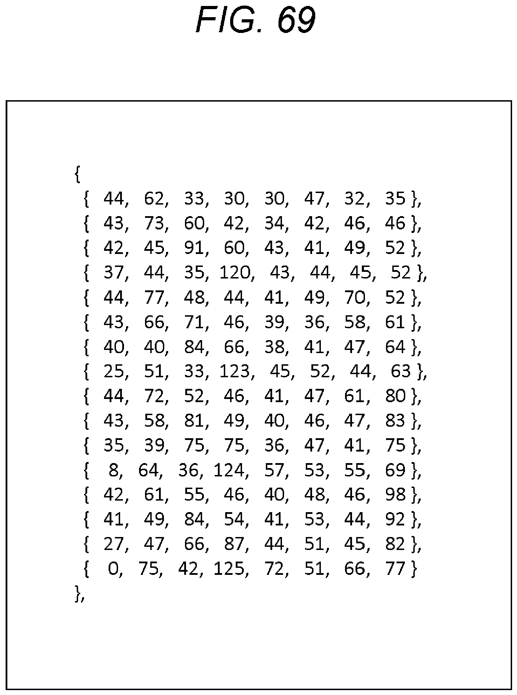

Fig. 69 is a diagram illustrating a fixed weight matrix mWeight [i] [j] of (M, m) = (1, 3) used in the third generation method.

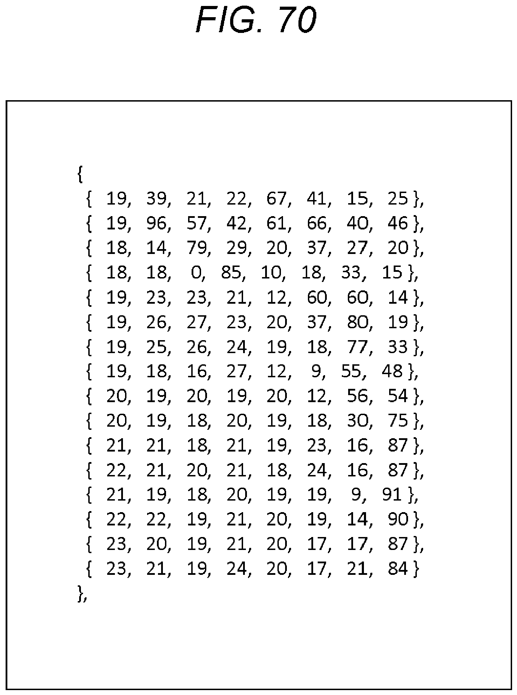

Fig. 70 is a diagram illustrating a fixed weight matrix mWeight [i] [j] of (M, m) = (1, 4) used in the third generation method.

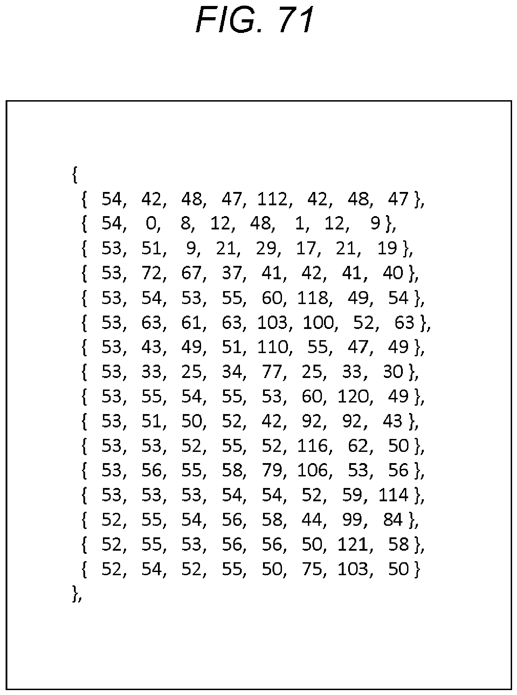

Fig. 71 is a diagram illustrating a fixed weight matrix mWeight [i] [j] of (M, m) = (1, 5) used in the third generation method.

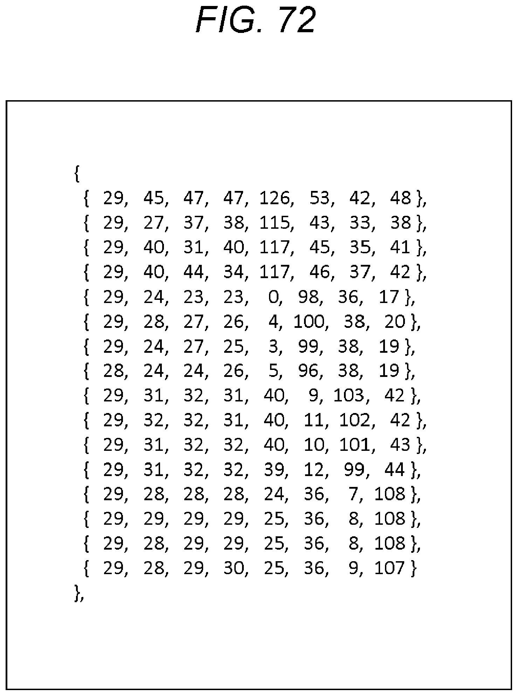

Fig. 72 is a diagram illustrating a fixed weight matrix mWeight [i] [j] of (M, m) = (1, 6) used in the third generation method.

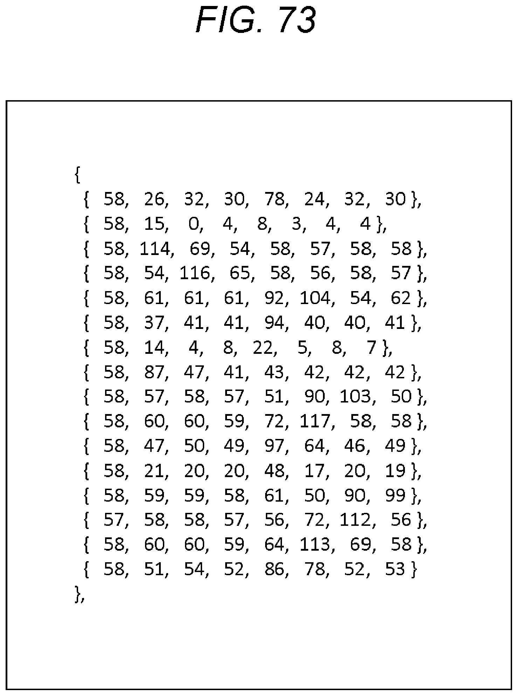

Fig. 73 is a diagram illustrating a fixed weight matrix mWeight [i] [j] of (M, m) = (1, 7) used in the third generation method.

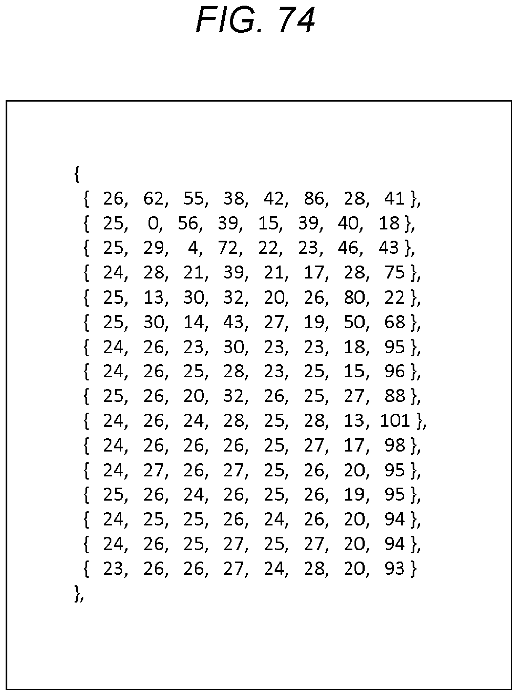

Fig. 74 is a diagram illustrating a fixed weight matrix mWeight [i] [j] of (M, m) = (1, 8) used in the third generation method.

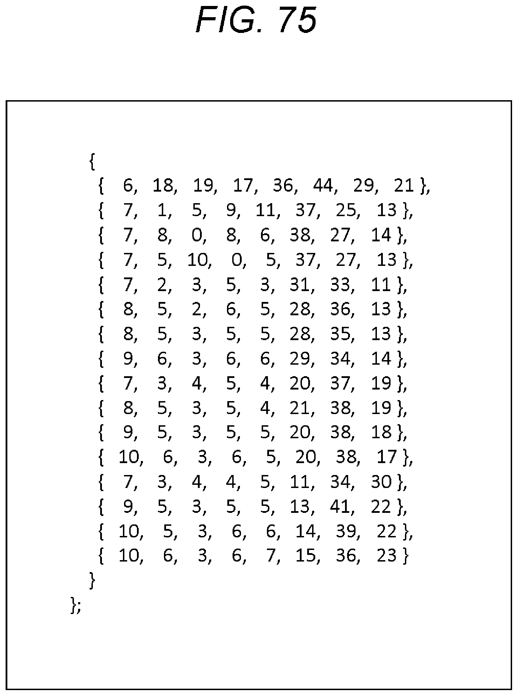

Fig. 75 is a diagram illustrating a fixed weight matrix mWeight [i] [j] of (M, m) = (1, 9) used in the third generation method.

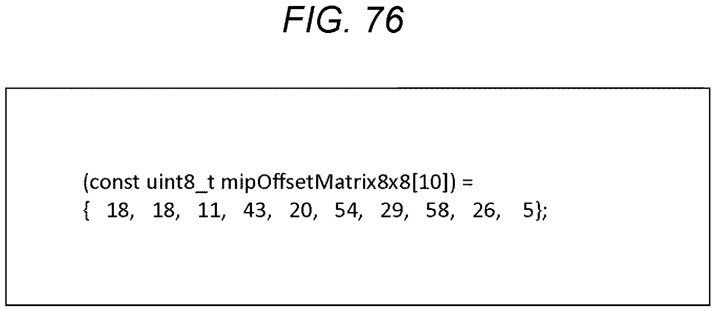

Fig. 76 is a diagram illustrating the fixed variable fO of MipSizeId = 1 used in the third generation method.

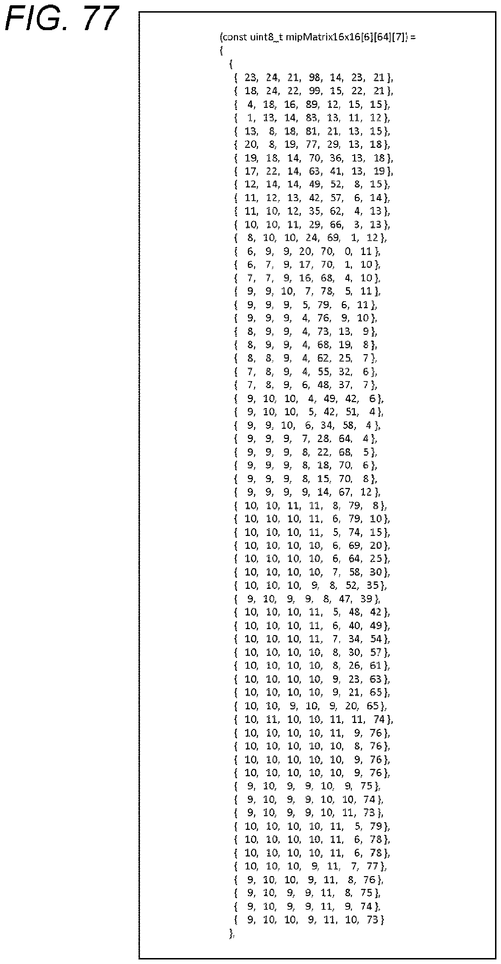

Fig. 77 is a diagram illustrating a fixed weight matrix mWeight [i] [j] of (M, m) = (2, 0) used in the third generation method.

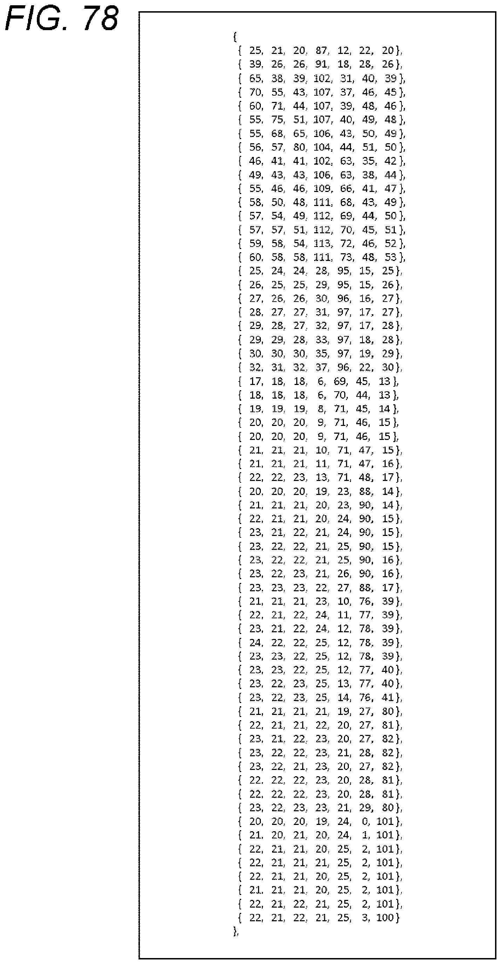

Fig. 78 is a diagram illustrating a fixed weight matrix mWeight [i] [j] of (M, m) = (2, 1) used in the third generation method.

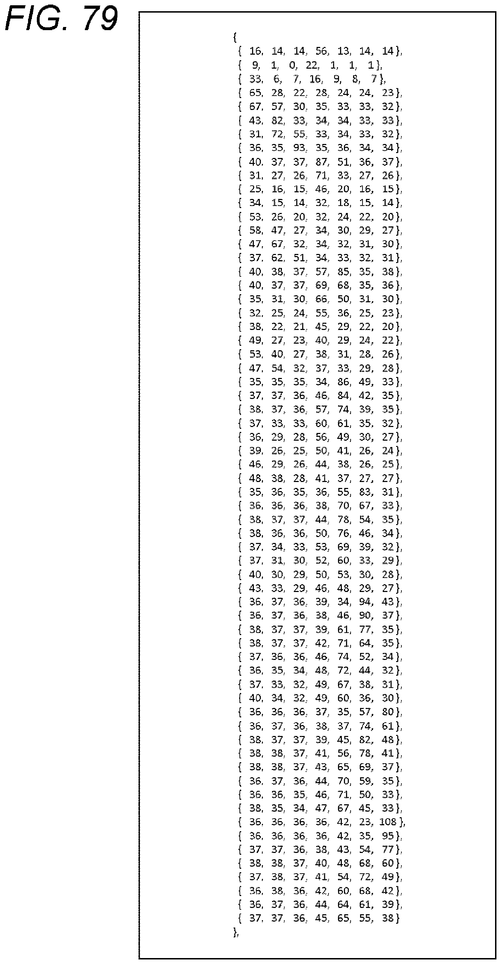

Fig. 79 is a diagram illustrating a fixed weight matrix mWeight [i] [j] of (M, m) = (2, 2) used in the third generation method.

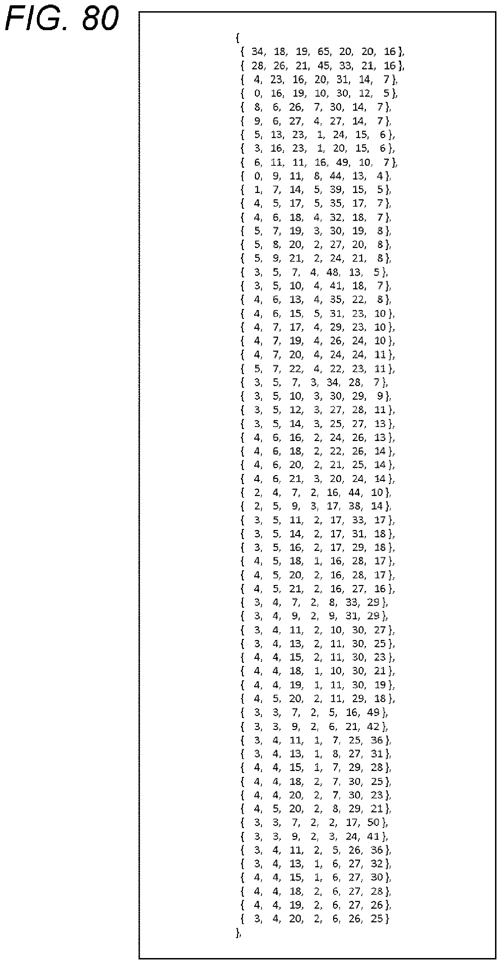

Fig. 80 is a diagram illustrating a fixed weight matrix mWeight [i] [j] of (M, m) = (2, 3) used in the third generation method.

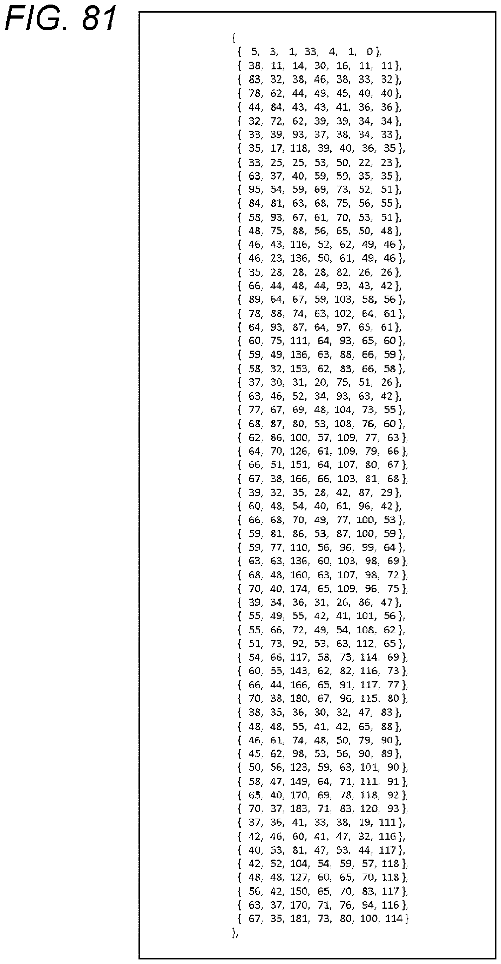

Fig. 81 is a diagram illustrating a fixed weight matrix mWeight [i] [j] of (M, m) = (2, 4) used in the third generation method.

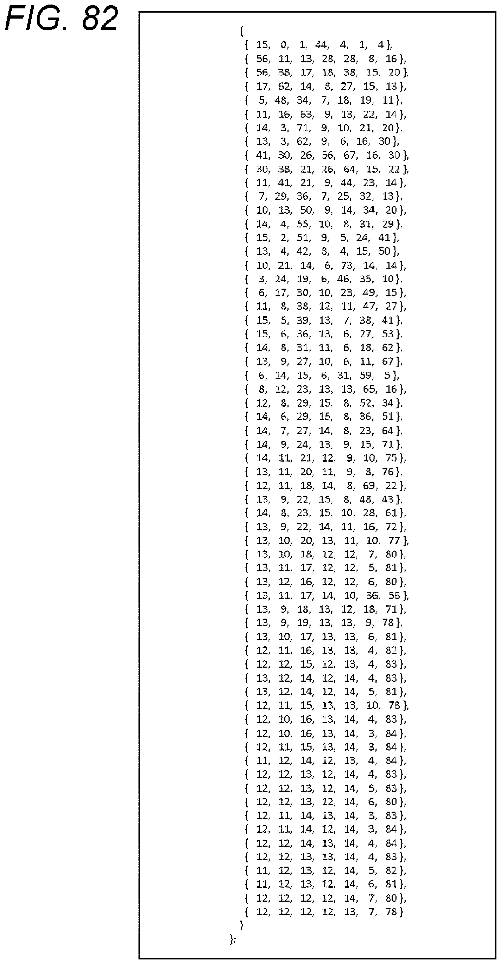

Fig. 82 is a diagram illustrating a fixed weight matrix mWeight [i] [j] of (M, m) = (2, 5) used in the third generation method.

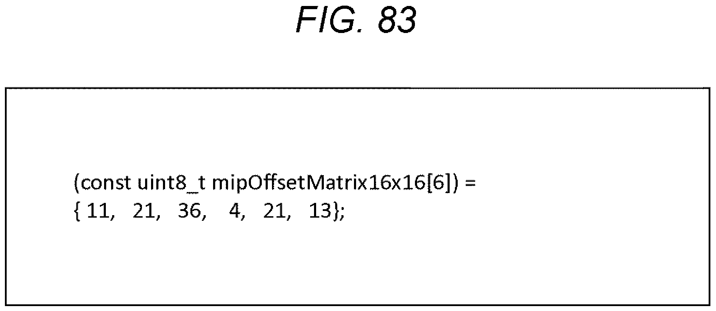

Fig. 83 is a diagram illustrating the fixed variable fO of MipSizeId = 2 used in the third generation method.

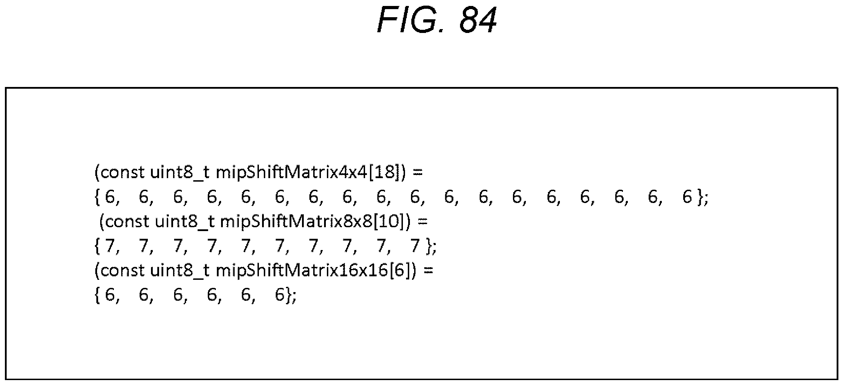

Fig. 84 is a diagram illustrating the shift amount sW used in the fourth generation method.

In the fourth generation method, the shift amount sW is set to the fixed value according to the matrix size of the weight matrix mWeight [i] [j] indicated by the MipSizeId. That is, in the fourth generation method, the shift amount sW is set to the fixed value for each MipSizeId. Specifically, the shift amount sW is set to 6, 7, and 6 when MipSizeId = 0, 1, and 2, respectively.

Then, similar to the third generation method, in the fourth generation method, the standard weight matrix mWeight [i] [j], the fixed weight matrix mWeight [i] [j] obtained by changing the standard variable fO, and the fixed variable fO are used so that the fixed predicted pixel predMip [x] [y] obtained after setting the shift amount sW to the fixed value is a value approximating the standard predicted pixel predMip [x] [y].

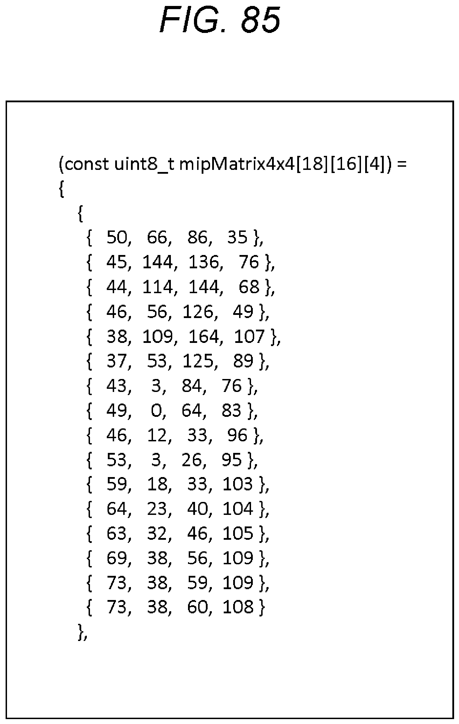

Fig. 85 is a diagram illustrating a fixed weight matrix mWeight [i] [j] of (M, m) = (0, 0) used in the fourth generation method.

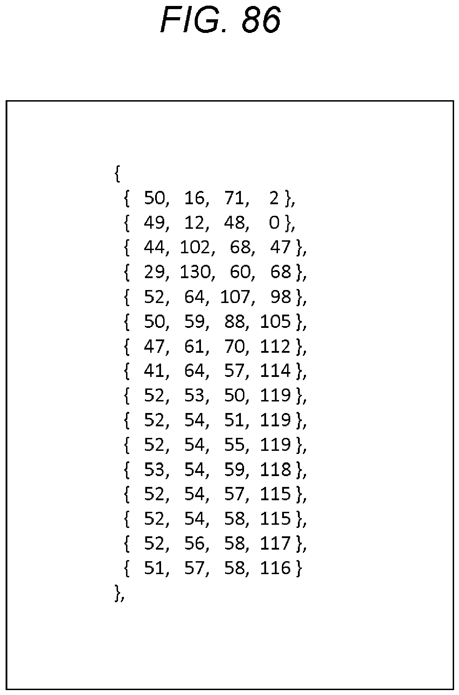

Fig. 86 is a diagram illustrating a fixed weight matrix mWeight [i] [j] of (M, m) = (0, 1) used in the fourth generation method.

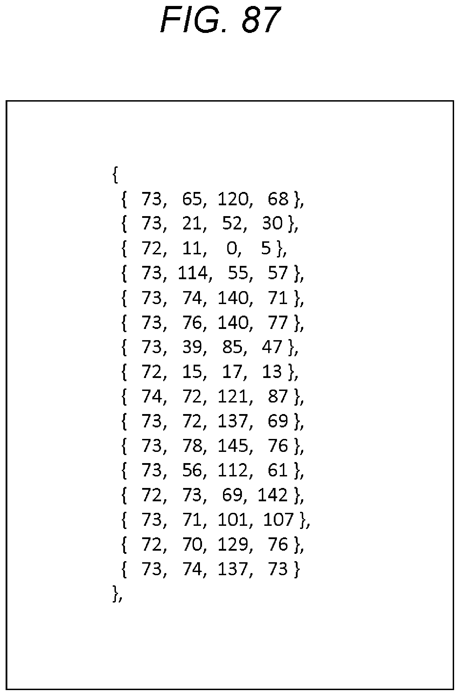

Fig. 87 is a diagram illustrating a fixed weight matrix mWeight [i] [j] of (M, m) = (0, 2) used in the fourth generation method.

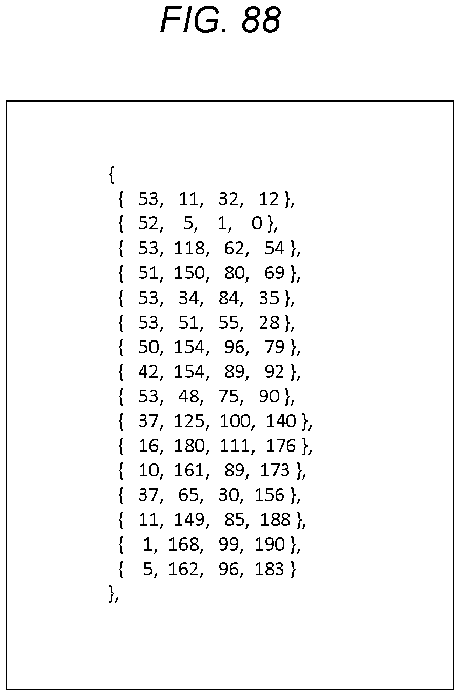

Fig. 88 is a diagram illustrating a fixed weight matrix mWeight [i] [j] of (M, m) = (0, 3) used in the fourth generation method.

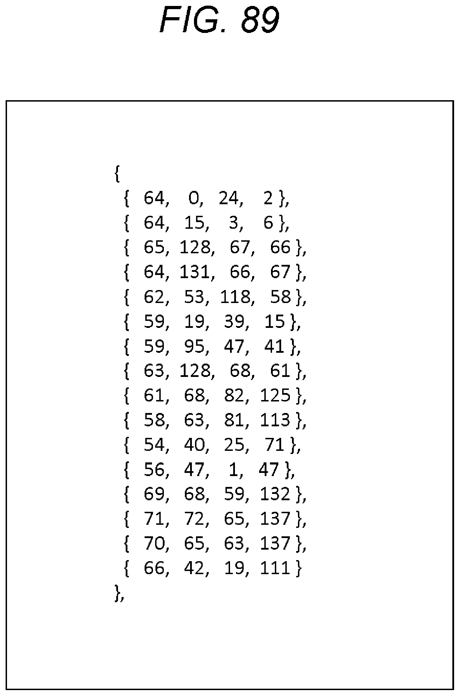

Fig. 89 is a diagram illustrating a fixed weight matrix mWeight [i] [j] of (M, m) = (0, 4) used in the fourth generation method.

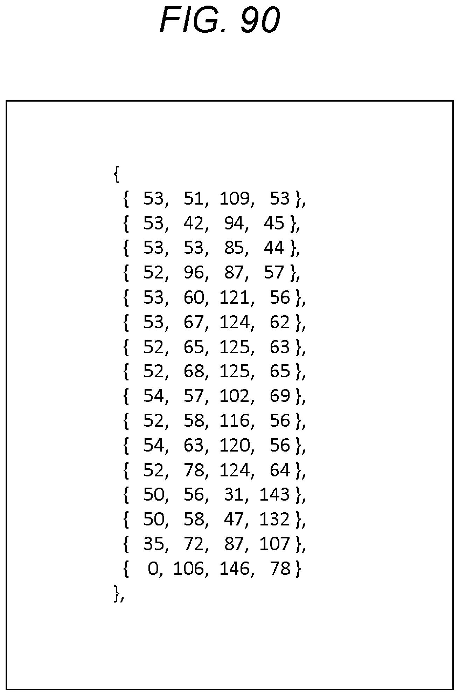

Fig. 90 is a diagram illustrating a fixed weight matrix mWeight [i] [j] of (M, m) = (0, 5) used in the fourth generation method.

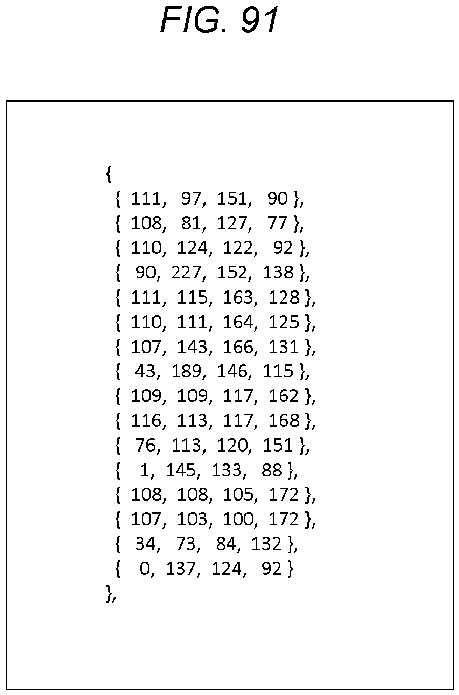

Fig. 91 is a diagram illustrating a fixed weight matrix mWeight [i] [j] of (M, m) = (0, 6) used in the fourth generation method.

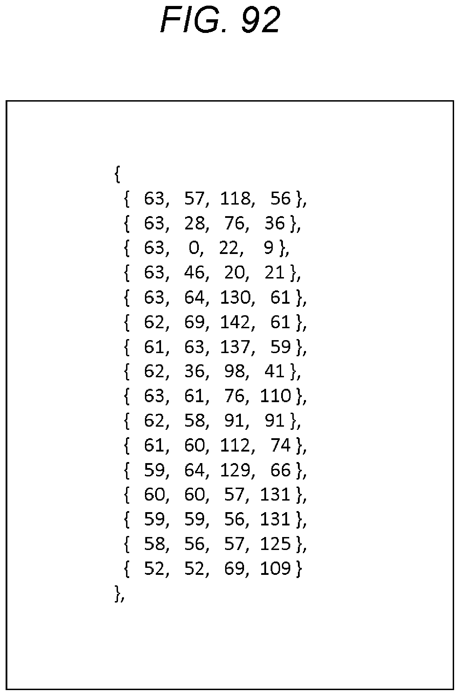

Fig. 92 is a diagram illustrating a fixed weight matrix mWeight [i] [j] of (M, m) = (0, 7) used in the fourth generation method.

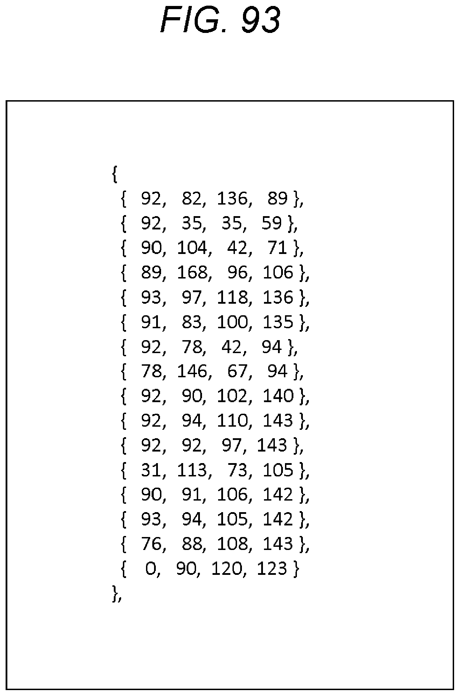

Fig. 93 is a diagram illustrating a fixed weight matrix mWeight [i] [j] of (M, m) = (0, 8) used in the fourth generation method.

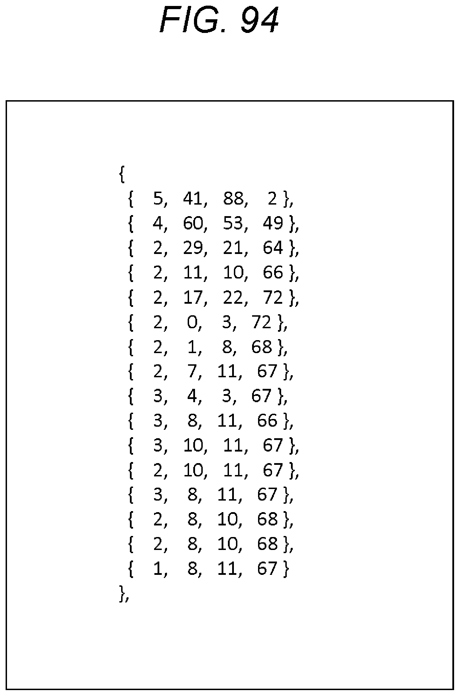

Fig. 94 is a diagram illustrating a fixed weight matrix mWeight [i] [j] of (M, m) = (0, 9) used in the fourth generation method.

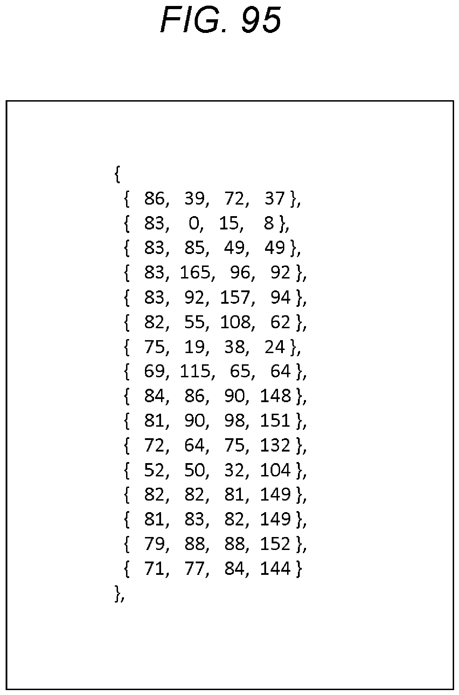

Fig. 95 is a diagram illustrating a fixed weight matrix mWeight [i] [j] of (M, m) = (0, 10) used in the fourth generation method.

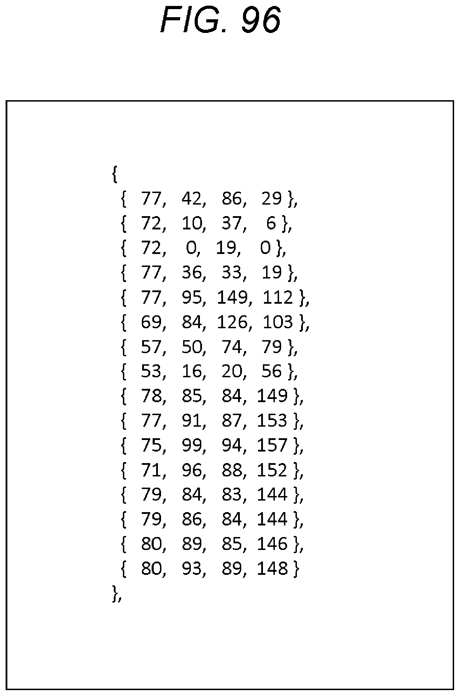

Fig. 96 is a diagram illustrating a fixed weight matrix mWeight [i] [j] of (M, m) = (0, 11) used in the fourth generation method.

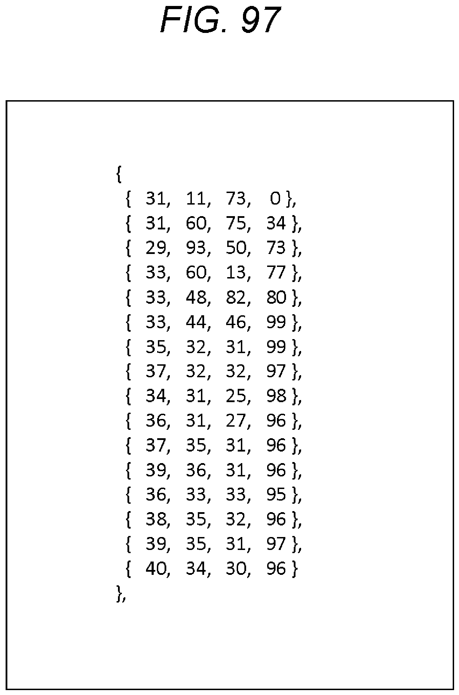

Fig. 97 is a diagram illustrating a fixed weight matrix mWeight [i] [j] of (M, m) = (0, 12) used in the fourth generation method.

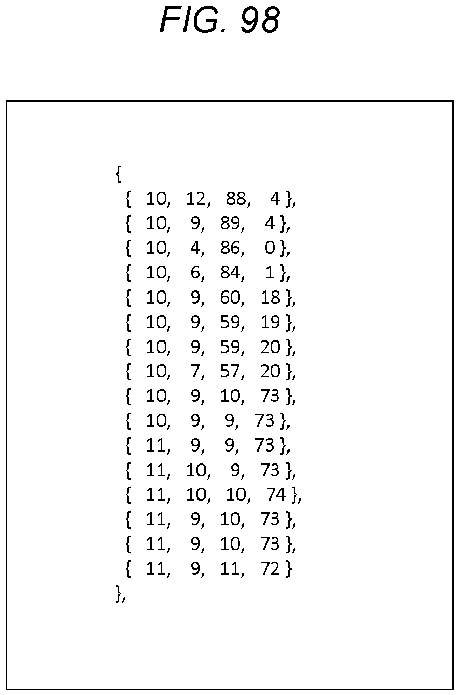

Fig. 98 is a diagram illustrating a fixed weight matrix mWeight [i] [j] of (M, m) = (0, 13) used in the fourth generation method.

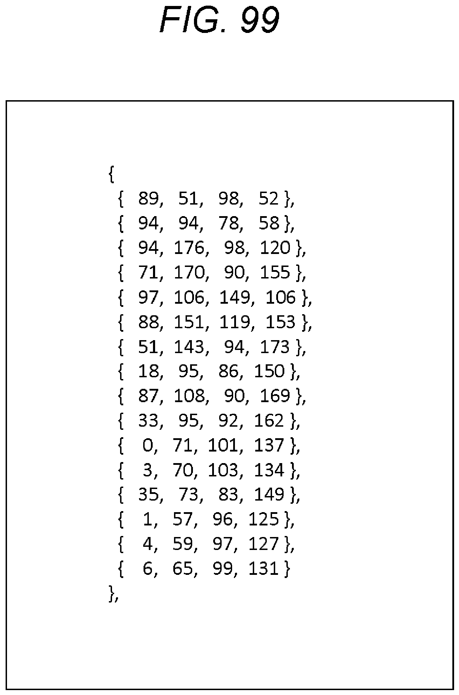

Fig. 99 is a diagram illustrating a fixed weight matrix mWeight [i] [j] of (M, m) = (0, 14) used in the fourth generation method.

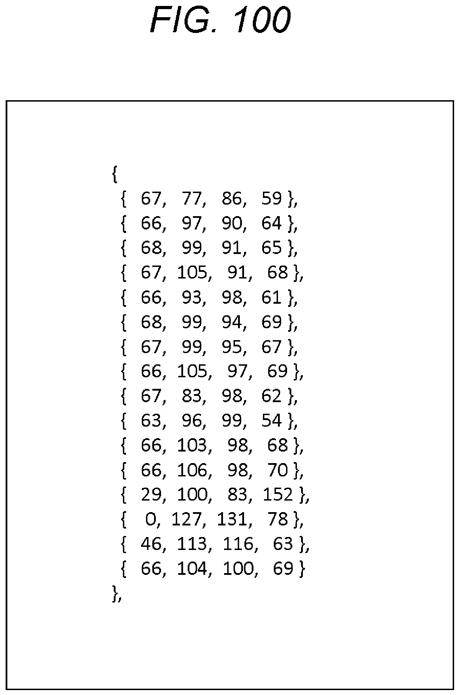

Fig. 100 is a diagram illustrating a fixed weight matrix mWeight [i] [j] of (M, m) = (0, 15) used in the fourth generation method.

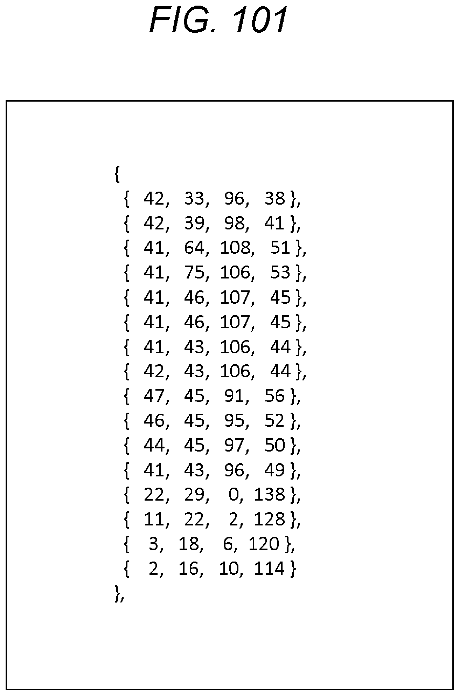

Fig. 101 is a diagram illustrating a fixed weight matrix mWeight [i] [j] of (M, m) = (0, 16) used in the fourth generation method.

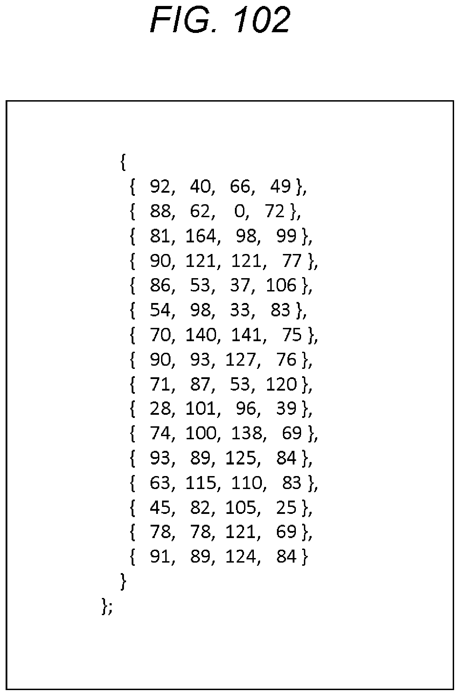

Fig. 102 is a diagram illustrating a fixed weight matrix mWeight [i] [j] of (M, m) = (0, 17) used in the fourth generation method.

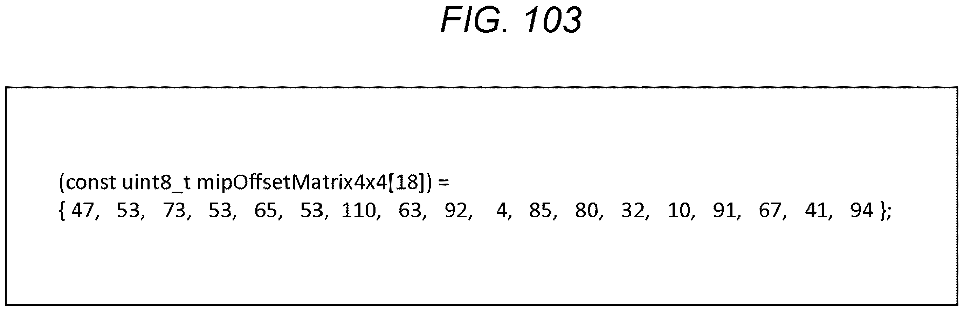

Fig. 103 is a diagram illustrating the fixed variable fO of MipSizeId = 0 used in the fourth generation method.

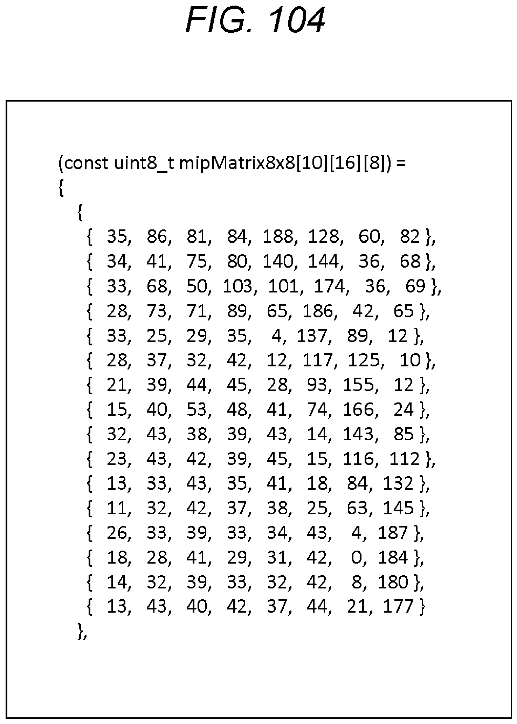

Fig. 104 is a diagram illustrating a fixed weight matrix mWeight [i] [j] of (M, m) = (1, 0) used in the fourth generation method.

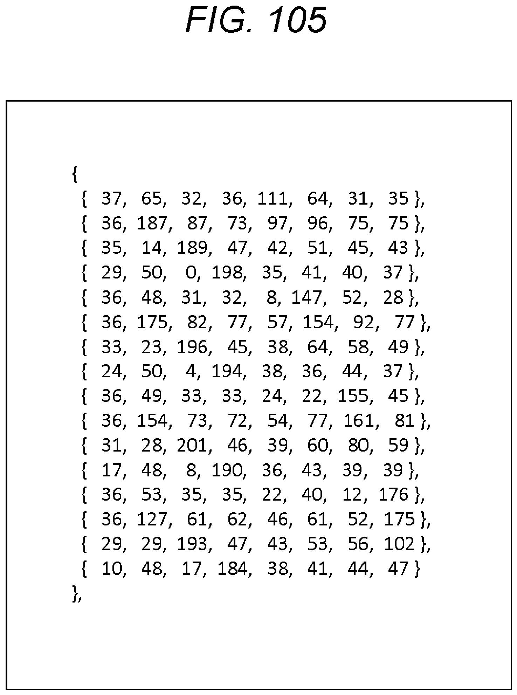

Fig. 105 is a diagram illustrating a fixed weight matrix mWeight [i] [j] of (M, m) = (1, 1) used in the fourth generation method.

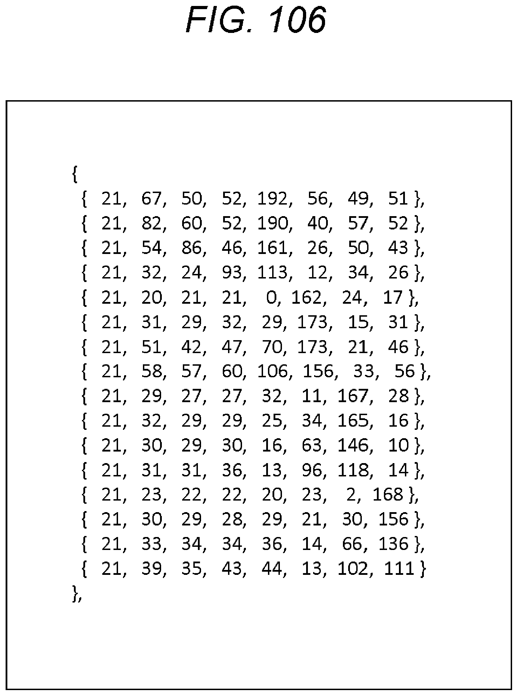

Fig. 106 is a diagram illustrating a fixed weight matrix mWeight [i] [j] of (M, m) = (1, 2) used in the fourth generation method.

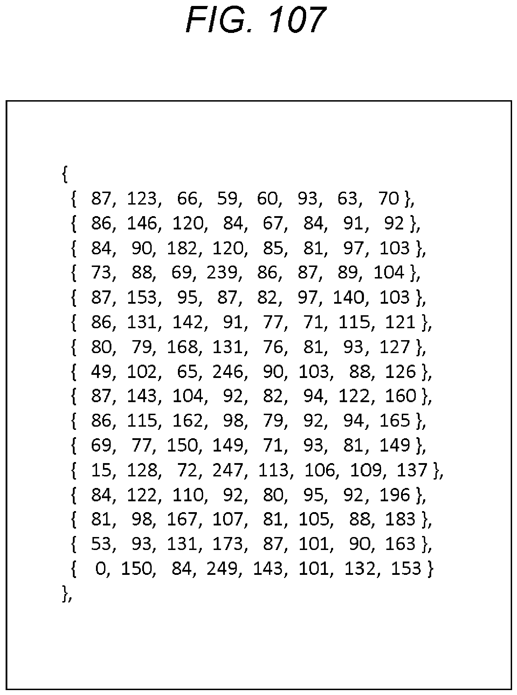

Fig. 107 is a diagram illustrating a fixed weight matrix mWeight [i] [j] of (M, m) = (1, 3) used in the fourth generation method.

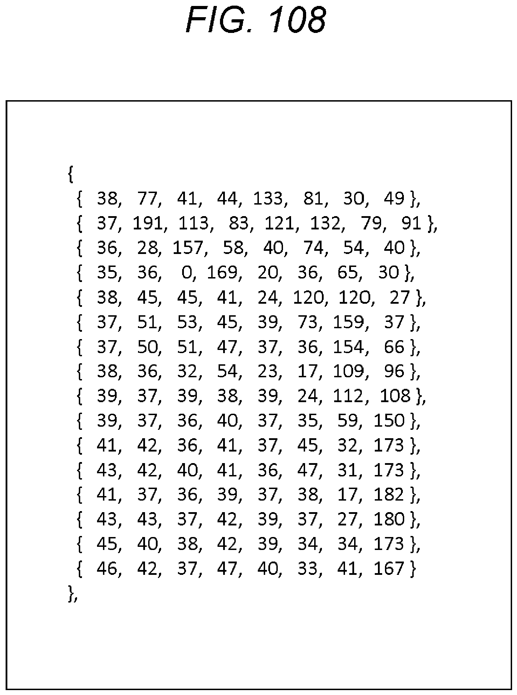

Fig. 108 is a diagram illustrating a fixed weight matrix mWeight [i] [j] of (M, m) = (1, 4) used in the fourth generation method.

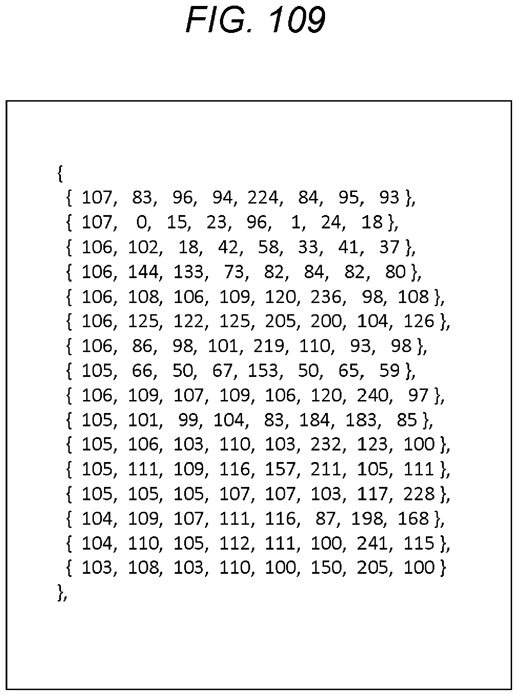

Fig. 109 is a diagram illustrating a fixed weight matrix mWeight [i] [j] of (M, m) = (1, 5) used in the fourth generation method.

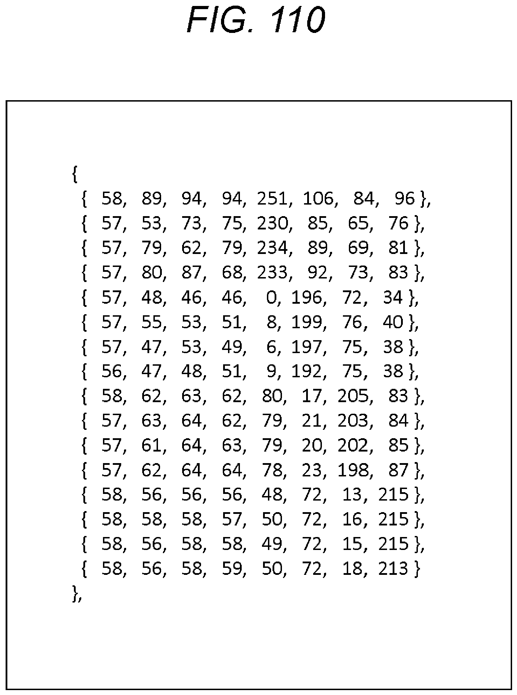

Fig. 110 is a diagram illustrating a fixed weight matrix mWeight [i] [j] of (M, m) = (1, 6) used in the fourth generation method.

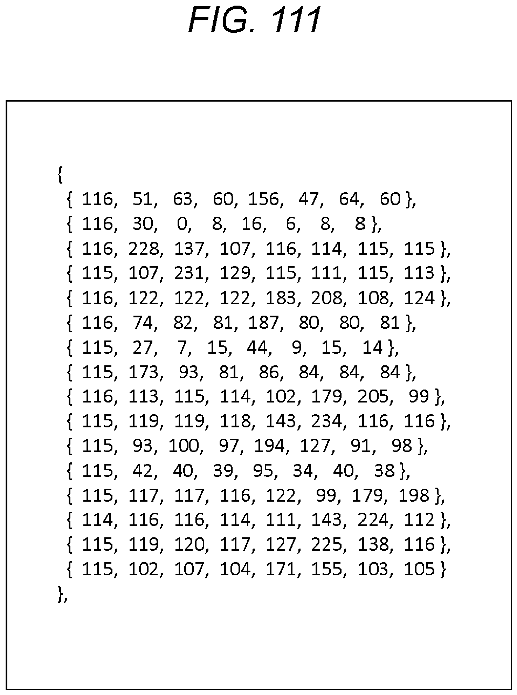

Fig. 111 is a diagram illustrating a fixed weight matrix mWeight [i] [j] of (M, m) = (1, 7) used in the fourth generation method.

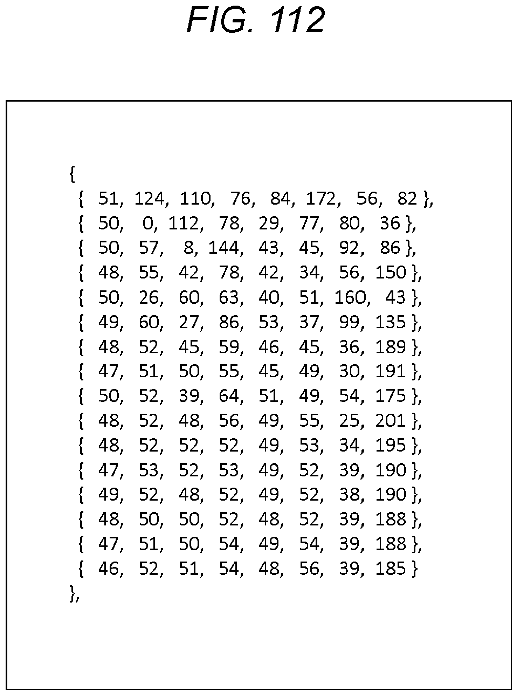

Fig. 112 is a diagram illustrating a fixed weight matrix mWeight [i] [j] of (M, m) = (1, 8) used in the fourth generation method.

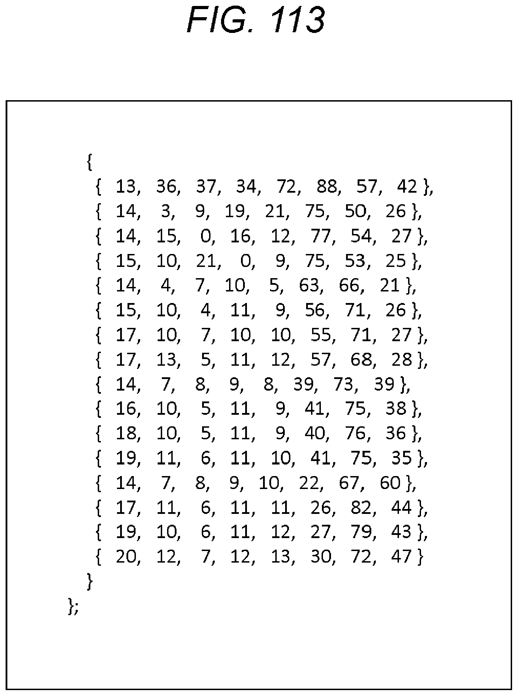

Fig. 113 is a diagram illustrating a fixed weight matrix mWeight [i] [j] of (M, m) = (1, 9) used in the fourth generation method.

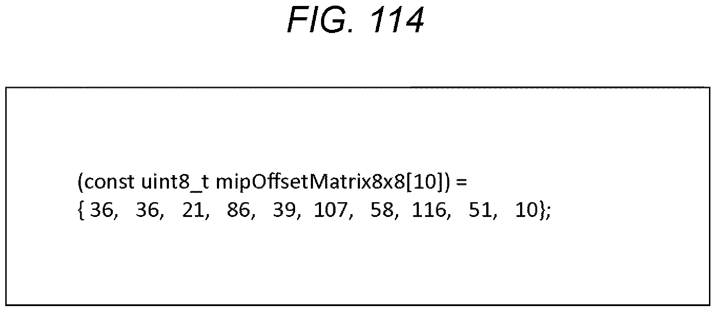

Fig. 114 is a diagram illustrating the fixed variable fO of MipSizeId = 1 used in the fourth generation method.

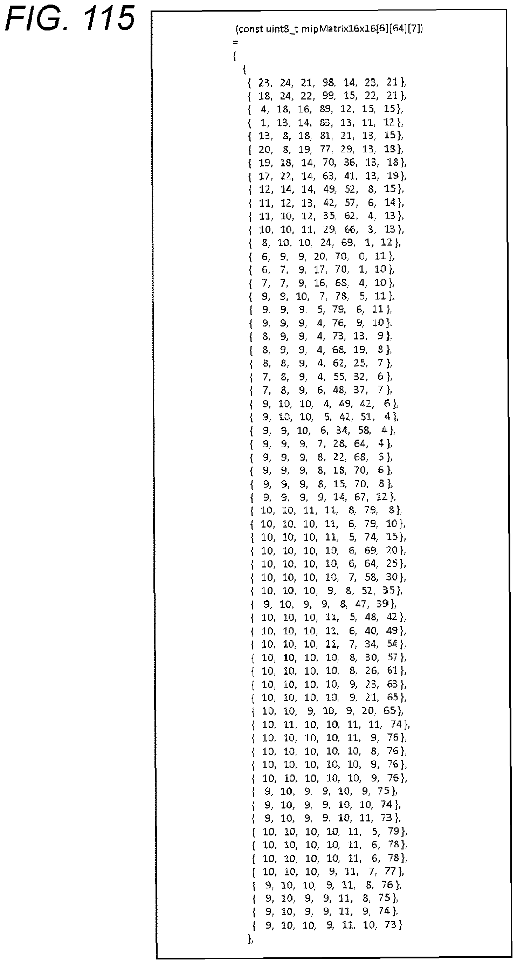

Fig. 115 is a diagram illustrating a fixed weight matrix mWeight [i] [j] of (M, m) = (2, 0) used in the fourth generation method.

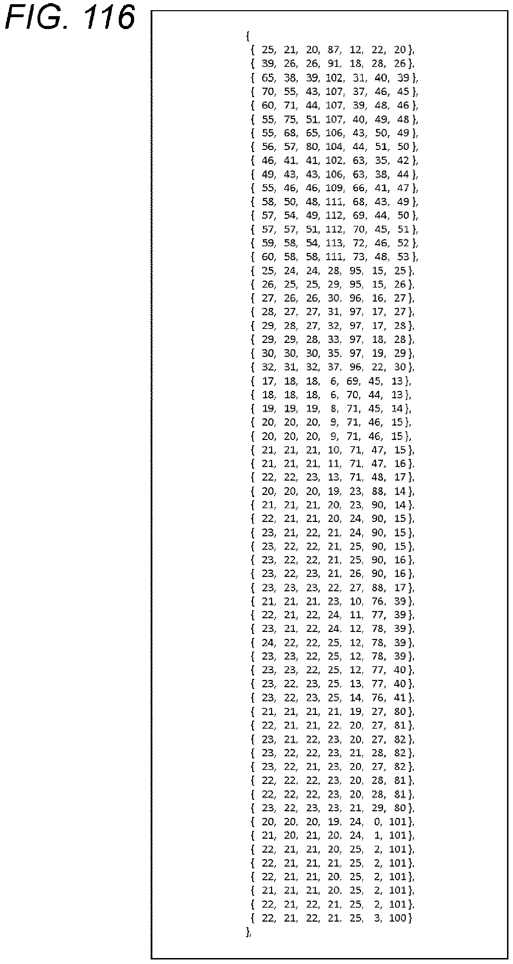

Fig. 116 is a diagram illustrating a fixed weight matrix mWeight [i] [j] of (M, m) = (2, 1) used in the fourth generation method.

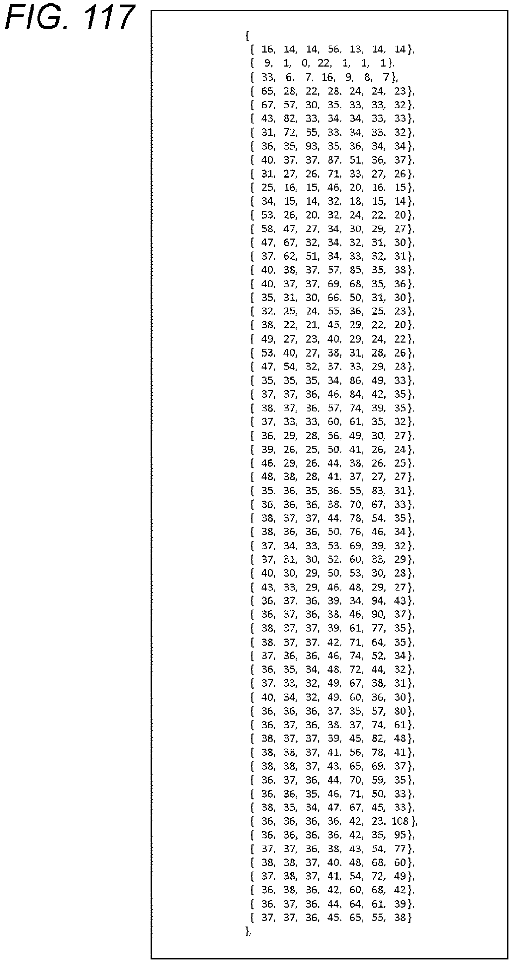

Fig. 117 is a diagram illustrating a fixed weight matrix mWeight [i] [j] of (M, m) = (2, 2) used in the fourth generation method.

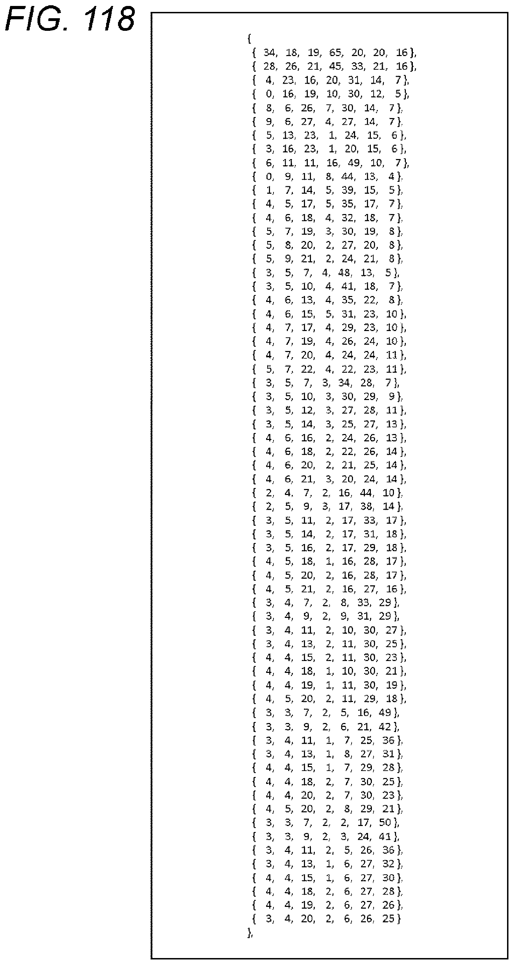

Fig. 118 is a diagram illustrating a fixed weight matrix mWeight [i] [j] of (M, m) = (2, 3) used in the fourth generation method.

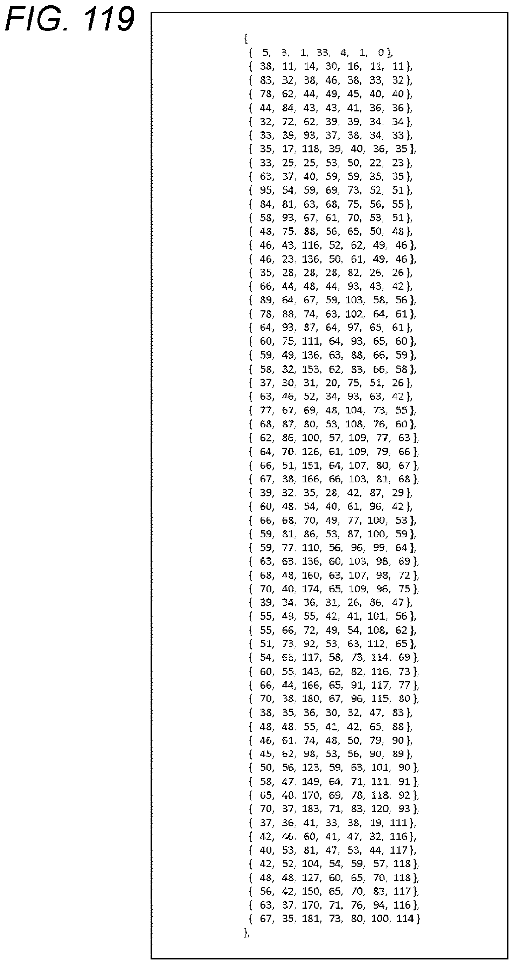

Fig. 119 is a diagram illustrating a fixed weight matrix mWeight [i] [j] of (M, m) = (2, 4) used in the fourth generation method.

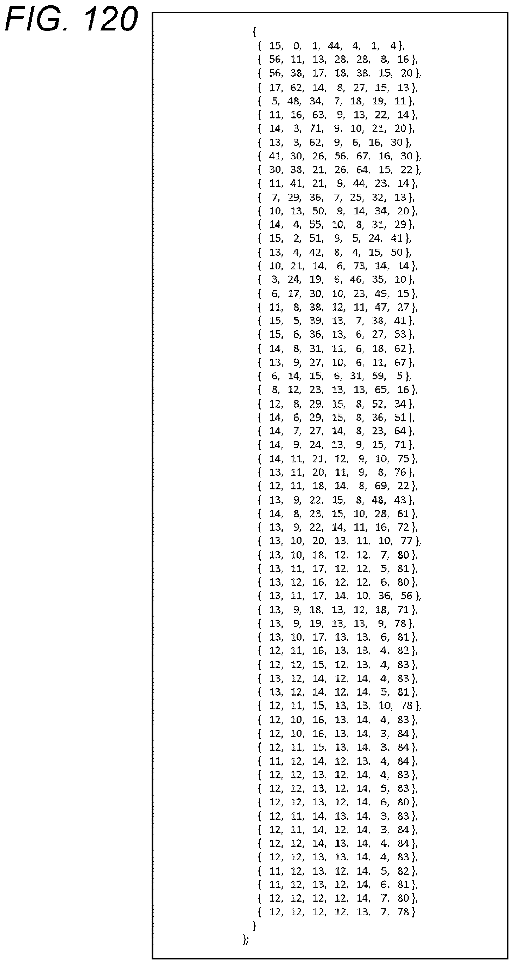

Fig. 120 is a diagram illustrating a fixed weight matrix mWeight [i] [j] of (M, m) = (2, 5) used in the fourth generation method.

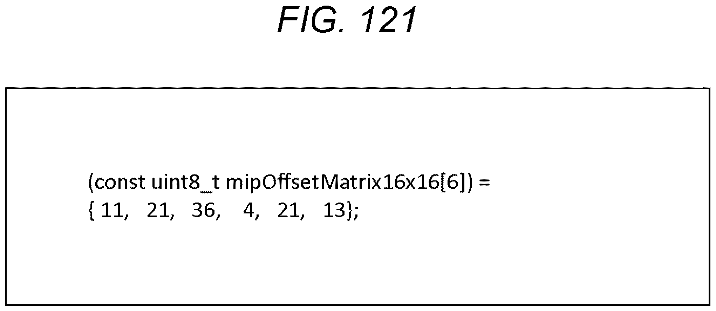

Fig. 121 is a diagram illustrating the fixed variable fO of MipSizeId = 2 used in the fourth generation method.

<Image Processing System to which the Present Technology is Applied>

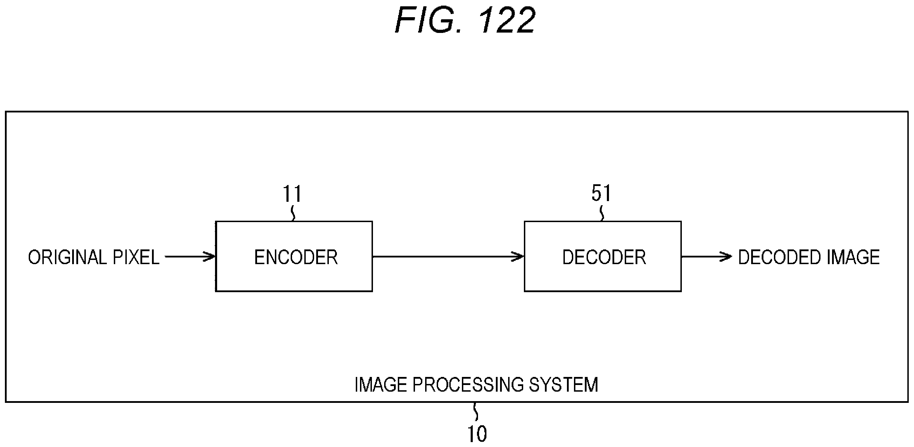

Fig. 122 is a block diagram illustrating a configuration example of an embodiment of an image processing system to which the present technology is applied.

The image processing system 10 has an image processing device as an encoder 11 and an image processing device as a decoder 51.

The encoder 11 encodes the original image to be encoded supplied to the encoder 11 and outputs an encoded bitstream obtained by the encoding. The encoded bitstream is supplied to the decoder 51 via a recording medium or a transmission medium (not illustrated).

The decoder 51 decodes the encoded bitstream supplied thereto and outputs the decoded image obtained by the decoding.

<Configuration Example of Encoder 11>

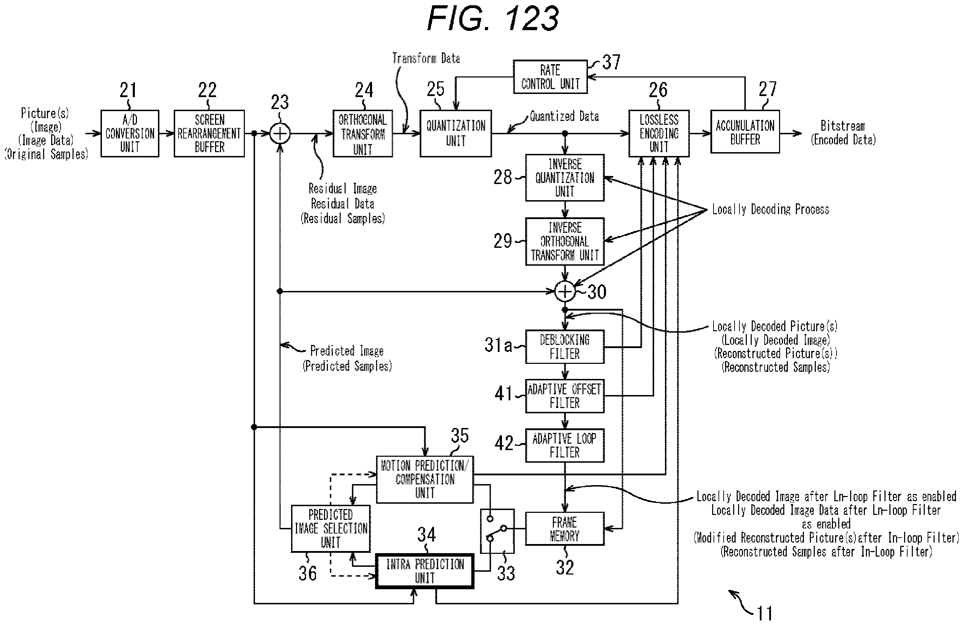

Fig. 123 is a block diagram illustrating a configuration example of the encoder 11 of Fig. 122.

Note that in the block diagram described below, the description of the line that supplies the information (data) required for the processing of each block is omitted as appropriate in order to avoid complicating the diagram.

In Fig. 123, the encoder 11 includes an A/D conversion unit 21, a rearrangement buffer 22, a calculation unit 23, an orthogonal transform unit 24, a quantization unit 25, a reversible encoding unit 26, and an accumulation buffer 27. Further, the encoder 11 includes an inverse quantization unit 28, an inverse orthogonal transform unit 29, a calculation unit 30, a frame memory 32, a selection unit 33, an intra prediction unit 34, a motion prediction/compensation unit 35, a prediction image selection unit 36, and a rate control unit 37. Further, the encoder 11 has a deblocking filter 31a, an adaptive offset filter 41, and an adaptive loop filter (ALF) 42.

The A/D conversion unit 21 A/D-converts the original image (encoding target) of the analog signal into an original image of a digital signal, and supplies and stores the A/D converted original image to and in the rearrangement buffer 22. Note that when the original image of the digital signal is supplied to the encoder 11, the encoder 11 can be configured without providing the A/D conversion unit 21.

The rearrangement buffer 22 rearranges the frame of the original image from the display order to the encoding (decoding) order according to a group of picture (GOP), and supplies the frame to the calculation unit 23, the intra prediction unit 34, and the motion prediction/compensation unit 35.

The calculation unit 23 subtracts the predicted image supplied from the intra prediction unit 34 or the motion prediction/compensation unit 35 via the prediction image selection unit 36 from the original image from the rearrangement buffer 22, and supplies the residual (predicted residual) obtained by the subtraction to the orthogonal transform unit 24.

The orthogonal transform unit 24 performs an orthogonal transform such as a discrete cosine transform or a Karhunen-Loève transform on the residual supplied from the calculation unit 23, and supplies the orthogonal transform coefficient obtained by the orthogonal transform to the quantization unit 25.

The quantization unit 25 quantizes the orthogonal transform coefficient supplied from the orthogonal transform unit 24. The quantization unit 25 sets a quantization parameter based on a target value of a code amount (code amount target value) supplied from the rate control unit 37, and performs the quantization of the orthogonal transform coefficient. The quantization unit 25 supplies encoded data, which is the quantized orthogonal transform coefficient, to the reversible encoding unit 26.

The reversible encoding unit 26 encodes the quantized orthogonal transform coefficient as the encoded data from the quantization unit 25 by a predetermined reversible encoding method.

Further, the reversible encoding unit 26 acquires encoding information required for decoding by the decoding device 170 from each block among encoding information related to the predictive encoding in the encoder 11.

Here, as the encoding information, for example, there are a prediction mode of intra prediction or inter prediction, motion information such as motion vector, a code amount target value, a quantization parameter, picture types (I, P, B), filter parameters such as deblocking filter 31a and the adaptive offset filter 41, and the like.

The prediction mode can be obtained from the intra prediction unit 34 or the motion prediction/compensation unit 35. The motion information can be acquired from the motion prediction/compensation unit 35. The filter parameters of the deblocking filter 31a and the adaptive offset filter 41 can be acquired from the deblocking filter 31a and the adaptive offset filter 41, respectively.

The reversible encoding unit 26 encodes the coding information by, for example, variable length coding or arithmetic coding such as context-adaptive variable length coding (CAVLC) or context-adaptive binary arithmetic coding (CABAC), or other reversible coding methods, generates the encoded bitstream including (multiplexed) the encoded information after encoding, the encoded data from the quantization unit 25 and supplied the generated encoded bitstream to the accumulation buffer 27.

Here, the above calculation unit 23 or the reversible encoding unit 26 constitutes an encoding unit that encodes an image, and the processing (process) performed by the encoding unit is the encoding process.

The accumulation buffer 27 temporarily accumulates the encoded bitstream supplied from the reversible encoding unit 26. The encoded bitstream stored in the accumulation buffer 27 is read and transmitted at a predetermined timing.

The encoded data, which is the orthogonal transform coefficient quantized in the quantization unit 25, is not only supplied to the reversible encoding unit 26, but also to the inverse quantization unit 28. The inverse quantization unit 28 inversely quantizes the quantized orthogonal transform coefficient by a method corresponding to the quantization by the quantization unit 25, and supplies the orthogonal transform coefficient obtained by the inverse quantization is transmitted to the inverse orthogonal transform unit 29.

The inverse orthogonal transform unit 29 inversely orthogonal transforms the orthogonal transform coefficient supplied from the inverse quantization unit 28 by a method corresponding to the orthogonal transform processing by the orthogonal transform unit 24, and supplies the residuals obtained as a result of the inverse orthogonal transform to the calculation unit 30.

The calculation unit 30 adds the predicted image supplied from the intra prediction unit 34 or the motion prediction/compensation unit 35 via the prediction image selection unit 36 to the residual supplied from the inverse orthogonal transform unit 29, thereby obtaining and output (a part of) the decoded image from which the original image is decoded.

The decoded image output by the calculation unit 30 is supplied to the deblocking filter 31a or the frame memory 32.

The frame memory 32 temporarily stores the decoded image supplied from the calculation unit 30, and the decoded image (filter image) supplied from the ALF 42 and to which the deblocking filter 31a, the adaptive offset filter 41, and the ALF 42 are applied. The decoded image stored in the frame memory 32 is supplied to the selection unit 33 as the reference image used for generating the predicted image at a required timing.

The selection unit 33 selects the supply destination of the reference image supplied from the frame memory 32. When the intra prediction is performed in the intra prediction unit 34, the selection unit 33 supplies the reference image supplied from the frame memory 32 to the intra prediction unit 34. When the inter prediction is performed in the motion prediction/compensation unit 35, the selection unit 33 supplies the reference image supplied from the frame memory 32 to the motion prediction/compensation unit 35.

The intra prediction unit 34 performs the intra prediction (in-screen prediction) using the original image supplied from the rearrangement buffer 22 and the reference image supplied from the frame memory 32 via the selection unit 33. The intra prediction unit 34 selects the prediction mode of the optimum intra prediction based on a predetermined cost function, and supplies the predicted image generated from the reference image in the prediction mode of the optimum intra prediction to the prediction image selection unit 36. Further, the intra prediction unit 34 appropriately supplies the prediction mode of the intra prediction selected based on the cost function to the reversible encoding unit 26 and the like.

The motion prediction/compensation unit 35 performs the motion prediction using the original image supplied from the rearrangement buffer 22 and the reference image supplied from the frame memory 32 via the selection unit 33. Further, the motion prediction/compensation unit 35 performs motion compensation according to the motion vector detected by the motion prediction and generates the predicted image. The motion prediction/compensation unit 35 performs inter prediction in a prediction mode of a plurality of inter predictions prepared in advance, and generates the predicted image from the reference image.

The motion prediction/compensation unit 35 selects the prediction mode of the optimum inter prediction from the prediction mode of the plurality of inter predictions based on a predetermined cost function. Furthermore, the motion prediction/compensation unit 35 supplies the predicted image generated in the prediction mode of the optimum inter prediction to the prediction image selection unit 36.

In addition, the motion prediction/compensation unit 35 supplies the prediction mode of the optimum inter prediction selected based on the cost function or motion information such as a motion vector required to decode the encoded data encoded in the prediction mode of the inter prediction to the reversible encoding unit 26.

The prediction image selection unit 36 selects a supply source of the predicted image to be supplied to the calculation unit 23 and the calculation unit 30 from the intra prediction unit 34 and the motion prediction/compensation unit 35, and selects the predicted image supplied from the selected supply source to the calculation unit 23 and the calculation unit 30.

The rate control unit 37 controls the rate of the quantization operation of the quantization unit 25 based on the code amount of the encoded bitstream accumulated in the accumulation buffer 27 so that overflow or underflow does not occur. That is, the rate control unit 37 sets the target code amount of the encoded bitstream and supplies the set target code amount to the quantization unit 25 so that the overflow and underflow of the accumulation buffer 27 does not occur.

The deblocking filter 31a applies the deblocking filter to the decoded image from the calculation unit 30 as necessary, and supplies the decoded image (filtered image) to which the deblocking filter is applied, or the decoded image to which the deblocking filter is not applied to the adaptive offset filter 41.

The adaptive offset filter 41 applies the adaptive offset filter to the decoded image from the deblocking filter 31a as necessary, and supplies the decoded image (filter image) to which the adaptive offset filter is applied or the decoded image to which the adaptive offset filter is not applied is applied to the ALF 42.

The ALF 42 applies the ALF to the decoded image from the adaptive offset filter 41 as necessary, and supplies the decoded image to which the ALF is applied or the decoded image to which ALF is not applied to the frame memory 32.

<Encoding Processing>

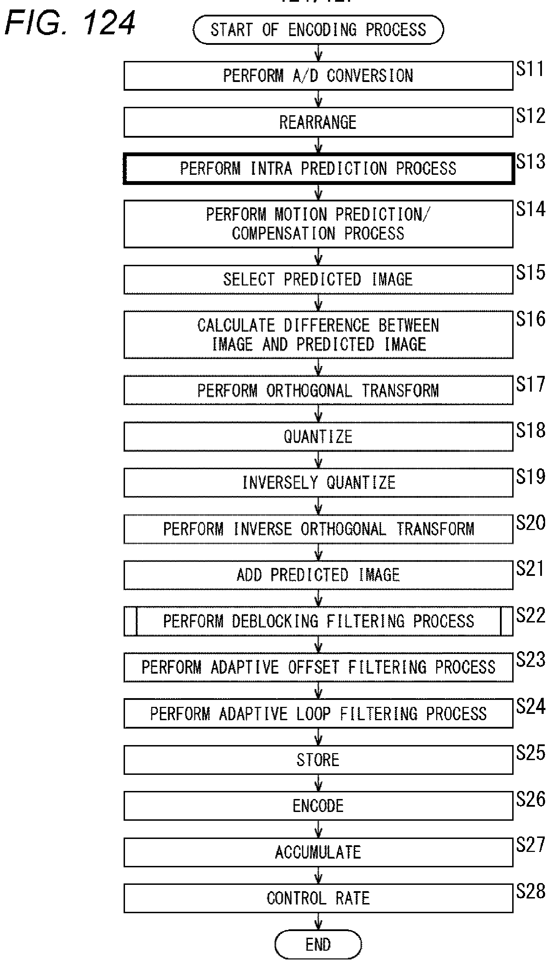

Fig. 124 is a flowchart illustrating an example of the encoding processing of the encoder 11 of Fig. 123.

The order of each step of encoding processing illustrated in Fig. 124 is an order for convenience of explanation, and each step of actual encoding processing is performed in a necessary order in parallel as appropriate. The same also applies to the processes described later.

In step S11, in the encoder 11, the A/D conversion unit 21 A/D-converts an original image and supplies the A/D-converted original image to the rearrangement buffer 22, and the process proceeds to step S12.

In step S12, the rearrangement buffer 22 stores the original images from the A/D conversion unit 21, rearranges the original images in the encoding order, and outputs the rearranged original images, and the process proceeds to step S13.

In step S13, the intra prediction unit 34 performs the intra prediction (intra prediction process), and the process proceeds to step S14. In step S14, the motion prediction/compensation unit 35 performs inter prediction for motion prediction or motion compensation, and the process proceeds to step S15.

In the intra prediction of the intra prediction unit 34 and the inter prediction of the motion prediction/compensation unit 35, the cost functions of various prediction modes are calculated and the predicted image is generated.

In step S15, the prediction image selection unit 36 determines the optimum prediction mode based on each cost function obtained by the intra prediction unit 34 and the motion prediction/compensation unit 35. Then, the prediction image selection unit 36 selects and outputs the predicted image of the optimum prediction mode from the predicted image generated by the intra prediction unit 34 and the predicted image generated by the motion prediction/compensation unit 35, and the process proceeds from step S15 to step S16.

In step S16, the calculation unit 23 calculates the residual between the target image to be encoded, which is the original image output by the rearrangement buffer 22, and the predicted image output by the prediction image selection unit 36, and supplies the calculated residual to the orthogonal transform unit 24, and the process proceeds to step S17.

In step S17, the orthogonal transform unit 24 orthogonal transforms the residual from the calculation unit 23 and supplies the resulting orthogonal transform coefficient to the quantization unit 25, and the process proceeds to step S18.

In step S18, the quantization unit 25 quantizes the orthogonal transform coefficient from the orthogonal transform unit 24 and supplies the quantization coefficient obtained by the quantization to the reversible encoding unit 26 and the inverse quantization unit 28, and the process proceeds to step S19.

In step S19, the inverse quantization unit 28 inversely quantizes the quantization coefficient from the quantization unit 25 and supplies the resulting orthogonal transform coefficient to the inverse orthogonal transform unit 29, and the process proceeds to step S20. In step S20, the inverse orthogonal transform unit 29 inversely orthogonal transforms the orthogonal transform coefficient from the inverse quantization unit 28 and supplies the resulting residual to the calculation unit 30, and the process proceeds to step S21.

In step S21, the calculation unit 30 adds the residual from the inverse orthogonal transform unit 29 and the predicted image output by the prediction image selection unit 36, and generates the decoded image corresponding to the original image that becomes the target of the calculation of the residuals by the calculation unit 23. The calculation unit 30 supplies the decoded image to the deblocking filter 31a, and the process proceeds from step S21 to step S22.

In step S22, the deblocking filter 31a applies the deblocking filter to the decoded image from the calculation unit 30 and supplies the resulting filtered image to the adaptive offset filter 41, and the process proceeds to step S23.

In step S23, the adaptive offset filter 41 applies the adaptive offset filter to the filter image from the deblocking filter 31a and supplies the resulting filter image to ALF42, and the process proceeds to step S24.

In step S24, the ALF42 applies ALF to the filter image from the adaptive offset filter 41 and supplies the resulting filter image to the frame memory 32, and the process proceeds to step S25.

In step S25, the frame memory 32 stores the filter image supplied from the ALF42, and the process proceeds to step S26. The filtered image stored in the frame memory 32 is used as a reference image from which the predicted image is generated in steps S13 or S14.

In step S26, the reversible encoding unit 26 encodes the encoded data, which is the quantization coefficient from the quantization unit 25, and generates the encoded bitstream including the encoded data. Furthermore, the reversible encoding unit 26 encodes the encoding information, such as the quantization parameter used for the quantization in the quantization unit 25, the prediction mode obtained by the intra prediction in the intra prediction unit 34, the prediction mode or motion information obtained by the inter prediction in the motion prediction/compensation unit 35, or the filter parameters of the deblocking filter 31a and the adaptive offset filter 41, as necessary, and includes the encoded information in the encoded bitstream.

Then, the reversible encoding unit 26 supplies the encoded bitstream to the accumulation buffer 27, and the process proceeds from step S26 to step S27.

In step S27, the accumulation buffer 27 accumulates the encoded bitstream from the reversible encoding unit 26, and the process proceeds to step S28. The encoded bitstream accumulated in the accumulation buffer 27 is appropriately read and transmitted.

In step S28, the rate control unit 37 controls the quantization operation of the quantization unit 25 based on the code amount (generated code amount) of the encoded bitstream accumulated in the accumulation buffer 27 so that overflow or underflow does not occur, and the encoding processing ends.

<Configuration Example of Decoder 51>

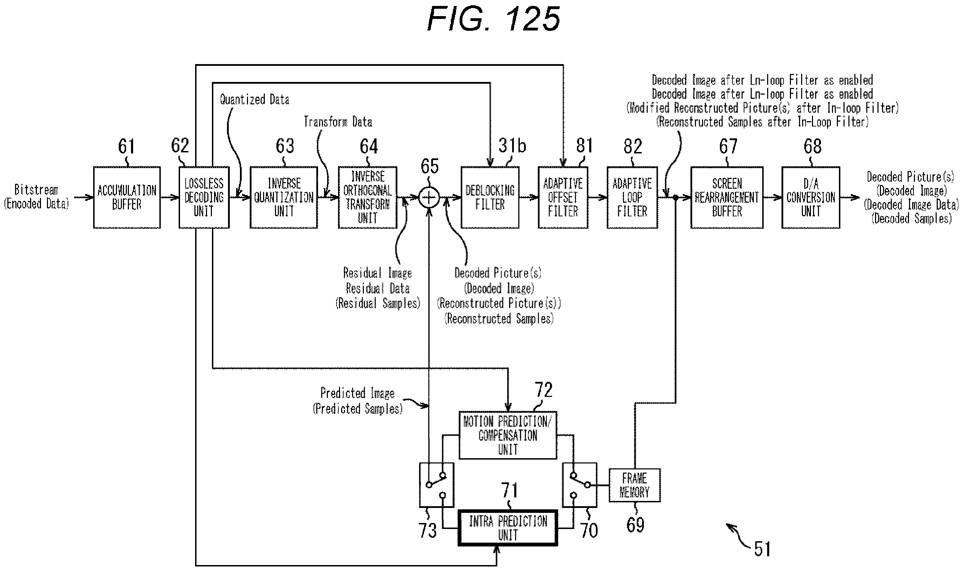

Fig. 125 is a block diagram illustrating a configuration example of the decoder 51 of Fig. 122.

In Fig. 125, the decoder 51 has an accumulation buffer 61, a reversible decoding unit 62, an inverse quantization unit 63, an inverse orthogonal transform unit 64, a calculation unit 65, a rearrangement buffer 67, and a D/A conversion unit 68. Further, the decoder 51 has a frame memory 69, a selection unit 70, an intra prediction unit 71, a motion prediction/compensation unit 72, and a selection unit 73. Further, the decoder 51 has a deblocking filter 31b, an adaptive offset filter 81, and an ALF 82.

The accumulation buffer 61 temporarily accumulates the encoded bitstream transmitted from the encoder 11 and supplies the encoded bitstream to the reversible decoding unit 62 at a predetermined timing.

The reversible decoding unit 62 receives the encoded bitstream from the accumulation buffer 61 and decodes the received encoded bitstream by a method corresponding to the encoding method of the reversible encoding unit 26 in Fig. 123

Then, the reversible decoding unit 62 supplies the quantization coefficient as the encoded data included in the decoding result of the encoded bitstream to the inverse quantization unit 63.

Further, the reversible decoding unit 62 has a function of performing parsing. The reversible decoding unit 62 parses the necessary encoding information included in the decoding result of the encoded bitstream and supplies the encoding information to the intra prediction unit 71, the motion prediction/compensation unit 72, the deblocking filter 31b, the adaptive offset filter 81, and other necessary blocks.

The inverse quantization unit 63 inversely quantizes the quantization coefficient as the encoded data from the reversible decoding unit 62 by the method corresponding to the quantization method of the quantization unit 25 in Fig. 123, and supplies the orthogonal transform coefficient obtained by the inverse quantization to the inverse orthogonal transform unit 64.

The inverse orthogonal transform unit 64 inversely orthogonal transforms the orthogonal transform coefficient supplied from the inverse quantization unit 63 by the method corresponding to the orthogonal transform method of the orthogonal transform unit 24 in Fig. 123, and supplies the resulting residual to the calculation unit 65.

In addition to the residual being supplied from the inverse orthogonal transform unit 64 to the calculation unit 65, the predicted image is supplied from the intra prediction unit 71 or the motion prediction/compensation unit 72 via the selection unit 73.

The calculation unit 65 adds the residual from the inverse orthogonal transform unit 64 and the predicted image from the selection unit 73, generates the decoded image, and supplies the generated decoded image to the deblocking filter 31b.

Here, the above reversible decoding unit 62 to calculation unit 65 constitute a decoding unit that decodes an image, and the processing (process) performed by the decoding unit is the decoding process.

The rearrangement buffer 67 temporarily stores the decoded image supplied from the ALF 82, rearranges the arrangement of the frames (pictures) of the decoded image from the encoding (decoding) order to the display order, and supplies the rearranged frame to the D/A conversion unit 68.

The D/A conversion unit 68 D/A-converts the decoded image supplied from the rearrangement buffer 67 and outputs the D/A-converted decoded image to a display (not illustrated) for display. Note that when the device connected to the decoder 51 accepts an image of a digital signal, the decoder 51 can be configured without providing the D/A conversion unit 68.

The frame memory 69 temporarily stores the decoded image supplied from the ALF 82. Furthermore, the frame memory 69 supplies the decoded image to the selection unit 70 as a reference image for generating the predicted image at a predetermined timing or based on an external request such as the intra prediction unit 71 or the motion prediction/compensation unit 72.

The selection unit 70 selects the supply destination of the reference image supplied from the frame memory 69. When decoding the image encoded by the intra prediction, the selection unit 70 supplies the reference image supplied from the frame memory 69 to the intra prediction unit 71. In addition, when decoding the image encoded by the inter prediction, the selection unit 70 supplies the reference image supplied from the frame memory 69 to the motion prediction/compensation unit 72.

The intra prediction unit 71 performs the intra prediction similar to the intra prediction unit 34 of Fig. 123 using the reference image supplied from the frame memory 69 via the selection unit 70, according to the prediction mode included in the encoded information supplied from the reversible decoding unit 62. Then, the intra prediction unit 71 supplies the predicted image obtained by the intra prediction to the selection unit 73.

Similar to the motion prediction/compensation unit 35 of Fig. 123, the motion prediction/compensation unit 72 performs the inter prediction using the reference image supplied from the frame memory 69 via the selection unit 70, according to the prediction mode included in the encoding information supplied from the reversible decoding unit 62. The inter prediction is performed by using the motion information and the like included in the encoding information supplied from the reversible decoding unit 62 as necessary.

The motion prediction/compensation unit 72 supplies the predicted image obtained by the inter prediction to the selection unit 73.

The selection unit 73 selects the predicted image supplied from the intra prediction unit 71 or the predicted image supplied from the motion prediction/compensation unit 72, and supplies the predicted image to the calculation unit 65.

The deblocking filter 31b applies the deblocking filter to the decoded image from the calculation unit 65 according to the filter parameter included in the encoding information supplied from the reversible decoding unit 62. The deblocking filter 31b supplies the decoded image (filtered image) to which the deblocking filter is applied or the decoded image to which the deblocking filter is not applied to the adaptive offset filter 81.

The adaptive offset filter 81 applies the adaptive offset filter to the decoded image from the deblocking filter 31b as necessary according to the filter parameter included in the encoding information supplied from the reversible decoding unit 62. The adaptive offset filter 81 supplies the decoded image (filtered image) to which the adaptive offset filter is applied or the decoded image to which the adaptive offset filter is not applied to the ALF 82.

The ALF 82 applies the ALF to the decoded image from the adaptive offset filter 81 as necessary, and supplies the decoded image to which the ALF is applied or the decoded image to which ALF is not applied to the rearrangement buffer 67 and the frame memory 69.

<Decoding Processing>

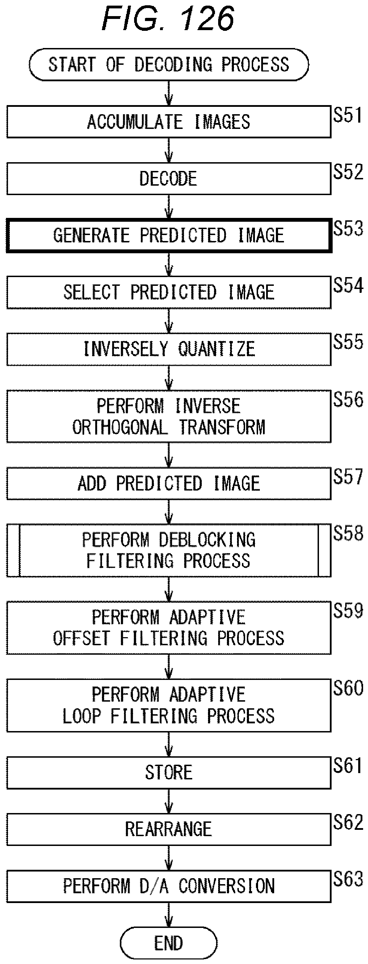

Fig. 126 is a flowchart illustrating an example of the decoding processing of the decoder 51 of Fig. 125.

I step S51, in decoding processing, the accumulation buffer 61 temporarily stores the encoded bitstream transmitted from the encoder 11 and supplies the stored encoded bitstream to the reversible decoding unit 62 as appropriate, and the process proceeds to step S52.

In step S52, the reversible decoding unit 62 receives and decodes the encoded bitstream supplied from the accumulation buffer 61, and supplies the quantization coefficient as the encoded data included in the decoding result of the encoded bitstream to the inverse quantization unit 63.

Further, the reversible decoding unit 62 parses the encoding information included in the decoding result of the encoded bitstream. Then, the reversible decoding unit 62 supplies the necessary encoding information to the intra prediction unit 71, the motion prediction/compensation unit 72, the deblocking filter 31b, the adaptive offset filter 81, and other necessary blocks.

Then, the process proceeds from step S52 to step S53, and the intra prediction unit 71 or the motion prediction/compensation unit 72 performs the intra prediction or the inter prediction (intra prediction process or inter prediction process) generating the predicted image, according to the reference image supplied from the frame memory 69 via the selection unit 70 and the encoding information supplied from the reversible decoding unit 62. Then, the intra prediction unit 71 or the motion prediction/compensation unit 72 supplies the predicted image obtained by the intra prediction or the inter prediction to the selection unit 73, and the process proceeds from step S53 to step S54.

In step S54, the selection unit 73 selects the predicted image supplied from the intra prediction unit 71 or the motion prediction/compensation unit 72 and supplies the selected predicted image to the calculation unit 65, and the process proceeds to step S55.

In step S55, the inverse quantization unit 63 inversely quantizes the quantization coefficient from the reversible decoding unit 62 and supplies the resulting orthogonal transform coefficient to the inverse orthogonal transform unit 64, and the process proceeds to step S56.

In step S56, the inverse orthogonal transform unit 64 inversely orthogonal transforms the orthogonal transform coefficient from the inverse quantization unit 63 and supplies the resulting residual to the calculation unit 65, and the process proceeds to step S57.

In step S57, the calculation unit 65 generates the decoded image by adding the residual from the inverse orthogonal transform unit 64 and the predicted image from the selection unit 73. Then, the calculation unit 65 supplies the decoded image to the deblocking filter 31b, and the process proceeds from step S57 to step S58.

In step S58, the deblocking filter 31b applies the deblocking filter to the decoded image from the calculation unit 65 according to the filter parameter included in the encoding information supplied from the reversible decoding unit 62. The deblocking filter 31b supplies the filtered image obtained as a result of applying the deblocking filter to the adaptive offset filter 81, and the process proceeds from step S58 to step S59.

In step S59, the adaptive offset filter 81 applies the adaptive offset filter to the filtered image from the deblocking filter 31b according to the filter parameter included in the encoding information supplied from the reversible decoding unit 62. The adaptive offset filter 81 supplies the filtered image obtained as a result of applying the adaptive offset filter to the ALF 82, and the process proceeds from step S59 to step S60.

The ALF 82 applies ALF to the filter image from the adaptive offset filter 81 and supplies the resulting filter image to the rearrangement buffer 67 and the frame memory 69, and the process proceeds to step S61.

In step S61, the frame memory 69 temporally stores the filtered image supplied from the ALF 82, and the process proceeds to step S62. The filtered image (decoded image) stored in the frame memory 69 is used as the reference image from which the predicted image is generated by the intra prediction or the inter prediction in step S53.

In step S62, the rearrangement buffer 67 rearranges the filtered images supplied from ALF 82 in the display order and supplies the rearranged filtered images to the D/A conversion unit 68, and the process proceeds to step S63.

In step S63, the D/A conversion unit 68 D/A-converts the filtered image from the rearrangement buffer 67, and the process ends the decoding processing. The filter image (decoded image) after D/A conversion is output and displayed on a display (not illustrated).

The intra prediction performed by the intra prediction unit 34 of Fig. 123 and the intra prediction unit 71 of Fig. 125 includes the MIP. In the intra prediction units 34 and 71, the generation of the predicted image of the MIP is generated by any of the second to fourth generation methods.

(Others)

In the present specification, unless otherwise specified, a "block" (not a block indicating a processing unit) used as a partial area or a processing unit of an image (picture) indicates an arbitrary partial area in the picture, and a size, a shape, and characteristics of the block are not limited. For example, the "block" includes any partial area (processing unit) such as a transform block (TB), a transform unit (TU), a prediction block (PB), a prediction unit (PU), a smallest coding unit (SCU), a coding unit (CU), a largest coding unit (LCU), a coding tree block (CTB), a coding tree unit (CTU), a conversion block, a sub-block, a macroblock, a tile, or a slice, which are described in references REF 1 to REF 3 or the like.

A data unit in which various pieces of information described above is set and a data unit targeted by various types of processing are each arbitrary and are not limited to the above-described examples. For example, these pieces of information or processing may be set for each transform unit (TU), transform block (TB), prediction unit (PU), prediction block (PB), coding unit (CU), largest coding unit (LCU), sub-block, block, tile, slice, picture, sequence, or component, or may target the data in those data units. Of course, this data unit can be set for each information or processing, and it is not necessary that the data unit of all the information or processing is unified. Note that a storage location of these pieces of information is arbitrary, and these pieces of information may be stored in a header, a parameter set, or the like of the above-described data unit. Further, these pieces of information may be stored in a plurality of locations.

The control information related to the present technology described above may also be transmitted from the encoding side to the decoding side. For example, control information (for example, enabled_flag) that controls whether or not the application of the present technology described above is permitted (or prohibited) may be transmitted. Further, for example, the control information indicating a target (or a target to which the present technology is not applied) to which the present technology is applied may be transmitted. For example, the control information that specifies the block size (upper and lower limits, or both) to which the present technology is applied (or permitted or prohibited), frames, components, layers, or the like may be transmitted.

Further, when specifying a size of such a block to which the present technology is applied, not only the block size may be directly specified, but also the block size may be indirectly specified. For example, the block size may be specified using identification data for identifying the size. Further, for example, the block size may be specified by a ratio or a difference with a size of a reference block (for example, LCU, SCU, or the like). For example, when transmitting information for specifying the block size as a syntax element or the like, information for indirectly specifying the size as described above may be used as the information. By doing so, the amount of the information can be reduced, and the encoding efficiency may be improved. In addition, the specification of the block size also includes the specification of the range of the block size (for example, a specification or the like of a range of an allowable block size).

Note that in the present specification, the "identification data" is information for identifying a plurality of states, and includes "flags" and those of other names. Further, the "identification data" includes not only information used for identifying two states of true (1) or false (0), but also information capable of identifying three or more states. Therefore, the value that this "identification data" can take may be, for example, 2 values of 1/0, or 3 or more values. That is, the number of bits constituting the "identification data" is arbitrary, and may be 1 bit or a plurality of bits. Further, since the identification data is assumed to include not only the identification data in the bitstream but also difference information of the identification data which becomes a certain reference information in the bitstream, in the present specification, the "identification data" include not only the information but also the difference information which becomes the reference information.

Further, various types of information (metadata, or the like) on encoded data (bitstream) may be transmitted or recorded in any form as long as the information is associated with the encoded data. Here, the term "associating" means, for example, to make other data available (linkable) when processing one data. That is, the data associated with each other may be combined as one data or may be individual data. For example, the information associated with the encoded data (image) may be transmitted on a transmission path different from that encoded data (image). Further, for example, the information associated with the encoded data (image) may also be recorded on a recording medium (or another recording area of the same recording medium) different from the encoded data (image). Note that this "association" may be a part of data, not the entire data. For example, an image and information corresponding to the image may be associated with each other in arbitrary units such as a plurality of frames, one frame, or a part within a frame.

In addition, in this specification, the terms such as "synthesize", "multiplex", "add", "integrate", "include", "store", "push into", "put in", and "insert" mean combining a plurality of things into one, for example, combining encoded data and metadata into one data, and means one method of "associating" described above.

The present technology can be implemented as any configuration that constitutes a device or a system, for example, a processor as system large scale integration (LSI) or the like, a module that uses a plurality of processors or the like, a unit that uses a plurality of modules or the like, and a set with other functions further added to the unit, or the like (that is, a part of the configuration of the device).

<Description of Computer to which the Present Technology is Applied>

Next, some or all of the above-described series of processing can be performed by hardware or software. When some or all of a series of processes is performed by software, the programs constituting the software are installed on a general-purpose computer or the like.

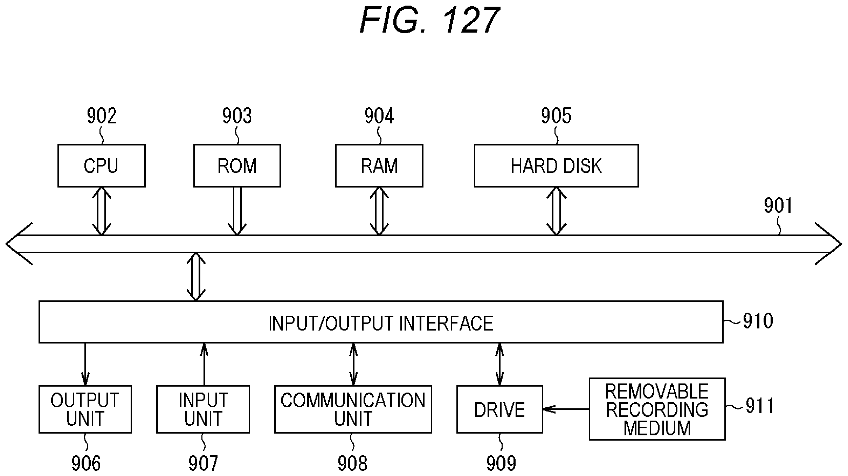

Fig. 127 is a block diagram illustrating a configuration example of an embodiment of the computer on which the program for executing some or all of the above-described series of processes is installed.

The program can be recorded in advance on a hard disk 905 or a ROM 903 as a recording medium built in the computer.

Alternatively, the program can be stored (recorded) in a removable recording medium 911 driven by a drive 909. Such a removable recording medium 911 can be provided as so-called package software. Here, examples of the removable recording medium 911 include a flexible disc, a compact disc read only memory (CD-ROM), a magneto optical (MO) disc, a digital versatile disc (DVD), a magnetic disc, a semiconductor memory, and the like.

Note that the program can be not only installed on the computer from the removable recording medium 911 as described above, but can also be downloaded to the computer via a communication network or a broadcasting network and installed on the built-in hard disk 905. That is, for example, the program can be transmitted wirelessly from a download site to a computer via an artificial satellite for digital satellite broadcasting, or can be transmitted to a computer by wire via a network such as a local area network (LAN) or the Internet.

The computer has a built-in central processing unit (CPU) 902, and the input/output interface 910 is connected to the CPU 902 via the bus 901.

When a command is input by a user via the input/output interface 910 by operating the input unit 907 or the like, the CPU 902 executes the program stored in the read only memory (ROM) 903 accordingly. Alternatively, the CPU 902 loads the program stored in the hard disk 905 into a random access memory (RAM) 904 and executes the loaded program.

As a result, the CPU 902 performs processing according to the above-described flowchart or processing performed according to the configuration of the above-described block diagram. Then, the CPU 902 outputs the processing result from the output unit 906 from the communication unit 908, or transmits the processing result from the communication unit 908 via, for example, the input/output interface 910, as necessary, and furthermore records the processing result on the hard disk 905.

Note that the input unit 907 is constituted by a keyboard, a mouse, a microphone, and the like. In addition, the output unit 906 is constituted by a liquid crystal display (LCD), a speaker, or the like.

Here, in the present specification, the processing performed by the computer according to the program does not necessarily have to be performed in a time sequence according to the order described as the flowchart. That is, the processing performed by the computer according to the program also includes processing (for example, parallel processing or processing by an object) executed in parallel or individually.

Further, the program may be processed by one computer (processor) or may be distributed and processed by a plurality of computers. Furthermore, the program may be transmitted to a distant computer and executed.

Further, in the present specification, the system means a set of a plurality of components (devices, modules (parts), etc.), and it does not matter whether or not all the components are in the same housing. Therefore, any of a plurality of devices housed in separate housings and connected via a network and one device in which a plurality of modules are housed in one housing are systems.

The present technology can be configured as cloud computing in which one function is shared by a plurality of devices via a network and processed jointly.

Further, each step described in the above-described flowchart can be not also executed by one device, but can also be shared and executed by a plurality of devices.

Furthermore, when one step includes a plurality of processes, the plurality of processes included in the one step can be executed by one device or shared and executed by a plurality of devices.

In addition, the effects described in the present specification are merely examples and are not limited, and other effects may be obtained.

Reference Signs List

| | |
|---|---|
| 10 | Image processing system |
| 11 | Encoder |
| 21 | A/D conversion unit |
| 22 | Rearrangement buffer 22 |
| 23 | Calculation unit |
| 24 | Orthogonal transform unit |
| 25 | Quantization unit |
| 26 | Reversible encoding unit |
| 27 | Accumulation buffer |
| 28 | Inverse quantization unit |
| 29 | Inverse orthogonal transform unit |
| 30 | Calculation unit |
| 31a, 31b | Deblocking filter |
| 32 | Frame memory |
| 33 | Selection unit |
| 34 | Intra prediction unit |
| 35 | Motion prediction/compensation unit |
| 36 | Prediction image selection unit |
| 37 | Rate control unit |
| 41 | Adaptive offset filter |
| 42 | ALF |
| 51 | Decoder |

| 61 | Accumulation buffer |
| 62 | Reversible decoding unit |
| 63 | Inverse quantization unit |
| 64 | Inverse orthogonal transform unit |
| 65 | Calculation unit |
| 67 | Rearrangement buffer |
| 68 | D/A conversion unit |
| 69 | Frame memory |
| 70 | Selection unit |
| 71 | Intra prediction unit |
| 72 | Motion prediction/compensation unit |
| 73 | Selection unit |
| 81 | Adaptive offset filter |
| 82 | ALF |
| 901 | Bus |
| 902 | CPU |
| 903 | ROM |
| 904 | RAM |
| 905 | Hard disk |
| 906 | Output unit |
| 907 | Input unit |
| 908 | Communication unit |
| 909 | Drive |
| 910 | Input/output interface |
| 911 | Removable recording medium |

**Claims**

1. An image processing device (11), comprising:

   an intra prediction unit (34) configured to perform matrix intra prediction, MIP, within the framework of the Versatile Video Coding (VVC) video codec standardization using a shift amount sW set to a fixed value, wherein the fixed value is a value that is fixed regardless of the mode number of the matrix intra prediction, to generate a predicted image of a current prediction block, when the matrix intra prediction which is intra prediction using a matrix operation is performed on the current prediction block to be encoded; and
   an encoding unit (26) configured to encode the current prediction block using the predicted image generated by the intra prediction unit.

2. The image processing device according to claim 1, wherein
   the intra prediction unit performs the matrix intra prediction based on an operation using parameters set according to the shift amount set to the fixed value.

3. The image processing device according to claim 2, wherein
   the intra prediction unit performs the matrix intra prediction based on an operation including a weight matrix set according to the shift amount set to the fixed value.

4. The image processing device according to claim 3, wherein
   the intra prediction unit performs the matrix intra prediction based on an operation including a bias vector or a variable fO set according to the shift amount set to the fixed value.

5. The image processing device according to claim 2, wherein
   the fixed value is a value set according to a matrix size used in the matrix intra prediction.

6. The image processing device according to claim 5, wherein
   the fixed value is a fixed value set for each identifier of a matrix size used in the matrix intra prediction.

7. The image processing device according to claim 6, wherein

EP 3 989 578 B1

the fixed value is 6 when the value of the identifier of the matrix size is 0.

8. The image processing device according to claim 6, wherein
the fixed value is 7 when the value of the identifier of the matrix size is 1.

9. The image processing device according to claim 6, wherein
the fixed value is 6 when the value of the identifier of the matrix size is 2.

10. The image processing device according to claim 2, wherein
the fixed value is 6.

11. The image processing device according to claim 2, wherein
the fixed value is 8.

12. An image processing method, comprising:

an intra prediction process (S13) of performing matrix intra prediction, MIP, within the framework of the Versatile Video Coding (VVC) video codec standardization using a shift amount sW set to a fixed value, wherein the fixed value is a value that is fixed regardless of the mode number of the matrix intra prediction, to generate a predicted image of a current prediction block, when the matrix intra prediction which is intra prediction using a matrix operation is performed on the current prediction block to be encoded; and
an encoding process (S26) of encoding the current prediction block using the predicted image generated in the intra prediction process.

13. An image processing device (51), comprising:

an intra prediction unit (71) configured to perform matrix intra prediction, MIP, within the framework of the Versatile Video Coding (VVC) video codec standardization using a shift amount sW set to a fixed value, wherein the fixed value is a value that is fixed regardless of the mode number of the matrix intra prediction, to generate a predicted image of a current prediction block, when the matrix intra prediction which is intra prediction using a matrix operation is performed on the current prediction block to be decoded; and
a decoding unit (62, 63, 64, 65) configured to decode the current prediction block using the predicted image generated by the intra prediction unit.

14. An image processing method, comprising:

an intra prediction process (S53) of performing matrix intra prediction, MIP, within the framework of the Versatile Video Coding (VVC) video codec standardization using a shift amount sW set to a fixed value, wherein the fixed value is a value that is fixed regardless of the mode number of the matrix intra prediction, to generate a predicted image of a current prediction block, when the matrix intra prediction which is intra prediction using a matrix operation is performed on the current prediction block to be decoded; and
a decoding process (S57) of decoding the current prediction block using the predicted image generated in the intra prediction process.

**Patentansprüche**

1. Bildverarbeitungsvorrichtung (11), umfassend:

eine Intraprädiktionseinheit (34), die dafür ausgelegt ist, Matrix-Intraprädiktion, MIP, im Rahmen der "Versatile Video Coding"-, WC-, Videocodec-Standardisierung unter Verwendung eines auf einen festen Wert eingestellten Verschiebungsbetrags sW durchzuführen, wobei der feste Wert ein Wert ist, der unabhängig von der Modusnummer der Matrix-Intraprädiktion fest ist, zum Erzeugen eines vorhergesagten Bildes eines aktuellen Prädiktionsblocks, wenn die Matrix-Intraprädiktion, die eine Intraprädiktion unter Verwendung einer Matrixoperation ist, am zu kodierenden aktuellen Prädiktionsblock durchgeführt wird; und
eine Kodiereinheit (26), die dafür ausgelegt ist, den aktuellen Prädiktionsblock unter Verwendung des von der Intraprädiktionseinheit erzeugten vorhergesagten Bildes zu kodieren.

26

**2.** Bildverarbeitungsvorrichtung nach Anspruch 1, wobei die Intraprädiktionseinheit die Matrix-Intraprädiktion auf der Grundlage einer Operation unter Verwendung von Parametern durchführt, die entsprechend dem auf den festen Wert eingestellten Verschiebungsbetrag eingestellt sind.

**3.** Bildverarbeitungsvorrichtung nach Anspruch 2, wobei die Intraprädiktionseinheit die Matrix-Intraprädiktion auf der Grundlage einer Operation durchführt, die eine Gewichtungsmatrix gemäß dem auf den festen Wert eingestellten Verschiebungsbetrag beinhaltet.

**4.** Bildverarbeitungsvorrichtung nach Anspruch 3, wobei die Intraprädiktionseinheit die Matrix-Intraprädiktion auf der Grundlage einer Operation durchführt, die einen Bias-Vektor oder eine Variable f0 beinhaltet, die entsprechend dem auf den festen Wert eingestellten Verschiebungsbetrag eingestellt ist.

**5.** Bildverarbeitungsvorrichtung nach Anspruch 2, wobei der feste Wert ein Wert ist, der entsprechend einer Matrixgröße festgelegt wird, die bei der Matrix-Intraprädiktion verwendet wird.

**6.** Bildverarbeitungsvorrichtung nach Anspruch 5, wobei der feste Wert ein fester Wert ist, der für jede Kennung einer Matrixgröße festgelegt wird, die in der Matrix-Intraprädiktion verwendet wird.

**7.** Bildverarbeitungsvorrichtung nach Anspruch 6, wobei der feste Wert 6 ist, wenn der Wert der Kennung der Matrixgröße 0 ist.

**8.** Bildverarbeitungsvorrichtung nach Anspruch 6, wobei der feste Wert 7 ist, wenn der Wert der Kennung der Matrixgröße 1 ist.

**9.** Bildverarbeitungsvorrichtung nach Anspruch 6, wobei der feste Wert 6 ist, wenn der Wert der Kennung der Matrixgröße 2 ist.

**10.** Bildverarbeitungsvorrichtung nach Anspruch 2, wobei der feste Wert 6 ist.

**11.** Bildverarbeitungsvorrichtung nach Anspruch 2, wobei der feste Wert 8 ist.

**12.** Bildverarbeitungsverfahren, umfassend:

einen Intraprädiktionsprozess (S13) des Durchführens von Matrix-Intraprädiktion, MIP, im Rahmen der "Versatile Video Coding"-, WC-, Videocodec-Standardisierung unter Verwendung eines auf einen festen Wert eingestellten Verschiebungsbetrags sW, wobei der feste Wert ein Wert ist, der unabhängig von der Modusnummer der Matrix-Intraprädiktion fest ist, zum Erzeugen eines vorhergesagten Bildes eines aktuellen Prädiktionsblocks, wenn die Matrix-Intraprädiktion, die eine Intraprädiktion unter Verwendung einer Matrixoperation ist, am zu kodierenden aktuellen Prädiktionsblock durchgeführt wird; und
einen Kodierprozess (S26) des Kodierens des aktuellen Prädiktionsblocks unter Verwendung des vorhergesagten Bildes, das im Intraprädiktionsprozess erzeugt wird.

**13.** Bildverarbeitungsvorrichtung (51), umfassend:

eine Intraprädiktionseinheit (71), die dafür ausgelegt ist, Matrix-Intraprädiktion, MIP, im Rahmen der "Versatile Video Coding"-, WC-, Videocodec-Standardisierung unter Verwendung eines auf einen festen Wert eingestellten Verschiebungsbetrags sW durchzuführen, wobei der feste Wert ein Wert ist, der unabhängig von der Modusnummer der Matrix-Intraprädiktion fest ist, zum Erzeugen eines vorhergesagten Bildes eines aktuellen Prädiktionsblocks, wenn die Matrix-Intraprädiktion, die eine Intraprädiktion unter Verwendung einer Matrixoperation ist, am zu dekodierenden aktuellen Prädiktionsblock durchgeführt wird; und
eine Dekodiereinheit (62, 63, 64, 65), die dafür ausgelegt ist, den aktuellen Prädiktionsblock unter Verwendung des von der Intraprädiktionseinheit erzeugten vorhergesagten Bildes zu dekodieren.

**14.** Bildverarbeitungsverfahren, umfassend:

einen Intraprädiktionsprozess (S53) des Durchführens von Matrix-Intraprädiktion, MIP, im Rahmen der "Versatile Video Coding"-, WC-, Videocodec-Standardisierung unter Verwendung eines auf einen festen Wert eingestellten Verschiebungsbetrags sW, wobei der feste Wert ein Wert ist, der unabhängig von der Modusnummer der Matrix-Intraprädiktion fest ist, zum Erzeugen eines vorhergesagten Bildes eines aktuellen Prädiktionsblocks, wenn die Matrix-Intraprädiktion, die eine Intraprädiktion unter Verwendung einer Matrixoperation ist, am zu dekodierenden aktuellen Prädiktionsblock durchgeführt wird; und

einen Dekodierprozess (S57) des Dekodierens des aktuellen Prädiktionsblocks unter Verwendung des vorhergesagten Bildes, das im Intraprädiktionsprozess erzeugt wird.

**Revendications**

1. Dispositif de traitement d'image (11) comprenant :

    une unité de prédiction intra (34) configurée pour effectuer une prédiction intra matricielle, MIP, dans le cadre de la normalisation du codec vidéo Versatile Video Coding, VVC, à l'aide d'une quantité de décalage, sW, définie à une valeur fixe, la valeur fixe étant une valeur qui est fixée quel que soit le numéro de mode de la prédiction intra matricielle, pour générer une image prédite d'un bloc de prédiction courant, lorsque la prédiction intra matricielle, qui est une prédiction intra utilisant une opération matricielle, est effectuée sur le bloc de prédiction courant à coder ; et

    une unité de codage (26) configurée pour coder le bloc de prédiction courant à l'aide de l'image prédite générée par l'unité de prédiction intra.

2. Dispositif de traitement d'image selon la revendication 1, dans lequel :
    l'unité de prédiction intra effectue la prédiction intra matricielle sur la base d'une opération utilisant des paramètres définis en fonction de la quantité de décalage définie à la valeur fixée.

3. Dispositif de traitement d'image selon la revendication 2, dans lequel :
    l'unité de prédiction intra effectue la prédiction intra matricielle sur la base d'une opération comprenant une matrice de poids définie en fonction de la quantité de décalage définie à la valeur fixée.

4. Dispositif de traitement d'image selon la revendication 3, dans lequel :
    l'unité de prédiction intra effectue la prédiction intra matricielle sur la base d'une opération comprenant un vecteur de biais ou une variable f0 définie en fonction de la quantité de décalage définie à la valeur fixée.

5. Dispositif de traitement d'image selon la revendication 2, dans lequel :
    la valeur fixée est une valeur définie en fonction d'une taille de matrice utilisée dans la prédiction intra matricielle.

6. Dispositif de traitement d'image selon la revendication 5, dans lequel :
    la valeur fixée est une valeur fixée définie pour chaque identifiant d'une taille de matrice utilisée dans la prédiction intra matricielle.

7. Dispositif de traitement d'image selon la revendication 6, dans lequel :
    la valeur fixée est 6 lorsque la valeur de l'identifiant de la taille de la matrice est 0.

8. Dispositif de traitement d'image selon la revendication 6, dans lequel :
    la valeur fixée est 7 lorsque la valeur de l'identifiant de la taille de la matrice est 1.

9. Dispositif de traitement d'image selon la revendication 6, dans lequel :
    la valeur fixée est 6 lorsque la valeur de l'identifiant de la taille de la matrice est 2.

10. Dispositif de traitement d'image selon la revendication 2, dans lequel :
    la valeur fixée est 6.

11. Dispositif de traitement d'image selon la revendication 2, dans lequel :
    la valeur fixée est 8.

12. Procédé de traitement d'image, comprenant :

    un processus de prédiction intra (S13) comprenant d'effectuer une prédiction intra matricielle, MIP, dans le cadre de la normalisation du codec vidéo Versatile Video Coding, VVC, à l'aide d'une quantité de décalage sW

définie à une valeur fixe, la valeur fixe étant une valeur qui est fixée quel que soit le numéro de mode de la prédiction intra matricielle, pour générer une image prédite d'un bloc de prédiction courant, lorsque la prédiction intra matricielle, qui est une prédiction intra utilisant une opération matricielle, est effectuée sur le bloc de prédiction courant à coder ; et

un processus de codage (S26) comprenant de coder le bloc de prédiction courant à l'aide de l'image prédite générée dans le processus de prédiction intra.

**13.** Dispositif de traitement d'image (51) comprenant :

une unité de prédiction intra (71) configurée pour effectuer une prédiction intra matricielle, MIP, dans le cadre de la normalisation du codec vidéo Versatile Video Coding, VVC, à l'aide d'une quantité de décalage, sW, définie à une valeur fixe, la valeur fixe étant une valeur qui est fixée quel que soit le numéro de mode de la prédiction intra matricielle, afin de générer une image prédite d'un bloc de prédiction courant, lorsque la prédiction intra matricielle, qui est une prédiction intra utilisant une opération matricielle, est effectuée sur le bloc de prédiction courant à coder ; et

une unité de décodage (62, 63, 64, 65) configurée pour décoder le bloc de prédiction courant à l'aide de l'image prédite générée par l'unité de prédiction intra.

**14.** Procédé de traitement d'image, comprenant :

un processus de prédiction intra (S53) comprenant d'effectuer une prédiction intra matricielle, MIP, dans le cadre de la normalisation du codec vidéo Versatile Video Coding, VVC, à l'aide d'une quantité de décalage, sW, définie à une valeur fixe, la valeur fixe étant une valeur qui est fixée quel que soit le numéro de mode de la prédiction intra matricielle, pour générer une image prédite d'un bloc de prédiction courant, lorsque la prédiction intra matricielle, qui est une prédiction intra utilisant une opération matricielle, est effectuée sur le bloc de prédiction courant à décoder ; et

un processus de décodage (S57) comprenant de décoder le bloc de prédiction courant à l'aide de l'image prédite générée dans le processus de prédiction intra.

# FIG. 1

TABLE 8-8 AND EQUATION (8-69) DESCRIBED IN JVET-N1001-v7

| MipSizeId | modeId | | | | | | | | | | | | | | | | | |
|---|---|---|---|---|---|---|---|---|---|---|---|---|---|---|---|---|---|---|
| | 0 | 1 | 2 | 3 | 4 | 5 | 6 | 7 | 8 | 9 | 10 | 11 | 12 | 13 | 14 | 15 | 16 | 17 |
| 0 | 8 | 8 | 8 | 8 | 8 | 8 | 8 | 8 | 8 | 8 | 8 | 8 | 8 | 8 | 8 | 8 | 8 | 8 |
| 1 | 8 | 8 | 8 | 9 | 8 | 8 | 8 | 8 | 9 | 8 | | | | | | | | |
| 2 | 8 | 8 | 8 | 8 | 8 | 8 | | | | | | | | | | | | |

$$predMip[\ x\ ][\ y\ ] = (\ (\ \Sigma_{i\,=\,0}^{2\,*\,boundarySize\ -\ 1} mWeight[\ i\ ][\ y*incH*predC + x*incW\ ]*p[\ i\ ]) +$$

$$(\ vBias[\ y*incH*predC + x*incW\ ] \ \ll sB\ ) + oW\ ) \gg sW \qquad (8\text{-}69)$$

MIP Mode: Matrix-based Intra Prediction (MIP) MODE
MipSizeId: MATRIX SIZE IDENTIFIER USED IN MIP (DETERMINED ACCORDING TO BLOCK SIZE)

# FIG. 2

TABLE 8-8 AND EQUATION (8-69)
DESCRIBED IN JVET−N1001−v7

| MipSizeId | modeId | | | | | | | | | | | | | | | | | |
|---|---|---|---|---|---|---|---|---|---|---|---|---|---|---|---|---|---|---|
| | 0 | 1 | 2 | 3 | 4 | 5 | 6 | 7 | 8 | 9 | 10 | 11 | 12 | 13 | 14 | 15 | 16 | 17 |
| 0 | 8 | 8 | 8 | 8 | 8 | 8 | 8 | 8 | 8 | 8 | 8 | 8 | 8 | 8 | 8 | 8 | 8 | 8 |
| 1 | 8 | 8 | 8 | 9 | 8 | 8 | 8 | 8 | 9 | 8 | | | | | | | | |
| 2 | 8 | 8 | 8 | 8 | 8 | | | | | | | | | | | | | |

8

$$predMip[ x ][ y ] = ( ( \sum_{i=0}^{2 * boundarySize\ -1} mWeight[ i ][ y * incH * predC + x * incW ] * p[ i ]) +$$

$$( vBias[ y * incH * predC + x * incW ]\ \ll sB ) + oW ) \gg sW \qquad (8\text{-}69)$$

8

# FIG. 3

```
{
  { 218, -56,   9,  -3, 411, -76,  12,  -4 },
  { 448,  94, -45,   6,  23, -15,   2,  -3 },
  {  -1, 476,  77, -34,  -5,  -2,   1,  -3 },
  {   1, -16, 466,  61,   5,  -4,   1,  -3 },
  { -38,   2,  -3,   0, 260, 358, -77,   8 },
  { 122, -39,   1,  -1, 463, -25, -11,  -2 },
  { 405,  54, -41,   5, 121, -33,   2,  -6 },
  { 107, 402,  16, -12,   3,  -4,   1,  -6 },
  {   5,  -1,  -1,   0, -62, 267, 375, -73 },
  { -25,   3,  -4,  -1, 108, 466, -28, -11 },
  {  58, -25,  -3,  -1, 418,  96, -35,  -3 },
  { 301,  18, -15,   5, 229, -21,  -4,  -7 },
  {  -1,  -3,  -2,  -2,  24, -95, 291, 297 },
  {   3,   1,  -5,  -2, -30, 103, 464, -29 },
  { -16,   0,  -6,   0,  41, 429,  70, -13 },
  {  27,  -5,  -2,   1, 303, 193, -13,  -1 }
},
```

A

```
{
  { 109, -28,   5,  -2, 206, -38,   6,  -2 },
  { 224,  47, -23,   3,  12,  -8,   1,  -2 },
  {  -1, 238,  39, -17,  -3,  -1,   1,  -2 },
  {   1,  -8, 233,  31,   3,  -2,   1,  -2 },
  { -19,   1,  -2,   0, 130, 179, -39,   4 },
  {  61, -20,   1,  -1, 232, -13,  -6,  -1 },
  { 203,  27, -21,   3,  61, -17,   1,  -3 },
  {  54, 201,   8,  -6,   2,  -2,   1,  -3 },
  {   3,  -1,  -1,   0, -31, 134, 188, -37 },
  { -13,   2,  -2,  -1,  54, 233, -14,  -6 },
  {  29, -13,  -2,  -1, 209,  48, -18,  -2 },
  { 151,   9,  -8,   3, 115, -11,  -2,  -4 },
  {  -1,  -2,  -1,  -1,  12, -48, 146, 149 },
  {   2,   1,  -3,  -1, -15,  52, 232, -15 },
  {  -8,   0,  -3,   0,  21, 215,  35,  -7 },
  {  14,  -3,  -1,   1, 152,  97,  -7,  -1 }
},
```

B

EP 3 989 578 B1

## FIG. 4

```
{
  { -91,  23,  13,   8, 209, 261,  72,  24 },
  { -26, -22,  14,  13,  88, 306, 114,  35 },
  { -16,  18, -16,   5,  31, 327, 135,  39 },
  { -11,  11,  30, -19,   3, 325, 142,  41 },
  {  12,  -4,   1,   1, -14, 273, 227,  26 },
  {   3,  10,  -3,  -5,   6, 231, 249,  34 },
  {   1,   8,   5,  -9,  10, 214, 262,  37 },
  {  -1,  11,   4,  -7,  15, 208, 259,  40 },
  {   5,   0,   4,  -4,   6,  92, 340,  78 },
  {   4,   6,   1,  -5,   6, 113, 329,  75 },
  {   2,  13,   2,  -8,   6, 123, 319,  75 },
  {   1,  13,   6, -10,   9, 136, 303,  74 },
  {   6,   1,   4,  -5,   8,  38, 217, 252 },
  {   4,  10,   1,  -7,   9,  58, 313, 141 },
  {   3,  12,   4,  -8,  11,  70, 327, 114 },
  {   2,  14,   4,  -7,  14,  82, 314, 110 }
},
```

A

```
{
  { -46,  12,   7,   4, 105, 131,  36,  12 },
  { -13, -11,   7,   7,  44, 153,  57,  18 },
  {  -8,   9,  -8,   3,  16, 164,  68,  20 },
  {  -6,   6,  15, -10,   2, 163,  71,  21 },
  {   6,  -2,   1,   1,  -7, 137, 114,  13 },
  {   2,   5,  -2,  -3,   3, 116, 125,  17 },
  {   1,   4,   3,  -5,   5, 107, 131,  19 },
  {  -1,   6,   2,  -4,   8, 104, 130,  20 },
  {   3,   0,   2,  -2,   3,  46, 170,  39 },
  {   2,   3,   1,  -3,   3,  57, 165,  38 },
  {   1,   7,   1,  -4,   3,  62, 160,  38 },
  {   1,   7,   3,  -5,   5,  68, 152,  37 },
  {   3,   1,   2,  -3,   4,  19, 109, 126 },
  {   2,   5,   1,  -4,   5,  29, 157,  71 },
  {   2,   6,   2,  -4,   6,  35, 164,  57 },
  {   1,   7,   2,  -4,   7,  41, 157,  55 }
},
```

B

EP 3 989 578 B1

FIG. 5

A

```
{
  { 0,  0,  0,  0,  0,  0,  0,  0,  0,  0,  0,  0,  0,  0,  0,  0 },
  { 0,  1,  0, -1,  0,  1,  0, -1,  1,  1, -1, -2,  2,  1, -1, -2 },
  { 0,  2,  0, 18,  0,  2,  8, 42, -1,  1, 20, 76,  1,  5, 34, 99 },
  { 1,  2,  3,  1,  1,  3,  3,  3,  2,  4,  4,  4,  3,  5,  5,  5 },
  { 0,  0,  1,  4,  2,  4,  7, 11,  2,  9, 17, 22, 12, 23, 31, 37 },
  { 1,  1,  2,  3,  1,  2,  2,  3,  1,  3,  3,  3,  2,  2,  3,  4 },
  { 1,  2,  3,  4,  3,  4,  6,  8,  1,  3,  4,  4,  3,  5,  5,  6 },
  { 0,  1,  1,  1,  0,  0,  1,  1,  0,  0,  1,  1,  1,  1,  1,  1 },
  { -7, -10, -11, -11, -10, -14, -17, -18, -11, -15, -19, -21, -10, -17, -21, -22 },
  { -1, -1, -3, -1,  0, -1, -5,  2, -1, -1, -5,  6,  0, -2, -4, 10 }
};
```

B

```
{
  { 0,  0,  0,  0,  0,  0,  0,  0,  0,  0,  0,  0,  0,  0,  0,  0 },
  { 0,  1,  0, -1,  0,  1,  0, -1,  1,  1, -1, -2,  2,  1, -1, -2 },
  { 0,  2,  0, 18,  0,  2,  8, 42, -1,  1, 20, 76,  1,  5, 34, 99 },
  { 1,  1,  2,  1,  1,  2,  2,  2,  1,  2,  2,  2,  2,  3,  3,  3 },
  { 0,  0,  1,  4,  2,  4,  7, 11,  2,  9, 17, 22, 12, 23, 31, 37 },
  { 1,  1,  2,  3,  1,  2,  2,  3,  1,  3,  3,  3,  2,  2,  3,  4 },
  { 1,  2,  3,  4,  3,  4,  6,  8,  1,  3,  4,  4,  3,  5,  5,  6 },
  { 0,  1,  1,  1,  0,  0,  1,  1,  0,  0,  1,  1,  1,  1,  1,  1 },
  { -4, -5, -6, -6, -5, -7, -9, -9, -6, -8, -10, -11, -5, -9, -11, -11 },
  { -1, -1, -3, -1,  0, -1, -5,  2, -1, -1, -5,  6,  0, -2, -4, 10 }
};
```

EP 3 989 578 B1

# FIG. 6

EP 3 989 578 B1

TABLE 8-8 AND EQUATION (8-69) DESCRIBED IN JVET-N1001-v7_proposal_text_MIP_8Bit.docx

| MipSizeId | modeId | | | | | | | | | | | | | | | | | |
|---|---|---|---|---|---|---|---|---|---|---|---|---|---|---|---|---|---|---|
| | 0 | 1 | 2 | 3 | 4 | 5 | 6 | 7 | 8 | 9 | 10 | 11 | 12 | 13 | 14 | 15 | 16 | 17 |
| 0 | 6 | 6 | 6 | 6 | 6 | 6 | 6 | 6 | 6 | 7 | 6 | 6 | 7 | 7 | 6 | 6 | 6 | 6 |
| 1 | 7 | 7 | 7 | 7 | 7 | 7 | 7 | 7 | 7 | 8 | | | | | | | | |
| 2 | 7 | 7 | 7 | 7 | 6 | 7 | | | | | | | | | | | | |

$$predMip[\,x\,][\,y\,] = ( ( ( \Sigma_{i=0}^{inSize\,-1} mWeight[\,i\,][\,y * incH * predC + x * incW\,] * p[\,i\,])$$

$$+ oW ) >> sW ) + dcVal \qquad (8\text{-}69)$$

# FIG. 7

TABLE 8-8 AND EQUATION (8-69) DESCRIBED
IN JVET-N1001-v7_proposal_text_MIP_8Bit.docx

| MipSizeId | modeId | | | | | | | | | | | | | | | | | | |
|---|---|---|---|---|---|---|---|---|---|---|---|---|---|---|---|---|---|---|---|
| | 0 | 1 | 2 | 3 | 4 | 5 | 6 | 7 | 8 | 9 | 10 | 11 | 12 | 13 | 14 | 15 | 16 | 17 | |
| 0 | 6 | 6 | 6 | 6 | 6 | 6 | 6 | 6 | 6 | 7 | 6 | 6 | 7 | 7 | 6 | 6 | 6 | 6 | → 6 |
| 1 | 7 | 7 | 7 | 7 | 7 | 7 | 7 | 7 | 7 | 8 | | | | | | | | | → 7 |
| 2 | 7 | 7 | 7 | 7 | 6 | 7 | | | | | | | | | | | | | → 6 |

$$\text{predMip}[\,x\,][\,y\,] = (\,(\,(\,\Sigma_{i=0}^{\text{inSize}\ -1}\ \text{mWeight}[\,i\,][\,y * \text{incH} * \text{predC} + x * \text{incW}\,] * p[\,i\,]\,)$$

$$+ \text{oW}\,) \gg \text{sW}\,)\ + \text{dcVal} \qquad (8\text{-}69)$$

6 or 7

FIG. 8

```
(const uint8_t mipShiftMatrix4x4[18]) =
{ 6,   6,   6,   6,   6,   6,   6,   6,   6,   7,   6,   6,   7,   7,   6,   6,   6,   6 };
(const uint8_t mipShiftMatrix8x8[10]) =
{ 7,   7,   7,   7,   7,   7,   7,   7,   7,   8 };
(const uint8_t mipShiftMatrix16x16[6]) =
{ 7,   7,   7,   7,   6,   7 };
```

EP 3 989 578 B1

# FIG. 9

```
(const uint8_t
mipMatrix4x4[18][16][4]) =
{
 {
  { 50,  66,  86,  35 },
  { 45, 144, 136,  76 },
  { 44, 114, 144,  68 },
  { 46,  56, 126,  49 },
  { 38, 109, 164, 107 },
  { 37,  53, 125,  89 },
  { 43,   3,  84,  76 },
  { 49,   0,  64,  83 },
  { 46,  12,  33,  96 },
  { 53,   3,  26,  95 },
  { 59,  18,  33, 103 },
  { 64,  23,  40, 104 },
  { 63,  32,  46, 105 },
  { 69,  38,  56, 109 },
  { 73,  38,  59, 109 },
  { 73,  38,  60, 108 }
 },
```

# FIG. 10

```
{
  { 50,  16,  71,   2 },
  { 49,  12,  48,   0 },
  { 44, 102,  68,  47 },
  { 29, 130,  60,  68 },
  { 52,  64, 107,  98 },
  { 50,  59,  88, 105 },
  { 47,  61,  70, 112 },
  { 41,  64,  57, 114 },
  { 52,  53,  50, 119 },
  { 52,  54,  51, 119 },
  { 52,  54,  55, 119 },
  { 53,  54,  59, 118 },
  { 52,  54,  57, 115 },
  { 52,  54,  58, 115 },
  { 52,  56,  58, 117 },
  { 51,  57,  58, 116 }
},
```

# FIG. 11

```
{
 { 73,  65,  120,  68 },
 { 73,  21,  52,  30 },
 { 72,  11,  0,  5 },
 { 73,  114,  55,  57 },
 { 73,  74,  140,  71 },
 { 73,  76,  140,  77 },
 { 73,  39,  85,  47 },
 { 72,  15,  17,  13 },
 { 74,  72,  121,  87 },
 { 73,  72,  137,  69 },
 { 73,  78,  145,  76 },
 { 73,  56,  112,  61 },
 { 72,  73,  69,  142 },
 { 73,  71,  101,  107 },
 { 72,  70,  129,  76 },
 { 73,  74,  137,  73 }
},
```

# FIG. 12

```
{
  { 53,  11,  32,  12 },
  { 52,   5,   1,   0 },
  { 53, 118,  62,  54 },
  { 51, 150,  80,  69 },
  { 53,  34,  84,  35 },
  { 53,  51,  55,  28 },
  { 50, 154,  96,  79 },
  { 42, 154,  89,  92 },
  { 53,  48,  75,  90 },
  { 37, 125, 100, 140 },
  { 16, 180, 111, 176 },
  { 10, 161,  89, 173 },
  { 37,  65,  30, 156 },
  { 11, 149,  85, 188 },
  {  1, 168,  99, 190 },
  {  5, 162,  96, 183 }
},
```

# FIG. 13

```
{
  { 64,   0,  24,   2 },
  { 64,  15,   3,   6 },
  { 65, 128,  67,  66 },
  { 64, 131,  66,  67 },
  { 62,  53, 118,  58 },
  { 59,  19,  39,  15 },
  { 59,  95,  47,  41 },
  { 63, 128,  68,  61 },
  { 61,  68,  82, 125 },
  { 58,  63,  81, 113 },
  { 54,  40,  25,  71 },
  { 56,  47,   1,  47 },
  { 69,  68,  59, 132 },
  { 71,  72,  65, 137 },
  { 70,  65,  63, 137 },
  { 66,  42,  19, 111 }
},
```

# FIG. 14

```
{
  { 53,  51, 109,  53 },
  { 53,  42,  94,  45 },
  { 53,  53,  85,  44 },
  { 52,  96,  87,  57 },
  { 53,  60, 121,  56 },
  { 53,  67, 124,  62 },
  { 52,  65, 125,  63 },
  { 52,  68, 125,  65 },
  { 54,  57, 102,  69 },
  { 52,  58, 116,  56 },
  { 54,  63, 120,  56 },
  { 52,  78, 124,  64 },
  { 50,  56,  31, 143 },
  { 50,  58,  47, 132 },
  { 35,  72,  87, 107 },
  {  0, 106, 146,  78 }
},
```

# FIG. 15

```
{
 { 111,  97, 151,  90 },
 { 108,  81, 127,  77 },
 { 110, 124, 122,  92 },
 {  90, 227, 152, 138 },
 { 111, 115, 163, 128 },
 { 110, 111, 164, 125 },
 { 107, 143, 166, 131 },
 {  43, 189, 146, 115 },
 { 109, 109, 117, 162 },
 { 116, 113, 117, 168 },
 {  76, 113, 120, 151 },
 {   1, 145, 133,  88 },
 { 108, 108, 105, 172 },
 { 107, 103, 100, 172 },
 {  34,  73,  84, 132 },
 {   0, 137, 124,  92 }
},
```

# FIG. 16

```
{
  { 63,  57, 118,  56 },
  { 63,  28,  76,  36 },
  { 63,   0,  22,   9 },
  { 63,  46,  20,  21 },
  { 63,  64, 130,  61 },
  { 62,  69, 142,  61 },
  { 61,  63, 137,  59 },
  { 62,  36,  98,  41 },
  { 63,  61,  76, 110 },
  { 62,  58,  91,  91 },
  { 61,  60, 112,  74 },
  { 59,  64, 129,  66 },
  { 60,  60,  57, 131 },
  { 59,  59,  56, 131 },
  { 58,  56,  57, 125 },
  { 52,  52,  69, 109 }
},
```

# FIG. 17

```
{
 { 92,  82, 136,  89 },
 { 92,  35,  35,  59 },
 { 90, 104,  42,  71 },
 { 89, 168,  96, 106 },
 { 93,  97, 118, 136 },
 { 91,  83, 100, 135 },
 { 92,  78,  42,  94 },
 { 78, 146,  67,  94 },
 { 92,  90, 102, 140 },
 { 92,  94, 110, 143 },
 { 92,  92,  97, 143 },
 { 31, 113,  73, 105 },
 { 90,  91, 106, 142 },
 { 93,  94, 105, 142 },
 { 76,  88, 108, 143 },
 {  0,  90, 120, 123 }
},
```

# FIG. 18

```
{
  { 10, 82, 175,   4 },
  { 7, 119, 105,  98 },
  { 4,  58,  41, 128 },
  { 4,  21,  20, 132 },
  { 4,  34,  43, 143 },
  { 4,   0,   6, 144 },
  { 4,   2,  15, 136 },
  { 4,  14,  22, 134 },
  { 6,   7,   6, 134 },
  { 6,  15,  21, 131 },
  { 5,  19,  21, 134 },
  { 3,  19,  22, 134 },
  { 6,  16,  22, 133 },
  { 4,  16,  20, 136 },
  { 4,  15,  19, 136 },
  { 2,  16,  21, 133 }
},
```

# FIG. 19

```
{
  { 86,  39,  72,  37 },
  { 83,   0,  15,   8 },
  { 83,  85,  49,  49 },
  { 83, 165,  96,  92 },
  { 83,  92, 157,  94 },
  { 82,  55, 108,  62 },
  { 75,  19,  38,  24 },
  { 69, 115,  65,  64 },
  { 84,  86,  90, 148 },
  { 81,  90,  98, 151 },
  { 72,  64,  75, 132 },
  { 52,  50,  32, 104 },
  { 82,  82,  81, 149 },
  { 81,  83,  82, 149 },
  { 79,  88,  88, 152 },
  { 71,  77,  84, 144 }
},
```

# FIG. 20

```
{
  { 77,  42,  86,  29 },
  { 72,  10,  37,   6 },
  { 72,   0,  19,   0 },
  { 77,  36,  33,  19 },
  { 77,  95, 149, 112 },
  { 69,  84, 126, 103 },
  { 57,  50,  74,  79 },
  { 53,  16,  20,  56 },
  { 78,  85,  84, 149 },
  { 77,  91,  87, 153 },
  { 75,  99,  94, 157 },
  { 71,  96,  88, 152 },
  { 79,  84,  83, 144 },
  { 79,  86,  84, 144 },
  { 80,  89,  85, 146 },
  { 80,  93,  89, 148 }
},
```

# FIG. 21

```
{
 { 62,  22, 146,   0 },
 { 61, 120, 150,  67 },
 { 58, 185, 100, 145 },
 { 66, 119,  26, 153 },
 { 65,  96, 164, 159 },
 { 66,  88,  91, 198 },
 { 69,  64,  62, 198 },
 { 74,  64,  63, 193 },
 { 68,  62,  49, 195 },
 { 72,  62,  54, 191 },
 { 74,  69,  62, 191 },
 { 77,  71,  62, 191 },
 { 71,  66,  66, 189 },
 { 75,  69,  64, 192 },
 { 77,  70,  61, 193 },
 { 79,  68,  60, 191 }
},
```

# FIG. 22

```
{
  { 20,  23,  176,   8 },
  { 20,  18,  177,   7 },
  { 20,   7,  171,   0 },
  { 20,  11,  167,   1 },
  { 20,  17,  119,  36 },
  { 20,  18,  118,  38 },
  { 20,  18,  117,  40 },
  { 20,  13,  113,  40 },
  { 20,  18,   20, 145 },
  { 20,  17,   18, 145 },
  { 21,  17,   17, 146 },
  { 21,  19,   18, 145 },
  { 21,  20,   20, 148 },
  { 21,  18,   20, 146 },
  { 21,  18,   20, 145 },
  { 21,  18,   21, 143 }
},
```

# FIG. 23

```
{
 { 89,  51,  98,  52 },
 { 94,  94,  78,  58 },
 { 94, 176,  98, 120 },
 { 71, 170,  90, 155 },
 { 97, 106, 149, 106 },
 { 88, 151, 119, 153 },
 { 51, 143,  94, 173 },
 { 18,  95,  86, 150 },
 { 87, 108,  90, 169 },
 { 33,  95,  92, 162 },
 {  0,  71, 101, 137 },
 {  3,  70, 103, 134 },
 { 35,  73,  83, 149 },
 {  1,  57,  96, 125 },
 {  4,  59,  97, 127 },
 {  6,  65,  99, 131 }
},
```

# FIG. 24

```
{
  { 67,  77,   86,   59 },
  { 66,  97,   90,   64 },
  { 68,  99,   91,   65 },
  { 67, 105,   91,   68 },
  { 66,  93,   98,   61 },
  { 68,  99,   94,   69 },
  { 67,  99,   95,   67 },
  { 66, 105,   97,   69 },
  { 67,  83,   98,   62 },
  { 63,  96,   99,   54 },
  { 66, 103,   98,   68 },
  { 66, 106,   98,   70 },
  { 29, 100,   83,  152 },
  {  0, 127,  131,   78 },
  { 46, 113,  116,   63 },
  { 66, 104,  100,   69 }
},
```

# FIG. 25

```
{
 { 42,  33,  96,  38 },
 { 42,  39,  98,  41 },
 { 41,  64, 108,  51 },
 { 41,  75, 106,  53 },
 { 41,  46, 107,  45 },
 { 41,  46, 107,  45 },
 { 41,  43, 106,  44 },
 { 42,  43, 106,  44 },
 { 47,  45,  91,  56 },
 { 46,  45,  95,  52 },
 { 44,  45,  97,  50 },
 { 41,  43,  96,  49 },
 { 22,  29,   0, 138 },
 { 11,  22,   2, 128 },
 {  3,  18,   6, 120 },
 {  2,  16,  10, 114 }
},
```

# FIG. 26

```
{
  { 92,  40,   66,  49 },
  { 88,  62,   0,   72 },
  { 81,  164,  98,  99 },
  { 90,  121,  121, 77 },
  { 86,  53,   37,  106 },
  { 54,  98,   33,  83 },
  { 70,  140,  141, 75 },
  { 90,  93,   127, 76 },
  { 71,  87,   53,  120 },
  { 28,  101,  96,  39 },
  { 74,  100,  138, 69 },
  { 93,  89,   125, 84 },
  { 63,  115,  110, 83 },
  { 45,  82,   105, 25 },
  { 78,  78,   121, 69 },
  { 91,  89,   124, 84 }
}
};
```

EP 3 989 578 B1

# FIG. 27

```
(const uint8_t mipOffsetMatrix4x4[18]) =
{ 47,  53,  73,  53,  65,  53, 110,  63,  92,   8,  85,  80,  63,  20,  91,  67,  41,  94 };
```

# FIG. 28

```
(const uint8_t mipMatrix8x8[10][16][8]) =
{
 {
  { 35,  86,  81,  84, 188, 128,  60,  82 },
  { 34,  41,  75,  80, 140, 144,  36,  68 },
  { 33,  68,  50, 103, 101, 174,  36,  69 },
  { 28,  73,  71,  89,  65, 186,  42,  65 },
  { 33,  25,  29,  35,   4, 137,  89,  12 },
  { 28,  37,  32,  42,  12, 117, 125,  10 },
  { 21,  39,  44,  45,  28,  93, 155,  12 },
  { 15,  40,  53,  48,  41,  74, 166,  24 },
  { 32,  43,  38,  39,  43,  14, 143,  85 },
  { 23,  43,  42,  39,  45,  15, 116, 112 },
  { 13,  33,  43,  35,  41,  18,  84, 132 },
  { 11,  32,  42,  37,  38,  25,  63, 145 },
  { 26,  33,  39,  33,  34,  43,   4, 187 },
  { 18,  28,  41,  29,  31,  42,   0, 184 },
  { 14,  32,  39,  33,  32,  42,   8, 180 },
  { 13,  43,  40,  42,  37,  44,  21, 177 }
 },
```

# FIG. 29

```
{
  { 37,  65,  32,  36, 111,  64,  31,  35 },
  { 36, 187,  87,  73,  97,  96,  75,  75 },
  { 35,  14, 189,  47,  42,  51,  45,  43 },
  { 29,  50,   0, 198,  35,  41,  40,  37 },
  { 36,  48,  31,  32,   8, 147,  52,  28 },
  { 36, 175,  82,  77,  57, 154,  92,  77 },
  { 33,  23, 196,  45,  38,  64,  58,  49 },
  { 24,  50,   4, 194,  38,  36,  44,  37 },
  { 36,  49,  33,  33,  24,  22, 155,  45 },
  { 36, 154,  73,  72,  54,  77, 161,  81 },
  { 31,  28, 201,  46,  39,  60,  80,  59 },
  { 17,  48,   8, 190,  36,  43,  39,  39 },
  { 36,  53,  35,  35,  22,  40,  12, 176 },
  { 36, 127,  61,  62,  46,  61,  52, 175 },
  { 29,  29, 193,  47,  43,  53,  56, 102 },
  { 10,  48,  17, 184,  38,  41,  44,  47 }
},
```

# FIG. 30

```
{
 { 21,  67,  50,  52, 192,  56,  49,  51 },
 { 21,  82,  60,  52, 190,  40,  57,  52 },
 { 21,  54,  86,  46, 161,  26,  50,  43 },
 { 21,  32,  24,  93, 113,  12,  34,  26 },
 { 21,  20,  21,  21,   0, 162,  24,  17 },
 { 21,  31,  29,  32,  29, 173,  15,  31 },
 { 21,  51,  42,  47,  70, 173,  21,  46 },
 { 21,  58,  57,  60, 106, 156,  33,  56 },
 { 21,  29,  27,  27,  32,  11, 167,  28 },
 { 21,  32,  29,  29,  25,  34, 165,  16 },
 { 21,  30,  29,  30,  16,  63, 146,  10 },
 { 21,  31,  31,  36,  13,  96, 118,  14 },
 { 21,  23,  22,  22,  20,  23,   2, 168 },
 { 21,  30,  29,  28,  29,  21,  30, 156 },
 { 21,  33,  34,  34,  36,  14,  66, 136 },
 { 21,  39,  35,  43,  44,  13, 102, 111 }
},
```

## FIG. 31

```
{
  { 87, 123,  66,  59,  60,  93,  63,  70 },
  { 86, 146, 120,  84,  67,  84,  91,  92 },
  { 84,  90, 182, 120,  85,  81,  97, 103 },
  { 73,  88,  69, 239,  86,  87,  89, 104 },
  { 87, 153,  95,  87,  82,  97, 140, 103 },
  { 86, 131, 142,  91,  77,  71, 115, 121 },
  { 80,  79, 168, 131,  76,  81,  93, 127 },
  { 49, 102,  65, 246,  90, 103,  88, 126 },
  { 87, 143, 104,  92,  82,  94, 122, 160 },
  { 86, 115, 162,  98,  79,  92,  94, 165 },
  { 69,  77, 150, 149,  71,  93,  81, 149 },
  { 15, 128,  72, 247, 113, 106, 109, 137 },
  { 84, 122, 110,  92,  80,  95,  92, 196 },
  { 81,  98, 167, 107,  81, 105,  88, 183 },
  { 53,  93, 131, 173,  87, 101,  90, 163 },
  { 0, 150,  84, 249, 143, 101, 132, 153 }
},
```

# FIG. 32

```
{
  { 38,  77,  41,  44, 133,  81,  30,  49 },
  { 37, 191, 113,  83, 121, 132,  79,  91 },
  { 36,  28, 157,  58,  40,  74,  54,  40 },
  { 35,  36,   0, 169,  20,  36,  65,  30 },
  { 38,  45,  45,  41,  24, 120, 120,  27 },
  { 37,  51,  53,  45,  39,  73, 159,  37 },
  { 37,  50,  51,  47,  37,  36, 154,  66 },
  { 38,  36,  32,  54,  23,  17, 109,  96 },
  { 39,  37,  39,  38,  39,  24, 112, 108 },
  { 39,  37,  36,  40,  37,  35,  59, 150 },
  { 41,  42,  36,  41,  37,  45,  32, 173 },
  { 43,  42,  40,  41,  36,  47,  31, 173 },
  { 41,  37,  36,  39,  37,  38,  17, 182 },
  { 43,  43,  37,  42,  39,  37,  27, 180 },
  { 45,  40,  38,  42,  39,  34,  34, 173 },
  { 46,  42,  37,  47,  40,  33,  41, 167 }
},
```

# FIG. 33

```
{
 { 107,  83,  96,  94, 224,  84,  95,  93 },
 { 107,   0,  15,  23,  96,   1,  24,  18 },
 { 106, 102,  18,  42,  58,  33,  41,  37 },
 { 106, 144, 133,  73,  82,  84,  82,  80 },
 { 106, 108, 106, 109, 120, 236,  98, 108 },
 { 106, 125, 122, 125, 205, 200, 104, 126 },
 { 106,  86,  98, 101, 219, 110,  93,  98 },
 { 105,  66,  50,  67, 153,  50,  65,  59 },
 { 106, 109, 107, 109, 106, 120, 240,  97 },
 { 105, 101,  99, 104,  83, 184, 183,  85 },
 { 105, 106, 103, 110, 103, 232, 123, 100 },
 { 105, 111, 109, 116, 157, 211, 105, 111 },
 { 105, 105, 105, 107, 107, 103, 117, 228 },
 { 104, 109, 107, 111, 116,  87, 198, 168 },
 { 104, 110, 105, 112, 111, 100, 241, 115 },
 { 103, 108, 103, 110, 100, 150, 205, 100 }
},
```

# FIG. 34

```
{
 { 58,  89,  94,  94, 251, 106,  84,  96 },
 { 57,  53,  73,  75, 230,  85,  65,  76 },
 { 57,  79,  62,  79, 234,  89,  69,  81 },
 { 57,  80,  87,  68, 233,  92,  73,  83 },
 { 57,  48,  46,  46,   0, 196,  72,  34 },
 { 57,  55,  53,  51,   8, 199,  76,  40 },
 { 57,  47,  53,  49,   6, 197,  75,  38 },
 { 56,  47,  48,  51,   9, 192,  75,  38 },
 { 58,  62,  63,  62,  80,  17, 205,  83 },
 { 57,  63,  64,  62,  79,  21, 203,  84 },
 { 57,  61,  64,  63,  79,  20, 202,  85 },
 { 57,  62,  64,  64,  78,  23, 198,  87 },
 { 58,  56,  56,  56,  48,  72,  13, 215 },
 { 58,  58,  58,  57,  50,  72,  16, 215 },
 { 58,  56,  58,  58,  49,  72,  15, 215 },
 { 58,  56,  58,  59,  50,  72,  18, 213 }
},
```

# FIG. 35

```
{
 { 116,  51,  63,  60, 156,  47,  64,  60 },
 { 116,  30,   0,   8,  16,   6,   8,   8 },
 { 116, 228, 137, 107, 116, 114, 115, 115 },
 { 115, 107, 231, 129, 115, 111, 115, 113 },
 { 116, 122, 122, 122, 183, 208, 108, 124 },
 { 116,  74,  82,  81, 187,  80,  80,  81 },
 { 115,  27,   7,  15,  44,   9,  15,  14 },
 { 115, 173,  93,  81,  86,  84,  84,  84 },
 { 116, 113, 115, 114, 102, 179, 205,  99 },
 { 115, 119, 119, 118, 143, 234, 116, 116 },
 { 115,  93, 100,  97, 194, 127,  91,  98 },
 { 115,  42,  40,  39,  95,  34,  40,  38 },
 { 115, 117, 117, 116, 122,  99, 179, 198 },
 { 114, 116, 116, 114, 111, 143, 224, 112 },
 { 115, 119, 120, 117, 127, 225, 138, 116 },
 { 115, 102, 107, 104, 171, 155, 103, 105 }
},
```

# FIG. 36

```
{
  { 51, 124, 110, 76, 84, 172, 56, 82 },
  { 50,   0, 112, 78, 29, 77, 80, 36 },
  { 50, 57,   8, 144, 43, 45, 92, 86 },
  { 48, 55, 42, 78, 42, 34, 56, 150 },
  { 50, 26, 60, 63, 40, 51, 160, 43 },
  { 49, 60, 27, 86, 53, 37, 99, 135 },
  { 48, 52, 45, 59, 46, 45, 36, 189 },
  { 47, 51, 50, 55, 45, 49, 30, 191 },
  { 50, 52, 39, 64, 51, 49, 54, 175 },
  { 48, 52, 48, 56, 49, 55, 25, 201 },
  { 48, 52, 52, 52, 49, 53, 34, 195 },
  { 47, 53, 52, 53, 49, 52, 39, 190 },
  { 49, 52, 48, 52, 49, 52, 38, 190 },
  { 48, 50, 50, 52, 48, 52, 39, 188 },
  { 47, 51, 50, 54, 49, 54, 39, 188 },
  { 46, 52, 51, 54, 48, 56, 39, 185 }
},
```

## FIG. 37

```
{
  { 25,  71,  74,  67, 143, 175, 114,  84 },
  { 27,   5,  18,  37,  42, 149, 100,  52 },
  { 28,  30,   0,  31,  23, 153, 108,  54 },
  { 29,  19,  41,   0,  18, 149, 106,  50 },
  { 27,   7,  13,  20,  10, 125, 132,  42 },
  { 30,  20,   8,  22,  18, 112, 142,  51 },
  { 33,  19,  13,  19,  19, 110, 141,  53 },
  { 34,  25,  10,  22,  23, 114, 135,  56 },
  { 28,  13,  16,  18,  15,  78, 146,  77 },
  { 32,  20,  10,  21,  17,  82, 150,  75 },
  { 36,  20,  10,  21,  18,  80, 152,  72 },
  { 38,  22,  11,  22,  20,  81, 150,  69 },
  { 28,  13,  15,  17,  19,  43, 134, 119 },
  { 34,  21,  11,  21,  21,  51, 164,  87 },
  { 38,  20,  11,  22,  23,  54, 157,  86 },
  { 39,  23,  13,  23,  26,  59, 144,  93 }
}
};
```

EP 3 989 578 B1

## FIG. 38

```
(const uint8_t mipOffsetMatrix8x8[10]) =
{ 36,  36,  21,  86,  39, 107,  58, 116,  51,  20 };
```

## FIG. 39

```
(const uint8_t mipMatrix16x16[6][64][7]) =
{
 {
  { 45,  47,  42, 195,  28,  45,  41 },
  { 35,  47,  43, 197,  29,  44,  41 },
  {  7,  36,  31, 178,  23,  29,  29 },
  {  1,  26,  28, 165,  26,  22,  24 },
  { 25,  15,  36, 161,  42,  25,  30 },
  { 40,  15,  38, 153,  57,  26,  35 },
  { 37,  35,  28, 140,  71,  25,  36 },
  { 33,  44,  28, 125,  82,  25,  37 },
  { 23,  27,  28,  98, 104,  15,  29 },
  { 21,  23,  25,  83, 114,  11,  27 },
  { 21,  20,  24,  70, 124,   8,  26 },
  { 19,  19,  22,  58, 131,   5,  25 },
  { 15,  19,  19,  47, 137,   2,  23 },
  { 12,  17,  17,  39, 140,   0,  21 },
  { 12,  13,  18,  33, 140,   2,  20 },
  { 13,  13,  17,  31, 136,   8,  20 },
  { 18,  18,  19,  14, 156,  10,  22 },
  { 18,  17,  18,   9, 158,  11,  21 },
  { 17,  17,  18,   8, 152,  18,  19 },
  { 15,  17,  17,   7, 145,  26,  17 },
  { 15,  17,  17,   7, 135,  37,  15 },
  { 15,  16,  17,   7, 124,  50,  13 },
  { 14,  16,  17,   8, 110,  63,  12 },
  { 14,  16,  17,  11,  96,  73,  13 },
  { 18,  19,  19,   8,  98,  84,  11 },
  { 18,  19,  19,  10,  83, 102,   8 },
  { 18,  18,  19,  12,  67, 116,   7 },
  { 17,  18,  18,  13,  55, 127,   7 },
  { 17,  18,  18,  15,  44, 135,   9 },
  { 17,  18,  18,  16,  35, 140,  12 },
  { 17,  18,  18,  16,  29, 140,  16 },
  { 17,  18,  17,  17,  27, 134,  23 },
  { 20,  20,  21,  21,  16, 157,  15 },
  { 20,  20,  20,  21,  11, 157,  20 },
  { 20,  20,  20,  21,  10, 148,  29 },
  { 19,  20,  20,  20,  11, 138,  39 },
  { 19,  19,  19,  19,  11, 127,  49 },
  { 19,  19,  19,  19,  13, 115,  59 },
  { 19,  19,  19,  18,  15, 103,  69 },
  { 18,  19,  18,  18,  16,  93,  77 },
  { 20,  20,  20,  22,  10,  95,  84 },
  { 20,  20,  20,  21,  12,  80,  97 },
  { 20,  20,  20,  21,  14,  68, 107 },
  { 19,  20,  20,  20,  15,  59, 114 },
  { 19,  20,  19,  19,  16,  51, 121 },
  { 19,  19,  19,  19,  17,  45, 126 },
  { 19,  19,  19,  19,  17,  41, 129 },
  { 19,  19,  18,  19,  18,  39, 129 },
  { 20,  21,  20,  20,  21,  21, 148 },
  { 20,  20,  20,  20,  21,  17, 152 },
  { 19,  20,  19,  19,  20,  16, 152 },
  { 19,  20,  19,  19,  20,  17, 152 },
  { 19,  20,  19,  19,  20,  17, 151 },
  { 18,  19,  18,  18,  19,  18, 150 },
  { 18,  19,  18,  18,  19,  19, 148 },
  { 18,  19,  18,  17,  20,  21, 145 },
  { 20,  20,  20,  20,  22,   9, 158 },
  { 20,  20,  20,  19,  22,  11, 156 },
  { 19,  20,  19,  19,  22,  12, 155 },
  { 19,  20,  19,  18,  21,  13, 153 },
  { 18,  20,  19,  18,  21,  15, 151 },
  { 18,  20,  18,  18,  22,  16, 149 },
  { 18,  19,  18,  18,  22,  17, 147 },
  { 18,  19,  19,  18,  22,  19, 145 }
 },
```

*FIG. 40*

```
{
{  49,  41,  39, 173,  24,  44,  40 },
{  78,  52,  52, 182,  36,  56,  52 },
{ 129,  76,  77, 204,  61,  80,  77 },
{ 139, 109,  86, 214,  74,  92,  89 },
{ 119, 141,  87, 214,  77,  95,  92 },
{ 109, 150, 101, 213,  80,  97,  95 },
{ 110, 136, 130, 212,  85, 100,  98 },
{ 111, 113, 159, 207,  87, 101,  99 },
{  92,  81,  82, 204, 126,  70,  83 },
{  98,  86,  86, 212, 126,  75,  87 },
{ 110,  92,  92, 218, 132,  81,  93 },
{ 115, 100,  96, 222, 136,  85,  97 },
{ 113, 108,  97, 223, 138,  87,  99 },
{ 114, 113, 101, 224, 140,  89, 101 },
{ 118, 115, 108, 225, 143,  92, 103 },
{ 120, 116, 116, 221, 146,  95, 105 },
{  50,  48,  48,  56, 189,  29,  50 },
{  51,  49,  49,  57, 190,  29,  51 },
{  54,  51,  51,  60, 192,  31,  53 },
{  56,  53,  53,  62, 193,  33,  54 },
{  57,  56,  54,  64, 194,  34,  55 },
{  58,  58,  56,  66, 194,  36,  56 },
{  60,  59,  59,  69, 194,  38,  58 },
{  64,  61,  63,  73, 192,  43,  60 },
{  34,  36,  35,  12, 138,  89,  25 },
{  35,  36,  36,  12, 140,  87,  26 },
{  38,  37,  38,  15, 141,  89,  27 },
{  40,  39,  39,  17, 142,  91,  29 },
{  40,  40,  40,  18, 142,  92,  29 },
{  41,  42,  41,  20, 142,  93,  30 },
{  42,  42,  42,  21, 141,  94,  31 },
{  44,  44,  45,  25, 141,  96,  33 },
{  40,  40,  40,  38,  46, 176,  28 },
{  41,  41,  41,  39,  46, 179,  28 },
{  44,  41,  42,  40,  47, 180,  29 },
{  45,  42,  43,  41,  48, 180,  30 },
{  45,  44,  43,  41,  49, 180,  30 },
{  45,  44,  44,  42,  49, 180,  31 },
{  45,  44,  45,  42,  51, 179,  32 },
{  46,  45,  46,  43,  53, 176,  34 },
{  42,  42,  42,  46,  20, 152,  77 },
{  43,  42,  43,  47,  21, 154,  77 },
{  46,  42,  44,  48,  23, 155,  78 },
{  47,  44,  44,  49,  24, 155,  78 },
{  46,  45,  43,  49,  24, 155,  78 },
{  46,  45,  44,  49,  24, 154,  79 },
{  46,  44,  45,  49,  25, 153,  79 },
{  46,  44,  46,  49,  27, 151,  81 },
{  41,  41,  41,  42,  38,  53, 160 },
{  43,  41,  42,  43,  39,  53, 162 },
{  46,  42,  43,  45,  40,  54, 163 },
{  46,  43,  43,  45,  41,  55, 163 },
{  45,  44,  42,  45,  40,  54, 163 },
{  44,  43,  43,  45,  40,  55, 162 },
{  44,  43,  44,  45,  40,  55, 162 },
{  45,  43,  45,  46,  41,  57, 160 },
{  40,  39,  40,  38,  48,   0, 201 },
{  42,  40,  41,  39,  48,   2, 201 },
{  44,  41,  42,  40,  49,   3, 202 },
{  44,  42,  41,  41,  49,   3, 202 },
{  43,  42,  41,  40,  49,   3, 202 },
{  42,  42,  42,  40,  49,   3, 202 },
{  43,  42,  43,  41,  49,   4, 201 },
{  43,  42,  44,  41,  50,   6, 200 }
},
```

*FIG. 41*

```
{
{  32,  28,  27, 111,  26,  28,  28 },
{  17,   1,   0,  44,   2,   1,   1 },
{  65,  12,  13,  32,  17,  15,  13 },
{ 129,  55,  44,  55,  48,  47,  45 },
{ 133, 113,  59,  69,  66,  65,  63 },
{  86, 163,  65,  68,  68,  66,  65 },
{  61, 144, 110,  66,  67,  66,  64 },
{  72,  69, 186,  70,  71,  68,  67 },
{  80,  73,  73, 173, 101,  71,  73 },
{  62,  53,  52, 142,  65,  53,  52 },
{  49,  31,  30,  92,  40,  31,  30 },
{  68,  29,  27,  64,  35,  29,  27 },
{ 105,  51,  40,  63,  47,  43,  40 },
{ 116,  93,  53,  68,  59,  57,  54 },
{  93, 133,  64,  68,  64,  62,  60 },
{  74, 124, 102,  68,  66,  63,  62 },
{  79,  75,  74, 113, 169,  69,  75 },
{  79,  73,  73, 138, 135,  70,  72 },
{  69,  62,  60, 132,  99,  61,  60 },
{  63,  49,  47, 110,  72,  49,  46 },
{  75,  43,  41,  90,  58,  44,  40 },
{  97,  53,  46,  80,  57,  48,  44 },
{ 105,  80,  53,  76,  61,  55,  52 },
{  93, 107,  64,  73,  66,  58,  56 },
{  70,  70,  69,  68, 171,  97,  65 },
{  74,  73,  72,  91, 168,  84,  69 },
{  76,  73,  71, 114, 148,  78,  69 },
{  73,  66,  65, 119, 122,  70,  63 },
{  71,  57,  55, 111,  98,  59,  54 },
{  78,  52,  50,  99,  82,  52,  48 },
{  91,  58,  51,  88,  75,  52,  49 },
{  95,  75,  56,  81,  74,  54,  53 },
{  70,  71,  70,  71, 110, 166,  62 },
{  72,  72,  71,  75, 140, 133,  65 },
{  76,  73,  73,  88, 155, 108,  69 },
{  76,  72,  71, 100, 152,  91,  68 },
{  73,  68,  66, 105, 138,  77,  63 },
{  73,  62,  60, 104, 120,  65,  58 },
{  80,  59,  57,  99, 105,  60,  55 },
{  86,  65,  57,  92,  95,  58,  54 },
{  71,  73,  72,  77,  67, 187,  86 },
{  72,  73,  72,  76,  91, 179,  73 },
{  75,  73,  73,  78, 121, 153,  70 },
{  76,  74,  73,  84, 142, 127,  69 },
{  73,  72,  71,  91, 148, 104,  67 },
{  72,  69,  67,  96, 144,  87,  64 },
{  74,  66,  64,  98, 133,  75,  61 },
{  80,  67,  63,  97, 120,  71,  60 },
{  71,  72,  71,  73,  70, 113, 159 },
{  71,  73,  72,  75,  74, 147, 122 },
{  75,  74,  73,  78,  90, 163,  95 },
{  76,  75,  74,  81, 112, 156,  81 },
{  75,  75,  73,  85, 130, 138,  74 },
{  72,  74,  71,  88, 140, 117,  69 },
{  72,  71,  69,  91, 141, 100,  66 },
{  76,  70,  68,  93, 134,  90,  66 },
{  71,  71,  71,  71,  83,  45, 215 },
{  71,  72,  71,  72,  84,  69, 190 },
{  73,  73,  72,  76,  86, 107, 153 },
{  75,  75,  74,  80,  95, 136, 119 },
{  74,  76,  74,  82, 107, 143,  98 },
{  72,  76,  72,  84, 120, 135,  84 },
{  72,  74,  72,  87, 128, 122,  78 },
{  74,  73,  71,  89, 129, 110,  75 }
},
```

FIG. 42

```
{
{ 68,  36,  38, 130,  40,  40,  32 },
{ 56,  51,  42,  89,  66,  42,  32 },
{  8,  45,  31,  40,  62,  27,  14 },
{  0,  31,  37,  19,  60,  23,   9 },
{ 16,  12,  52,  13,  60,  27,  13 },
{ 17,  11,  54,   7,  54,  28,  13 },
{  9,  26,  45,   2,  47,  29,  12 },
{  6,  31,  46,   1,  39,  30,  12 },
{ 12,  22,  21,  31,  97,  20,  13 },
{  0,  18,  22,  15,  87,  25,   8 },
{  2,  13,  28,  10,  78,  30,  10 },
{  7,  10,  33,   9,  70,  34,  13 },
{  8,  12,  36,   7,  64,  36,  14 },
{  9,  14,  38,   5,  60,  38,  15 },
{ 10,  15,  40,   4,  54,  40,  15 },
{ 10,  18,  42,   4,  48,  41,  16 },
{  5,  10,  14,   8,  96,  25,  10 },
{  5,  10,  20,   8,  81,  36,  13 },
{  7,  11,  25,   8,  70,  43,  16 },
{  8,  12,  30,   9,  62,  45,  19 },
{  8,  14,  33,   8,  57,  46,  20 },
{  7,  14,  37,   7,  52,  47,  20 },
{  8,  13,  40,   7,  48,  47,  21 },
{  9,  13,  43,   7,  44,  46,  22 },
{  6,   9,  14,   6,  68,  56,  13 },
{  5,  10,  19,   6,  60,  57,  18 },
{  5,  10,  23,   5,  53,  56,  22 },
{  6,  10,  28,   5,  50,  53,  25 },
{  7,  11,  31,   4,  47,  52,  26 },
{  7,  11,  36,   4,  43,  51,  27 },
{  7,  11,  39,   4,  41,  50,  27 },
{  8,  11,  41,   5,  39,  48,  27 },
{  4,   8,  13,   4,  31,  87,  19 },
{  4,   9,  18,   5,  33,  75,  28 },
{  5,   9,  22,   4,  34,  66,  33 },
{  6,  10,  27,   4,  34,  61,  35 },
{  6,   9,  31,   3,  33,  58,  35 },
{  7,   9,  35,   2,  32,  56,  34 },
{  7,   9,  39,   3,  31,  55,  33 },
{  7,  10,  41,   3,  31,  53,  32 },
{  5,   7,  13,   4,  15,  66,  57 },
{  5,   7,  17,   3,  18,  61,  57 },
{  6,   8,  21,   3,  20,  59,  54 },
{  6,   8,  26,   3,  21,  59,  50 },
{  7,   8,  30,   3,  21,  60,  46 },
{  7,   8,  35,   2,  20,  60,  42 },
{  7,   8,  38,   2,  21,  60,  38 },
{  7,   9,  40,   3,  21,  58,  36 },
{  5,   6,  13,   3,  10,  32,  98 },
{  5,   6,  17,   3,  12,  42,  84 },
{  6,   7,  21,   2,  13,  49,  71 },
{  6,   8,  25,   2,  15,  54,  62 },
{  7,   8,  30,   2,  14,  57,  55 },
{  7,   7,  35,   3,  14,  59,  49 },
{  7,   8,  39,   3,  14,  59,  45 },
{  7,   9,  40,   4,  15,  58,  42 },
{  6,   6,  13,   4,   4,  34,  99 },
{  6,   6,  17,   4,   6,  48,  82 },
{  6,   7,  21,   3,   9,  52,  72 },
{  6,   7,  25,   2,  11,  53,  64 },
{  7,   7,  30,   2,  11,  53,  59 },
{  7,   7,  35,   3,  12,  53,  55 },
{  7,   7,  38,   4,  11,  53,  52 },
{  6,   8,  39,   4,  11,  51,  49 }
},
```

*FIG. 43*

```
{
{ 5,  3,  1,  33,  4,  1,  0 },
{ 38,  11,  14,  30,  16,  11,  11 },
{ 83,  32,  38,  46,  38,  33,  32 },
{ 78,  62,  44,  49,  45,  40,  40 },
{ 44,  84,  43,  43,  41,  36,  36 },
{ 32,  72,  62,  39,  39,  34,  34 },
{ 33,  39,  93,  37,  38,  34,  33 },
{ 35,  17,  118,  39,  40,  36,  35 },
{ 33,  25,  25,  53,  50,  22,  23 },
{ 63,  37,  40,  59,  59,  35,  35 },
{ 95,  54,  59,  69,  73,  52,  51 },
{ 84,  81,  63,  68,  75,  56,  55 },
{ 58,  93,  67,  61,  70,  53,  51 },
{ 48,  75,  88,  56,  65,  50,  48 },
{ 46,  43,  116,  52,  62,  49,  46 },
{ 46,  23,  136,  50,  61,  49,  46 },
{ 35,  28,  28,  28,  82,  26,  26 },
{ 66,  44,  48,  44,  93,  43,  42 },
{ 89,  64,  67,  59,  103,  58,  56 },
{ 78,  88,  74,  63,  102,  64,  61 },
{ 64,  93,  87,  64,  97,  65,  61 },
{ 60,  75,  111,  64,  93,  65,  60 },
{ 59,  49,  136,  63,  88,  66,  59 },
{ 58,  32,  153,  62,  83,  66,  58 },
{ 37,  30,  31,  20,  75,  51,  26 },
{ 63,  46,  52,  34,  93,  63,  42 },
{ 77,  67,  69,  48,  104,  73,  55 },
{ 68,  87,  80,  53,  108,  76,  60 },
{ 62,  86,  100,  57,  109,  77,  63 },
{ 64,  70,  126,  61,  109,  79,  66 },
{ 66,  51,  151,  64,  107,  80,  67 },
{ 67,  38,  166,  66,  103,  81,  68 },
{ 39,  32,  35,  28,  42,  87,  29 },
{ 60,  48,  54,  40,  61,  96,  42 },
{ 66,  68,  70,  49,  77,  100,  53 },
{ 59,  81,  86,  53,  87,  100,  59 },
{ 59,  77,  110,  56,  96,  99,  64 },
{ 63,  63,  136,  60,  103,  98,  69 },
{ 68,  48,  160,  63,  107,  98,  72 },
{ 70,  40,  174,  65,  109,  96,  75 },
{ 39,  34,  36,  31,  26,  86,  47 },
{ 55,  49,  55,  42,  41,  101,  56 },
{ 55,  66,  72,  49,  54,  108,  62 },
{ 51,  73,  92,  53,  63,  112,  65 },
{ 54,  66,  117,  58,  73,  114,  69 },
{ 60,  55,  143,  62,  82,  116,  73 },
{ 66,  44,  166,  65,  91,  117,  77 },
{ 70,  38,  180,  67,  96,  115,  80 },
{ 38,  35,  36,  30,  32,  47,  83 },
{ 48,  48,  55,  41,  42,  65,  88 },
{ 46,  61,  74,  48,  50,  79,  90 },
{ 45,  62,  98,  53,  56,  90,  89 },
{ 50,  56,  123,  59,  63,  101,  90 },
{ 58,  47,  149,  64,  71,  111,  91 },
{ 65,  40,  170,  69,  78,  118,  92 },
{ 70,  37,  183,  71,  83,  120,  93 },
{ 37,  36,  41,  33,  38,  19,  111 },
{ 42,  46,  60,  41,  47,  32,  116 },
{ 40,  53,  81,  47,  53,  44,  117 },
{ 42,  52,  104,  54,  59,  57,  118 },
{ 48,  48,  127,  60,  65,  70,  118 },
{ 56,  42,  150,  65,  70,  83,  117 },
{ 63,  37,  170,  71,  76,  94,  116 },
{ 67,  35,  181,  73,  80,  100,  114 }
},
```

## FIG. 44

```
{
    { 30,   0,   2,  87,   7,   1,   7 },
    {111,  22,  26,  55,  56,  16,  31 },
    {111,  76,  33,  36,  75,  29,  40 },
    { 34, 123,  27,  16,  54,  29,  26 },
    {  9,  96,  67,  13,  35,  37,  21 },
    { 22,  32, 125,  17,  26,  43,  27 },
    { 28,   5, 141,  18,  19,  41,  40 },
    { 26,   6, 123,  17,  12,  32,  59 },
    { 82,  59,  52, 112, 133,  32,  60 },
    { 59,  75,  41,  51, 127,  29,  44 },
    { 21,  82,  42,  18,  87,  45,  27 },
    { 13,  58,  71,  14,  49,  64,  26 },
    { 20,  25,  99,  18,  27,  68,  39 },
    { 27,   7, 109,  19,  15,  62,  58 },
    { 29,   3, 101,  18,   9,  47,  81 },
    { 26,   8,  83,  16,   7,  30, 100 },
    { 19,  42,  27,  12, 146,  27,  27 },
    {  5,  47,  38,  11,  92,  70,  19 },
    { 11,  33,  60,  19,  45,  97,  29 },
    { 22,  16,  76,  24,  22,  94,  53 },
    { 29,  10,  78,  26,  14,  76,  81 },
    { 30,  11,  71,  25,  11,  54, 106 },
    { 28,  15,  61,  22,  11,  35, 124 },
    { 26,  18,  53,  20,  12,  22, 133 },
    { 11,  27,  29,  12,  61, 118,  10 },
    { 16,  23,  46,  25,  26, 129,  31 },
    { 24,  15,  57,  30,  16, 104,  68 },
    { 27,  12,  58,  29,  15,  71, 102 },
    { 28,  14,  53,  27,  16,  45, 127 },
    { 28,  17,  47,  25,  17,  29, 142 },
    { 27,  21,  42,  24,  18,  19, 150 },
    { 25,  22,  39,  22,  18,  15, 151 },
    { 24,  21,  36,  28,  16, 138,  44 },
    { 26,  17,  44,  30,  15,  96,  86 },
    { 27,  15,  46,  29,  19,  56, 122 },
    { 26,  17,  43,  27,  21,  32, 143 },
    { 25,  19,  39,  26,  22,  19, 154 },
    { 25,  20,  35,  24,  23,  13, 159 },
    { 26,  22,  33,  24,  23,  10, 162 },
    { 25,  23,  32,  23,  23,  11, 159 },
    { 26,  21,  33,  27,  19,  71, 111 },
    { 25,  17,  36,  26,  23,  35, 141 },
    { 25,  17,  37,  26,  25,  18, 156 },
    { 25,  20,  34,  26,  26,  11, 162 },
    { 23,  22,  31,  25,  25,   8, 164 },
    { 23,  23,  29,  24,  26,   7, 166 },
    { 25,  23,  28,  24,  27,   7, 166 },
    { 25,  24,  27,  23,  27,   9, 162 },
    { 24,  21,  30,  25,  26,  20, 156 },
    { 24,  19,  32,  25,  27,   8, 165 },
    { 24,  20,  31,  25,  27,   5, 168 },
    { 23,  22,  29,  25,  27,   6, 168 },
    { 22,  24,  27,  24,  26,   7, 167 },
    { 23,  24,  26,  24,  27,   7, 166 },
    { 23,  24,  25,  24,  27,   9, 165 },
    { 23,  24,  25,  23,  27,  11, 160 },
    { 24,  22,  27,  25,  28,   6, 166 },
    { 23,  21,  27,  24,  28,   5, 167 },
    { 24,  23,  27,  25,  27,   7, 167 },
    { 23,  24,  26,  25,  27,   8, 165 },
    { 22,  24,  25,  24,  27,  10, 163 },
    { 22,  24,  25,  24,  27,  11, 161 },
    { 23,  23,  24,  24,  27,  13, 159 },
    { 23,  23,  24,  24,  26,  14, 156 }
}
};
```

# FIG. 45

```
(const uint8_t mipOffsetMatrix16x16[6]) =
{ 21,  41,  71,   7,  21,  25 };
```

## FIG. 46

```
(const uint8_t mipShiftMatrix4x4[18]) =
{ 6,  6,  6,  6,  6,  6,  6,  6,  6,  6,  6,  6,  6,  6,  6,  6,  6,  6 };
(const uint8_t mipShiftMatrix8x8[10]) =
{ 6,  6,  6,  6,  6,  6,  6,  6,  6,  6};
(const uint8_t mipShiftMatrix16x16[6]) =
{ 6,  6,  6,  6,  6,  6};
```

EP 3 989 578 B1

# FIG. 47

```
(const uint8_t mipMatrix4x4[18][16][4]) =
{
  {
   { 50,  66,  86,  35 },
   { 45, 144, 136,  76 },
   { 44, 114, 144,  68 },
   { 46,  56, 126,  49 },
   { 38, 109, 164, 107 },
   { 37,  53, 125,  89 },
   { 43,   3,  84,  76 },
   { 49,   0,  64,  83 },
   { 46,  12,  33,  96 },
   { 53,   3,  26,  95 },
   { 59,  18,  33, 103 },
   { 64,  23,  40, 104 },
   { 63,  32,  46, 105 },
   { 69,  38,  56, 109 },
   { 73,  38,  59, 109 },
   { 73,  38,  60, 108 }
  },
```

# FIG. 48

```
{
 { 50,  16,  71,   2 },
 { 49,  12,  48,   0 },
 { 44, 102,  68,  47 },
 { 29, 130,  60,  68 },
 { 52,  64, 107,  98 },
 { 50,  59,  88, 105 },
 { 47,  61,  70, 112 },
 { 41,  64,  57, 114 },
 { 52,  53,  50, 119 },
 { 52,  54,  51, 119 },
 { 52,  54,  55, 119 },
 { 53,  54,  59, 118 },
 { 52,  54,  57, 115 },
 { 52,  54,  58, 115 },
 { 52,  56,  58, 117 },
 { 51,  57,  58, 116 }
},
```

# FIG. 49

```
{
  { 73,  65, 120,  68 },
  { 73,  21,  52,  30 },
  { 72,  11,   0,   5 },
  { 73, 114,  55,  57 },
  { 73,  74, 140,  71 },
  { 73,  76, 140,  77 },
  { 73,  39,  85,  47 },
  { 72,  15,  17,  13 },
  { 74,  72, 121,  87 },
  { 73,  72, 137,  69 },
  { 73,  78, 145,  76 },
  { 73,  56, 112,  61 },
  { 72,  73,  69, 142 },
  { 73,  71, 101, 107 },
  { 72,  70, 129,  76 },
  { 73,  74, 137,  73 }
},
```

# FIG. 50

```
{
 { 53,  11,  32,  12 },
 { 52,   5,   1,   0 },
 { 53, 118,  62,  54 },
 { 51, 150,  80,  69 },
 { 53,  34,  84,  35 },
 { 53,  51,  55,  28 },
 { 50, 154,  96,  79 },
 { 42, 154,  89,  92 },
 { 53,  48,  75,  90 },
 { 37, 125, 100, 140 },
 { 16, 180, 111, 176 },
 { 10, 161,  89, 173 },
 { 37,  65,  30, 156 },
 { 11, 149,  85, 188 },
 {  1, 168,  99, 190 },
 {  5, 162,  96, 183 }
},
```

# FIG. 51

```
{
  { 64,   0,  24,   2 },
  { 64,  15,   3,   6 },
  { 65, 128,  67,  66 },
  { 64, 131,  66,  67 },
  { 62,  53, 118,  58 },
  { 59,  19,  39,  15 },
  { 59,  95,  47,  41 },
  { 63, 128,  68,  61 },
  { 61,  68,  82, 125 },
  { 58,  63,  81, 113 },
  { 54,  40,  25,  71 },
  { 56,  47,   1,  47 },
  { 69,  68,  59, 132 },
  { 71,  72,  65, 137 },
  { 70,  65,  63, 137 },
  { 66,  42,  19, 111 }
},
```

## FIG. 52

```
{
  { 53,  51, 109,  53 },
  { 53,  42,  94,  45 },
  { 53,  53,  85,  44 },
  { 52,  96,  87,  57 },
  { 53,  60, 121,  56 },
  { 53,  67, 124,  62 },
  { 52,  65, 125,  63 },
  { 52,  68, 125,  65 },
  { 54,  57, 102,  69 },
  { 52,  58, 116,  56 },
  { 54,  63, 120,  56 },
  { 52,  78, 124,  64 },
  { 50,  56,  31, 143 },
  { 50,  58,  47, 132 },
  { 35,  72,  87, 107 },
  {  0, 106, 146,  78 }
},
```

# FIG. 53

```
{
 { 111,  97, 151,  90 },
 { 108,  81, 127,  77 },
 { 110, 124, 122,  92 },
 {  90, 227, 152, 138 },
 { 111, 115, 163, 128 },
 { 110, 111, 164, 125 },
 { 107, 143, 166, 131 },
 {  43, 189, 146, 115 },
 { 109, 109, 117, 162 },
 { 116, 113, 117, 168 },
 {  76, 113, 120, 151 },
 {   1, 145, 133,  88 },
 { 108, 108, 105, 172 },
 { 107, 103, 100, 172 },
 {  34,  73,  84, 132 },
 {   0, 137, 124,  92 }
},
```

# FIG. 54

```
{
 { 63,  57, 118,  56 },
 { 63,  28,  76,  36 },
 { 63,   0,  22,   9 },
 { 63,  46,  20,  21 },
 { 63,  64, 130,  61 },
 { 62,  69, 142,  61 },
 { 61,  63, 137,  59 },
 { 62,  36,  98,  41 },
 { 63,  61,  76, 110 },
 { 62,  58,  91,  91 },
 { 61,  60, 112,  74 },
 { 59,  64, 129,  66 },
 { 60,  60,  57, 131 },
 { 59,  59,  56, 131 },
 { 58,  56,  57, 125 },
 { 52,  52,  69, 109 }
},
```

# FIG. 55

```
{
 { 92,  82, 136,  89 },
 { 92,  35,  35,  59 },
 { 90, 104,  42,  71 },
 { 89, 168,  96, 106 },
 { 93,  97, 118, 136 },
 { 91,  83, 100, 135 },
 { 92,  78,  42,  94 },
 { 78, 146,  67,  94 },
 { 92,  90, 102, 140 },
 { 92,  94, 110, 143 },
 { 92,  92,  97, 143 },
 { 31, 113,  73, 105 },
 { 90,  91, 106, 142 },
 { 93,  94, 105, 142 },
 { 76,  88, 108, 143 },
 {  0,  90, 120, 123 }
},
```

# FIG. 56

```
{
  {  5,  41,  88,   2 },
  {  4,  60,  53,  49 },
  {  2,  29,  21,  64 },
  {  2,  11,  10,  66 },
  {  2,  17,  22,  72 },
  {  2,   0,   3,  72 },
  {  2,   1,   8,  68 },
  {  2,   7,  11,  67 },
  {  3,   4,   3,  67 },
  {  3,   8,  11,  66 },
  {  3,  10,  11,  67 },
  {  2,  10,  11,  67 },
  {  3,   8,  11,  67 },
  {  2,   8,  10,  68 },
  {  2,   8,  10,  68 },
  {  1,   8,  11,  67 }
},
```

# FIG. 57

```
{
  { 86,  39,  72,  37 },
  { 83,   0,  15,   8 },
  { 83,  85,  49,  49 },
  { 83, 165,  96,  92 },
  { 83,  92, 157,  94 },
  { 82,  55, 108,  62 },
  { 75,  19,  38,  24 },
  { 69, 115,  65,  64 },
  { 84,  86,  90, 148 },
  { 81,  90,  98, 151 },
  { 72,  64,  75, 132 },
  { 52,  50,  32, 104 },
  { 82,  82,  81, 149 },
  { 81,  83,  82, 149 },
  { 79,  88,  88, 152 },
  { 71,  77,  84, 144 }
},
```

# FIG. 58

```
{
 { 77,  42,  86,  29 },
 { 72,  10,  37,   6 },
 { 72,   0,  19,   0 },
 { 77,  36,  33,  19 },
 { 77,  95, 149, 112 },
 { 69,  84, 126, 103 },
 { 57,  50,  74,  79 },
 { 53,  16,  20,  56 },
 { 78,  85,  84, 149 },
 { 77,  91,  87, 153 },
 { 75,  99,  94, 157 },
 { 71,  96,  88, 152 },
 { 79,  84,  83, 144 },
 { 79,  86,  84, 144 },
 { 80,  89,  85, 146 },
 { 80,  93,  89, 148 }
},
```

# FIG. 59

```
{
  { 31,  11,  73,   0 },
  { 31,  60,  75,  34 },
  { 29,  93,  50,  73 },
  { 33,  60,  13,  77 },
  { 33,  48,  82,  80 },
  { 33,  44,  46,  99 },
  { 35,  32,  31,  99 },
  { 37,  32,  32,  97 },
  { 34,  31,  25,  98 },
  { 36,  31,  27,  96 },
  { 37,  35,  31,  96 },
  { 39,  36,  31,  96 },
  { 36,  33,  33,  95 },
  { 38,  35,  32,  96 },
  { 39,  35,  31,  97 },
  { 40,  34,  30,  96 }
},
```

# FIG. 60

```
{
  { 10, 12,  88,   4 },
  { 10,  9,  89,   4 },
  { 10,  4,  86,   0 },
  { 10,  6,  84,   1 },
  { 10,  9,  60,  18 },
  { 10,  9,  59,  19 },
  { 10,  9,  59,  20 },
  { 10,  7,  57,  20 },
  { 10,  9,  10,  73 },
  { 10,  9,   9,  73 },
  { 11,  9,   9,  73 },
  { 11, 10,   9,  73 },
  { 11, 10,  10,  74 },
  { 11,  9,  10,  73 },
  { 11,  9,  10,  73 },
  { 11,  9,  11,  72 }
},
```

# FIG. 61

```
{
 { 89,  51,  98,  52 },
 { 94,  94,  78,  58 },
 { 94, 176,  98, 120 },
 { 71, 170,  90, 155 },
 { 97, 106, 149, 106 },
 { 88, 151, 119, 153 },
 { 51, 143,  94, 173 },
 { 18,  95,  86, 150 },
 { 87, 108,  90, 169 },
 { 33,  95,  92, 162 },
 {  0,  71, 101, 137 },
 {  3,  70, 103, 134 },
 { 35,  73,  83, 149 },
 {  1,  57,  96, 125 },
 {  4,  59,  97, 127 },
 {  6,  65,  99, 131 }
},
```

# FIG. 62

```
{
  { 67,  77,  86,  59 },
  { 66,  97,  90,  64 },
  { 68,  99,  91,  65 },
  { 67, 105,  91,  68 },
  { 66,  93,  98,  61 },
  { 68,  99,  94,  69 },
  { 67,  99,  95,  67 },
  { 66, 105,  97,  69 },
  { 67,  83,  98,  62 },
  { 63,  96,  99,  54 },
  { 66, 103,  98,  68 },
  { 66, 106,  98,  70 },
  { 29, 100,  83, 152 },
  {  0, 127, 131,  78 },
  { 46, 113, 116,  63 },
  { 66, 104, 100,  69 }
},
```

# FIG. 63

```
{
 { 42,  33,  96,  38 },
 { 42,  39,  98,  41 },
 { 41,  64, 108,  51 },
 { 41,  75, 106,  53 },
 { 41,  46, 107,  45 },
 { 41,  46, 107,  45 },
 { 41,  43, 106,  44 },
 { 42,  43, 106,  44 },
 { 47,  45,  91,  56 },
 { 46,  45,  95,  52 },
 { 44,  45,  97,  50 },
 { 41,  43,  96,  49 },
 { 22,  29,   0, 138 },
 { 11,  22,   2, 128 },
 {  3,  18,   6, 120 },
 {  2,  16,  10, 114 }
},
```

# FIG. 64

```
{
  { 92,  40,  66,  49 },
  { 88,  62,   0,  72 },
  { 81, 164,  98,  99 },
  { 90, 121, 121,  77 },
  { 86,  53,  37, 106 },
  { 54,  98,  33,  83 },
  { 70, 140, 141,  75 },
  { 90,  93, 127,  76 },
  { 71,  87,  53, 120 },
  { 28, 101,  96,  39 },
  { 74, 100, 138,  69 },
  { 93,  89, 125,  84 },
  { 63, 115, 110,  83 },
  { 45,  82, 105,  25 },
  { 78,  78, 121,  69 },
  { 91,  89, 124,  84 }
}
};
```

## FIG. 65

```
(const uint8_t mipOffsetMatrix4x4[18]) =
{ 47,  53,  73,  53,  65,  53, 110,  63,  92,   4,  85,  80,  32,  10,  91,  67,  41,  94 };
```

EP 3 989 578 B1

# FIG. 66

```
(const uint8_t mipMatrix8x8[10][16][8]) =
{
  {
    { 18,  43,  41,  42,  94,  64,  30,  41 },
    { 17,  21,  38,  40,  70,  72,  18,  34 },
    { 17,  34,  25,  52,  51,  87,  18,  35 },
    { 14,  37,  36,  45,  33,  93,  21,  33 },
    { 17,  13,  15,  18,   2,  69,  45,   6 },
    { 14,  19,  16,  21,   6,  59,  63,   5 },
    { 11,  20,  22,  23,  14,  47,  78,   6 },
    {  8,  20,  27,  24,  21,  37,  83,  12 },
    { 16,  22,  19,  20,  22,   7,  72,  43 },
    { 12,  22,  21,  20,  23,   8,  58,  56 },
    {  7,  17,  22,  18,  21,   9,  42,  66 },
    {  6,  16,  21,  19,  19,  13,  32,  73 },
    { 13,  17,  20,  17,  17,  22,   2,  94 },
    {  9,  14,  21,  15,  16,  21,   0,  92 },
    {  7,  16,  20,  17,  16,  21,   4,  90 },
    {  7,  22,  20,  21,  19,  22,  11,  89 }
  },
```

# FIG. 67

```
{
{ 19,  33,  16,  18,  56,  32,  16,  18 },
{ 18,  94,  44,  37,  49,  48,  38,  38 },
{ 18,   7,  95,  24,  21,  26,  23,  22 },
{ 15,  25,   0,  99,  18,  21,  20,  19 },
{ 18,  24,  16,  16,   4,  74,  26,  14 },
{ 18,  88,  41,  39,  29,  77,  46,  39 },
{ 17,  12,  98,  23,  19,  32,  29,  25 },
{ 12,  25,   2,  97,  19,  18,  22,  19 },
{ 18,  25,  17,  17,  12,  11,  78,  23 },
{ 18,  77,  37,  36,  27,  39,  81,  41 },
{ 16,  14, 101,  23,  20,  30,  40,  30 },
{  9,  24,   4,  95,  18,  22,  20,  20 },
{ 18,  27,  18,  18,  11,  20,   6,  88 },
{ 18,  64,  31,  31,  23,  31,  26,  88 },
{ 15,  15,  97,  24,  22,  27,  28,  51 },
{  5,  24,   9,  92,  19,  21,  22,  24 }
},
```

# FIG. 68

```
{
 { 11,  34,  25,  26,  96,  28,  25,  26 },
 { 11,  41,  30,  26,  95,  20,  29,  26 },
 { 11,  27,  43,  23,  81,  13,  25,  22 },
 { 11,  16,  12,  47,  57,   6,  17,  13 },
 { 11,  10,  11,  11,   0,  81,  12,   9 },
 { 11,  16,  15,  16,  15,  87,   8,  16 },
 { 11,  26,  21,  24,  35,  87,  11,  23 },
 { 11,  29,  29,  30,  53,  78,  17,  28 },
 { 11,  15,  14,  14,  16,   6,  84,  14 },
 { 11,  16,  15,  15,  13,  17,  83,   8 },
 { 11,  15,  15,  15,   8,  32,  73,   5 },
 { 11,  16,  16,  18,   7,  48,  59,   7 },
 { 11,  12,  11,  11,  10,  12,   1,  84 },
 { 11,  15,  15,  14,  15,  11,  15,  78 },
 { 11,  17,  17,  17,  18,   7,  33,  68 },
 { 11,  20,  18,  22,  22,   7,  51,  56 }
},
```

# FIG. 69

```
{
  { 44, 62, 33, 30, 30, 47, 32, 35 },
  { 43, 73, 60, 42, 34, 42, 46, 46 },
  { 42, 45, 91, 60, 43, 41, 49, 52 },
  { 37, 44, 35, 120, 43, 44, 45, 52 },
  { 44, 77, 48, 44, 41, 49, 70, 52 },
  { 43, 66, 71, 46, 39, 36, 58, 61 },
  { 40, 40, 84, 66, 38, 41, 47, 64 },
  { 25, 51, 33, 123, 45, 52, 44, 63 },
  { 44, 72, 52, 46, 41, 47, 61, 80 },
  { 43, 58, 81, 49, 40, 46, 47, 83 },
  { 35, 39, 75, 75, 36, 47, 41, 75 },
  {  8, 64, 36, 124, 57, 53, 55, 69 },
  { 42, 61, 55, 46, 40, 48, 46, 98 },
  { 41, 49, 84, 54, 41, 53, 44, 92 },
  { 27, 47, 66, 87, 44, 51, 45, 82 },
  {  0, 75, 42, 125, 72, 51, 66, 77 }
},
```

# FIG. 70

```
{
 { 19,  39,  21,  22,  67,  41,  15,  25 },
 { 19,  96,  57,  42,  61,  66,  40,  46 },
 { 18,  14,  79,  29,  20,  37,  27,  20 },
 { 18,  18,   0,  85,  10,  18,  33,  15 },
 { 19,  23,  23,  21,  12,  60,  60,  14 },
 { 19,  26,  27,  23,  20,  37,  80,  19 },
 { 19,  25,  26,  24,  19,  18,  77,  33 },
 { 19,  18,  16,  27,  12,   9,  55,  48 },
 { 20,  19,  20,  19,  20,  12,  56,  54 },
 { 20,  19,  18,  20,  19,  18,  30,  75 },
 { 21,  21,  18,  21,  19,  23,  16,  87 },
 { 22,  21,  20,  21,  18,  24,  16,  87 },
 { 21,  19,  18,  20,  19,  19,   9,  91 },
 { 22,  22,  19,  21,  20,  19,  14,  90 },
 { 23,  20,  19,  21,  20,  17,  17,  87 },
 { 23,  21,  19,  24,  20,  17,  21,  84 }
},
```

# FIG. 71

```
{
  { 54,  42,  48,  47, 112,  42,  48,  47 },
  { 54,   0,   8,  12,  48,   1,  12,   9 },
  { 53,  51,   9,  21,  29,  17,  21,  19 },
  { 53,  72,  67,  37,  41,  42,  41,  40 },
  { 53,  54,  53,  55,  60, 118,  49,  54 },
  { 53,  63,  61,  63, 103, 100,  52,  63 },
  { 53,  43,  49,  51, 110,  55,  47,  49 },
  { 53,  33,  25,  34,  77,  25,  33,  30 },
  { 53,  55,  54,  55,  53,  60, 120,  49 },
  { 53,  51,  50,  52,  42,  92,  92,  43 },
  { 53,  53,  52,  55,  52, 116,  62,  50 },
  { 53,  56,  55,  58,  79, 106,  53,  56 },
  { 53,  53,  53,  54,  54,  52,  59, 114 },
  { 52,  55,  54,  56,  58,  44,  99,  84 },
  { 52,  55,  53,  56,  56,  50, 121,  58 },
  { 52,  54,  52,  55,  50,  75, 103,  50 }
},
```

# FIG. 72

```
{
 { 29, 45, 47, 47, 126, 53, 42, 48 },
 { 29, 27, 37, 38, 115, 43, 33, 38 },
 { 29, 40, 31, 40, 117, 45, 35, 41 },
 { 29, 40, 44, 34, 117, 46, 37, 42 },
 { 29, 24, 23, 23,  0, 98, 36, 17 },
 { 29, 28, 27, 26,  4, 100, 38, 20 },
 { 29, 24, 27, 25,  3, 99, 38, 19 },
 { 28, 24, 24, 26,  5, 96, 38, 19 },
 { 29, 31, 32, 31, 40,  9, 103, 42 },
 { 29, 32, 32, 31, 40, 11, 102, 42 },
 { 29, 31, 32, 32, 40, 10, 101, 43 },
 { 29, 31, 32, 32, 39, 12, 99, 44 },
 { 29, 28, 28, 28, 24, 36,  7, 108 },
 { 29, 29, 29, 29, 25, 36,  8, 108 },
 { 29, 28, 29, 29, 25, 36,  8, 108 },
 { 29, 28, 29, 30, 25, 36,  9, 107 }
},
```

## FIG. 73

```
{
 { 58,  26,  32,  30,  78,  24,  32,  30 },
 { 58,  15,   0,   4,   8,   3,   4,   4 },
 { 58, 114,  69,  54,  58,  57,  58,  58 },
 { 58,  54, 116,  65,  58,  56,  58,  57 },
 { 58,  61,  61,  61,  92, 104,  54,  62 },
 { 58,  37,  41,  41,  94,  40,  40,  41 },
 { 58,  14,   4,   8,  22,   5,   8,   7 },
 { 58,  87,  47,  41,  43,  42,  42,  42 },
 { 58,  57,  58,  57,  51,  90, 103,  50 },
 { 58,  60,  60,  59,  72, 117,  58,  58 },
 { 58,  47,  50,  49,  97,  64,  46,  49 },
 { 58,  21,  20,  20,  48,  17,  20,  19 },
 { 58,  59,  59,  58,  61,  50,  90,  99 },
 { 57,  58,  58,  57,  56,  72, 112,  56 },
 { 58,  60,  60,  59,  64, 113,  69,  58 },
 { 58,  51,  54,  52,  86,  78,  52,  53 }
 },
```

# FIG. 74

```
{
 { 26,  62,  55,  38,  42,  86,  28,  41 },
 { 25,   0,  56,  39,  15,  39,  40,  18 },
 { 25,  29,   4,  72,  22,  23,  46,  43 },
 { 24,  28,  21,  39,  21,  17,  28,  75 },
 { 25,  13,  30,  32,  20,  26,  80,  22 },
 { 25,  30,  14,  43,  27,  19,  50,  68 },
 { 24,  26,  23,  30,  23,  23,  18,  95 },
 { 24,  26,  25,  28,  23,  25,  15,  96 },
 { 25,  26,  20,  32,  26,  25,  27,  88 },
 { 24,  26,  24,  28,  25,  28,  13, 101 },
 { 24,  26,  26,  26,  25,  27,  17,  98 },
 { 24,  27,  26,  27,  25,  26,  20,  95 },
 { 25,  26,  24,  26,  25,  26,  19,  95 },
 { 24,  25,  25,  26,  24,  26,  20,  94 },
 { 24,  26,  25,  27,  25,  27,  20,  94 },
 { 23,  26,  26,  27,  24,  28,  20,  93 }
},
```

# FIG. 75

```
{
  {  6,  18,  19,  17,  36,  44,  29,  21 },
  {  7,   1,   5,   9,  11,  37,  25,  13 },
  {  7,   8,   0,   8,   6,  38,  27,  14 },
  {  7,   5,  10,   0,   5,  37,  27,  13 },
  {  7,   2,   3,   5,   3,  31,  33,  11 },
  {  8,   5,   2,   6,   5,  28,  36,  13 },
  {  8,   5,   3,   5,   5,  28,  35,  13 },
  {  9,   6,   3,   6,   6,  29,  34,  14 },
  {  7,   3,   4,   5,   4,  20,  37,  19 },
  {  8,   5,   3,   5,   4,  21,  38,  19 },
  {  9,   5,   3,   5,   5,  20,  38,  18 },
  { 10,   6,   3,   6,   5,  20,  38,  17 },
  {  7,   3,   4,   4,   5,  11,  34,  30 },
  {  9,   5,   3,   5,   5,  13,  41,  22 },
  { 10,   5,   3,   6,   6,  14,  39,  22 },
  { 10,   6,   3,   6,   7,  15,  36,  23 }
}
};
```

## FIG. 76

```
(const uint8_t mipOffsetMatrix8x8[10]) =
{  18,  18,  11,  43,  20,  54,  29,  58,  26,  5};
```

EP 3 989 578 B1

**FIG. 77**

```
(const uint8_t mipMatrix16x16[6][64][7]) =
{
  {
    { 23, 24, 21, 98, 14, 23, 21 },
    { 18, 24, 22, 99, 15, 22, 21 },
    {  4, 18, 16, 89, 12, 15, 15 },
    {  1, 13, 14, 83, 13, 11, 12 },
    { 13,  8, 18, 81, 21, 13, 15 },
    { 20,  8, 19, 77, 29, 13, 18 },
    { 19, 18, 14, 70, 36, 13, 18 },
    { 17, 22, 14, 63, 41, 13, 19 },
    { 12, 14, 14, 49, 52,  8, 15 },
    { 11, 12, 13, 42, 57,  6, 14 },
    { 11, 10, 12, 35, 62,  4, 13 },
    { 10, 10, 11, 29, 66,  3, 13 },
    {  8, 10, 10, 24, 69,  1, 12 },
    {  6,  9,  9, 20, 70,  0, 11 },
    {  6,  7,  9, 17, 70,  1, 10 },
    {  7,  7,  9, 16, 68,  4, 10 },
    {  9,  9, 10,  7, 78,  5, 11 },
    {  9,  9,  9,  5, 79,  6, 11 },
    {  9,  9,  9,  4, 76,  9, 10 },
    {  8,  9,  9,  4, 73, 13,  9 },
    {  8,  9,  9,  4, 68, 19,  8 },
    {  8,  8,  9,  4, 62, 25,  7 },
    {  7,  8,  9,  4, 55, 32,  6 },
    {  7,  8,  9,  6, 48, 37,  7 },
    {  9, 10, 10,  4, 49, 42,  6 },
    {  9, 10, 10,  5, 42, 51,  4 },
    {  9,  9, 10,  6, 34, 58,  4 },
    {  9,  9,  9,  7, 28, 64,  4 },
    {  9,  9,  9,  8, 22, 68,  5 },
    {  9,  9,  9,  8, 18, 70,  6 },
    {  9,  9,  9,  8, 15, 70,  8 },
    {  9,  9,  9,  9, 14, 67, 12 },
    { 10, 10, 11, 11,  8, 79,  8 },
    { 10, 10, 10, 11,  6, 79, 10 },
    { 10, 10, 10, 11,  5, 74, 15 },
    { 10, 10, 10, 10,  6, 69, 20 },
    { 10, 10, 10, 10,  6, 64, 25 },
    { 10, 10, 10, 10,  7, 58, 30 },
    { 10, 10, 10,  9,  8, 52, 35 },
    {  9, 10,  9,  9,  8, 47, 39 },
    { 10, 10, 10, 11,  5, 48, 42 },
    { 10, 10, 10, 11,  6, 40, 49 },
    { 10, 10, 10, 11,  7, 34, 54 },
    { 10, 10, 10, 10,  8, 30, 57 },
    { 10, 10, 10, 10,  8, 26, 61 },
    { 10, 10, 10, 10,  9, 23, 63 },
    { 10, 10, 10, 10,  9, 21, 65 },
    { 10, 10,  9, 10,  9, 20, 65 },
    { 10, 11, 10, 10, 11, 11, 74 },
    { 10, 10, 10, 10, 11,  9, 76 },
    { 10, 10, 10, 10, 10,  8, 76 },
    { 10, 10, 10, 10, 10,  9, 76 },
    { 10, 10, 10, 10, 10,  9, 76 },
    {  9, 10,  9,  9, 10,  9, 75 },
    {  9, 10,  9,  9, 10, 10, 74 },
    {  9, 10,  9,  9, 10, 11, 73 },
    { 10, 10, 10, 10, 11,  5, 79 },
    { 10, 10, 10, 10, 11,  6, 78 },
    { 10, 10, 10, 10, 11,  6, 78 },
    { 10, 10, 10,  9, 11,  7, 77 },
    {  9, 10, 10,  9, 11,  8, 76 },
    {  9, 10,  9,  9, 11,  8, 75 },
    {  9, 10,  9,  9, 11,  9, 74 },
    {  9, 10, 10,  9, 11, 10, 73 }
  },
```

*FIG. 78*

```
{
{ 25, 21, 20, 87, 12, 22, 20 },
{ 39, 26, 26, 91, 18, 28, 26 },
{ 65, 38, 39, 102, 31, 40, 39 },
{ 70, 55, 43, 107, 37, 46, 45 },
{ 60, 71, 44, 107, 39, 48, 46 },
{ 55, 75, 51, 107, 40, 49, 48 },
{ 55, 68, 65, 106, 43, 50, 49 },
{ 56, 57, 80, 104, 44, 51, 50 },
{ 46, 41, 41, 102, 63, 35, 42 },
{ 49, 43, 43, 106, 63, 38, 44 },
{ 55, 46, 46, 109, 66, 41, 47 },
{ 58, 50, 48, 111, 68, 43, 49 },
{ 57, 54, 49, 112, 69, 44, 50 },
{ 57, 57, 51, 112, 70, 45, 51 },
{ 59, 58, 54, 113, 72, 46, 52 },
{ 60, 58, 58, 111, 73, 48, 53 },
{ 25, 24, 24, 28, 95, 15, 25 },
{ 26, 25, 25, 29, 95, 15, 26 },
{ 27, 26, 26, 30, 96, 16, 27 },
{ 28, 27, 27, 31, 97, 17, 27 },
{ 29, 28, 27, 32, 97, 17, 28 },
{ 29, 29, 28, 33, 97, 18, 28 },
{ 30, 30, 30, 35, 97, 19, 29 },
{ 32, 31, 32, 37, 96, 22, 30 },
{ 17, 18, 18, 6, 69, 45, 13 },
{ 18, 18, 18, 6, 70, 44, 13 },
{ 19, 19, 19, 8, 71, 45, 14 },
{ 20, 20, 20, 9, 71, 46, 15 },
{ 20, 20, 20, 9, 71, 46, 15 },
{ 21, 21, 21, 10, 71, 47, 15 },
{ 21, 21, 21, 11, 71, 47, 16 },
{ 22, 22, 23, 13, 71, 48, 17 },
{ 20, 20, 20, 19, 23, 88, 14 },
{ 21, 21, 21, 20, 23, 90, 14 },
{ 22, 21, 21, 20, 24, 90, 15 },
{ 23, 21, 22, 21, 24, 90, 15 },
{ 23, 22, 22, 21, 25, 90, 15 },
{ 23, 22, 22, 21, 25, 90, 16 },
{ 23, 22, 23, 21, 26, 90, 16 },
{ 23, 23, 23, 22, 27, 88, 17 },
{ 21, 21, 21, 23, 10, 76, 39 },
{ 22, 21, 22, 24, 11, 77, 39 },
{ 23, 21, 22, 24, 12, 78, 39 },
{ 24, 22, 22, 25, 12, 78, 39 },
{ 23, 23, 22, 25, 12, 78, 39 },
{ 23, 23, 22, 25, 12, 77, 40 },
{ 23, 22, 23, 25, 13, 77, 40 },
{ 23, 22, 23, 25, 14, 76, 41 },
{ 21, 21, 21, 21, 19, 27, 80 },
{ 22, 21, 21, 22, 20, 27, 81 },
{ 23, 21, 22, 23, 20, 27, 82 },
{ 23, 22, 22, 23, 21, 28, 82 },
{ 23, 22, 21, 23, 20, 27, 82 },
{ 22, 22, 22, 23, 20, 28, 81 },
{ 22, 22, 22, 23, 20, 28, 81 },
{ 23, 22, 23, 23, 21, 29, 80 },
{ 20, 20, 20, 19, 24, 0, 101 },
{ 21, 20, 21, 20, 24, 1, 101 },
{ 22, 21, 21, 20, 25, 2, 101 },
{ 22, 21, 21, 21, 25, 2, 101 },
{ 22, 21, 21, 20, 25, 2, 101 },
{ 21, 21, 21, 20, 25, 2, 101 },
{ 22, 21, 22, 21, 25, 2, 101 },
{ 22, 21, 22, 21, 25, 3, 100 }
},
```

*FIG. 79*

```
{
  { 16, 14, 14, 56, 13, 14, 14 },
  {  9,  1,  0, 22,  1,  1,  1 },
  { 33,  6,  7, 16,  9,  8,  7 },
  { 65, 28, 22, 28, 24, 24, 23 },
  { 67, 57, 30, 35, 33, 33, 32 },
  { 43, 82, 33, 34, 34, 33, 33 },
  { 31, 72, 55, 33, 34, 33, 32 },
  { 36, 35, 93, 35, 36, 34, 34 },
  { 40, 37, 37, 87, 51, 36, 37 },
  { 31, 27, 26, 71, 33, 27, 26 },
  { 25, 16, 15, 46, 20, 16, 15 },
  { 34, 15, 14, 32, 18, 15, 14 },
  { 53, 26, 20, 32, 24, 22, 20 },
  { 58, 47, 27, 34, 30, 29, 27 },
  { 47, 67, 32, 34, 32, 31, 30 },
  { 37, 62, 51, 34, 33, 32, 31 },
  { 40, 38, 37, 57, 85, 35, 38 },
  { 40, 37, 37, 69, 68, 35, 36 },
  { 35, 31, 30, 66, 50, 31, 30 },
  { 32, 25, 24, 55, 36, 25, 23 },
  { 38, 22, 21, 45, 29, 22, 20 },
  { 49, 27, 23, 40, 29, 24, 22 },
  { 53, 40, 27, 38, 31, 28, 26 },
  { 47, 54, 32, 37, 33, 29, 28 },
  { 35, 35, 35, 34, 86, 49, 33 },
  { 37, 37, 36, 46, 84, 42, 35 },
  { 38, 37, 36, 57, 74, 39, 35 },
  { 37, 33, 33, 60, 61, 35, 32 },
  { 36, 29, 28, 56, 49, 30, 27 },
  { 39, 26, 25, 50, 41, 26, 24 },
  { 46, 29, 26, 44, 38, 26, 25 },
  { 48, 38, 28, 41, 37, 27, 27 },
  { 35, 36, 35, 36, 55, 83, 31 },
  { 36, 36, 36, 38, 70, 67, 33 },
  { 38, 37, 37, 44, 78, 54, 35 },
  { 38, 36, 36, 50, 76, 46, 34 },
  { 37, 34, 33, 53, 69, 39, 32 },
  { 37, 31, 30, 52, 60, 33, 29 },
  { 40, 30, 29, 50, 53, 30, 28 },
  { 43, 33, 29, 46, 48, 29, 27 },
  { 36, 37, 36, 39, 34, 94, 43 },
  { 36, 37, 36, 38, 46, 90, 37 },
  { 38, 37, 37, 39, 61, 77, 35 },
  { 38, 37, 37, 42, 71, 64, 35 },
  { 37, 36, 36, 46, 74, 52, 34 },
  { 36, 35, 34, 48, 72, 44, 32 },
  { 37, 33, 32, 49, 67, 38, 31 },
  { 40, 34, 32, 49, 60, 36, 30 },
  { 36, 36, 36, 37, 35, 57, 80 },
  { 36, 37, 36, 38, 37, 74, 61 },
  { 38, 37, 37, 39, 45, 82, 48 },
  { 38, 38, 37, 41, 56, 78, 41 },
  { 38, 38, 37, 43, 65, 69, 37 },
  { 36, 37, 36, 44, 70, 59, 35 },
  { 36, 36, 35, 46, 71, 50, 33 },
  { 38, 35, 34, 47, 67, 45, 33 },
  { 36, 36, 36, 36, 42, 23, 108 },
  { 36, 36, 36, 36, 42, 35, 95 },
  { 37, 37, 36, 38, 43, 54, 77 },
  { 38, 38, 37, 40, 48, 68, 60 },
  { 37, 38, 37, 41, 54, 72, 49 },
  { 36, 38, 36, 42, 60, 68, 42 },
  { 36, 37, 36, 44, 64, 61, 39 },
  { 37, 37, 36, 45, 65, 55, 38 }
},
```

FIG. 80

```
{
{ 34, 18, 19, 65, 20, 20, 16 },
{ 28, 26, 21, 45, 33, 21, 16 },
{ 4, 23, 16, 20, 31, 14, 7 },
{ 0, 16, 19, 10, 30, 12, 5 },
{ 8, 6, 26, 7, 30, 14, 7 },
{ 9, 6, 27, 4, 27, 14, 7 },
{ 5, 13, 23, 1, 24, 15, 6 },
{ 3, 16, 23, 1, 20, 15, 6 },
{ 6, 11, 11, 16, 49, 10, 7 },
{ 0, 9, 11, 8, 44, 13, 4 },
{ 1, 7, 14, 5, 39, 15, 5 },
{ 4, 5, 17, 5, 35, 17, 7 },
{ 4, 6, 18, 4, 32, 18, 7 },
{ 5, 7, 19, 3, 30, 19, 8 },
{ 5, 8, 20, 2, 27, 20, 8 },
{ 5, 9, 21, 2, 24, 21, 8 },
{ 3, 5, 7, 4, 48, 13, 5 },
{ 3, 5, 10, 4, 41, 18, 7 },
{ 4, 6, 13, 4, 35, 22, 8 },
{ 4, 6, 15, 5, 31, 23, 10 },
{ 4, 7, 17, 4, 29, 23, 10 },
{ 4, 7, 19, 4, 26, 24, 10 },
{ 4, 7, 20, 4, 24, 24, 11 },
{ 5, 7, 22, 4, 22, 23, 11 },
{ 3, 5, 7, 3, 34, 28, 7 },
{ 3, 5, 10, 3, 30, 29, 9 },
{ 3, 5, 12, 3, 27, 28, 11 },
{ 3, 5, 14, 3, 25, 27, 13 },
{ 4, 6, 16, 2, 24, 26, 13 },
{ 4, 6, 18, 2, 22, 26, 14 },
{ 4, 6, 20, 2, 21, 25, 14 },
{ 4, 6, 21, 3, 20, 24, 14 },
{ 2, 4, 7, 2, 16, 44, 10 },
{ 2, 5, 9, 3, 17, 38, 14 },
{ 3, 5, 11, 2, 17, 33, 17 },
{ 3, 5, 14, 2, 17, 31, 18 },
{ 3, 5, 16, 2, 17, 29, 18 },
{ 4, 5, 18, 1, 16, 28, 17 },
{ 4, 5, 20, 2, 16, 28, 17 },
{ 4, 5, 21, 2, 16, 27, 16 },
{ 3, 4, 7, 2, 8, 33, 29 },
{ 3, 4, 9, 2, 9, 31, 29 },
{ 3, 4, 11, 2, 10, 30, 27 },
{ 3, 4, 13, 2, 11, 30, 25 },
{ 4, 4, 15, 2, 11, 30, 23 },
{ 4, 4, 18, 1, 10, 30, 21 },
{ 4, 4, 19, 1, 11, 30, 19 },
{ 4, 5, 20, 2, 11, 29, 18 },
{ 3, 3, 7, 2, 5, 16, 49 },
{ 3, 3, 9, 2, 6, 21, 42 },
{ 3, 4, 11, 1, 7, 25, 36 },
{ 3, 4, 13, 1, 8, 27, 31 },
{ 4, 4, 15, 1, 7, 29, 28 },
{ 4, 4, 18, 2, 7, 30, 25 },
{ 4, 4, 20, 2, 7, 30, 23 },
{ 4, 5, 20, 2, 8, 29, 21 },
{ 3, 3, 7, 2, 2, 17, 50 },
{ 3, 3, 9, 2, 3, 24, 41 },
{ 3, 4, 11, 2, 5, 26, 36 },
{ 3, 4, 13, 1, 6, 27, 32 },
{ 4, 4, 15, 1, 6, 27, 30 },
{ 4, 4, 18, 2, 6, 27, 28 },
{ 4, 4, 19, 2, 6, 27, 26 },
{ 3, 4, 20, 2, 6, 26, 25 }
},
```

*FIG. 81*

```
{
    {  5,  3,   1,  33,   4,   1,   0 },
    { 38, 11,  14,  30,  16,  11,  11 },
    { 83, 32,  38,  46,  38,  33,  32 },
    { 78, 62,  44,  49,  45,  40,  40 },
    { 44, 84,  43,  43,  41,  36,  36 },
    { 32, 72,  62,  39,  39,  34,  34 },
    { 33, 39,  93,  37,  38,  34,  33 },
    { 35, 17, 118,  39,  40,  36,  35 },
    { 33, 25,  25,  53,  50,  22,  23 },
    { 63, 37,  40,  59,  59,  35,  35 },
    { 95, 54,  59,  69,  73,  52,  51 },
    { 84, 81,  63,  68,  75,  56,  55 },
    { 58, 93,  67,  61,  70,  53,  51 },
    { 48, 75,  88,  56,  65,  50,  48 },
    { 46, 43, 116,  52,  62,  49,  46 },
    { 46, 23, 136,  50,  61,  49,  46 },
    { 35, 28,  28,  28,  82,  26,  26 },
    { 66, 44,  48,  44,  93,  43,  42 },
    { 89, 64,  67,  59, 103,  58,  56 },
    { 78, 88,  74,  63, 102,  64,  61 },
    { 64, 93,  87,  64,  97,  65,  61 },
    { 60, 75, 111,  64,  93,  65,  60 },
    { 59, 49, 136,  63,  88,  66,  59 },
    { 58, 32, 153,  62,  83,  66,  58 },
    { 37, 30,  31,  20,  75,  51,  26 },
    { 63, 46,  52,  34,  93,  63,  42 },
    { 77, 67,  69,  48, 104,  73,  55 },
    { 68, 87,  80,  53, 108,  76,  60 },
    { 62, 86, 100,  57, 109,  77,  63 },
    { 64, 70, 126,  61, 109,  79,  66 },
    { 66, 51, 151,  64, 107,  80,  67 },
    { 67, 38, 166,  66, 103,  81,  68 },
    { 39, 32,  35,  28,  42,  87,  29 },
    { 60, 48,  54,  40,  61,  96,  42 },
    { 66, 68,  70,  49,  77, 100,  53 },
    { 59, 81,  86,  53,  87, 100,  59 },
    { 59, 77, 110,  56,  96,  99,  64 },
    { 63, 63, 136,  60, 103,  98,  69 },
    { 68, 48, 160,  63, 107,  98,  72 },
    { 70, 40, 174,  65, 109,  96,  75 },
    { 39, 34,  36,  31,  26,  86,  47 },
    { 55, 49,  55,  42,  41, 101,  56 },
    { 55, 66,  72,  49,  54, 108,  62 },
    { 51, 73,  92,  53,  63, 112,  65 },
    { 54, 66, 117,  58,  73, 114,  69 },
    { 60, 55, 143,  62,  82, 116,  73 },
    { 66, 44, 166,  65,  91, 117,  77 },
    { 70, 38, 180,  67,  96, 115,  80 },
    { 38, 35,  36,  30,  32,  47,  83 },
    { 48, 48,  55,  41,  42,  65,  88 },
    { 46, 61,  74,  48,  50,  79,  90 },
    { 45, 62,  98,  53,  56,  90,  89 },
    { 50, 56, 123,  59,  63, 101,  90 },
    { 58, 47, 149,  64,  71, 111,  91 },
    { 65, 40, 170,  69,  78, 118,  92 },
    { 70, 37, 183,  71,  83, 120,  93 },
    { 37, 36,  41,  33,  38,  19, 111 },
    { 42, 46,  60,  41,  47,  32, 116 },
    { 40, 53,  81,  47,  53,  44, 117 },
    { 42, 52, 104,  54,  59,  57, 118 },
    { 48, 48, 127,  60,  65,  70, 118 },
    { 56, 42, 150,  65,  70,  83, 117 },
    { 63, 37, 170,  71,  76,  94, 116 },
    { 67, 35, 181,  73,  80, 100, 114 }
},
```

FIG. 82

```
{
  { 15,  0,  1, 44,  4,  1,  4 },
  { 56, 11, 13, 28, 28,  8, 16 },
  { 56, 38, 17, 18, 38, 15, 20 },
  { 17, 62, 14,  8, 27, 15, 13 },
  {  5, 48, 34,  7, 18, 19, 11 },
  { 11, 16, 63,  9, 13, 22, 14 },
  { 14,  3, 71,  9, 10, 21, 20 },
  { 13,  3, 62,  9,  6, 16, 30 },
  { 41, 30, 26, 56, 67, 16, 30 },
  { 30, 38, 21, 26, 64, 15, 22 },
  { 11, 41, 21,  9, 44, 23, 14 },
  {  7, 29, 36,  7, 25, 32, 13 },
  { 10, 13, 50,  9, 14, 34, 20 },
  { 14,  4, 55, 10,  8, 31, 29 },
  { 15,  2, 51,  9,  5, 24, 41 },
  { 13,  4, 42,  8,  4, 15, 50 },
  { 10, 21, 14,  6, 73, 14, 14 },
  {  3, 24, 19,  6, 46, 35, 10 },
  {  6, 17, 30, 10, 23, 49, 15 },
  { 11,  8, 38, 12, 11, 47, 27 },
  { 15,  5, 39, 13,  7, 38, 41 },
  { 15,  6, 36, 13,  6, 27, 53 },
  { 14,  8, 31, 11,  6, 18, 62 },
  { 13,  9, 27, 10,  6, 11, 67 },
  {  6, 14, 15,  6, 31, 59,  5 },
  {  8, 12, 23, 13, 13, 65, 16 },
  { 12,  8, 29, 15,  8, 52, 34 },
  { 14,  6, 29, 15,  8, 36, 51 },
  { 14,  7, 27, 14,  8, 23, 64 },
  { 14,  9, 24, 13,  9, 15, 71 },
  { 14, 11, 21, 12,  9, 10, 75 },
  { 13, 11, 20, 11,  9,  8, 76 },
  { 12, 11, 18, 14,  8, 69, 22 },
  { 13,  9, 22, 15,  8, 48, 43 },
  { 14,  8, 23, 15, 10, 28, 61 },
  { 13,  9, 22, 14, 11, 16, 72 },
  { 13, 10, 20, 13, 11, 10, 77 },
  { 13, 10, 18, 12, 12,  7, 80 },
  { 13, 11, 17, 12, 12,  5, 81 },
  { 13, 12, 16, 12, 12,  6, 80 },
  { 13, 11, 17, 14, 10, 36, 56 },
  { 13,  9, 18, 13, 12, 18, 71 },
  { 13,  9, 19, 13, 13,  9, 78 },
  { 13, 10, 17, 13, 13,  6, 81 },
  { 12, 11, 16, 13, 13,  4, 82 },
  { 12, 12, 15, 12, 13,  4, 83 },
  { 13, 12, 14, 12, 14,  4, 83 },
  { 13, 12, 14, 12, 14,  5, 81 },
  { 12, 11, 15, 13, 13, 10, 78 },
  { 12, 10, 16, 13, 14,  4, 83 },
  { 12, 10, 16, 13, 14,  3, 84 },
  { 12, 11, 15, 13, 14,  3, 84 },
  { 11, 12, 14, 12, 13,  4, 84 },
  { 12, 12, 13, 12, 14,  4, 83 },
  { 12, 12, 13, 12, 14,  5, 83 },
  { 12, 12, 13, 12, 14,  6, 80 },
  { 12, 11, 14, 13, 14,  3, 83 },
  { 12, 11, 14, 12, 14,  3, 84 },
  { 12, 12, 14, 13, 14,  4, 84 },
  { 12, 12, 13, 13, 14,  4, 83 },
  { 11, 12, 13, 12, 14,  5, 82 },
  { 11, 12, 13, 12, 14,  6, 81 },
  { 12, 12, 12, 12, 14,  7, 80 },
  { 12, 12, 12, 12, 13,  7, 78 }
}
};
```

111

# FIG. 83

```
(const uint8_t mipOffsetMatrix16x16[6]) =
{ 11,   21,   36,    4,   21,   13};
```

## FIG. 84

```
(const uint8_t mipShiftMatrix4x4[18]) =
{ 6,   6,   6,   6,   6,   6,   6,   6,   6,   6,   6,   6,   6,   6,   6,   6,   6,   6 };
 (const uint8_t mipShiftMatrix8x8[10]) =
{ 7,   7,   7,   7,   7,   7,   7,   7,   7,   7 };
(const uint8_t mipShiftMatrix16x16[6]) =
{ 6,   6,   6,   6,   6,   6};
```

EP 3 989 578 B1

# FIG. 85

```
(const uint8_t mipMatrix4x4[18][16][4]) =
{
  {
   {  50,  66,  86,  35 },
   {  45, 144, 136,  76 },
   {  44, 114, 144,  68 },
   {  46,  56, 126,  49 },
   {  38, 109, 164, 107 },
   {  37,  53, 125,  89 },
   {  43,   3,  84,  76 },
   {  49,   0,  64,  83 },
   {  46,  12,  33,  96 },
   {  53,   3,  26,  95 },
   {  59,  18,  33, 103 },
   {  64,  23,  40, 104 },
   {  63,  32,  46, 105 },
   {  69,  38,  56, 109 },
   {  73,  38,  59, 109 },
   {  73,  38,  60, 108 }
  },
```

# FIG. 86

```
{
  { 50,  16,  71,   2 },
  { 49,  12,  48,   0 },
  { 44, 102,  68,  47 },
  { 29, 130,  60,  68 },
  { 52,  64, 107,  98 },
  { 50,  59,  88, 105 },
  { 47,  61,  70, 112 },
  { 41,  64,  57, 114 },
  { 52,  53,  50, 119 },
  { 52,  54,  51, 119 },
  { 52,  54,  55, 119 },
  { 53,  54,  59, 118 },
  { 52,  54,  57, 115 },
  { 52,  54,  58, 115 },
  { 52,  56,  58, 117 },
  { 51,  57,  58, 116 }
},
```

EP 3 989 578 B1

# FIG. 87

```
{
  { 73,  65, 120,  68 },
  { 73,  21,  52,  30 },
  { 72,  11,   0,   5 },
  { 73, 114,  55,  57 },
  { 73,  74, 140,  71 },
  { 73,  76, 140,  77 },
  { 73,  39,  85,  47 },
  { 72,  15,  17,  13 },
  { 74,  72, 121,  87 },
  { 73,  72, 137,  69 },
  { 73,  78, 145,  76 },
  { 73,  56, 112,  61 },
  { 72,  73,  69, 142 },
  { 73,  71, 101, 107 },
  { 72,  70, 129,  76 },
  { 73,  74, 137,  73 }
},
```

# FIG. 88

```
{
 { 53,  11,  32,  12 },
 { 52,   5,   1,   0 },
 { 53, 118,  62,  54 },
 { 51, 150,  80,  69 },
 { 53,  34,  84,  35 },
 { 53,  51,  55,  28 },
 { 50, 154,  96,  79 },
 { 42, 154,  89,  92 },
 { 53,  48,  75,  90 },
 { 37, 125, 100, 140 },
 { 16, 180, 111, 176 },
 { 10, 161,  89, 173 },
 { 37,  65,  30, 156 },
 { 11, 149,  85, 188 },
 {  1, 168,  99, 190 },
 {  5, 162,  96, 183 }
},
```

# FIG. 89

```
{
  { 64,   0,  24,   2 },
  { 64,  15,   3,   6 },
  { 65, 128,  67,  66 },
  { 64, 131,  66,  67 },
  { 62,  53, 118,  58 },
  { 59,  19,  39,  15 },
  { 59,  95,  47,  41 },
  { 63, 128,  68,  61 },
  { 61,  68,  82, 125 },
  { 58,  63,  81, 113 },
  { 54,  40,  25,  71 },
  { 56,  47,   1,  47 },
  { 69,  68,  59, 132 },
  { 71,  72,  65, 137 },
  { 70,  65,  63, 137 },
  { 66,  42,  19, 111 }
},
```

# FIG. 90

```
{
 { 53,  51, 109,  53 },
 { 53,  42,  94,  45 },
 { 53,  53,  85,  44 },
 { 52,  96,  87,  57 },
 { 53,  60, 121,  56 },
 { 53,  67, 124,  62 },
 { 52,  65, 125,  63 },
 { 52,  68, 125,  65 },
 { 54,  57, 102,  69 },
 { 52,  58, 116,  56 },
 { 54,  63, 120,  56 },
 { 52,  78, 124,  64 },
 { 50,  56,  31, 143 },
 { 50,  58,  47, 132 },
 { 35,  72,  87, 107 },
 {  0, 106, 146,  78 }
},
```

# FIG. 91

```
{
 { 111,  97, 151,  90 },
 { 108,  81, 127,  77 },
 { 110, 124, 122,  92 },
 {  90, 227, 152, 138 },
 { 111, 115, 163, 128 },
 { 110, 111, 164, 125 },
 { 107, 143, 166, 131 },
 {  43, 189, 146, 115 },
 { 109, 109, 117, 162 },
 { 116, 113, 117, 168 },
 {  76, 113, 120, 151 },
 {   1, 145, 133,  88 },
 { 108, 108, 105, 172 },
 { 107, 103, 100, 172 },
 {  34,  73,  84, 132 },
 {   0, 137, 124,  92 }
},
```

# FIG. 92

```
{
  { 63,  57, 118,  56 },
  { 63,  28,  76,  36 },
  { 63,   0,  22,   9 },
  { 63,  46,  20,  21 },
  { 63,  64, 130,  61 },
  { 62,  69, 142,  61 },
  { 61,  63, 137,  59 },
  { 62,  36,  98,  41 },
  { 63,  61,  76, 110 },
  { 62,  58,  91,  91 },
  { 61,  60, 112,  74 },
  { 59,  64, 129,  66 },
  { 60,  60,  57, 131 },
  { 59,  59,  56, 131 },
  { 58,  56,  57, 125 },
  { 52,  52,  69, 109 }
},
```

# FIG. 93

```
{
  { 92,  82, 136,  89 },
  { 92,  35,  35,  59 },
  { 90, 104,  42,  71 },
  { 89, 168,  96, 106 },
  { 93,  97, 118, 136 },
  { 91,  83, 100, 135 },
  { 92,  78,  42,  94 },
  { 78, 146,  67,  94 },
  { 92,  90, 102, 140 },
  { 92,  94, 110, 143 },
  { 92,  92,  97, 143 },
  { 31, 113,  73, 105 },
  { 90,  91, 106, 142 },
  { 93,  94, 105, 142 },
  { 76,  88, 108, 143 },
  {  0,  90, 120, 123 }
},
```

# FIG. 94

```
{
  { 5, 41, 88,  2 },
  { 4, 60, 53, 49 },
  { 2, 29, 21, 64 },
  { 2, 11, 10, 66 },
  { 2, 17, 22, 72 },
  { 2,  0,  3, 72 },
  { 2,  1,  8, 68 },
  { 2,  7, 11, 67 },
  { 3,  4,  3, 67 },
  { 3,  8, 11, 66 },
  { 3, 10, 11, 67 },
  { 2, 10, 11, 67 },
  { 3,  8, 11, 67 },
  { 2,  8, 10, 68 },
  { 2,  8, 10, 68 },
  { 1,  8, 11, 67 }
},
```

# FIG. 95

```
{
 { 86,  39,  72,  37 },
 { 83,   0,  15,   8 },
 { 83,  85,  49,  49 },
 { 83, 165,  96,  92 },
 { 83,  92, 157,  94 },
 { 82,  55, 108,  62 },
 { 75,  19,  38,  24 },
 { 69, 115,  65,  64 },
 { 84,  86,  90, 148 },
 { 81,  90,  98, 151 },
 { 72,  64,  75, 132 },
 { 52,  50,  32, 104 },
 { 82,  82,  81, 149 },
 { 81,  83,  82, 149 },
 { 79,  88,  88, 152 },
 { 71,  77,  84, 144 }
},
```

# FIG. 96

```
{
 { 77, 42,  86,  29 },
 { 72, 10,  37,   6 },
 { 72,  0,  19,   0 },
 { 77, 36,  33,  19 },
 { 77, 95, 149, 112 },
 { 69, 84, 126, 103 },
 { 57, 50,  74,  79 },
 { 53, 16,  20,  56 },
 { 78, 85,  84, 149 },
 { 77, 91,  87, 153 },
 { 75, 99,  94, 157 },
 { 71, 96,  88, 152 },
 { 79, 84,  83, 144 },
 { 79, 86,  84, 144 },
 { 80, 89,  85, 146 },
 { 80, 93,  89, 148 }
},
```

# FIG. 97

```
{
 { 31,  11,  73,   0 },
 { 31,  60,  75,  34 },
 { 29,  93,  50,  73 },
 { 33,  60,  13,  77 },
 { 33,  48,  82,  80 },
 { 33,  44,  46,  99 },
 { 35,  32,  31,  99 },
 { 37,  32,  32,  97 },
 { 34,  31,  25,  98 },
 { 36,  31,  27,  96 },
 { 37,  35,  31,  96 },
 { 39,  36,  31,  96 },
 { 36,  33,  33,  95 },
 { 38,  35,  32,  96 },
 { 39,  35,  31,  97 },
 { 40,  34,  30,  96 }
 },
```

# *FIG. 98*

```
{
  { 10,  12,  88,   4 },
  { 10,   9,  89,   4 },
  { 10,   4,  86,   0 },
  { 10,   6,  84,   1 },
  { 10,   9,  60,  18 },
  { 10,   9,  59,  19 },
  { 10,   9,  59,  20 },
  { 10,   7,  57,  20 },
  { 10,   9,  10,  73 },
  { 10,   9,   9,  73 },
  { 11,   9,   9,  73 },
  { 11,  10,   9,  73 },
  { 11,  10,  10,  74 },
  { 11,   9,  10,  73 },
  { 11,   9,  10,  73 },
  { 11,   9,  11,  72 }
},
```

# FIG. 99

```
{
  { 89,  51,  98,  52 },
  { 94,  94,  78,  58 },
  { 94, 176,  98, 120 },
  { 71, 170,  90, 155 },
  { 97, 106, 149, 106 },
  { 88, 151, 119, 153 },
  { 51, 143,  94, 173 },
  { 18,  95,  86, 150 },
  { 87, 108,  90, 169 },
  { 33,  95,  92, 162 },
  {  0,  71, 101, 137 },
  {  3,  70, 103, 134 },
  { 35,  73,  83, 149 },
  {  1,  57,  96, 125 },
  {  4,  59,  97, 127 },
  {  6,  65,  99, 131 }
},
```

# FIG. 100

```
{
  { 67,  77,  86,  59 },
  { 66,  97,  90,  64 },
  { 68,  99,  91,  65 },
  { 67, 105,  91,  68 },
  { 66,  93,  98,  61 },
  { 68,  99,  94,  69 },
  { 67,  99,  95,  67 },
  { 66, 105,  97,  69 },
  { 67,  83,  98,  62 },
  { 63,  96,  99,  54 },
  { 66, 103,  98,  68 },
  { 66, 106,  98,  70 },
  { 29, 100,  83, 152 },
  {  0, 127, 131,  78 },
  { 46, 113, 116,  63 },
  { 66, 104, 100,  69 }
},
```

# FIG. 101

```
{
  { 42,  33,  96,  38 },
  { 42,  39,  98,  41 },
  { 41,  64, 108,  51 },
  { 41,  75, 106,  53 },
  { 41,  46, 107,  45 },
  { 41,  46, 107,  45 },
  { 41,  43, 106,  44 },
  { 42,  43, 106,  44 },
  { 47,  45,  91,  56 },
  { 46,  45,  95,  52 },
  { 44,  45,  97,  50 },
  { 41,  43,  96,  49 },
  { 22,  29,   0, 138 },
  { 11,  22,   2, 128 },
  {  3,  18,   6, 120 },
  {  2,  16,  10, 114 }
},
```

# FIG. 102

```
{
  { 92,  40,  66,  49 },
  { 88,  62,   0,  72 },
  { 81, 164,  98,  99 },
  { 90, 121, 121,  77 },
  { 86,  53,  37, 106 },
  { 54,  98,  33,  83 },
  { 70, 140, 141,  75 },
  { 90,  93, 127,  76 },
  { 71,  87,  53, 120 },
  { 28, 101,  96,  39 },
  { 74, 100, 138,  69 },
  { 93,  89, 125,  84 },
  { 63, 115, 110,  83 },
  { 45,  82, 105,  25 },
  { 78,  78, 121,  69 },
  { 91,  89, 124,  84 }
}
};
```

## FIG. 103

```
(const uint8_t mipOffsetMatrix4x4[18]) =
{ 47,  53,  73,  53,  65,  53, 110,  63,  92,   4,  85,  80,  32,  10,  91,  67,  41,  94 };
```

EP 3 989 578 B1

## FIG. 104

```
(const uint8_t mipMatrix8x8[10][16][8]) =
{
  {
    { 35,  86,  81,  84, 188, 128,  60,  82 },
    { 34,  41,  75,  80, 140, 144,  36,  68 },
    { 33,  68,  50, 103, 101, 174,  36,  69 },
    { 28,  73,  71,  89,  65, 186,  42,  65 },
    { 33,  25,  29,  35,   4, 137,  89,  12 },
    { 28,  37,  32,  42,  12, 117, 125,  10 },
    { 21,  39,  44,  45,  28,  93, 155,  12 },
    { 15,  40,  53,  48,  41,  74, 166,  24 },
    { 32,  43,  38,  39,  43,  14, 143,  85 },
    { 23,  43,  42,  39,  45,  15, 116, 112 },
    { 13,  33,  43,  35,  41,  18,  84, 132 },
    { 11,  32,  42,  37,  38,  25,  63, 145 },
    { 26,  33,  39,  33,  34,  43,   4, 187 },
    { 18,  28,  41,  29,  31,  42,   0, 184 },
    { 14,  32,  39,  33,  32,  42,   8, 180 },
    { 13,  43,  40,  42,  37,  44,  21, 177 }
  },
```

# FIG. 105

```
{
  {  37,  65,  32,  36, 111,  64,  31,  35 },
  {  36, 187,  87,  73,  97,  96,  75,  75 },
  {  35,  14, 189,  47,  42,  51,  45,  43 },
  {  29,  50,   0, 198,  35,  41,  40,  37 },
  {  36,  48,  31,  32,   8, 147,  52,  28 },
  {  36, 175,  82,  77,  57, 154,  92,  77 },
  {  33,  23, 196,  45,  38,  64,  58,  49 },
  {  24,  50,   4, 194,  38,  36,  44,  37 },
  {  36,  49,  33,  33,  24,  22, 155,  45 },
  {  36, 154,  73,  72,  54,  77, 161,  81 },
  {  31,  28, 201,  46,  39,  60,  80,  59 },
  {  17,  48,   8, 190,  36,  43,  39,  39 },
  {  36,  53,  35,  35,  22,  40,  12, 176 },
  {  36, 127,  61,  62,  46,  61,  52, 175 },
  {  29,  29, 193,  47,  43,  53,  56, 102 },
  {  10,  48,  17, 184,  38,  41,  44,  47 }
},
```

# FIG. 106

```
{
  { 21,  67,  50,  52, 192,  56,  49,  51 },
  { 21,  82,  60,  52, 190,  40,  57,  52 },
  { 21,  54,  86,  46, 161,  26,  50,  43 },
  { 21,  32,  24,  93, 113,  12,  34,  26 },
  { 21,  20,  21,  21,   0, 162,  24,  17 },
  { 21,  31,  29,  32,  29, 173,  15,  31 },
  { 21,  51,  42,  47,  70, 173,  21,  46 },
  { 21,  58,  57,  60, 106, 156,  33,  56 },
  { 21,  29,  27,  27,  32,  11, 167,  28 },
  { 21,  32,  29,  29,  25,  34, 165,  16 },
  { 21,  30,  29,  30,  16,  63, 146,  10 },
  { 21,  31,  31,  36,  13,  96, 118,  14 },
  { 21,  23,  22,  22,  20,  23,   2, 168 },
  { 21,  30,  29,  28,  29,  21,  30, 156 },
  { 21,  33,  34,  34,  36,  14,  66, 136 },
  { 21,  39,  35,  43,  44,  13, 102, 111 }
},
```

# FIG. 107

```
{
  { 87, 123,  66,  59,  60,  93,  63,  70 },
  { 86, 146, 120,  84,  67,  84,  91,  92 },
  { 84,  90, 182, 120,  85,  81,  97, 103 },
  { 73,  88,  69, 239,  86,  87,  89, 104 },
  { 87, 153,  95,  87,  82,  97, 140, 103 },
  { 86, 131, 142,  91,  77,  71, 115, 121 },
  { 80,  79, 168, 131,  76,  81,  93, 127 },
  { 49, 102,  65, 246,  90, 103,  88, 126 },
  { 87, 143, 104,  92,  82,  94, 122, 160 },
  { 86, 115, 162,  98,  79,  92,  94, 165 },
  { 69,  77, 150, 149,  71,  93,  81, 149 },
  { 15, 128,  72, 247, 113, 106, 109, 137 },
  { 84, 122, 110,  92,  80,  95,  92, 196 },
  { 81,  98, 167, 107,  81, 105,  88, 183 },
  { 53,  93, 131, 173,  87, 101,  90, 163 },
  {  0, 150,  84, 249, 143, 101, 132, 153 }
},
```

# FIG. 108

```
{
  { 38,  77,  41,  44, 133,  81,  30,  49 },
  { 37, 191, 113,  83, 121, 132,  79,  91 },
  { 36,  28, 157,  58,  40,  74,  54,  40 },
  { 35,  36,   0, 169,  20,  36,  65,  30 },
  { 38,  45,  45,  41,  24, 120, 120,  27 },
  { 37,  51,  53,  45,  39,  73, 159,  37 },
  { 37,  50,  51,  47,  37,  36, 154,  66 },
  { 38,  36,  32,  54,  23,  17, 109,  96 },
  { 39,  37,  39,  38,  39,  24, 112, 108 },
  { 39,  37,  36,  40,  37,  35,  59, 150 },
  { 41,  42,  36,  41,  37,  45,  32, 173 },
  { 43,  42,  40,  41,  36,  47,  31, 173 },
  { 41,  37,  36,  39,  37,  38,  17, 182 },
  { 43,  43,  37,  42,  39,  37,  27, 180 },
  { 45,  40,  38,  42,  39,  34,  34, 173 },
  { 46,  42,  37,  47,  40,  33,  41, 167 }
},
```

# FIG. 109

```
{
  { 107,  83,  96,  94, 224,  84,  95,  93 },
  { 107,   0,  15,  23,  96,   1,  24,  18 },
  { 106, 102,  18,  42,  58,  33,  41,  37 },
  { 106, 144, 133,  73,  82,  84,  82,  80 },
  { 106, 108, 106, 109, 120, 236,  98, 108 },
  { 106, 125, 122, 125, 205, 200, 104, 126 },
  { 106,  86,  98, 101, 219, 110,  93,  98 },
  { 105,  66,  50,  67, 153,  50,  65,  59 },
  { 106, 109, 107, 109, 106, 120, 240,  97 },
  { 105, 101,  99, 104,  83, 184, 183,  85 },
  { 105, 106, 103, 110, 103, 232, 123, 100 },
  { 105, 111, 109, 116, 157, 211, 105, 111 },
  { 105, 105, 105, 107, 107, 103, 117, 228 },
  { 104, 109, 107, 111, 116,  87, 198, 168 },
  { 104, 110, 105, 112, 111, 100, 241, 115 },
  { 103, 108, 103, 110, 100, 150, 205, 100 }
},
```

# FIG. 110

```
{
  { 58,  89,  94,  94, 251, 106,  84,  96 },
  { 57,  53,  73,  75, 230,  85,  65,  76 },
  { 57,  79,  62,  79, 234,  89,  69,  81 },
  { 57,  80,  87,  68, 233,  92,  73,  83 },
  { 57,  48,  46,  46,   0, 196,  72,  34 },
  { 57,  55,  53,  51,   8, 199,  76,  40 },
  { 57,  47,  53,  49,   6, 197,  75,  38 },
  { 56,  47,  48,  51,   9, 192,  75,  38 },
  { 58,  62,  63,  62,  80,  17, 205,  83 },
  { 57,  63,  64,  62,  79,  21, 203,  84 },
  { 57,  61,  64,  63,  79,  20, 202,  85 },
  { 57,  62,  64,  64,  78,  23, 198,  87 },
  { 58,  56,  56,  56,  48,  72,  13, 215 },
  { 58,  58,  58,  57,  50,  72,  16, 215 },
  { 58,  56,  58,  58,  49,  72,  15, 215 },
  { 58,  56,  58,  59,  50,  72,  18, 213 }
},
```

# FIG. 111

```
{
 { 116,  51,  63,  60, 156,  47,  64,  60 },
 { 116,  30,   0,   8,  16,   6,   8,   8 },
 { 116, 228, 137, 107, 116, 114, 115, 115 },
 { 115, 107, 231, 129, 115, 111, 115, 113 },
 { 116, 122, 122, 122, 183, 208, 108, 124 },
 { 116,  74,  82,  81, 187,  80,  80,  81 },
 { 115,  27,   7,  15,  44,   9,  15,  14 },
 { 115, 173,  93,  81,  86,  84,  84,  84 },
 { 116, 113, 115, 114, 102, 179, 205,  99 },
 { 115, 119, 119, 118, 143, 234, 116, 116 },
 { 115,  93, 100,  97, 194, 127,  91,  98 },
 { 115,  42,  40,  39,  95,  34,  40,  38 },
 { 115, 117, 117, 116, 122,  99, 179, 198 },
 { 114, 116, 116, 114, 111, 143, 224, 112 },
 { 115, 119, 120, 117, 127, 225, 138, 116 },
 { 115, 102, 107, 104, 171, 155, 103, 105 }
},
```

# FIG. 112

```
{
  { 51, 124, 110,  76,  84, 172,  56,  82 },
  { 50,   0, 112,  78,  29,  77,  80,  36 },
  { 50,  57,   8, 144,  43,  45,  92,  86 },
  { 48,  55,  42,  78,  42,  34,  56, 150 },
  { 50,  26,  60,  63,  40,  51, 160,  43 },
  { 49,  60,  27,  86,  53,  37,  99, 135 },
  { 48,  52,  45,  59,  46,  45,  36, 189 },
  { 47,  51,  50,  55,  45,  49,  30, 191 },
  { 50,  52,  39,  64,  51,  49,  54, 175 },
  { 48,  52,  48,  56,  49,  55,  25, 201 },
  { 48,  52,  52,  52,  49,  53,  34, 195 },
  { 47,  53,  52,  53,  49,  52,  39, 190 },
  { 49,  52,  48,  52,  49,  52,  38, 190 },
  { 48,  50,  50,  52,  48,  52,  39, 188 },
  { 47,  51,  50,  54,  49,  54,  39, 188 },
  { 46,  52,  51,  54,  48,  56,  39, 185 }
},
```

# FIG. 113

```
{
  { 13, 36, 37, 34, 72, 88, 57, 42 },
  { 14,  3,  9, 19, 21, 75, 50, 26 },
  { 14, 15,  0, 16, 12, 77, 54, 27 },
  { 15, 10, 21,  0,  9, 75, 53, 25 },
  { 14,  4,  7, 10,  5, 63, 66, 21 },
  { 15, 10,  4, 11,  9, 56, 71, 26 },
  { 17, 10,  7, 10, 10, 55, 71, 27 },
  { 17, 13,  5, 11, 12, 57, 68, 28 },
  { 14,  7,  8,  9,  8, 39, 73, 39 },
  { 16, 10,  5, 11,  9, 41, 75, 38 },
  { 18, 10,  5, 11,  9, 40, 76, 36 },
  { 19, 11,  6, 11, 10, 41, 75, 35 },
  { 14,  7,  8,  9, 10, 22, 67, 60 },
  { 17, 11,  6, 11, 11, 26, 82, 44 },
  { 19, 10,  6, 11, 12, 27, 79, 43 },
  { 20, 12,  7, 12, 13, 30, 72, 47 }
}
};
```

## FIG. 114

```
(const uint8_t mipOffsetMatrix8x8[10]) =
{ 36,  36,  21,  86,  39,  107,  58,  116,  51,  10};
```

FIG. 115

```
(const uint8_t mipMatrix16x16[6][64][7])
=
{
  {
    { 23, 24, 21, 98, 14, 23, 21 },
    { 18, 24, 22, 99, 15, 22, 21 },
    {  4, 18, 16, 89, 12, 15, 15 },
    {  1, 13, 14, 83, 13, 11, 12 },
    { 13,  8, 18, 81, 21, 13, 15 },
    { 20,  8, 19, 77, 29, 13, 18 },
    { 19, 18, 14, 70, 36, 13, 18 },
    { 17, 22, 14, 63, 41, 13, 19 },
    { 12, 14, 14, 49, 52,  8, 15 },
    { 11, 12, 13, 42, 57,  6, 14 },
    { 11, 10, 12, 35, 62,  4, 13 },
    { 10, 10, 11, 29, 66,  3, 13 },
    {  8, 10, 10, 24, 69,  1, 12 },
    {  6,  9,  9, 20, 70,  0, 11 },
    {  6,  7,  9, 17, 70,  1, 10 },
    {  7,  7,  9, 16, 68,  4, 10 },
    {  9,  9, 10,  7, 78,  5, 11 },
    {  9,  9,  9,  5, 79,  6, 11 },
    {  9,  9,  9,  4, 76,  9, 10 },
    {  8,  9,  9,  4, 73, 13,  9 },
    {  8,  9,  9,  4, 68, 19,  8 },
    {  8,  8,  9,  4, 62, 25,  7 },
    {  7,  8,  9,  4, 55, 32,  6 },
    {  7,  8,  9,  6, 48, 37,  7 },
    {  9, 10, 10,  4, 49, 42,  6 },
    {  9, 10, 10,  5, 42, 51,  4 },
    {  9,  9, 10,  6, 34, 58,  4 },
    {  9,  9,  9,  7, 28, 64,  4 },
    {  9,  9,  9,  8, 22, 68,  5 },
    {  9,  9,  9,  8, 18, 70,  6 },
    {  9,  9,  9,  8, 15, 70,  8 },
    {  9,  9,  9,  9, 14, 67, 12 },
    { 10, 10, 11, 11,  8, 79,  8 },
    { 10, 10, 10, 11,  6, 79, 10 },
    { 10, 10, 10, 11,  5, 74, 15 },
    { 10, 10, 10, 10,  6, 69, 20 },
    { 10, 10, 10, 10,  6, 64, 25 },
    { 10, 10, 10, 10,  7, 58, 30 },
    { 10, 10, 10,  9,  8, 52, 35 },
    {  9, 10,  9,  9,  8, 47, 39 },
    { 10, 10, 10, 11,  5, 48, 42 },
    { 10, 10, 10, 11,  6, 40, 49 },
    { 10, 10, 10, 11,  7, 34, 54 },
    { 10, 10, 10, 10,  8, 30, 57 },
    { 10, 10, 10, 10,  8, 26, 61 },
    { 10, 10, 10, 10,  9, 23, 63 },
    { 10, 10, 10, 10,  9, 21, 65 },
    { 10, 10,  9, 10,  9, 20, 65 },
    { 10, 11, 10, 10, 11, 11, 74 },
    { 10, 10, 10, 10, 11,  9, 76 },
    { 10, 10, 10, 10, 10,  8, 76 },
    { 10, 10, 10, 10, 10,  9, 76 },
    { 10, 10, 10, 10, 10,  9, 76 },
    {  9, 10,  9,  9, 10,  9, 75 },
    {  9, 10,  9,  9, 10, 10, 74 },
    {  9, 10,  9,  9, 10, 11, 73 },
    { 10, 10, 10, 10, 11,  5, 79 },
    { 10, 10, 10, 10, 11,  6, 78 },
    { 10, 10, 10, 10, 11,  6, 78 },
    { 10, 10, 10,  9, 11,  7, 77 },
    {  9, 10, 10,  9, 11,  8, 76 },
    {  9, 10,  9,  9, 11,  8, 75 },
    {  9, 10,  9,  9, 11,  9, 74 },
    {  9, 10, 10,  9, 11, 10, 73 }
  },
```

## FIG. 116

```
{
{ 25, 21, 20, 87, 12, 22, 20 },
{ 39, 26, 26, 91, 18, 28, 26 },
{ 65, 38, 39, 102, 31, 40, 39 },
{ 70, 55, 43, 107, 37, 46, 45 },
{ 60, 71, 44, 107, 39, 48, 46 },
{ 55, 75, 51, 107, 40, 49, 48 },
{ 55, 68, 65, 106, 43, 50, 49 },
{ 56, 57, 80, 104, 44, 51, 50 },
{ 46, 41, 41, 102, 63, 35, 42 },
{ 49, 43, 43, 106, 63, 38, 44 },
{ 55, 46, 46, 109, 66, 41, 47 },
{ 58, 50, 48, 111, 68, 43, 49 },
{ 57, 54, 49, 112, 69, 44, 50 },
{ 57, 57, 51, 112, 70, 45, 51 },
{ 59, 58, 54, 113, 72, 46, 52 },
{ 60, 58, 58, 111, 73, 48, 53 },
{ 25, 24, 24, 28, 95, 15, 25 },
{ 26, 25, 25, 29, 95, 15, 26 },
{ 27, 26, 26, 30, 96, 16, 27 },
{ 28, 27, 27, 31, 97, 17, 27 },
{ 29, 28, 27, 32, 97, 17, 28 },
{ 29, 29, 28, 33, 97, 18, 28 },
{ 30, 30, 30, 35, 97, 19, 29 },
{ 32, 31, 32, 37, 96, 22, 30 },
{ 17, 18, 18, 6, 69, 45, 13 },
{ 18, 18, 18, 6, 70, 44, 13 },
{ 19, 19, 19, 8, 71, 45, 14 },
{ 20, 20, 20, 9, 71, 46, 15 },
{ 20, 20, 20, 9, 71, 46, 15 },
{ 21, 21, 21, 10, 71, 47, 15 },
{ 21, 21, 21, 11, 71, 47, 16 },
{ 22, 22, 23, 13, 71, 48, 17 },
{ 20, 20, 20, 19, 23, 88, 14 },
{ 21, 21, 21, 20, 23, 90, 14 },
{ 22, 21, 21, 20, 24, 90, 15 },
{ 23, 21, 22, 21, 24, 90, 15 },
{ 23, 22, 22, 21, 25, 90, 15 },
{ 23, 22, 22, 21, 25, 90, 16 },
{ 23, 22, 23, 21, 26, 90, 16 },
{ 23, 23, 23, 22, 27, 88, 17 },
{ 21, 21, 21, 23, 10, 76, 39 },
{ 22, 21, 22, 24, 11, 77, 39 },
{ 23, 21, 22, 24, 12, 78, 39 },
{ 24, 22, 22, 25, 12, 78, 39 },
{ 23, 23, 22, 25, 12, 78, 39 },
{ 23, 23, 22, 25, 12, 77, 40 },
{ 23, 22, 23, 25, 13, 77, 40 },
{ 23, 22, 23, 25, 14, 76, 41 },
{ 21, 21, 21, 21, 19, 27, 80 },
{ 22, 21, 21, 22, 20, 27, 81 },
{ 23, 21, 22, 23, 20, 27, 82 },
{ 23, 22, 22, 23, 21, 28, 82 },
{ 23, 22, 21, 23, 20, 27, 82 },
{ 22, 22, 22, 23, 20, 28, 81 },
{ 22, 22, 22, 23, 20, 28, 81 },
{ 23, 22, 23, 23, 21, 29, 80 },
{ 20, 20, 20, 19, 24, 0, 101 },
{ 21, 20, 21, 20, 24, 1, 101 },
{ 22, 21, 21, 20, 25, 2, 101 },
{ 22, 21, 21, 21, 25, 2, 101 },
{ 22, 21, 21, 20, 25, 2, 101 },
{ 21, 21, 21, 20, 25, 2, 101 },
{ 22, 21, 22, 21, 25, 2, 101 },
{ 22, 21, 22, 21, 25, 3, 100 }
},
```

## FIG. 117

```
{
{ 16, 14, 14, 56, 13, 14, 14 },
{  9,  1,  0, 22,  1,  1,  1 },
{ 33,  6,  7, 16,  9,  8,  7 },
{ 65, 28, 22, 28, 24, 24, 23 },
{ 67, 57, 30, 35, 33, 33, 32 },
{ 43, 82, 33, 34, 34, 33, 33 },
{ 31, 72, 55, 33, 34, 33, 32 },
{ 36, 35, 93, 35, 36, 34, 34 },
{ 40, 37, 37, 87, 51, 36, 37 },
{ 31, 27, 26, 71, 33, 27, 26 },
{ 25, 16, 15, 46, 20, 16, 15 },
{ 34, 15, 14, 32, 18, 15, 14 },
{ 53, 26, 20, 32, 24, 22, 20 },
{ 58, 47, 27, 34, 30, 29, 27 },
{ 47, 67, 32, 34, 32, 31, 30 },
{ 37, 62, 51, 34, 33, 32, 31 },
{ 40, 38, 37, 57, 85, 35, 38 },
{ 40, 37, 37, 69, 68, 35, 36 },
{ 35, 31, 30, 66, 50, 31, 30 },
{ 32, 25, 24, 55, 36, 25, 23 },
{ 38, 22, 21, 45, 29, 22, 20 },
{ 49, 27, 23, 40, 29, 24, 22 },
{ 53, 40, 27, 38, 31, 28, 26 },
{ 47, 54, 32, 37, 33, 29, 28 },
{ 35, 35, 35, 34, 86, 49, 33 },
{ 37, 37, 36, 46, 84, 42, 35 },
{ 38, 37, 36, 57, 74, 39, 35 },
{ 37, 33, 33, 60, 61, 35, 32 },
{ 36, 29, 28, 56, 49, 30, 27 },
{ 39, 26, 25, 50, 41, 26, 24 },
{ 46, 29, 26, 44, 38, 26, 25 },
{ 48, 38, 28, 41, 37, 27, 27 },
{ 35, 36, 35, 36, 55, 83, 31 },
{ 36, 36, 36, 38, 70, 67, 33 },
{ 38, 37, 37, 44, 78, 54, 35 },
{ 38, 36, 36, 50, 76, 46, 34 },
{ 37, 34, 33, 53, 69, 39, 32 },
{ 37, 31, 30, 52, 60, 33, 29 },
{ 40, 30, 29, 50, 53, 30, 28 },
{ 43, 33, 29, 46, 48, 29, 27 },
{ 36, 37, 36, 39, 34, 94, 43 },
{ 36, 37, 36, 38, 46, 90, 37 },
{ 38, 37, 37, 39, 61, 77, 35 },
{ 38, 37, 37, 42, 71, 64, 35 },
{ 37, 36, 36, 46, 74, 52, 34 },
{ 36, 35, 34, 48, 72, 44, 32 },
{ 37, 33, 32, 49, 67, 38, 31 },
{ 40, 34, 32, 49, 60, 36, 30 },
{ 36, 36, 36, 37, 35, 57, 80 },
{ 36, 37, 36, 38, 37, 74, 61 },
{ 38, 37, 37, 39, 45, 82, 48 },
{ 38, 38, 37, 41, 56, 78, 41 },
{ 38, 38, 37, 43, 65, 69, 37 },
{ 36, 37, 36, 44, 70, 59, 35 },
{ 36, 36, 35, 46, 71, 50, 33 },
{ 38, 35, 34, 47, 67, 45, 33 },
{ 36, 36, 36, 36, 42, 23, 108 },
{ 36, 36, 36, 36, 42, 35, 95 },
{ 37, 37, 36, 38, 43, 54, 77 },
{ 38, 38, 37, 40, 48, 68, 60 },
{ 37, 38, 37, 41, 54, 72, 49 },
{ 36, 38, 36, 42, 60, 68, 42 },
{ 36, 37, 36, 44, 64, 61, 39 },
{ 37, 37, 36, 45, 65, 55, 38 }
},
```

FIG. 118

```
{
  { 34, 18, 19, 65, 20, 20, 16 },
  { 28, 26, 21, 45, 33, 21, 16 },
  {  4, 23, 16, 20, 31, 14,  7 },
  {  0, 16, 19, 10, 30, 12,  5 },
  {  8,  6, 26,  7, 30, 14,  7 },
  {  9,  6, 27,  4, 27, 14,  7 },
  {  5, 13, 23,  1, 24, 15,  6 },
  {  3, 16, 23,  1, 20, 15,  6 },
  {  6, 11, 11, 16, 49, 10,  7 },
  {  0,  9, 11,  8, 44, 13,  4 },
  {  1,  7, 14,  5, 39, 15,  5 },
  {  4,  5, 17,  5, 35, 17,  7 },
  {  4,  6, 18,  4, 32, 18,  7 },
  {  5,  7, 19,  3, 30, 19,  8 },
  {  5,  8, 20,  2, 27, 20,  8 },
  {  5,  9, 21,  2, 24, 21,  8 },
  {  3,  5,  7,  4, 48, 13,  5 },
  {  3,  5, 10,  4, 41, 18,  7 },
  {  4,  6, 13,  4, 35, 22,  8 },
  {  4,  6, 15,  5, 31, 23, 10 },
  {  4,  7, 17,  4, 29, 23, 10 },
  {  4,  7, 19,  4, 26, 24, 10 },
  {  4,  7, 20,  4, 24, 24, 11 },
  {  5,  7, 22,  4, 22, 23, 11 },
  {  3,  5,  7,  3, 34, 28,  7 },
  {  3,  5, 10,  3, 30, 29,  9 },
  {  3,  5, 12,  3, 27, 28, 11 },
  {  3,  5, 14,  3, 25, 27, 13 },
  {  4,  6, 16,  2, 24, 26, 13 },
  {  4,  6, 18,  2, 22, 26, 14 },
  {  4,  6, 20,  2, 21, 25, 14 },
  {  4,  6, 21,  3, 20, 24, 14 },
  {  2,  4,  7,  2, 16, 44, 10 },
  {  2,  5,  9,  3, 17, 38, 14 },
  {  3,  5, 11,  2, 17, 33, 17 },
  {  3,  5, 14,  2, 17, 31, 18 },
  {  3,  5, 16,  2, 17, 29, 18 },
  {  4,  5, 18,  1, 16, 28, 17 },
  {  4,  5, 20,  2, 16, 28, 17 },
  {  4,  5, 21,  2, 16, 27, 16 },
  {  3,  4,  7,  2,  8, 33, 29 },
  {  3,  4,  9,  2,  9, 31, 29 },
  {  3,  4, 11,  2, 10, 30, 27 },
  {  3,  4, 13,  2, 11, 30, 25 },
  {  4,  4, 15,  2, 11, 30, 23 },
  {  4,  4, 18,  1, 10, 30, 21 },
  {  4,  4, 19,  1, 11, 30, 19 },
  {  4,  5, 20,  2, 11, 29, 18 },
  {  3,  3,  7,  2,  5, 16, 49 },
  {  3,  3,  9,  2,  6, 21, 42 },
  {  3,  4, 11,  1,  7, 25, 36 },
  {  3,  4, 13,  1,  8, 27, 31 },
  {  4,  4, 15,  1,  7, 29, 28 },
  {  4,  4, 18,  2,  7, 30, 25 },
  {  4,  4, 20,  2,  7, 30, 23 },
  {  4,  5, 20,  2,  8, 29, 21 },
  {  3,  3,  7,  2,  2, 17, 50 },
  {  3,  3,  9,  2,  3, 24, 41 },
  {  3,  4, 11,  2,  5, 26, 36 },
  {  3,  4, 13,  1,  6, 27, 32 },
  {  4,  4, 15,  1,  6, 27, 30 },
  {  4,  4, 18,  2,  6, 27, 28 },
  {  4,  4, 19,  2,  6, 27, 26 },
  {  3,  4, 20,  2,  6, 26, 25 }
},
```

## FIG. 119

```
{
{  5,  3,  1, 33,  4,  1,  0 },
{ 38, 11, 14, 30, 16, 11, 11 },
{ 83, 32, 38, 46, 38, 33, 32 },
{ 78, 62, 44, 49, 45, 40, 40 },
{ 44, 84, 43, 43, 41, 36, 36 },
{ 32, 72, 62, 39, 39, 34, 34 },
{ 33, 39, 93, 37, 38, 34, 33 },
{ 35, 17, 118, 39, 40, 36, 35 },
{ 33, 25, 25, 53, 50, 22, 23 },
{ 63, 37, 40, 59, 59, 35, 35 },
{ 95, 54, 59, 69, 73, 52, 51 },
{ 84, 81, 63, 68, 75, 56, 55 },
{ 58, 93, 67, 61, 70, 53, 51 },
{ 48, 75, 88, 56, 65, 50, 48 },
{ 46, 43, 116, 52, 62, 49, 46 },
{ 46, 23, 136, 50, 61, 49, 46 },
{ 35, 28, 28, 28, 82, 26, 26 },
{ 66, 44, 48, 44, 93, 43, 42 },
{ 89, 64, 67, 59, 103, 58, 56 },
{ 78, 88, 74, 63, 102, 64, 61 },
{ 64, 93, 87, 64, 97, 65, 61 },
{ 60, 75, 111, 64, 93, 65, 60 },
{ 59, 49, 136, 63, 88, 66, 59 },
{ 58, 32, 153, 62, 83, 66, 58 },
{ 37, 30, 31, 20, 75, 51, 26 },
{ 63, 46, 52, 34, 93, 63, 42 },
{ 77, 67, 69, 48, 104, 73, 55 },
{ 68, 87, 80, 53, 108, 76, 60 },
{ 62, 86, 100, 57, 109, 77, 63 },
{ 64, 70, 126, 61, 109, 79, 66 },
{ 66, 51, 151, 64, 107, 80, 67 },
{ 67, 38, 166, 66, 103, 81, 68 },
{ 39, 32, 35, 28, 42, 87, 29 },
{ 60, 48, 54, 40, 61, 96, 42 },
{ 66, 68, 70, 49, 77, 100, 53 },
{ 59, 81, 86, 53, 87, 100, 59 },
{ 59, 77, 110, 56, 96, 99, 64 },
{ 63, 63, 136, 60, 103, 98, 69 },
{ 68, 48, 160, 63, 107, 98, 72 },
{ 70, 40, 174, 65, 109, 96, 75 },
{ 39, 34, 36, 31, 26, 86, 47 },
{ 55, 49, 55, 42, 41, 101, 56 },
{ 55, 66, 72, 49, 54, 108, 62 },
{ 51, 73, 92, 53, 63, 112, 65 },
{ 54, 66, 117, 58, 73, 114, 69 },
{ 60, 55, 143, 62, 82, 116, 73 },
{ 66, 44, 166, 65, 91, 117, 77 },
{ 70, 38, 180, 67, 96, 115, 80 },
{ 38, 35, 36, 30, 32, 47, 83 },
{ 48, 48, 55, 41, 42, 65, 88 },
{ 46, 61, 74, 48, 50, 79, 90 },
{ 45, 62, 98, 53, 56, 90, 89 },
{ 50, 56, 123, 59, 63, 101, 90 },
{ 58, 47, 149, 64, 71, 111, 91 },
{ 65, 40, 170, 69, 78, 118, 92 },
{ 70, 37, 183, 71, 83, 120, 93 },
{ 37, 36, 41, 33, 38, 19, 111 },
{ 42, 46, 60, 41, 47, 32, 116 },
{ 40, 53, 81, 47, 53, 44, 117 },
{ 42, 52, 104, 54, 59, 57, 118 },
{ 48, 48, 127, 60, 65, 70, 118 },
{ 56, 42, 150, 65, 70, 83, 117 },
{ 63, 37, 170, 71, 76, 94, 116 },
{ 67, 35, 181, 73, 80, 100, 114 }
},
```

## FIG. 120

```
{
  { 15,  0,  1, 44,  4,  1,  4 },
  { 56, 11, 13, 28, 28,  8, 16 },
  { 56, 38, 17, 18, 38, 15, 20 },
  { 17, 62, 14,  8, 27, 15, 13 },
  {  5, 48, 34,  7, 18, 19, 11 },
  { 11, 16, 63,  9, 13, 22, 14 },
  { 14,  3, 71,  9, 10, 21, 20 },
  { 13,  3, 62,  9,  6, 16, 30 },
  { 41, 30, 26, 56, 67, 16, 30 },
  { 30, 38, 21, 26, 64, 15, 22 },
  { 11, 41, 21,  9, 44, 23, 14 },
  {  7, 29, 36,  7, 25, 32, 13 },
  { 10, 13, 50,  9, 14, 34, 20 },
  { 14,  4, 55, 10,  8, 31, 29 },
  { 15,  2, 51,  9,  5, 24, 41 },
  { 13,  4, 42,  8,  4, 15, 50 },
  { 10, 21, 14,  6, 73, 14, 14 },
  {  3, 24, 19,  6, 46, 35, 10 },
  {  6, 17, 30, 10, 23, 49, 15 },
  { 11,  8, 38, 12, 11, 47, 27 },
  { 15,  5, 39, 13,  7, 38, 41 },
  { 15,  6, 36, 13,  6, 27, 53 },
  { 14,  8, 31, 11,  6, 18, 62 },
  { 13,  9, 27, 10,  6, 11, 67 },
  {  6, 14, 15,  6, 31, 59,  5 },
  {  8, 12, 23, 13, 13, 65, 16 },
  { 12,  8, 29, 15,  8, 52, 34 },
  { 14,  6, 29, 15,  8, 36, 51 },
  { 14,  7, 27, 14,  8, 23, 64 },
  { 14,  9, 24, 13,  9, 15, 71 },
  { 14, 11, 21, 12,  9, 10, 75 },
  { 13, 11, 20, 11,  9,  8, 76 },
  { 12, 11, 18, 14,  8, 69, 22 },
  { 13,  9, 22, 15,  8, 48, 43 },
  { 14,  8, 23, 15, 10, 28, 61 },
  { 13,  9, 22, 14, 11, 16, 72 },
  { 13, 10, 20, 13, 11, 10, 77 },
  { 13, 10, 18, 12, 12,  7, 80 },
  { 13, 11, 17, 12, 12,  5, 81 },
  { 13, 12, 16, 12, 12,  6, 80 },
  { 13, 11, 17, 14, 10, 36, 56 },
  { 13,  9, 18, 13, 12, 18, 71 },
  { 13,  9, 19, 13, 13,  9, 78 },
  { 13, 10, 17, 13, 13,  6, 81 },
  { 12, 11, 16, 13, 13,  4, 82 },
  { 12, 12, 15, 12, 13,  4, 83 },
  { 13, 12, 14, 12, 14,  4, 83 },
  { 13, 12, 14, 12, 14,  5, 81 },
  { 12, 11, 15, 13, 13, 10, 78 },
  { 12, 10, 16, 13, 14,  4, 83 },
  { 12, 10, 16, 13, 14,  3, 84 },
  { 12, 11, 15, 13, 14,  3, 84 },
  { 11, 12, 14, 12, 13,  4, 84 },
  { 12, 12, 13, 12, 14,  4, 83 },
  { 12, 12, 13, 12, 14,  5, 83 },
  { 12, 12, 13, 12, 14,  6, 80 },
  { 12, 11, 14, 13, 14,  3, 83 },
  { 12, 11, 14, 12, 14,  3, 84 },
  { 12, 12, 14, 13, 14,  4, 84 },
  { 12, 12, 13, 13, 14,  4, 83 },
  { 11, 12, 13, 12, 14,  5, 82 },
  { 11, 12, 13, 12, 14,  6, 81 },
  { 12, 12, 12, 12, 14,  7, 80 },
  { 12, 12, 12, 12, 13,  7, 78 }
}
};
```

## FIG. 121

```
(const uint8_t mipOffsetMatrix16x16[6]) =
{ 11,   21,   36,   4,   21,   13};
```

## FIG. 122

ORIGINAL PIXEL → ENCODER (11) → DECODER (51) → DECODED IMAGE

IMAGE PROCESSING SYSTEM (10)

EP 3 989 578 B1

# FIG. 123

## FIG. 124

```
        ( START OF ENCODING PROCESS )
                      |
        [ PERFORM A/D CONVERSION ]          S11
                      |
        [ REARRANGE ]                       S12
                      |
        [ PERFORM INTRA PREDICTION PROCESS ] S13
                      |
        [ PERFORM MOTION PREDICTION/         S14
          COMPENSATION PROCESS ]
                      |
        [ SELECT PREDICTED IMAGE ]           S15
                      |
        [ CALCULATE DIFFERENCE BETWEEN       S16
          IMAGE AND PREDICTED IMAGE ]
                      |
        [ PERFORM ORTHOGONAL TRANSFORM ]     S17
                      |
        [ QUANTIZE ]                         S18
                      |
        [ INVERSELY QUANTIZE ]               S19
                      |
        [ PERFORM INVERSE ORTHOGONAL TRANSFORM ] S20
                      |
        [ ADD PREDICTED IMAGE ]              S21
                      |
        [ PERFORM DEBLOCKING FILTERING PROCESS ] S22
                      |
        [ PERFORM ADAPTIVE OFFSET FILTERING PROCESS ] S23
                      |
        [ PERFORM ADAPTIVE LOOP FILTERING PROCESS ] S24
                      |
        [ STORE ]                            S25
                      |
        [ ENCODE ]                           S26
                      |
        [ ACCUMULATE ]                       S27
                      |
        [ CONTROL RATE ]                     S28
                      |
                  ( END )
```

# FIG. 125

Decoded Image after Ln-loop Filter as enabled
Decoded Image after Ln-loop Filter as enabled
(Modified Reconstructed Picture(s) after In-loop Filter)
(Reconstructed Samples after In-Loop Filter)

Bitstream
(Encoded Data)

Quantized Data

Transform Data

| 61 | 62 | 63 | 64 | 65 | 31b | 81 | 82 | 67 | 68 |

ACCUMULATION BUFFER → LOSSLESS DECODING UNIT → INVERSE QUANTIZATION UNIT → INVERSE ORTHOGONAL TRANSFORM UNIT → DEBLOCKING FILTER → ADAPTIVE OFFSET FILTER → ADAPTIVE LOOP FILTER → SCREEN REARRANGEMENT BUFFER → D/A CONVERSION UNIT

Decoded Picture(s)
(Decoded Image)
(Decoded Image Data)
(Decoded Samples)

Residual Image
Residual Data
(Residual Samples)

Decoded Picture(s)
(Decoded Image)
(Reconstructed Picture(s))
(Reconstructed Samples)

Predicted Image
(Predicted Samples)

72
MOTION PREDICTION/ COMPENSATION UNIT

71
INTRA PREDICTION UNIT

73

70

FRAME MEMORY
69

51

# FIG. 126

```
( START OF DECODING PROCESS )
              |
              v
  ACCUMULATE IMAGES          S51
              |
              v
       DECODE                S52
              |
              v
 GENERATE PREDICTED IMAGE    S53
              |
              v
  SELECT PREDICTED IMAGE     S54
              |
              v
   INVERSELY QUANTIZE        S55
              |
              v
    PERFORM INVERSE          S56
  ORTHOGONAL TRANSFORM
              |
              v
   ADD PREDICTED IMAGE       S57
              |
              v
   PERFORM DEBLOCKING        S58
    FILTERING PROCESS
              |
              v
   PERFORM ADAPTIVE          S59
 OFFSET FILTERING PROCESS
              |
              v
   PERFORM ADAPTIVE          S60
  LOOP FILTERING PROCESS
              |
              v
       STORE                 S61
              |
              v
     REARRANGE               S62
              |
              v
 PERFORM D/A CONVERSION      S63
              |
              v
           ( END )
```

# FIG. 127

EP 3 989 578 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *VET-N0217-v3: CE3: Affine linear weighted intra prediction (CE3-4.1, CE3-4.2),* 17 January 2019
- **PFAFF (FRAUNHOFER) J et al.** 8-bit implementation and simplification of MIP. *15. JVET MEETING; 20190703-20190712; GOTHENBURG; (THE JOINT VIDEO EXPLORATION TEAM OF ISO/IEC JTC1/SC29/WG11 AND ITU-T SG.16),* 18 June 2019, (JVET-00084
- Advanced video coding for generic audiovisual services. *Recommendation ITU-T H.264,* April 2017
- High efficiency video coding. *Recommendation ITU-T H.265,* February 2018

- **BENJAMIN BROSS ; JIANLE CHEN ; SHAN LIU.** *Versatile Video Coding (Draft 5), JVET-N1001-v7,* 29 May 2019
- **JIANLE CHEN ; YAN YE ; SEUNG HWAN KIM.** Algorithm description for Versatile Video Coding and Test Model 5 (VTM 5). *JVET- N1002-v1*
- *JVET-N0217-v3: CE3: Affine linear weighted intra prediction (CE3-4.1, CE3-4.2),* 17 January 2019
- *JVET-M0043-v2: CE3: Affine linear weighted intra prediction (test 1.2.1, test 1.2.2),* 09 January 2019
- *JVET-O0084-vl: 8-bit implementation and simplification of MIP,* 18 June 2019